(19) Europäisches Patentamt
European Patent Office
Office européen des brevets

(11) EP 3 270 192 A1

(12) **EUROPEAN PATENT APPLICATION**
published in accordance with Art. 153(4) EPC

(43) Date of publication:
**17.01.2018 Bulletin 2018/03**

(21) Application number: **16761746.3**

(22) Date of filing: **08.03.2016**

(51) Int Cl.:
***G02B 1/118*** *(2015.01)* ***B32B 3/30*** *(2006.01)*
***C08J 5/18*** *(2006.01)* ***G02B 1/18*** *(2015.01)*
***G02B 5/30*** *(2006.01)*

(86) International application number:
**PCT/JP2016/057121**

(87) International publication number:
**WO 2016/143778 (15.09.2016 Gazette 2016/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.03.2015 JP 2015046090**

(71) Applicant: **Mitsui Chemicals, Inc.**
**Minato-ku**
**Tokyo 105-7122 (JP)**

(72) Inventors:
- **OKAZAKI, Koju**
**Omuta-shi**
**Fukuoka 836-8610 (JP)**
- **HANAWA, Takayuki**
**Omuta-shi**
**Fukuoka 836-8610 (JP)**

(74) Representative: **Hoffmann Eitle**
**Patent- und Rechtsanwälte PartmbB**
**Arabellastraße 30**
**81925 München (DE)**

# (54) HYDROPHILIC SINGLE-LAYER FILM HAVING OPTICAL FUNCTIONALITY, AND LAMINATE THEREOF

(57) In the present invention, there is provided a hydrophilic monolayer film that is excellent in antifogging properties, antifouling properties, the durability of antifogging properties and antifouling properties, and smoothness and that has an antireflective function or a surface structure that serves as a polarizer. There is also provided a method for easily producing such a monolayer film. The monolayer film that is to be produced has a surface structure with multiple protrusions and depressions. The distance between the peaks of adjoining protrusions among such multiple protrusions is in the range of 1 nm to 800 nm. The monolayer film is formed of a crosslinked resin produced by curing of a polymerizable composition that contains a compound having a specific hydrophilic group and a functional group with a polymerizable carbon-carbon double bond and a compound having two or more (meth)acryloyl groups. A gradient of the concentration of hydrophilic groups (Sa2/Da2) in the monolayer film is not less than 1.1 wherein Sa is the concentration of at least one type of hydrophilic groups selected from anionic hydrophilic groups, cationic hydrophilic groups, and a hydroxyl group at the top layer, and Da is the depth concentration of the hydrophilic groups at 1/2 of the thickness of the monolayer film.

EP 3 270 192 A1

FIG. 3

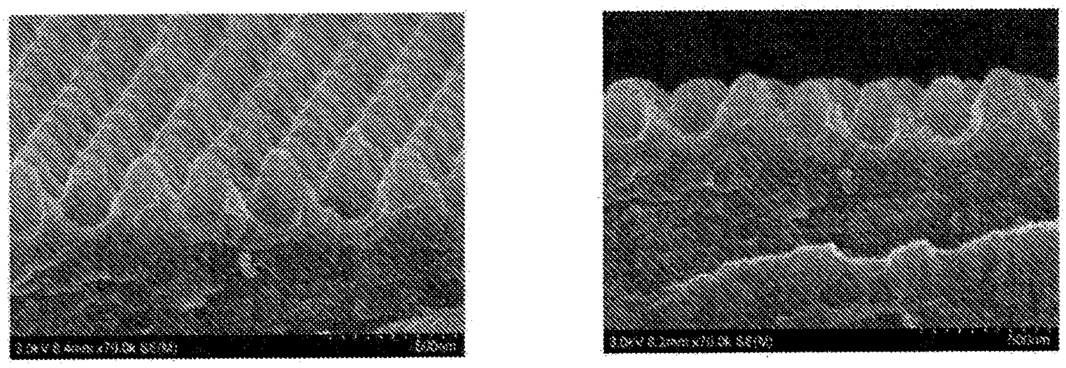

## Description

Technical Field

The present invention relates to a monolayer film of a crosslinked resin which is produced through polymerization of a hydrophilic composition and of which the surface has a fine structure of depressions and protrusions.

Background Art

Display devices used in, for example, television sets and mobile phones, optical devices such as camera lens, and spectacle lenses are generally treated by an antireflective technique in order to reduce surface reflection and thus to enhance light transmission. In recent years, there have been increasing demands that substrates made by such an antireflective technique be improved in terms of antifogging properties and antifouling properties.

To solve the fogging problems, a method has been proposed in which an antifogging coating liquid containing a reactive surfactant and an acrylic oligomer is applied to provide enhanced hydrophilicity and water absorption (see, for example, Non Patent Literature 1). The fouling problems have been addressed by methods in which the hydrophilicity of the surface of materials is enhanced so that fouling such as airborne hydrophobic substances which have become attached to surfaces such as exterior walls can be detached and removed from the surfaces by water spray or rainfall (see, for example, Non Patent Literatures 2 and 3).

Further, hydrophilic materials have been proposed in which a crosslinkable polymerizable monomer composition is applied onto the surface of a substrate and is incompletely polymerized while controlling the UV dose to form a crosslinked polymer, and subsequently a hydrophilic monomer is applied and UV rays are applied again to block- or graft-polymerize the hydrophilic monomer to the surface of the crosslinked polymer (Patent Literature 1 and Patent Literature 2).

In an example of the antireflective technique, an antireflective multilayer film is formed on the surface of a substrate by laminating a number of thin films of inorganic particles, such as silica, or fine organic particles such as acryl.

In another example of the antireflective technique, a fine pattern of depressions and protrusions is formed on the surface of a substrate with the intervals between the depressions and between the protrusions being controlled to be less than or equal to the wavelength of visible light (see Non Patent Literatures 4 and 5 and Patent Literatures 4 to 8). Such a technique utilizes the mechanism of a so-called motheye (Motheye) structure, in which a refractive index for incident light on a substrate is successively changed from an incident medium to the substrate along the height direction of the depressions and protrusions to reduce reflection of light within the intended wavelength range. Examples of the shape of the depressions and protrusions include drill-like shapes such as a cone and a quadrangular pyramid (see Patent Literatures 6 to 8).

The formation of such a multilayer antireflection film on the surface of a substrate, however, cannot give an antifogging effect; in addition, the film is generally formed by, for example, vacuum deposition and therefore has problems of long deposition time and high production costs.

A known polarizing film is a wire grid polarizing plate in which nanoscale metal layers have been regularly disposed. In a known wire grid polarizing plate, the surface of a substrate has a fine pattern of depressions and protrusions, and a metal layer is laminated in the depressions (for instance, see Patent Literatures 14 and 15). In this technique, the depressions are subjected to a hydrophilic treatment in order to enhance the adherence of the metal layer; however, the treatment is complicated and results in increased costs, which is problematic.

A known reflective wire grid polarizer is a wire grid polarizer having thin metal lines arranged in parallel at regular intervals. Reflection of light within a specific wavelength range is up to the intervals between the thin metal lines; light that oscillates in parallel to the thin metal lines are reflected, and light that oscillates in a direction perpendicular to the thin metal line is transmitted. The thickness of the thin metal lines and the intervals therebetween are in a nanometer scale for a visible light range. In particular, for a visible light range, the thin metal lines need to be arranged at intervals of a quarter of 380 nm that is the minimum wavelength of visible light, namely 100 nm or less. Such a reflective wire grid polarizer for a visible light range is produced through forming an array of depressions and protrusions on the surface of a substrate by nanoimprinting or another technique and then forming conductive metal on the protrusions by vapor deposition, specific printing, or another technique (for example, see Patent Literature 16).

In such a technique for forming a fine pattern of depressions and protrusions on the surface of a substrate, since the substrate to be used is glass, a general acrylic material, or a fluorine-coated material, a sufficient antifogging effect is not produced. Furthermore, in the case where the fine pattern of depressions and protrusions becomes dirty, the dirt cannot be removed from the fine pattern, which is problematic.

In view of the above-mentioned problems, an optical device has been suggested these days, in which a hydrophilic fine pattern of depressions and protrusions is provided to enable dirt adhering to the surface thereof, such as the mark of fingerprints, to be removed by being wiped with a wet material (see Patent Literatures 9 and 10). In such a

technique for removing dirt adhering to the surface, such as the mark of fingerprints, by wiping with a wet material, however, a formed fine pattern of depressions and protrusions needs to be additionally subjected to a surface treatment, such as a corona treatment, a plasma treatment, or deposition of $SiO_2$, which causes problems of the prolonged term of the deposition process and increased production costs. Moreover, since inorganic particles are adhering to the top layer, the surface is hard to be smoothly wiped in a dry state, which causes the problem in which the hydrophilicity is greatly reduced after the wiping. In addition, merely the fine pattern of depressions and protrusions containing a hydrophilic resin does not give sufficient hydrophilicity, and such an effect of removing dirt with a wet material is therefore insufficient.

The above-mentioned antifogging technique further has the following problems. Since a hydrophilic resin and hydrophilic metal exist in the top layer, the top layer has a high surface energy. Hence, when the surface is wiped with gauze or another material in a dry state, the surface is hard to be smoothly wiped; furthermore, the hydrophilicity is impaired after the wiping, which leads to a reduction in the durability of antifogging properties and antifouling properties.

In order to address the above-mentioned problems of fogging and fouling, the inventors have suggested a monolayer film of which specific anionic hydrophilic groups are concentrated (enriched) from the inside to the surface and of which the anionic hydrophilic groups exist in the vicinity of the surface at high concentration (Patent Literature 3). This monolayer film is unfortunately not enough to produce an antireflective effect and does not have a surface structure suitable for a polarizer. Furthermore, high concentration of the hydrophilic groups existing near the surface leads to high surface energy, which causes insufficient smoothness in some cases.

Citation List

Patent Literature

Patent Literature 1: JPA 2001-098007
Patent Literature 2: JPA 2011-229734
Patent Literature 3: WO 2007/064003
Patent Literature 4: JPA (Translation of PCT Application) 2001-517319
Patent Literature 5: JPA 2004-205990
Patent Literature 6: JPA 2004-287238
Patent Literature 7: JPA 2001-272505
Patent Literature 8: JPA 2002-286906
Patent Literature 9: JPA 2011-28229
Patent Literature 10: WO 2012/133946
Patent Literature 11: JPA 2009-217278
Patent Literature 12: WO 2012/014829
Patent Literature 13: WO 2013/187311
Patent Literature 14: JPA 2005-070456
Patent Literature 15: JPA 2008-107392
Patent Literature 16: JPA 2014-139664

Non Patent Literature

Non Patent Literature 1: TREND, annual research report by TOAGOSEI CO., LTD., 1999, February issue, pp. 39-44
Non Patent Literature 2: Koubunshi (Polymers), 44(5), p. 307
Non Patent Literature 3: Mirai Zairyou (Future materials), 2(1), pp. 36-41
Non Patent Literature 4: Bernhard, C.G., Endeavour, 26, 79 (1967)
Non Patent Literature 5: P.B. CLAPHAM, M.C. HUTLEY, Nature, 244, 281-282 (1973)

Summary of Invention

Technical Problem

It is an object of the present invention to provide a hydrophilic monolayer film that is excellent in antifogging properties, antifouling properties, the durability of the antifogging properties and antifouling properties, and smoothness and that has an antireflective function or a surface structure that serves as a polarizer. It is another object of the present

invention to provide a method for easily producing such a monolayer film.

Solution to Problem

The inventors have studied to achieve the above-mentioned objects and found that a monolayer film that is formed of a crosslinked resin produced by curing a polymerizable composition containing a compound having a specific hydrophilic group and a functional group with a polymerizable carbon-carbon double bond and a compound having two or more (meth)acryloyl groups or of a crosslinked resin produced by curing a polymerizable composition containing a copolymer having a specific hydrophilic group and at least one group selected from an epoxy group and an alkoxysilyl group and a polymer thereof, that has a surface having depressions and protrusions formed at predetermined intervals, and that has a specific concentration of hydrophilic groups has higher smoothness than monolayer films formed of typical hydrophilic materials; in addition, such a monolayer film can be a monolayer film with optical functionality, such as an antireflective monolayer film that is excellent in the durability of antifogging properties and antifouling properties.

In particular, a monolayer film of the present invention has a surface structure with multiple protrusions and depressions, wherein

the distance between the peaks of adjoining protrusions among the multiple protrusions is in the range of 1 nm to 800 nm;

the monolayer film is formed of a crosslinked resin produced from a polymerizable composition (A) that contains a compound (I) having at least one hydrophilic group selected from an anionic hydrophilic group and a cationic hydrophilic group and at least one functional group with a polymerizable carbon-carbon double bond and

a compound (II) having at least two functional groups with a polymerizable carbon-carbon double bond (where the compound (II) optionally has a hydroxyl group but has neither of anionic hydrophilic groups and cationic hydrophilic groups) or a crosslinked resin made by curing of a polymerizable composition that contains a copolymer having a sulfonate group as an anionic hydrophilic group and at least one group selected from an epoxy group and an alkoxysilyl group and a polymer thereof; and

a gradient of the concentration of hydrophilic groups (Sa1/Da1) in the monolayer film is not less than 1.1 wherein Sa1 is the concentration of at least one type of hydrophilic groups selected from anionic hydrophilic groups and cationic hydrophilic groups at the top layer, and Da1 is the depth concentration of the hydrophilic groups at 1/2 of the thickness of the monolayer film.

The monolayer film is preferably formed of a crosslinked resin produced by curing of the polymerizable composition (A) that contains the compound (I), the compound (II), and solvent having a solubility parameter $\sigma$ of not less than 9.1 $(cal/cm^3)^{1/2}$ and that has a residual solvent content reduced to be not more than 10%.

A monolayer film of the present invention has a surface structure with multiple protrusions and depressions, wherein

the distance between the peaks of adjoining protrusions among the multiple protrusions is in the range of 1 nm to 800 nm;

the monolayer film is formed of a crosslinked resin produced from a polymerizable composition (B) that contains a compound (I') having at least one functional group with a polymerizable carbon-carbon double bond and at least one hydrophilic group selected from an anionic hydrophilic group, a cationic hydrophilic group, and a hydroxyl group (where in the case where the hydrophilic group has a hydroxyl group, the number of the functional groups with a polymerizable carbon-carbon double bond is one), a compound (II) having at least two functional groups with a polymerizable carbon-carbon double bond (where the compound (II) optionally has a hydroxyl group but has neither of anionic hydrophilic groups and cationic hydrophilic groups), and

a surfactant (III) having a hydrophobic moiety including an organic residue and a hydrophilic moiety at least having an anionic hydrophilic group, a cationic hydrophilic group, or two or more hydroxyl groups (where the surfactant (III) is free from a polymerizable carbon-carbon double bond); and

a gradient of the concentration of hydrophilic groups (Sa2/Da2) in the monolayer film is not less than 1.1 wherein Sa2 is the concentration of at least one type of hydrophilic groups selected from anionic hydrophilic groups, cationic hydrophilic groups, and a hydroxyl group at the top layer, and Da2 is the depth concentration of the hydrophilic groups at 1/2 of the thickness of the monolayer film.

The monolayer film is preferably formed of a crosslinked resin produced by curing of the polymerizable composition (B).

In formation of the depressions and the protrusions on a surface of a non-cured monolayer film formed of the polymerizable composition (A) or (B), the surface of the film is preferably treated with the composition (I') or a compound (IV) having at least one hydrophilic group selected from an anionic hydrophilic group and a cationic hydrophilic group and at least one group selected from an amino group, a mercapto group, and a hydroxyl group.

In a monolayer film (1), assuming that the distance between the peak of an arbitrarily selected one of the protrusions and the peak of the protrusion that is nearest to the selected one is $P_n$, that the average of $P_n$ (in the monolayer film) is $P_{ave}$, that a coordinate axis in the height direction of the depressions and protrusions is an h axis, that the height of the lowest point of the depressions is h = 0, that the height of the peak of the arbitrarily selected protrusion is h = $H_n$,

and that the average of $H_n$ is $H_{ave}$, $H_{ave}/P_{ave}$ is in the range of 0.1 to 5.0. The monolayer film (1) is, for example, preferably used as a monolayer film having an antireflective function.

A monolayer film (2) of which the protrusions have a drill-like shape is, for instance, preferably used as a monolayer film having an antireflective function.

In a monolayer film (3), assuming that a coordinate axis in the height direction of the depressions and protrusions is an h axis, that the plane vertical to the h axis is an xy plane, that the height of the lowest point of the depressions is h' = 0, and that the height of the highest peak of the protrusions is h' = H, the peaks of all of the protrusions are in substantially one-point contact with the xy plane at a height of h = H, and the bottoms of all of the depressions are in substantially one-point contact with the xy plane at a height of h = 0. The monolayer film (3) is, for example, preferably used as a monolayer film having an antireflective function.

In a monolayer film (4), the protrusions have a step-like side surface. The monolayer film (4) is, for example, preferably used as the monolayer film (1) having an antireflective function.

In a monolayer film (5), assuming that the distance between the peak of arbitrarily selected one of the protrusions and the peak of the protrusion that is nearest to the selected one is $P_n$ and that the average of $P_n$ (in the monolayer film) is $P_{ave}$, the bottoms of three to six depressions exist within the distance $P_{ave}$ from the peak of the arbitrarily selected protrusion. The monolayer film (5) is, for example, preferably used as a monolayer film having an antireflective function.

In a monolayer film (6), assuming that a coordinate axis in the height direction of the depressions and protrusions is an h axis, that the plane vertical to the h axis is an xy plane, that the height of the lowest point of the depressions is h = 0, and that the height of the highest peak of the protrusions is h = H, the protrusions have a circular cross section on the xy plane at any point of the height that is greater than 0 but less than H. The monolayer film (6) is, for example, preferably used as a monolayer film having an antireflective function.

In a monolayer film (7), the protrusions are arrange in a lattice pattern, the intervals between the depressions and between the protrusions are not more than 200 nm, the proportion of the protrusions to the intervals is from 0.25 to 0.76, and H ranging from 0.05 to 0.5 μm is given on the basis of the following assumption: a coordinate axis in the height direction of the depressions and protrusions is an h axis, the plane vertical to the h axis is an xy plane, the height of the low point of the depressions is h = 0, and the height of the protrusions is h = H. The monolayer film (7) is, for example, preferably used as a monolayer film having a surface structure that can serve as a polarizer.

A method for producing the monolayer film of the present invention includes the steps of:

> forming a coating film of the polymerizable composition (A); removing a solvent from the coating film;
> bringing a shaping die with a pattern corresponding to the depressions and the protrusions into close contact with a surface of the coating film to transfer the structure of depressions and protrusions to the surface of the coating film;
> curing the coating film having the depressions and the protrusions; and releasing the shaping die from the cured film.

Another method for producing the monolayer film of the present invention includes the steps of:

> forming a coating film of the polymerizable composition (B); bringing a shaping die with a pattern corresponding to the depressions and the protrusions into close contact with a surface of the coating film to transfer the structure of depressions and protrusions to the surface of the coating film;
> curing the coating film having the depressions and the protrusions; and releasing the shaping die from the cured film.

In the method for producing the monolayer film, the transfer of the structure of depressions and protrusions to a surface of the coating film preferably involves use of a shaping die of which the compound (I') or the compound (IV) having at least one hydrophilic group selected from an anionic hydrophilic group and a cationic hydrophilic group and at least one group selected from an amino group, a mercapto group, and a hydroxyl group has been applied to the surface having a pattern corresponding to the depressions and the protrusions.

In a preferred embodiment of the method for producing the monolayer film, the monolayer film is formed on a substrate. Such a monolayer film can be used in the form of a stack including the monolayer film and a substrate.

The monolayer film, particularly the monolayer films (1) to (6), can be used as an antireflection film.

The monolayer film, particularly the monolayer film (7), is subjected to lamination of a metal layer on the protrusions or in the depressions thereof and then can be used as a polarizing film.

The monolayer film having the above-mentioned aspects can be used in the form of a transparent material including the monolayer film. The transparent material can be used in display devices. The monolayer film having the above-mentioned aspects can be used in the form of an optical article including the monolayer film.

## Advantageous Effects of Invention

According to the present invention, controlling the depressions and the protrusions enables easy production

of an antireflective monolayer film having excellent antifogging properties and antifouling properties and a monolayer film having a wire-grid structure with excellent antifogging properties and antifouling properties. The monolayer film to be produced is excellent also in the durability of antifogging properties and antifouling properties and in smoothness as compared with antireflective monolayer films formed of conventional hydrophilic materials. Brief Description of Drawings

[Fig. 1] Fig. 1 schematically illustrates a method for preparing a sample used for measuring the gradient of the concentration of anions (Sa/Da) in Examples.

[Fig. 2] Fig. 2 is the view of the surface of a monolayer film of Example 1 from above (left side) and the view of the monolayer film at an inclination of 30° (right side).

[Fig. 3] Fig. 3 is the oblique view of the cross section of the monolayer film of Example 1 (left side) and the directly horizontal view thereof (right side).

[Fig. 4] Fig. 4 is the view of the surface of a monolayer film of Example 14 from above.

Description of Embodiments

The present invention will now be described in detail. The term "monolayer film with optical functionality" herein refers to a monolayer film having an optical function (for example, antireflective function) and to a monolayer film that can be modified (for instance, lamination of a metal film) to obtain an optical function. Likewise, the term "film with optical functionality" herein refers to a film having an optical function and to a film that can be modified (for instance, lamination of a metal film) to obtain an optical function.

A hydrophilic monolayer film of the present invention has a surface structure with multiple protrusions and depressions, and the distance between the peaks of adjoining protrusions is in the range of 1 nm to 800 nm. The monolayer film is formed of a crosslinked resin produced by curing of a polymerizable composition (A) or (B), which will be described later; and a gradient of the concentration of hydrophilic groups (Sa/Da) in the monolayer film is not less than 1.1 wherein Sa is the concentration of at least one type of hydrophilic groups selected from anionic hydrophilic groups and cationic hydrophilic groups at the top layer, and Da is the depth concentration of the hydrophilic groups at 1/2 of the thickness of the monolayer film.

Such a characteristic is presumed to enable a decrease in the contact area of a surface so that frictional resistance can be reduced even when the surface is a highly hydrophilic resin having a high surface energy, as compared with a resin having a flat surface. Hence, smoothness can be imparted to even a resin having a high surface energy. Furthermore, the surface of the monolayer film contains hydrophilic groups derived from a compound (I) or (I') at high concentration, and the depth part of the film has a crosslinked structure derived from a compound (II) at high concentration, which enables the whole monolayer film to have a higher hardness than hydrophilic materials formed of resins produced using typical compounds having a hydrophilic group. It is believed that the monolayer film has a higher smoothness than films which are formed of typical hydrophilic resins and of which the surfaces with a relatively uniform composition have a fine pattern of depressions and protrusions.

In conventional smooth monolayer films each having a highly hydrophilic surface and formed of resin, the whole of the surface can be touched, and friction or contact with an object causes the hydrophilic groups on the top surface to be lost, which leads to a problem of a reduction in hydrophilicity. In the monolayer film formed of a highly hydrophilic resin and having a surface with a pattern of depressions and protrusions, the depressions of the surface is hard to contact with an object; accordingly, hydrophilic groups are substantially not lost, so that a highly hydrophilic state can be maintained.

When a coordinate axis in the height direction of the depressions and protrusions of the monolayer film is defined as an h axis and the height of the peak of an arbitrary protrusion is defined as $h = H_n$, the concentration at the top surface refers to the concentration of hydrophilic groups at the height Hn.

The concentration of hydrophilic groups at the top layer (Sa) and the depth concentration of hydrophilic groups (Da) are determined as follows. A predetermined sample of the monolayer film is cut at an angle; the concentration of groups that have an anionic hydrophilic group (such as a sulfonate group, a carboxyl group, or a phosphate group), a cationic hydrophilic group (such as a quaternary ammonium group), and a hydroxyl group is measured with respect to the surface of the monolayer film being in contact with ambient air and the point at 1/2 of the thickness of the monolayer film with a time-of-flight secondary ion mass spectrometer (TOF-SIMS); and the intensity (relative intensity) of the fragment ions is calculated.

In the case where the ratio Sa/Da of the concentration of hydrophilic groups at the top layer (Sa) to the depth concentration at 1/2 of the thickness of the monolayer film (Da) is greater than 1.1, the concentration of hydrophilic groups at the top surface of the monolayer film is greater than the concentration of hydrophilic groups at 1/2 of the thickness from the surface (the term "Sa/Da" is referred to as gradient of hydrophilic groups in some cases). In particular, the hydrophilic groups are distributed from the deep part of the film on the substrate side to the surface at a concentration

gap (gradient (ratio of concentrations of hydrophilic groups) (Sa/Da)) in which the hydrophilic groups are particularly distributed more in the top layer at which the monolayer film is in contact with ambient air. Such distribution of hydrophilic groups enables the monolayer film of the present invention to have a performance attributed to high hydrophilicity (for example, antifogging properties, antifouling properties, self-cleaning properties, antistatic properties, or anti-dust properties). The gradient of hydrophilic groups (Sa/Da) is preferably not less than 1.2, more preferably not less than 1.3, and further preferably not less than 1.5.

Examples of the shape of the protrusion of the monolayer film include columnar shapes, for example polygonal columns such as a triangular column and a quadrilateral column, a circular column, and an elliptic column; drill-like shapes, for example a cone and a polygonal pyramid such as a quadrangular pyramid; frustum shapes, for example a truncated cone and a polygonal frustum such as a quadrilateral frustum; and semi-circular shapes. In the case where the top of each protrusion formed on the surface of the monolayer film has a flat surface (for instance, a rectangular flat surface of a quadrilateral column or quadrilateral frustum or a circular flat surface of a circular frustum), the center of gravity of the flat surface is defined as the peak.

The monolayer film has the above-mentioned surface structure with depressions and protrusions; for example, formation of a fine pattern in which the intervals between the depressions and between the protrusions are controlled to be less than or equal to the wavelength of visible light (approximately from 380 nm to 780 nm) enables the monolayer film to have an antireflective function. Alternatively, the monolayer film has the above-mentioned surface structure with depressions and protrusions; for instance, a fine pattern in which the intervals between the depressions and between the protrusions are controlled to be approximately not more than 200 nm is formed, and a metal layer is laminated on the protrusions or in the depressions to give the monolayer film a polarizing function.

The monolayer film has the above-mentioned surface structure with depressions and protrusions and satisfies the above-mentioned conditions of a gradient of hydrophilic groups, so that the monolayer film is also excellent in the durability of antifogging properties and antifouling properties and in smoothness.

In the depressions and protrusions of the surface of the monolayer film, the distance between the peaks of adjoining protrusions is preferably in the range of 1 nm to 800 nm; in order to give the monolayer film an antireflective function, it is preferably in the range of 1 nm to 600 nm, more preferably 10 nm to 300 nm, and further preferably 100 nm to 200 nm. In order to use the monolayer film as a monolayer film having a surface structure that can serve as a polarizer, the distance between the peaks of adjoining protrusions is preferably in the range of 100 to 200 nm.

In the case of using the monolayer film as a film having an antireflective function, assuming that the distance between the peak of an arbitrarily selected one of the protrusions and the peak of the protrusion that is nearest to the selected one is $P_n$, that the average of $P_n$ (in the film) is $P_{ave}$,

that a coordinate axis in the height direction of the depressions and protrusions is an h axis, that the height of the lowest point of the depressions is h = 0, that the height of the peak of the arbitrarily selected protrusion is $h = H_n$, and that the average of $H_n$ is $H_{ave}$,

$H_{ave}/P_{ave}$ (also referred to as aspect ratio) is preferably in the range of 0.1 to 5.0, more preferably 0.5 to 2.0, and further preferably 1.0 to 1.5. An unnecessarily low aspect ratio is likely to cause reductions in reflection properties and transmission properties, and an unnecessarily high aspect ratio may cause a reduction in mold releasing properties in formation of the depressions and protrusions with a shaping die, which will be described later, with the result that the intended depressions and protrusions formed on the surface of the monolayer film may be damaged.

In the case where the monolayer film is used as a film having an antireflective function, each of the protrusions in the depressions and protrusions of the monolayer film generally has a drill-like shape, and preferably a conical shape.

In the case of using the monolayer film as a film having an antireflective function, assuming that a coordinate axis in the height direction of the depressions and protrusions of the monolayer film is an h axis, that the plane vertical to the h axis is an xy plane, that the height of the lowest point of the depressions is h' = 0, and that the height of the highest peak of the protrusions is h' = H, the peaks of all of the protrusions are preferably in substantially one-point contact with the xy plane at a height of h = H, and the bottoms of all of the depressions are preferably in substantially one-point contact with the xy plane at a height of h = 0.

In an embodiment in which the monolayer film of the present invention is used as a film having an antireflective function, it is preferred that the depressions be substantially symmetrical with the protrusions around the xy plane at h' = H/2.

In an embodiment in which the monolayer film of the present invention is used as a film having an antireflective function, it is preferred that the protrusions have a step-like side surface.

In an embodiment in which the monolayer film of the present invention is used as a film having an antireflective function, it is preferred that the deepest part of each of the depressions be substantially pointed.

In an embodiment in which the monolayer film of the present invention is used as a film having an antireflective function, assuming that the distance between the peak of any one of the protrusions and the peak of the protrusion most adjacent thereto is $P_n$, that the average of $P_n$ (in the monolayer film) is $P_{ave}$, and

that the distance between the peak of a first protrusion selected from the protrusions and the peak of a second protrusion

most adjacent thereto is P, it is preferred that the bottoms of three to six depressions exist within the distance $P_{ave}$ from the peak of the first protrusion.

In an embodiment in which the monolayer film of the present invention is used as a film having a surface structure that can serve as a polarizer, it is preferred that the protrusions be arranged in a lattice pattern. The protrusions preferably have a shape in which the peaks of the protrusions have a rectangular plane, such as a quadrilateral column or a quadrilateral frustum.

In an embodiment in which the monolayer film of the present invention is used as a film having a surface structure that can serve as a polarizer, the intervals between the depressions and between the protrusions are preferably not more than 200 nm, and more preferably not more than 100 nm.

In an embodiment in which the monolayer film of the present invention is used as a film having a surface structure that can serve as a polarizer, assuming that a coordinate axis in the height direction of the depressions and protrusions is an h axis, that the plane vertical to the h axis is an xy plane, that the height of the low point of the depressions is h = 0, and that the height of the protrusions is h = H, H is preferably in the range of 0.05 to 0.5 μm, and more preferably 0.05 to 0.3 μm.

The higher the hydrophilicity of the hydrophilic monolayer film obtained in the present invention, the more preferred. The monolayer film generally has a water contact angle of not more than 50°, preferably not more than 30°, more preferably not more than 20°, and further preferably not more than 10°.

At a water contact angle within such a range, the monolayer film has a high hydrophilicity and serves as an excellent hydrophilic material which is highly affinitive to water (wettable). Thus, the monolayer film is useful, for example, in applications that require antifogging properties, antifouling properties, self-cleaning properties, antistatic properties, or anti-dust properties. The monolayer film having a water contact angle within such a range, for example, allows water droplets to spread over the surface to form a water film and therefore achieves excellent antifogging effects. Even when dirt adheres to the monolayer film, water can penetrate between the dirt and the coating surface to lift and remove the dirt, which brings excellent antifouling effects. Moreover, the hydrophilic monolayer film enables water to spread, and thus an evaporation area is enhanced; hence, an evaporation speed is enhanced, which results in quick drying.

Since the monolayer film of the present invention is enriched with high concentration of hydrophilic groups at its surface (concentrated), the antistatic properties thereof are excellent as compared with those of typical hydrophilic films not subjected to such enrichment.

When the water contact angle is not more than 30°, preferably not more than 20°, and more preferably not more than 10°, the hydrophilic monolayer films of the invention are particularly suited for use as antifogging materials, antifouling materials, quick-dry materials and antistatic materials. The water contact angle is usually 0° or above.

In order to, for instance, enhance the hydrophilicity of the monolayer film of the present invention, when the depressions and protrusions are given to the surface of a non-cured film formed of a polymerizable composition (A) or (B), the surface of the film is preferably treated with a compound (I') or (IV) that is hydrophilic and reactive with the polymerizable composition and that will be described later. The term "non-cured" herein refers to a state in which a functional group with a polymerizable carbon-carbon double bond in the polymerizable composition (A) or (B) is substantially not completely subjected to a reaction; in particular, the reaction rate of the polymerizable carbon-carbon double bond contained in the polymerizable composition is preferably not more than 60 mol%, or more preferably not more than 40 mol%. A specific technique for such a treatment will be descried later in detail in the below description about a method for producing the monolayer film.

[Polymerizable Composition]

The monolayer film of the present invention is formed of a polymerizable composition, for example a polymerizable composition (A) or a polymerizable composition (B). The monolayer film formed of such a polymerizable composition is excellent in antifogging properties and antifouling properties, has or may have optical functions, such as an antireflective function and a polarizing function, and is also excellent in the durability of antifogging properties and antifouling properties and in smoothness as compared with monolayer films that are formed of conventional hydrophilic materials and that have or may have optical functions such as an antireflective function and a polarizing function.

The polymerizable composition (A) contains a compound (I) having at least one functional group with a polymerizable carbon-carbon double bond and at least one hydrophilic group selected from an anionic hydrophilic group and a cationic hydrophilic group and a compound (II) having two or more functional groups with a polymerizable carbon-carbon double bond (optionally having a hydroxyl group but not having an anionic hydrophilic group and a cationic hydrophilic group, either).

The polymerizable composition (B) contains a compound (I') having at least one functional group with a polymerizable carbon-carbon double bond and at least one hydrophilic group selected from an anionic hydrophilic group, a cationic hydrophilic group, and a hydroxyl group (if the hydrophilic group has a hydroxyl group, the number of the functional groups with a polymerizable carbon-carbon double bond is one); the compound (II) having two or more functional groups

with a polymerizable carbon-carbon double bond (optionally having a hydroxyl group but not having an anionic hydrophilic group and a cationic hydrophilic group, either); and

a surfactant (III) having a hydrophobic moiety including an organic residue and a hydrophilic moiety at least having an anionic hydrophilic group, a cationic hydrophilic group, or two or more hydroxyl groups (free from a polymerizable carbon-carbon double bond).

The compound (I) contained in the composition (A) has at least one functional group with a polymerizable carbon-carbon double bond and at least one hydrophilic group selected from an anionic hydrophilic group and a cationic hydrophilic group. The composition containing such a compound having a hydrophilic group and a functional group with a carbon-carbon double bond is cured, so that the cured product can become hydrophilic.

Examples of the anionic hydrophilic groups include sulfonate groups, carboxyl groups, phosphate groups, O-sulfate groups ($-O-SO_3-$) and N-sulfate groups ($-NH-SO_3-$). Of the anionic hydrophilic groups, sulfonate groups, carboxyl groups and phosphate groups are preferable. From the point of view of giving increased hydrophilicity on the surface, sulfonate groups are more preferable.

In the compound (I), the anionic hydrophilic group may be present in the form of a salt.

Thus, the sulfonate group, the carboxyl group, and the phosphate group may be typically present in the compound (I) in the forms of ($\alpha$), ($\beta$), and ($\gamma$1) or ($\gamma$2), respectively, represented by the following formulas:

$$-SO_3Z\ (\alpha)\ -COOZ\ (\beta)\ -OP{=}O(OZ)_2\ (\gamma 1)\ (-O)_2P{=}O(OZ)_1 \qquad (\gamma 2)$$

In the formulas ($\alpha$) to ($\gamma$2), Z is at least one monovalent cation selected from hydrogen ions, ammonium ions, alkali metal ions, and alkaline earth metals having 1/2 atomic valence.

In the invention, the ammonium ion is a cation resulting from the bonding of a hydrogen ion to ammonia, a primary amine, a secondary amine or a tertiary amine. From the point of view of hydrophilicity, the ammonium ion is preferably a cation in which a hydrogen ion is bonded to ammonia or an amine having a small number of carbon atoms, and is more preferably an ammonium ion formed by the bonding of a hydrogen ion to ammonia, or methylammonium.

Examples of the alkali metals include lithium, sodium, potassium and rubidium.

Examples of the alkaline earth metals include beryllium, magnesium, calcium, strontium and barium.

Of the cations Z, alkali metal ions are preferable, and sodium ions, potassium ions and rubidium ions are more preferable.

Examples of the cationic hydrophilic groups include quaternary ammonium groups, betaine groups and amine oxide groups. Of these cationic hydrophilic groups, quaternary ammonium groups and betaine groups are preferable.

The hydrophilic groups present in the compounds (I) are preferably anionic hydrophilic groups.

The functional groups with a polymerizable carbon-carbon double bond are not particularly limited as long as the functional groups can initiate radical polymerization or ion polymerization. Examples include acryloyl group, methacryloyl group, acryloyloxy group, methacryloyloxy group, acryloylthio group, methacryloylthio group, acrylamide group, methacrylamide group, allyl group, vinyl group, isopropenyl group, maleyl group (-CO-CH=CH-CO-), itaconyl group (-CO-CH=CH-CO-) and styryl group. In the present specification, acryloyl and methacryloyl are sometimes collectively written as (meth)acryloyl, acryloyloxy and methacryloyloxy as (meth)acryloyloxy, acryloylthio and methacryloylthio as (meth)acryloylthio, and acrylamide and methacrylamide as (meth)acrylamide.

The compound (I) is preferably a compound represented by the general formula (100) below:

[Chem. 1]

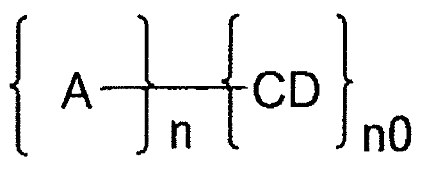

(1 0 0)

In the formula (100), A is a $C_{2-100}$ organic group having 1 to 5 functional groups with a polymerizable carbon-carbon double bond; CD is a group which includes at least one hydrophilic group and is selected from the general formulas (101) to (110) below; n indicates the number of As bonded to CD and is 1 or 2; and n0 indicates the number of CDs bonded to A and is an integer of 1 to 5.

Examples of the groups CD including an anionic hydrophilic group include hydrophilic groups represented by the general formulas (101) to (107) below.

[Chem. 2]

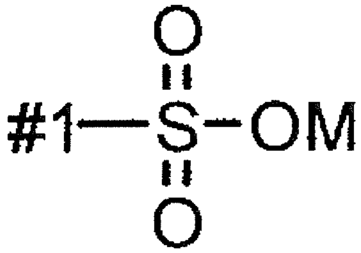

(1 0 1)

In the formula (101), M is a hydrogen atom, an alkali metal, an alkaline earth metal having 1/2 atomic valence or an ammonium ion; and #1 indicates a hand bonded to a carbon atom present in A in the formula (100).

[Chem.3]

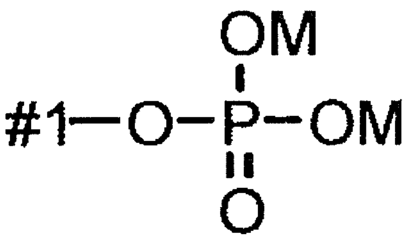

(1 0 2)

In the formula (102), M at each occurrence is a hydrogen atom, an alkali metal, an alkaline earth metal having 1/2 atomic valence or an ammonium ion; and #1 indicates a hand bonded to a carbon atom present in A in the formula (100).

[Chem. 4]

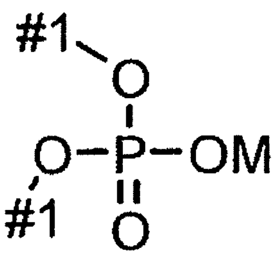

(1 0 3)

In the formula (103), M is a hydrogen atom, an alkali metal, an alkaline earth metal having 1/2 atomic valence or an ammonium ion; and #1 at each occurrence indicates a hand bonded to a carbon atom present in A in the formula (100).

[Chem. 5]

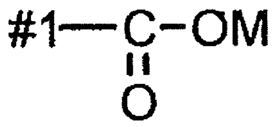

(1 0 4)

In the formula (104), M is a hydrogen atom, an alkali metal, an alkaline earth metal having 1/2 atomic valence, an ammonium ion and an amine ion; and #1 indicates a hand bonded to a carbon atom present in A in the formula (100).

[Chem. 6]

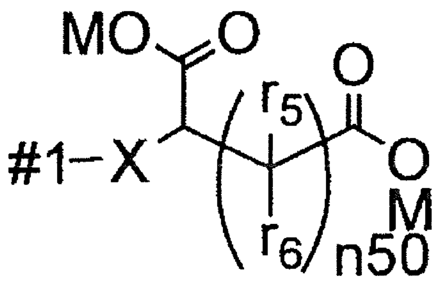

(1 0 5)

In the formula (105), $r_5$ and $r_6$ each independently represent a hydrogen atom, a methyl group, an ethyl group or a hydroxyl group; n50 is an integer of 0 to 5; X is -O-, -S-, -NH- or $-NCH_3-$; M at each occurrence is a hydrogen atom, an alkali metal, an alkaline earth metal having 1/2 atomic valence or an ammonium ion; and #1 indicates a hand bonded to a carbon atom present in A in the formula (100).

[Chem. 7]

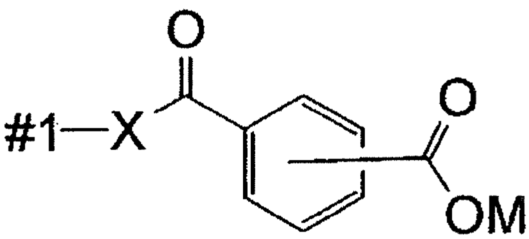

(1 0 6)

In the formula (106), X is -O-, -S-, -NH- or $-NCH_3-$; M is a hydrogen atom, an alkali metal, an alkaline earth metal having 1/2 atomic valence or an ammonium ion; and #1 indicates a hand bonded to a carbon atom present in A in the formula (100).

[Chem. 8]

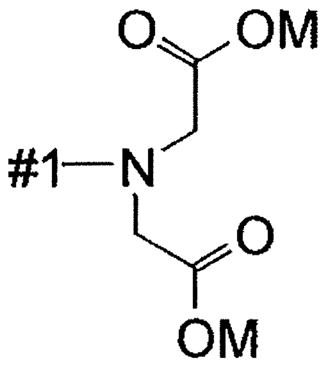

(107)

In the formula (107), M at each occurrence is a hydrogen atom, an alkali metal, an alkaline earth metal having 1/2 atomic valence or an ammonium ion; and #1 indicates a hand bonded to a carbon atom present in A in the formula (100).

Examples of the groups CD including a cationic hydrophilic group include hydrophilic groups represented by the general formulas (108) to (110) below.

[Chem. 9]

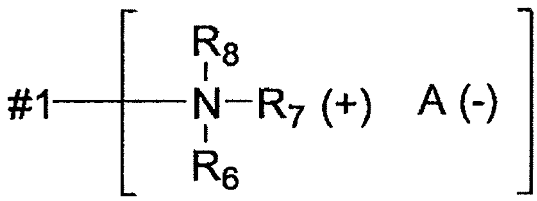

(108)

In the formula (108), A(-) is a halogen ion, a formate ion, an acetate ion, a sulfate ion, a hydrogen sulfate ion, a phosphate ion or a hydrogen phosphate ion; $R_6$ to $R_8$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group; and #1 indicates a hand bonded to a carbon atom present in A in the formula (100).

[Chem. 10]

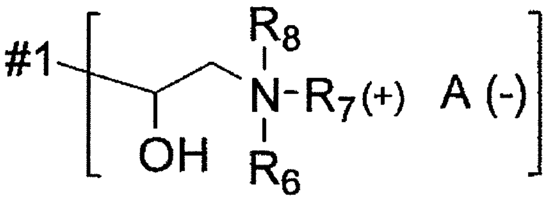

(109)

In the formula (109), A(-) is a halogen ion, a formate ion, an acetate ion, a sulfate ion, a hydrogen sulfate ion, a phosphate ion or a hydrogen phosphate ion; $R_6$ to $R_8$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group; and #1 indicates a hand bonded to a carbon atom present in A in the formula (100).

[Chem. 11]

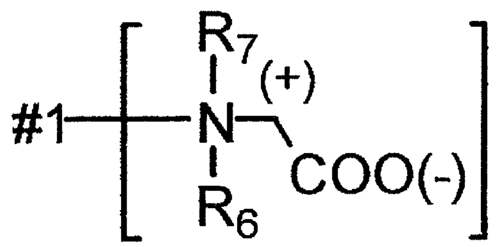

(110)

In the formula (110), $R_6$ and $R_7$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group; and #1 indicates a hand bonded to a carbon atom present in A in the formula (100).

In the formula (100) described hereinabove, A is preferably a $C_{2-100}$ organic group which has 1 or 2 functional groups with a polymerizable carbon-carbon double bond represented by any of the general formulas (111) to (121) below.

[Chem. 12]

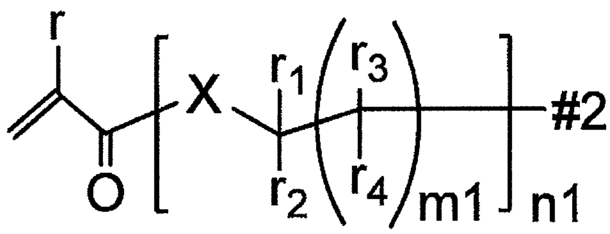

(111)

In the formula (111), X is -O-, -S-, -NH- or $-NCH_3-$; r represents a hydrogen atom or a methyl group; $r_1$ to $r_4$ each independently represent a hydrogen atom, a methyl group, an ethyl group or a hydroxyl group; m1 is an integer of 0 to 10; n1 is an integer of 0 to 100; and #2 indicates a hand bonded to #1 present in at least one group selected from those groups represented by the general formulas (101) to (110).

[Chem. 13]

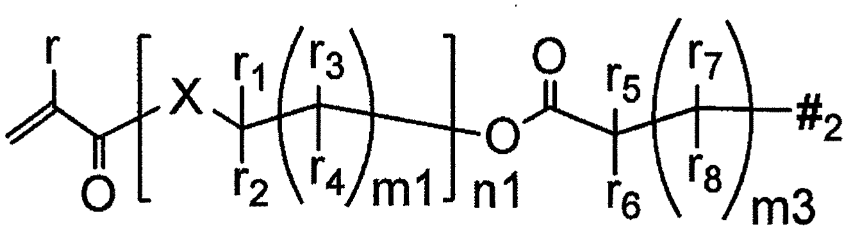

(112)

In the formula (112), X is -O-, -S-, -NH- or $-NCH_3-$; r represents a hydrogen atom or a methyl group; $r_1$ to $r_6$ each independently represent a hydrogen atom, a methyl group, an ethyl group or a hydroxyl group; $R_7$ and $R_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 and m3 are each independently an integer of 0 to 10; n1 is an integer of 0 to 100; and #2 indicates a hand bonded to #1 present in at least one group selected from those groups represented by the general formulas (101) to (110) .

[Chem. 14]

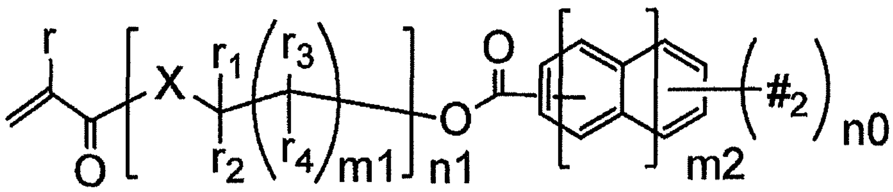

(1 1 3)

In the formula (113), X is -O-, -S-, -NH- or $-NCH_3-$; r represents a hydrogen atom or a methyl group; $r_1$ to $r_4$ each independently represent a hydrogen atom, a methyl group, an ethyl group or a hydroxyl group; m2 is an integer of 0 to 5; m1 is an integer of 0 to 10; n0 is an integer of 1 to 5; n1 is an integer of 0 to 100; and #2 indicates a hand bonded to #1 present in at least one group selected from those groups represented by the general formulas (101) to (110).

[Chem. 15]

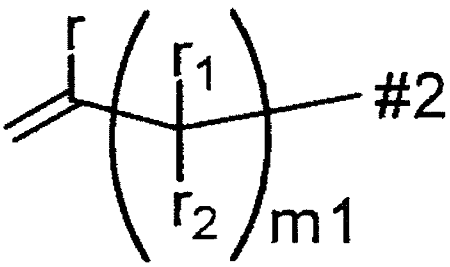

(1 1 4)

In the formula (114), r represents a hydrogen atom or a methyl group; $r_1$ and $r_2$ each independently represent a hydrogen atom, a methyl group, an ethyl group or a hydroxyl group; m1 is an integer of 0 to 10; and #2 indicates a hand bonded to #1 present in at least one group selected from those groups represented by the general formulas (101) to (110) .

[Chem. 16]

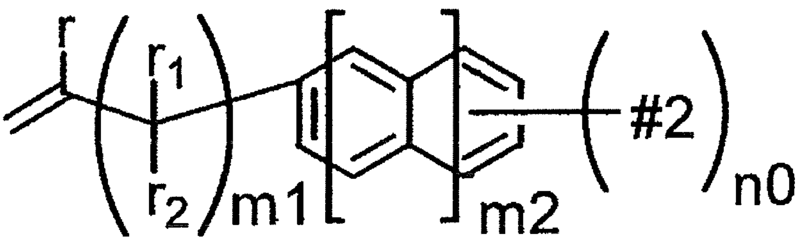

(1 1 5)

In the formula (115), r represents a hydrogen atom or a methyl group; $r_1$ and $r_2$ each independently represent a hydrogen atom, a methyl group, an ethyl group or a hydroxyl group; m1 is an integer of 0 to 10; m2 each independently represents an integer of 0 to 5; n0 is an integer of 1 to 5; and #2 indicates a hand bonded to #1 present in at least one group selected from those groups represented by the general formulas (101) to (110).

[Chem. 17]

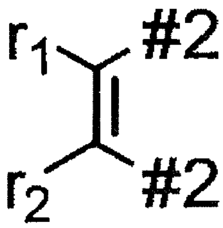

(116)

In the formula (116), $r_1$ and $r_2$ each independently represent a hydrogen atom, a methyl group, an ethyl group or a hydroxyl group; and #2 at each occurrence indicates a hand bonded to #1 present in at least one group selected from those groups represented by the general formulas (101) to (110) .

[Chem. 18]

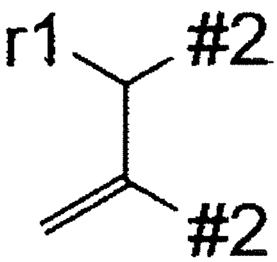

(117)

In the formula (117), $r_1$ represents a hydrogen atom, a methyl group, an ethyl group or a hydroxyl group; and #2 at each occurrence indicates a hand bonded to #1 present in at least one group selected from those groups represented by the general formulas (101) to (110).

[Chem. 19]

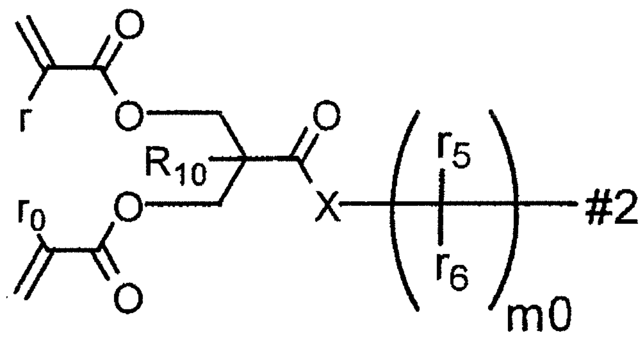

(118)

In the formula (118), X is -O-, -S-, -NH- or $-NCH_3-$; r and $r_0$ each independently represent a hydrogen atom or a methyl group; $r_5$ and $r_6$ each independently represent a hydrogen atom, a methyl group, an ethyl group or a hydroxyl group; $R_{10}$ represents a hydrogen atom, a $C_{1-10}$ alkyl group, a $C_{3-10}$ cycloalkyl group, a phenyl group, a benzyl group, a hydroxyl group, hydroxymethyl or hydroxyethyl; m0 is an integer of 1 to 10; and #2 indicates a hand bonded to #1 present in at least one group selected from those groups represented by the general formulas (101) to (110).

[Chem. 20]

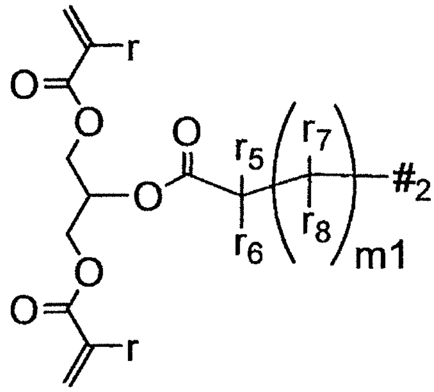

(1 1 9)

In the formula (119), X is -O-, -S-, -NH- or $-NCH_3-$; r each independently represents a hydrogen atom or a methyl group; $r_5$ and $r_6$ each independently represent a hydrogen atom, a methyl group, an ethyl group or a hydroxyl group; $R_7$ and $R_8$ each indepdently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is an integer of 0 to 10; and #2 indicates a hand bonded to #1 present in at least one group selected from those groups represented by the general formulas (101) to (110).

[Chem. 21]

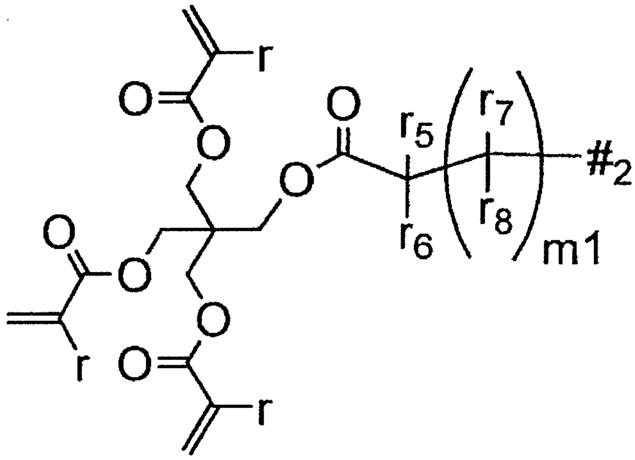

(1 2 0)

In the formula (120), X is -O-, -S-, -NH- or $-NCH_3-$; r each independently represents a hydrogen atom or a methyl group; $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is an integer of 0 to 10; and #2 indicates a hand bonded to #1 present in at least one group selected from those groups represented by the general formulas (101) to (110).

[Chem. 22]

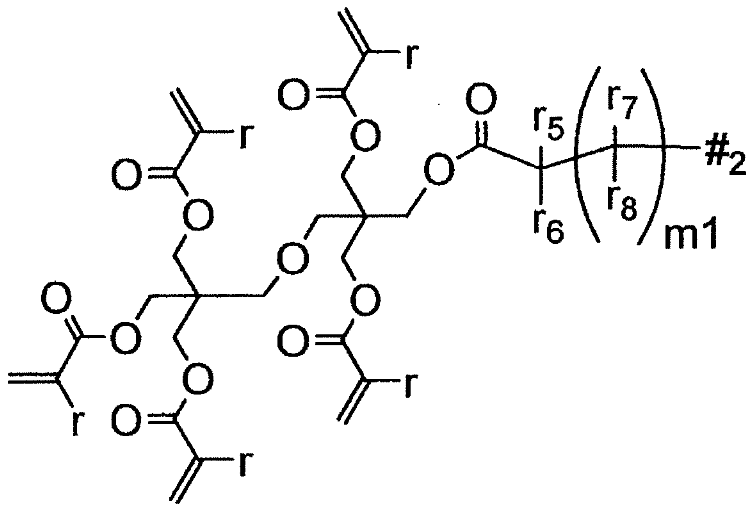

(1 2 1)

In the formula (121), X is -O-, -S-, -NH- or $-NCH_3-$; r each independently represents a hydrogen atom or a methyl group; $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is an integer of 0 to 10; and #2 indicates a hand bonded to #1 present in at least one group selected from those groups represented by the general formulas (101) to (110).

Of the compounds (I) having an anionic hydrophilic group, those compounds represented by the general formulas (Ia) to (II) below are preferable.

[Chem. 23]

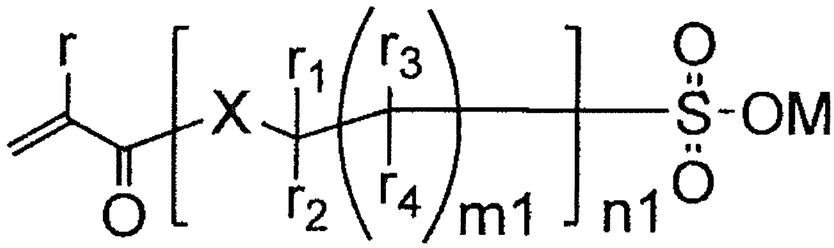

(I a)

In the formula (Ia), X is -O-, -S-, -NH- or $-NCH_3-$; r represents a hydrogen atom or a methyl group; $r_1$ to $r_4$ each independently represent a hydrogen atom, a methyl group, an ethyl group or a hydroxyl group; m1 is an integer of 0 to 10; n1 is an integer of 0 to 100; and M represents a hydrogen ion, an ammonium ion, an alkali metal ion or an alkaline earth metal ion having 1/2 atomic valence.

Examples of the compounds represented by the general formula (Ia) include 1-(meth)acryloyloxymethylsulfonic acid, sodium 1-(meth)acryloyloxymethyl sulfonate, potassium 1-(meth)acryloyloxymethyl sulfonate, 2-(meth)acryloyloxyethylsulfonic acid, sodium 2-(meth)acryloyloxyethyl sulfonate, potassium 2-(meth)acryloyloxyethyl sulfonate, 2-(meth)acryloylthioethylsulfonic acid, sodium 2-(meth)acryloylthioethyl sulfonate, potassium 2-(meth)acryloylthioethyl sulfonate, 3-(meth)acryloyloxypropylsulfonic acid, lithium 3-(meth)acryloyloxypropyl sulfonate, sodium 3-(meth)acryloyloxypropyl sulfonate, potassium 3-(meth)acryloyloxypropyl sulfonate, rubidium 3-(meth)acryloyloxypropyl sulfonate, ammonium 3-(meth)acryloyloxypropyl sulfonate, magnesium 3-(meth)acryloyloxypropyl sulfonate, calcium 3-(meth)acryloyloxypropyl sulfonate, 2-(meth)acryloyloxypropylsulfonic acid, lithium 2-(meth)acryloyloxypropyl sulfonate, sodium 2-(meth)acryloyloxypropyl sulfonate, potassium 2-(meth)acryloyloxypropyl sulfonate, rubidium 2-(meth)acryloyloxypropyl sulfonate, ammonium 2-(meth)acryloyloxypropyl sulfonate, magnesium 2-(meth)acryloyloxypropyl sulfonate, calcium 2-(meth)acryloyloxypropyl sulfonate, 3-(meth)acryloyloxy-2-hydroxypropyl-1-sulfonic acid, lithium 3-(meth)acryloyloxy-2-hydroxypropyl-1-sulfonate, sodium 3-(meth)acryloyloxy-2-hydroxypropyl-1-sulfonate, potassium 3-(meth)acryloyloxy-2-hydroxypropyl-1-sulfonate, rubidium 3-(meth)acryloyloxy-2-hydroxypropyl-1-sulfonate, ammonium 3-(meth)acryloyloxy-2-hydroxypropyl-1-sulfonate, magnesium 3-(meth)acryloyloxy-2-hydroxypropyl-1-sulfonate, calcium 3-(meth)acryloyloxy-2-hydroxypropyl-1-sulfonate, 4-(meth)acryloyloxybutylsulfonic acid, lithium 4-(meth)acryloyloxybutyl sulfonate, sodium 4-(meth)acryloyloxybutyl sulfonate, potassium 4-(meth)acryloyloxybutyl sulfonate, rubidium 4-(meth)acryloyloxybutyl sulfonate, ammonium 4-(meth)acryloyloxybutyl sulfonate, magnesium 4-(meth)acryloyloxybutyl sulfonate, calcium 4-(meth)acryloyloxybutyl sulfonate, 5-(meth)acryloyloxy-3-oxapentylsulfonic acid, sodium 5-(meth)acryloyloxy-3-oxapentyl sulfonate, potassium 5-(meth)acryloyloxy-3-oxapentyl sulfonate, rubidium 5-(meth)acryloyloxy-3-oxapentyl sulfonate, ammonium 5-(meth)acryloyloxy-3-oxapentyl sulfonate, magnesium 5-(meth)acryloyloxy-3-oxapentyl sulfonate, calcium 5-(meth)acryloyloxy-3-oxapentyl sulfonate, 5-(meth)acryloyloxy-3-thiapentylsulfonic acid, sodium 5-(meth)acryloyloxy-3-thiapentyl sulfonate, potassium 5-(meth)acryloyloxy-3-thiapentyl sulfonate, rubidium 5-(meth)acryloyloxy-3-thiapentyl sulfonate, ammonium 5-(meth)acryloyloxy-3-thiapentyl sulfonate, magnesium 5-(meth)acryloyloxy-3-thiapentyl sulfonate, calcium 5-(meth)acryloyloxy-3-thiapentyl sulfonate, 6-(meth)acryloyloxyhexylsulfonic acid, lithium 6-(meth)acryloyloxyhexyl sulfonate, sodium 6-(meth)acryloyloxyhexyl sulfonate, potassium 6-(meth)acryloyloxyhexyl sulfonate, rubidium 6-(meth)acryloyloxyhexyl sulfonate, ammonium 6-(meth)acryloyloxyhexyl sulfonate, magnesium 6-(meth)acryloyloxyhexyl sulfonate, calcium 6-(meth)acryloyloxyhexyl sulfonate, 8-(meth)acryloyloxy-3,6-dioxaoctylsulfonic acid, sodium 8-(meth)acryloyloxy-3,6-dioxaoctyl sulfonate, potassium 8-(meth)acryloyloxy-3,6-dioxaoctyl sulfonate, rubidium 8-(meth)acryloyloxy-3,6-dioxaoctyl sulfonate, ammonium 8-(meth)acryloyloxy-3,6-dioxaoctyl sulfonate, magnesium 8-(meth)acryloyloxy-3,6-dioxaoctyl sulfonate, calcium 8-(meth)acryloyloxy-3,6-dioxaoctyl sulfonate, (meth)acrylamidomethylsulfonic acid, sodium (meth)acrylamidomethyl sulfonate, potassium (meth)acrylamidomethyl sulfonate, (meth)acrylthiomethylsulfonic acid, sodium (meth)acrylthiomethyl sulfonate, potassium (meth)acrylthiomethyl sulfonate, rubidium (meth)acrylthiomethyl sulfonate, ammonium (meth)acrylthiomethyl sulfonate, magnesium (meth)acrylthiomethyl sulfonate, calcium (meth)acrylthiomethyl sulfonate, 2-(meth)acrylthioethylsulfonic acid, sodium 2-(meth)acrylthioethyl sulfonate, potassium 2-(meth)acrylthioethyl sulfonate, rubidium 2-(meth)acrylthioethyl sulfonate, ammonium 2-(meth)acrylthioethyl sulfonate, magnesium 2-(meth)acrylthioethyl sulfonate, calcium 2-(meth)acrylthioethyl sulfonate, 3-(meth)acrylthiopropylsulfonic acid, sodium 3-(meth)acrylthiopropyl sulfonate, potassium 3-(meth)acrylthiopropyl sulfonate, rubidium 3-(meth)acrylthiopropyl sulfonate, ammonium 3-(meth)acrylthiopropyl sulfonate, magnesium 3-(meth)acrylthiopropyl sulfonate, calcium 3-(meth)acrylthiopropyl sulfonate, (meth)acrylamidomethylsulfonic acid, sodium (meth)acrylamidomethyl sulfonate, potassium (meth)acrylamidomethyl sulfonate, rubidium (meth)acrylamidomethyl sulfonate, ammonium (meth)acrylamidomethyl sulfonate, magnesium (meth)acrylamidomethyl sulfonate, calcium (meth)acrylamidomethyl sulfonate, 2-(meth)acrylamido ethylsulfonic acid, sodium 2-(meth)acrylamido ethyl sulfonate, potassium 2-(meth)acrylamido ethyl sulfonate, rubidium 2-(meth)acrylamido ethyl sulfonate, ammonium 2-(meth)acrylamido ethyl sulfonate, magnesium 2-(meth)acrylamido ethyl sulfonate, calcium 2-(meth)acrylamido ethyl sulfonate, 2-(meth)acrylamido-N-methyl-ethylsulfonic acid, sodium 2-(meth)acrylamido-N-methyl-ethyl sulfonate, potassium 2-(meth)acrylamido-N-methyl-ethyl sulfonate, rubidium 2-(meth)acrylamido-N-methyl-ethyl sulfonate, ammonium 2-(meth)acrylamido-N-methyl-ethyl sulfonate, magnesium 2-(meth)acrylamido-N-methyl-ethyl sulfonate, calcium 2-(meth)acrylamido-N-methyl-ethyl sulfonate, 3-(meth)acrylamido propyl-1-sulfonic acid, sodium 3-(meth)acrylamido propyl-1-sulfonate, potassium 3-(meth)acrylamido propyl-1-sulfonate, rubidium 3-(meth)acrylamido propyl-1-sulfonate, ammonium 3-(meth)acrylamido propyl-1-sulfonate, magnesium 3-(meth)acrylamido propyl-1-sulfonate, calcium 3-(meth)acrylamido propyl-1-sulfonate, 2-(meth)acrylamido propyl-1-sulfonic acid, sodium 2-(meth)acrylamido propyl-1-sulfonate, potassium 2-(meth)acrylamido propyl-1-sulfonate, rubidium 2-(meth)acrylamido propyl-1-sulfonate, ammonium 2-(meth)acrylamido propyl-1-sulfonate, magnesium 2-(meth)acrylamido propyl-1-sulfonate, calcium 2-(meth)acrylamido propyl-1-sulfonate, 2-(meth)acrylamido-2-methyl-propanesulfonic acid((meth)acrylamido-t-butylsulfonic acid), sodium 2-(meth)acrylamido-2-methyl-propanesulfonate (sodium (meth)acrylamido-t-butyl sulfonate), potassium 2-(meth)acrylamido-2-methyl-propanesulfonate (potassium (meth)acrylamido-t-butyl sulfonate), (sodium (meth)acrylamido-t-butyl sulfonate), rubidium 2-(meth)acrylamido-2-methyl-propanesulfonate (rubidium (meth)acrylamido-t-butyl sulfonate), ammonium 2-(meth)acrylamido-2-methyl-propanesulfonate (ammonium (meth)acrylamido-t-butyl sulfonate), magnesium 2-(meth)acrylamido-2-methyl-propanesulfonate (magnesium (meth)acrylamido-t-butyl sulfonate), calcium 2-(meth)acrylamido-2-methyl-propanesulfonate (calcium (meth)acrylamido-t-butyl sulfonate) and so on.

[Chem. 24]

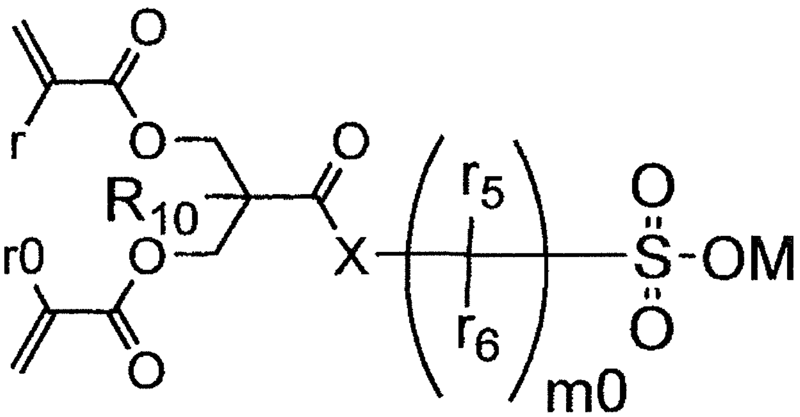

(I b)

In the formula (Ib), X is -O-, -S-, -NH- or -$NCH_3$-; r and $r_0$ each independently represent a hydrogen atom or a methyl group; $r_5$ and $r_6$ each independently represent a hydrogen atom, a methyl group, an ethyl group or a hydroxyl group; $R_{10}$ represents a hydrogen atom, a $C_{1-10}$ alkyl group, a $C_{3-10}$ cycloalkyl group, a phenyl group, a benzyl group, a hydroxyl group, hydroxymethyl or hydroxyethyl; m0 is an integer of 1 to 10; M represents a hydrogen ion, an ammonium ion, an alkali metal ion or an alkaline earth metal ion having 1/2 atomic valence; and n1 is an integer of 1 to 10.

Examples of the compounds represented by the general formula (Ib) include 2,2-bis((meth)acryloyloxymethyl)acetic acid sulfomethyl ester, 2,2-bis((meth)acryloyloxymethyl)acetic acid sulfomethyl ester lithium, 2,2-bis((meth)acryloyloxymethyl)acetic acid sulfomethyl ester sodium, 2,2-bis((meth)acryloyloxymethyl)acetic acid sulfomethyl ester potassium, 2,2-bis((meth)acryloyloxymethyl)acetic acid sulfomethyl ester ammonium, 2,2-bis((meth)acryloyloxymethyl)acetic acid sulfomethyl ester magnesium, 2,2-bis((meth)acryloyloxymethyl)acetic acid sulfomethyl ester calcium, 2,2-bis((meth)acryloyloxymethyl)acetic acid-2-sulfoethyl ester, 2,2-bis((meth)acryloyloxymethyl)acetic acid-2-sulfoethyl ester lithium, 2,2-bis((meth)acryloyloxymethyl)acetic acid-2-sulfoethyl ester sodium, 2,2-bis((meth)acryloyloxymethyl)acetic acid-2-sulfoethyl ester potassium, 2,2-bis((meth)acryloyloxymethyl)acetic acid-2-sulfoethyl ester ammonium, 2,2-bis((meth)acryloyloxymethyl)acetic acid-2-sulfoethyl ester magnesium, 2,2-bis((meth)acryloyloxymethyl)acetic acid-2-sulfoethyl ester calcium, 2,2-bis((meth)acryloyloxymethyl)acetic acid-3-sulfopropyl ester, 2,2-bis((meth)acryloyloxymethyl)acetic acid-3-sulfopropyl ester lithium, 2,2-bis((meth)acryloyloxymethyl)acetic acid-3-sulfopropyl ester sodium, 2,2-bis((meth)acryloyloxymethyl)acetic acid-3-sulfopropyl ester potassium, 2,2-bis((meth)acryloyloxymethyl)acetic acid-3-sulfopropyl ester ammonium, 2,2-bis((meth)acryloyloxymethyl)acetic acid-3-sulfopropyl ester magnesium, 2,2-bis((meth)acryloyloxymethyl)acetic acid-3-sulfopropyl ester calcium, 2,2-bis((meth)acryloyloxymethyl)acetic acid-2-sulfopropyl ester, 2,2-bis((meth)acryloyloxymethyl)acetic acid-2-sulfopropyl ester lithium, 2,2-bis((meth)acryloyloxymethyl)acetic acid-2-sulfopropyl ester sodium, 2,2-bis((meth)acryloyloxymethyl)acetic acid-2-sulfopropyl ester potassium, 2,2-bis((meth)acryloyloxymethyl)acetic acid-2-sulfopropyl ester ammonium, 2,2-bis((meth)acryloyloxymethyl)acetic acid-2-sulfopropyl ester magnesium, 2,2-bis((meth)acryloyloxymethyl)acetic acid-2-sulfopropyl ester calcium, 2,2-bis((meth)acryloyloxymethyl)acetic acid-4-sulfobutyl ester, 2,2-bis((meth)acryloyloxymethyl)acetic acid-4-sulfobutyl ester lithium, 2,2-bis((meth)acryloyloxymethyl)acetic acid-4-sulfobutyl ester sodium, 2,2-bis((meth)acryloyloxymethyl)acetic acid-4-sulfobutyl ester potassium, 2,2-bis((meth)acryloyloxymethyl)acetic acid-4-sulfobutyl ester ammonium, 2,2-bis((meth)acryloyloxymethyl)acetic acid-4-sulfobutyl ester magnesium, 2,2-bis((meth)acryloyloxymethyl)acetic acid-4-sulfobutyl ester calcium, 2,2-bis((meth)acryloyloxymethyl)acetic acid-6-sulfohexyl ester, 2,2-bis((meth)acryloyloxymethyl)acetic acid-6-sulfohexyl ester lithium, 2,2-bis((meth)acryloyloxymethyl)acetic acid-6-sulfohexyl ester sodium, 2,2-bis((meth)acryloyloxymethyl)acetic acid-6-sulfohexyl ester potassium, 2,2-bis((meth)acryloyloxymethyl)acetic acid-6-sulfohexyl ester ammonium, 2,2-bis((meth)acryloyloxymethyl)acetic acid-6-sulfohexyl ester magnesium, 2,2-bis((meth)acryloyloxymethyl)acetic acid-6-sulfohexyl ester calcium, 2,2-bis((meth)acryloyloxymethyl)acetic acid-10-sulfodecyl ester potassium, 2,2-bis((meth)acryloyloxymethyl)acetic acid-3-sulfopropyl ester, 2,2-bis((meth)acryloyloxymethyl)acetic acid-3-sulfopropyl ester lithium, 2,2-bis((meth)acryloyloxymethyl)acetic acid-3-sulfopropyl ester sodium, 2,2-bis((meth)acryloyloxymethyl)acetic acid-3-sulfopropyl ester potassium, 2,2-bis((meth)acryloyloxymethyl)acetic acid-3-sulfopropyl ester ammonium, 2,2-bis((meth)acryloyloxymethyl)acetic acid-3-sulfopropyl ester magnesium, 2,2-bis((meth)acryloyloxymethyl)acetic acid-3-sulfopropyl ester calcium, 2,2-bis((meth)acryloyloxymethyl)propionic acid sulfomethyl ester, 2,2-bis((meth)acryloyloxymethyl)propionic acid sulfomethyl ester lithium, 2,2-bis((meth)acryloyloxymethyl)propionic acid sulfomethyl ester sodium, 2,2-bis((meth)acryloyloxymethyl)propionic acid sulfomethyl ester potassium, 2,2-bis((meth)acryloyloxymethyl)propionic acid sulfomethyl ester ammonium, 2,2-bis((meth)acryloyloxymethyl)propionic acid sulfomethyl ester magnesium, 2,2-bis((meth)acryloyloxymethyl)propionic acid sulfomethyl ester calcium, 2,2-bis((meth)acryloyloxymethyl)propionic acid-2-sulfoethyl ester, 2,2-bis((meth)acryloyloxymethyl)propionic acid-2-sulfoethyl ester lithium, 2,2-bis((meth)acryloyloxymethyl)propionic acid-2-sulfoethyl ester sodium, 2,2-bis((meth)acryloyloxymethyl)propionic acid-2-sulfoethyl ester potassium, 2,2-bis((meth)acryloyloxymethyl)propionic acid-2-sulfoethyl ester ammonium, 2,2-bis((meth)acryloyloxymethyl)propionic acid-2-sulfoethyl ester magnesium, 2,2-bis((meth)acryloyloxymethyl)propionic acid-2-sulfoethyl ester calcium, 2,2-bis((meth)acryloyloxymethyl)propionic acid-3-sulfopropyl ester, 2,2-bis((meth)acryloyloxymethyl)propionic acid-3-sulfopropyl ester lithium, 2,2-bis((meth)acryloyloxymethyl)propionic acid-3-sulfopropyl ester sodium, 2,2-bis((meth)acryloyloxymethyl)propionic acid-3-sulfopropyl ester potassium, 2,2-bis((meth)acryloyloxymethyl)propionic acid-3-sulfopropyl ester ammonium, 2,2-bis((meth)acryloyloxymethyl)propionic acid-3-sulfopropyl ester magnesium, 2,2-bis((meth)acryloyloxymethyl)propionic acid-3-sulfopropyl ester calcium, 2,2-bis((meth)acryloyloxymethyl)propionic acid-2-sulfopropyl ester, 2,2-bis((meth)acryloyloxymethyl)propionic acid-2-sulfopropyl ester lithium, 2,2-bis((meth)acryloyloxymethyl)propionic acid-2-sulfopropyl ester sodium, 2,2-bis((meth)acryloyloxymethyl)propionic acid-2-sulfopropyl ester potassium, 2,2-bis((meth)acryloyloxymethyl)propionic acid-2-sulfopropyl ester ammonium, 2,2-bis((meth)acryloyloxymethyl)propionic acid-2-sulfopropyl ester magnesium, 2,2-bis((meth)acryloyloxymethyl)propionic acid-2-sulfopropyl ester calcium, 2,2-bis((meth)acryloyloxymethyl)propionic acid-4-sulfobutyl ester, 2,2-bis((meth)acryloyloxymethyl)propionic acid-4-sulfobutyl ester lithium, 2,2-bis((meth)acryloyloxymethyl)propionic acid-4-sulfobutyl ester sodium, 2,2-bis((meth)acryloyloxymethyl)propionic acid-4-sulfobutyl ester potassium, 2,2-bis((meth)acryloyloxymethyl)propionic acid-4-sulfobutyl ester ammonium, 2,2-bis((meth)acryloyloxymethyl)propionic acid-4-sulfobutyl ester magnesium, 2,2-bis((meth)acryloyloxymethyl)propionic acid-4-sulfobutyl ester calcium, 2,2-bis((meth)acryloyloxymethyl)propionic acid-6-sulfohexyl ester, 2,2-bis((meth)acryloyloxymethyl)propionic acid-6-sulfohexyl ester lithium, 2,2-bis((meth)acryloyloxymethyl)propionic acid-6-sulfohexyl ester sodium, 2,2-bis((meth)acryloyloxymethyl)propionic acid-6-sulfohexyl ester potassium, 2,2-bis((meth)acryloyloxymethyl)propionic acid-6-sulfohexyl ester ammonium, 2,2-bis((meth)acryloyloxymethyl)propionic acid-6-sulfohexyl ester magnesium, 2,2-bis((meth)acryloyloxymethyl)propionic acid-6-sulfohexyl ester calcium, 2,2-bis((meth)acryloyloxymethyl)propionic acid-10-sulfodecyl ester potassium, 2,2-bis((meth)acryloyloxymethyl)propionic acid-3-sulfopropyl ester, 2,2-bis((meth)acryloyloxymethyl)propionic acid-3-sulfopropyl ester lithium, 2,2-bis((meth)acryloyloxymethyl)propionic acid-3-sulfopropyl ester sodium, 2,2-bis((meth)acryloyloxymethyl)propionic acid-3-sulfopropyl ester potassium, 2,2-bis((meth)acryloyloxymethyl)propionic acid-3-sulfopropyl ester ammonium, 2,2-bis((meth)acryloyloxymethyl)propionic acid-3-sulfopropyl ester magnesium, 2,2-bis((meth)acryloyloxymethyl)propionic acid-3-sulfopropyl ester calcium, 2,2-bis((meth)acryloyloxymethyl)butyric acid sulfomethyl ester, 2,2-bis((meth)acryloyloxymethyl)butyric acid sulfomethyl ester lithium, 2,2-bis((meth)acryloyloxymethyl)butyric acid sulfomethyl ester sodium, 2,2-bis((meth)acryloyloxymethyl)butyric acid sulfomethyl ester potassium, 2,2-bis((meth)acryloyloxymethyl)butyric acid sulfomethyl ester ammonium, 2,2-bis((meth)acryloyloxymethyl)butyric acid sulfomethyl ester magnesium, 2,2-bis((meth)acryloyloxymethyl)butyric acid sulfomethyl ester calcium, 2,2-bis((meth)acryloyloxymethyl)butyric acid-2-sulfoethyl ester, 2,2-bis((meth)acryloyloxymethyl)butyric acid-2-sulfoethyl ester lithium, 2,2-bis((meth)acryloyloxymethyl)butyric acid-2-sulfoethyl ester sodium, 2,2-bis((meth)acryloyloxymethyl)butyric acid-2-sulfoethyl ester potassium, 2,2-bis((meth)acryloyloxymethyl)butyric acid-2-sulfoethyl ester ammonium, 2,2-bis((meth)acryloyloxymethyl)butyric acid-2-sulfoethyl ester magnesium, 2,2-bis((meth)acryloyloxymethyl)butyric acid-2-sulfoethyl ester calcium, 2,2-bis((meth)acryloyloxymethyl)butyric acid-3-sulfopropyl ester, 2,2-bis((meth)acryloyloxymethyl)butyric acid-3-sulfopropyl ester lithium, 2,2-bis((meth)acryloyloxymethyl)butyric acid-3-sulfopropyl ester sodium, 2,2-bis((meth)acryloyloxymethyl)butyric acid-3-sulfopropyl ester potassium, 2,2-bis((meth)acryloyloxymethyl)butyric acid-3-sulfopropyl ester ammonium, 2,2-bis((meth)acryloyloxymethyl)butyric acid-3-sulfopropyl ester magnesium, 2,2-bis((meth)acryloyloxymethyl)butyric acid-3-sulfopropyl ester calcium, 2,2-bis((meth)acryloyloxymethyl)butyric acid-2-sulfopropyl ester, 2,2-bis((meth)acryloyloxymethyl)butyric acid-2-sulfopropyl ester lithium, 2,2-bis((meth)acryloyloxymethyl)butyric acid-2-sulfopropyl ester sodium, 2,2-bis((meth)acryloyloxymethyl)butyric acid-2-sulfopropyl ester potassium, 2,2-bis((meth)acryloyloxymethyl)butyric acid-2-sulfopropyl ester ammonium, 2,2-bis((meth)acryloyloxymethyl)butyric acid-2-sulfopropyl ester magnesium, 2,2-bis((meth)acryloyloxymethyl)butyric acid-2-sulfopropyl ester calcium, 2,2-bis((meth)acryloyloxymethyl)butyric acid-4-sulfobutyl ester, 2,2-bis((meth)acryloyloxymethyl)butyric acid-4-sulfobutyl ester lithium, 2,2-bis((meth)acryloyloxymethyl)butyric acid-4-sulfobutyl ester sodium, 2,2-bis((meth)acryloyloxymethyl)butyric acid-4-sulfobutyl ester potassium, 2,2-bis((meth)acryloyloxymethyl)butyric acid-4-sulfobutyl ester ammonium, 2,2-bis((meth)acryloyloxymethyl)butyric acid-4-sulfobutyl ester magnesium, 2,2-bis((meth)acryloyloxymethyl)butyric acid-4-sulfobutyl ester calcium, 2,2-bis((meth)acryloyloxymethyl)butyric acid-6-sulfohexyl ester, 2,2-bis((meth)acryloyloxymethyl)butyric acid-6-sulfohexyl ester lithium, 2,2-bis((meth)acryloyloxymethyl)butyric acid-6-sulfohexyl ester sodium, 2,2-bis((meth)acryloyloxymethyl)butyric acid-6-sulfohexyl ester potassium, 2,2-bis((meth)acryloyloxymethyl)butyric acid-6-sulfohexyl ester ammonium, 2,2-bis((meth)acryloyloxymethyl)butyric acid-6-sulfohexyl ester magnesium, 2,2-bis((meth)acryloyloxymethyl)butyric acid-6-sulfohexyl ester calcium, 2,2-bis((meth)acryloyloxymethyl)butyric acid-10-sulfodecyl ester potassium, 2,2-bis((meth)acryloyloxymethyl)butyric acid-3-sulfopropyl ester, 2,2-bis((meth)acryloyloxymethyl)butyric acid-3-sulfopropyl

ester lithium, 2,2-bis((meth)acryloyloxymethyl)butyric acid-3-sulfopropyl ester sodium, 2,2-bis((meth)acryloyloxymethyl)butyric acid-3-sulfopropyl ester potassium, 2,2-bis((meth)acryloyloxymethyl)butyric acid-3-sulfopropyl ester ammonium, 2,2-bis((meth)acryloyloxymethyl)butyric acid-3-sulfopropyl ester magnesium, 2,2-bis((meth)acryloyloxymethyl)butyric acid-3-sulfopropyl ester calcium, 2,2-bis((meth)acryloyloxymethyl)valeric acid sulfomethyl ester, 2,2-bis((meth)acryloyloxymethyl)valeric acid sulfomethyl ester lithium, 2,2-bis((meth)acryloyloxymethyl)valeric acid sulfomethyl ester sodium, 2,2-bis((meth)acryloyloxymethyl)valeric acid sulfomethyl ester potassium, 2,2-bis((meth)acryloyloxymethyl)valeric acid sulfomethyl ester ammonium, 2,2-bis((meth)acryloyloxymethyl)valeric acid sulfomethyl ester magnesium, 2,2-bis((meth)acryloyloxymethyl)valeric acid sulfomethyl ester calcium, 2,2-bis((meth)acryloyloxymethyl)valeric acid-2-sulfoethyl ester, 2,2-bis((meth)acryloyloxymethyl)valeric acid-2-sulfoethyl ester lithium, 2,2-bis((meth)acryloyloxymethyl)valeric acid-2-sulfoethyl ester sodium, 2,2-bis((meth)acryloyloxymethyl)valeric acid-2-sulfoethyl ester potassium, 2,2-bis((meth)acryloyloxymethyl)valeric acid-2-sulfoethyl ester ammonium, 2,2-bis((meth)acryloyloxymethyl)valeric acid-2-sulfoethyl ester magnesium, 2,2-bis((meth)acryloyloxymethyl)valeric acid-2-sulfoethyl ester calcium, 2,2-bis((meth)acryloyloxymethyl)valeric acid-3-sulfopropyl ester, 2,2-bis((meth)acryloyloxymethyl)valeric acid-3-sulfopropyl ester lithium, 2,2-bis((meth)acryloyloxymethyl)valeric acid-3-sulfopropyl ester sodium, 2,2-bis((meth)acryloyloxymethyl)valeric acid-3-sulfopropyl ester potassium, 2,2-bis((meth)acryloyloxymethyl)valeric acid-3-sulfopropyl ester ammonium, 2,2-bis((meth)acryloyloxymethyl)valeric acid-3-sulfopropyl ester magnesium, 2,2-bis((meth)acryloyloxymethyl)valeric acid-3-sulfopropyl ester calcium, 2,2-bis((meth)acryloyloxymethyl)valeric acid-2-sulfopropyl ester, 2,2-bis((meth)acryloyloxymethyl)valeric acid-2-sulfopropyl ester lithium, 2,2-bis((meth)acryloyloxymethyl)valeric acid-2-sulfopropyl ester sodium, 2,2-bis((meth)acryloyloxymethyl)valeric acid-2-sulfopropyl ester potassium, 2,2-bis((meth)acryloyloxymethyl)valeric acid-2-sulfopropyl ester ammonium, 2,2-bis((meth)acryloyloxymethyl)valeric acid-2-sulfopropyl ester magnesium, 2,2-bis((meth)acryloyloxymethyl)valeric acid-2-sulfopropyl ester calcium, 2,2-bis((meth)acryloyloxymethyl)valeric acid-4-sulfobutyl ester, 2,2-bis((meth)acryloyloxymethyl)valeric acid-4-sulfobutyl ester lithium, 2,2-bis((meth)acryloyloxymethyl)valeric acid-4-sulfobutyl ester sodium, 2,2-bis((meth)acryloyloxymethyl)valeric acid-4-sulfobutyl ester potassium, 2,2-bis((meth)acryloyloxymethyl)valeric acid-4-sulfobutyl ester ammonium, 2,2-bis((meth)acryloyloxymethyl)valeric acid-4-sulfobutyl ester magnesium, 2,2-bis((meth)acryloyloxymethyl)valeric acid-4-sulfobutyl ester calcium, 2,2-bis((meth)acryloyloxymethyl)valeric acid-6-sulfohexyl ester, 2,2-bis((meth)acryloyloxymethyl)valeric acid-6-sulfohexyl ester lithium, 2,2-bis((meth)acryloyloxymethyl)valeric acid-6-sulfohexyl ester sodium, 2,2-bis((meth)acryloyloxymethyl)valeric acid-6-sulfohexyl ester potassium, 2,2-bis((meth)acryloyloxymethyl)valeric acid-6-sulfohexyl ester ammonium, 2,2-bis((meth)acryloyloxymethyl)valeric acid-6-sulfohexyl ester magnesium, 2,2-bis((meth)acryloyloxymethyl)valeric acid-6-sulfohexyl ester calcium, 2,2-bis((meth)acryloyloxymethyl)valeric acid-10-sulfodecyl ester potassium, 2,2-bis((meth)acryloyloxymethyl)valeric acid-3-sulfopropyl ester, 2,2-bis((meth)acryloyloxymethyl)valeric acid-3-sulfopropyl ester lithium, 2,2-bis((meth)acryloyloxymethyl)valeric acid-3-sulfopropyl ester sodium, 2,2-bis((meth)acryloyloxymethyl)valeric acid-3-sulfopropyl ester potassium, 2,2-bis((meth)acryloyloxymethyl)valeric acid-3-sulfopropyl ester ammonium, 2,2-bis((meth)acryloyloxymethyl)valeric acid-3-sulfopropyl ester magnesium, 2,2-bis((meth)acryloyloxymethyl)valeric acid-3-sulfopropyl ester calcium, 2,2-bis((meth)acryloyloxymethyl)caproic acid sulfomethyl ester, 2,2-bis((meth)acryloyloxymethyl)caproic acid sulfomethyl ester lithium, 2,2-bis((meth)acryloyloxymethyl)caproic acid sulfomethyl ester sodium, 2,2-bis((meth)acryloyloxymethyl)caproic acid sulfomethyl ester potassium, 2,2-bis((meth)acryloyloxymethyl)caproic acid sulfomethyl ester ammonium, 2,2-bis((meth)acryloyloxymethyl)caproic acid sulfomethyl ester magnesium, 2,2-bis((meth)acryloyloxymethyl)caproic acid sulfomethyl ester calcium, 2,2-bis((meth)acryloyloxymethyl)caproic acid-2-sulfoethyl ester, 2,2-bis((meth)acryloyloxymethyl)caproic acid-2-sulfoethyl ester lithium, 2,2-bis((meth)acryloyloxymethyl)caproic acid-2-sulfoethyl ester sodium, 2,2-bis((meth)acryloyloxymethyl)caproic acid-2-sulfoethyl ester potassium, 2,2-bis((meth)acryloyloxymethyl)caproic acid-2-sulfoethyl ester ammonium, 2,2-bis((meth)acryloyloxymethyl)caproic acid-2-sulfoethyl ester magnesium, 2,2-bis((meth)acryloyloxymethyl)caproic acid-2-sulfoethyl ester calcium, 2,2-bis((meth)acryloyloxymethyl)caproic acid-3-sulfopropyl ester, 2,2-bis((meth)acryloyloxymethyl)caproic acid-3-sulfopropyl ester lithium, 2,2-bis((meth)acryloyloxymethyl)caproic acid-3-sulfopropyl ester sodium, 2,2-bis((meth)acryloyloxymethyl)caproic acid-3-sulfopropyl ester potassium, 2,2-bis((meth)acryloyloxymethyl)caproic acid-3-sulfopropyl ester ammonium, 2,2-bis((meth)acryloyloxymethyl)caproic acid-3-sulfopropyl ester magnesium, 2,2-bis((meth)acryloyloxymethyl)caproic acid-3-sulfopropyl ester calcium, 2,2-bis((meth)acryloyloxymethyl)caproic acid-2-sulfopropyl ester, 2,2-bis((meth)acryloyloxymethyl)caproic acid-2-sulfopropyl ester lithium, 2,2-bis((meth)acryloyloxymethyl)caproic acid-2-sulfopropyl ester sodium, 2,2-bis((meth)acryloyloxymethyl)caproic acid-2-sulfopropyl ester potassium, 2,2-bis((meth)acryloyloxymethyl)caproic acid-2-sulfopropyl ester ammonium, 2,2-bis((meth)acryloyloxymethyl)caproic acid-2-sulfopropyl ester magnesium, 2,2-bis((meth)acryloyloxymethyl)caproic acid-2-sulfopropyl ester calcium, 2,2-bis((meth)acryloyloxymethyl)caproic acid-4-sulfobutyl ester, 2,2-bis((meth)acryloyloxymethyl)caproic acid-4-sulfobutyl ester lithium, 2,2-bis((meth)acryloyloxymethyl)caproic acid-4-sulfobutyl ester sodium, 2,2-bis((meth)acryloyloxymethyl)caproic acid-4-sulfobutyl ester potassium, 2,2-bis((meth)acryloyloxymethyl)caproic acid-4-sulfobutyl ester ammonium, 2,2-bis((meth)acryloyloxymethyl)caproic acid-4-sulfobutyl ester magnesium, 2,2-bis((meth)acryloyloxymethyl)caproic acid-4-sulfobutyl ester calcium, 2,2-bis((meth)acryloyloxymethyl)caproic acid-6-sulfohexyl ester, 2,2-bis((meth)acryloyloxymethyl)caproic acid-6-sulfohexyl ester lithium, 2,2-bis((meth)acryloyloxymethyl)caproic acid-6-sulfohexyl ester sodium, 2,2-bis((meth)acryloyloxymethyl)caproic acid-6-sulfohexyl ester potassium, 2,2-bis((meth)acryloyloxymethyl)caproic acid-6-sulfohexyl ester ammonium, 2,2-bis((meth)acryloyloxymethyl)caproic acid-6-sulfohexyl ester magnesium, 2,2-bis((meth)acryloyloxymethyl)caproic acid-6-sulfohexyl ester calcium, 2,2-bis((meth)acryloyloxymethyl)caproic acid-10-sulfodecyl ester potassium, 2,2-bis((meth)acryloyloxymethyl)caproic acid-3-sulfopropyl ester, 2,2-bis((meth)acryloyloxymethyl)caproic acid-3-sulfopropyl ester lithium, 2,2-bis((meth)acryloyloxymethyl)caproic acid-3-sulfopropyl ester sodium, 2,2-bis((meth)acryloyloxymethyl)caproic acid-3-sulfopropyl ester potassium, 2,2-bis((meth)acryloyloxymethyl)caproic acid-3-sulfopropyl ester ammonium, 2,2-bis((meth)acryloyloxymethyl)caproic acid-3-sulfopropyl ester magnesium, 2,2-bis((meth)acryloyloxymethyl)caproic acid-3-sulfopropyl ester calcium, 2,2-bis((meth)acryloyloxymethyl)caprylic acid sulfomethyl ester, 2,2-bis((meth)acryloyloxymethyl)caprylic acid sulfomethyl ester lithium, 2,2-bis((meth)acryloyloxymethyl)caprylic acid sulfomethyl ester sodium, 2,2-bis((meth)acryloyloxymethyl)caprylic acid sulfomethyl ester potassium, 2,2-bis((meth)acryloyloxymethyl)caprylic acid sulfomethyl ester ammonium, 2,2-bis((meth)acryloyloxymethyl)caprylic acid sulfomethyl ester magnesium, 2,2-bis((meth)acryloyloxymethyl)caprylic acid sulfomethyl ester calcium, 2,2-bis((meth)acryloyloxymethyl)caprylic acid-2-sulfoethyl ester, 2,2-bis((meth)acryloyloxymethyl)caprylic acid-2-sulfoethyl ester lithium, 2,2-bis((meth)acryloyloxymethyl)caprylic acid-2-sulfoethyl ester sodium, 2,2-bis((meth)acryloyloxymethyl)caprylic acid-2-sulfoethyl ester potassium, 2,2-bis((meth)acryloyloxymethyl)caprylic acid-2-sulfoethyl ester ammonium, 2,2-bis((meth)acryloyloxymethyl)caprylic acid-2-sulfoethyl ester magnesium, 2,2-bis((meth)acryloyloxymethyl)caprylic acid-2-sulfoethyl ester calcium, 2,2-bis((meth)acryloyloxymethyl)caprylic acid-3-sulfopropyl ester, 2,2-bis((meth)acryloyloxymethyl)caprylic acid-3-sulfopropyl ester lithium, 2,2-bis((meth)acryloyloxymethyl)caprylic acid-3-sulfopropyl ester sodium, 2,2-bis((meth)acryloyloxymethyl)caprylic acid-3-sulfopropyl ester potassium, 2,2-bis((meth)acryloyloxymethyl)caprylic acid-3-sulfopropyl ester ammonium, 2,2-bis((meth)acryloyloxymethyl)caprylic acid-3-sulfopropyl ester magnesium, 2,2-bis((meth)acryloyloxymethyl)caprylic acid-3-sulfopropyl ester calcium, 2,2-bis((meth)acryloyloxymethyl)caprylic acid-2-sulfopropyl ester, 2,2-bis((meth)acryloyloxymethyl)caprylic acid-2-sulfopropyl ester lithium, 2,2-bis((meth)acryloyloxymethyl)caprylic acid-2-sulfopropyl ester sodium, 2,2-bis((meth)acryloyloxymethyl)caprylic acid-2-sulfopropyl ester potassium, 2,2-bis((meth)acryloyloxymethyl)caprylic acid-2-sulfopropyl ester ammonium, 2,2-bis((meth)acryloyloxymethyl)caprylic acid-2-sulfopropyl ester magnesium, 2,2-bis((meth)acryloyloxymethyl)caprylic acid-2-sulfopropyl ester calcium, 2,2-bis((meth)acryloyloxymethyl)caprylic acid-4-sulfobutyl ester, 2,2-bis((meth)acryloyloxymethyl)caprylic acid-4-sulfobutyl ester lithium, 2,2-bis((meth)acryloyloxymethyl)caprylic acid-4-sulfobutyl ester sodium, 2,2-bis((meth)acryloyloxymethyl)caprylic acid-4-sulfobutyl ester potassium, 2,2-bis((meth)acryloyloxymethyl)caprylic acid-4-sulfobutyl ester ammonium, 2,2-bis((meth)acryloyloxymethyl)caprylic acid-4-sulfobutyl ester magnesium, 2,2-bis((meth)acryloyloxymethyl)caprylic acid-4-sulfobutyl ester calcium, 2,2-bis((meth)acryloyloxymethyl)caprylic acid-6-sulfohexyl ester, 2,2-bis((meth)acryloyloxymethyl)caprylic acid-6-sulfohexyl ester lithium, 2,2-bis((meth)acryloyloxymethyl)caprylic acid-6-sulfohexyl ester sodium, 2,2-bis((meth)acryloyloxymethyl)caprylic acid-6-sulfohexyl ester potassium, 2,2-bis((meth)acryloyloxymethyl)caprylic acid-6-sulfohexyl ester ammonium, 2,2-bis((meth)acryloyloxymethyl)caprylic acid-6-sulfohexyl ester magnesium, 2,2-bis((meth)acryloyloxymethyl)caprylic acid-6-sulfohexyl ester calcium, 2,2-bis((meth)acryloyloxymethyl)caprylic acid-10-sulfodecyl ester potassium, 2,2-bis((meth)acryloyloxymethyl)caprylic acid-3-sulfopropyl ester, 2,2-bis((meth)acryloyloxymethyl)caprylic acid-3-sulfopropyl ester lithium, 2,2-bis((meth)acryloyloxymethyl)caprylic acid-3-sulfopropyl ester sodium, 2,2-bis((meth)acryloyloxymethyl)caprylic acid-3-sulfopropyl ester potassium, 2,2-bis((meth)acryloyloxymethyl)caprylic acid-3-sulfopropyl ester ammonium, 2,2-bis((meth)acryloyloxymethyl)caprylic acid-3-sulfopropyl ester magnesium, 2,2-bis((meth)acryloyloxymethyl)caprylic acid-3-sulfopropyl ester calcium and so on.

[Chem. 25]

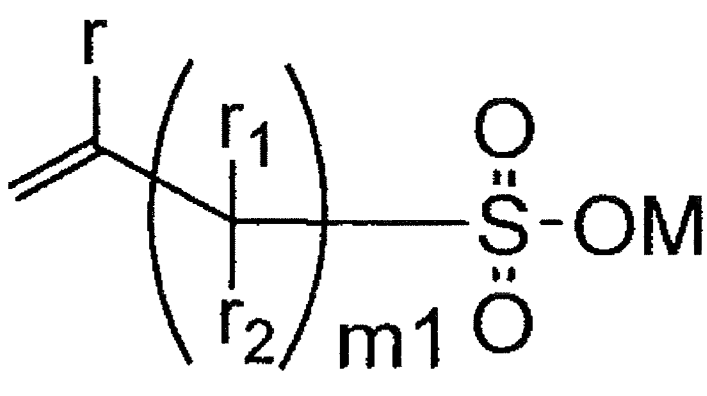

(I c)

In the formula (Ic), r represents a hydrogen atom or a methyl group; $r_1$ and $r_2$ each independently represent a hydrogen atom, a methyl group, an ethyl group or a hydroxyl group; m1 is an integer of 0 to 10; M represents a hydrogen ion, an ammonium ion, an alkali metal ion or an alkaline earth metal ion having 1/2 atomic valence; and n1 is an integer of 1 to 10.

Examples of the compounds represented by the general formula (Ic) include vinylsulfonic acid, lithium vinyl sulfonate, sodium vinyl sulfonate, potassium vinyl sulfonate, rubidium vinyl sulfonate, ammonium vinyl sulfonate, magnesium vinyl sulfonate, calcium vinyl sulfonate, isopropenylsulfonic acid, lithium isopropenyl sulfonate, sodium isopropenyl sulfonate, potassium isopropenyl sulfonate, rubidium isopropenyl sulfonate, ammonium isopropenyl sulfonate, magnesium isopropenyl sulfonate, calcium isopropenyl sulfonate, allylsulfonic acid, lithium allyl sulfonate, sodium allyl sulfonate, potassium allyl sulfonate, rubidium allyl sulfonate, ammonium allyl sulfonate, magnesium allyl sulfonate, calcium allyl sulfonate, methallylsulfonic acid, lithium methallyl sulfonate, sodium methallyl sulfonate, potassium methallyl sulfonate, rubidium methallyl sulfonate, ammonium methallyl sulfonate, magnesium methallyl sulfonate, calcium methallyl sulfonate, 5,6-hexenyl-1-sulfonic acid, lithium 5,6-hexenyl-1-sulfonate, sodium 5,6-hexenyl-1-sulfonate, potassium 5,6-hexenyl-1-sulfonate, rubidium 5,6-hexenyl-1-sulfonate, ammonium 5,6-hexenyl-1-sulfonate, magnesium 5,6-hexenyl-1-sulfonate, calcium 5,6-hexenyl-1-sulfonate, and so on.

[Chem. 26]

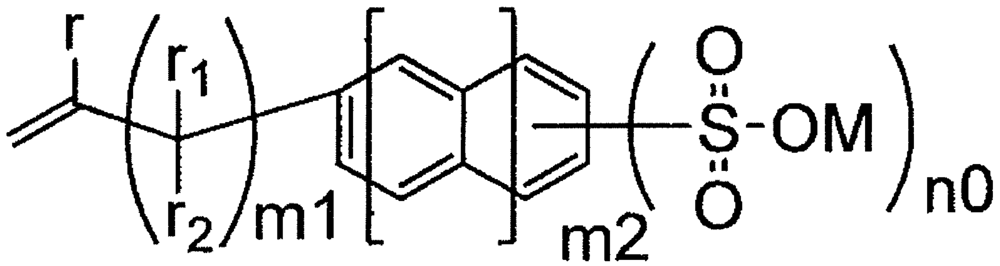

(I d)

In the formula (Id), r represents a hydrogen atom or a methyl group; $r_1$ and $r_2$ each independently represent a hydrogen atom, a methyl group, an ethyl group or a hydroxyl group; m1 is an integer of 0 to 10; m2 is an integer of 0 to 5; n0 is an integer of 1 to 5; M represents a hydrogen ion, an ammonium ion, an alkali metal ion or an alkaline earth metal ion having 1/2 atomic valence; and n1 is an integer of 1 to 10.

Examples of the compounds represented by the general formula (Id) include styrene sulfonic acid, lithium styrene sulfonate, sodium styrene sulfonate, potassium styrene sulfonate, rubidium styrene sulfonate, ammonium styrene sulfonate, magnesium styrene sulfonate, calcium styrene sulfonate, isopropenyl benzenesulfonic acid, lithium isopropenyl benzenesulfonate, sodium isopropenyl benzenesulfonate, potassium isopropenyl benzenesulfonate, rubidium isopropenyl benzenesulfonate, ammonium isopropenyl benzenesulfonate, magnesium isopropenyl benzenesulfonate, calcium isopropenyl benzenesulfonate, allyl benzenesulfonic acid, lithium allyl benzenesulfonate, sodium allyl benzenesulfonate, potassium allyl benzenesulfonate, rubidium allyl benzenesulfonate, ammonium allyl benzenesulfonate, magnesium allyl benzenesulfonate, calcium allyl benzenesulfonate, methallyl benzenesulfonic acid, lithium methallyl benzenesulfonate, sodium methallyl benzenesulfonate, potassium methallyl benzenesulfonate, rubidium methallyl benzenesulfonate, ammonium methallyl benzenesulfonate, magnesium methallyl benzenesulfonate, calcium methallyl benzenesulfonate, vinyl naphthalenesulfonic acid, lithium vinyl naphthalenesulfonate, sodium vinyl naphthalenesulfonate, potassium vinyl naphthalenesulfonate, rubidium vinyl naphthalenesulfonate, ammonium vinyl naphthalenesulfonate, magnesium vinyl naphthalenesulfonate, calcium vinyl naphthalenesulfonate, isopropenyl naphthalenesulfonic acid, lithium isopropenyl naphthalenesulfonate, sodium isopropenyl naphthalenesulfonate, potassium isopropenyl naphthalenesulfonate, rubidium isopropenyl naphthalenesulfonate, ammonium isopropenyl naphthalenesulfonate, magnesium isopropenyl naphthalenesulfonate, calcium isopropenyl naphthalenesulfonate, allylnaphthalenesulfonic acid, lithium allylnaphthalenesulfonate, sodium allylnaphthalenesulfonate, potassium allylnaphthalenesulfonate, rubidium allylnaphthalenesulfonate, ammonium allylnaphthalenesulfonate, magnesium allylnaphthalenesulfonate, calcium allylnaphthalenesulfonate, methallylnaphthalenesulfonic acid, lithium methallylnaphthalenesulfonate, sodium methallylnaphthalenesulfonate, potassium methallylnaphthalenesulfonate, rubidium methallylnaphthalenesulfonate, ammonium methallylnaphthalenesulfonate, magnesium methallylnaphthalenesulfonate, calcium methallylnaphthalenesulfonate, vinyl anthracenesulfonic acid, lithium vinyl anthracenesulfonate, sodium vinyl anthracenesulfonate, potassium vinyl anthracenesulfonate, rubidium vinyl anthracenesulfonate, ammonium vinyl anthracenesulfonate, magnesium vinyl anthracenesulfonate, calcium vinyl anthracenesulfonate, isopropenyl anthracenesulfonic acid, lithium isopropenyl anthracenesulfonate,

sodium isopropenyl anthracenesulfonate, potassium isopropenyl anthracenesulfonate, rubidium isopropenyl anthracenesulfonate, ammonium isopropenyl anthracenesulfonate, magnesium isopropenyl anthracenesulfonate, calcium isopropenyl anthracenesulfonate, allyl anthracenesulfonic acid, lithium allyl anthracenesulfonate, sodium allyl anthracenesulfonate, potassium allyl anthracenesulfonate, rubidium allyl anthracenesulfonate, ammonium allyl anthracenesulfonate, magnesium allyl anthracenesulfonate, calcium allyl anthracenesulfonate, methallyl anthracenesulfonic acid, lithium methallyl anthracenesulfonate, sodium methallyl anthracenesulfonate, potassium methallyl anthracenesulfonate, rubidium methallyl anthracenesulfonate, ammonium methallyl anthracenesulfonate, magnesium methallyl anthracenesulfonate, calcium methallyl anthracenesulfonate, vinylphenanthrenesulfonic acid, lithium vinylphenanthrenesulfonate, sodium vinylphenanthrenesulfonate, potassium vinylphenanthrenesulfonate, rubidium vinylphenanthrenesulfonate, ammonium vinylphenanthrenesulfonate, magnesium vinylphenanthrenesulfonate, calcium vinylphenanthrenesulfonate, isopropenylphenanthrenesulfonic acid, lithium isopropenylphenanthrenesulfonate, sodium isopropenylphenanthrenesulfonate, potassium isopropenylphenanthrenesulfonate, rubidium isopropenylphenanthrenesulfonate, ammonium isopropenylphenanthrenesulfonate, magnesium isopropenylphenanthrenesulfonate, calcium isopropenylphenanthrenesulfonate, allylphenanthrenesulfonic acid, lithium allylphenanthrenesulfonate, sodium allylphenanthrenesulfonate, potassium allylphenanthrenesulfonate, rubidium allylphenanthrenesulfonate, ammonium allylphenanthrenesulfonate, magnesium allylphenanthrenesulfonate, calcium allylphenanthrenesulfonate, methallylphenanthrenesulfonic acid, lithium methallylphenanthrenesulfonate, sodium methallylphenanthrenesulfonate, potassium methallylphenanthrenesulfonate, rubidium methallylphenanthrenesulfonate, ammonium methallylphenanthrenesulfonate, magnesium methallylphenanthrenesulfonate, calcium methallylphenanthrenesulfonate, styrene disulfonic acid, dilithium styrene disulfonate, disodium styrene disulfonate, dipotassium styrene disulfonate, dirubidium styrene disulfonate, diammonium styrene disulfonate, magnesium styrene disulfonate, calcium styrene disulfonate, isopropenyl benzene disulfonic acid, lithium isopropenyl benzene disulfonate, sodium isopropenyl benzene disulfonate, potassium isopropenyl benzene disulfonate, rubidium isopropenyl benzene disulfonate, ammonium isopropenyl benzene disulfonate, magnesium isopropenyl benzene disulfonate, calcium isopropenyl benzene disulfonate, vinyl naphthalene trisulfonic acid, trilithium vinyl naphthalene trisulfonate, trisodium vinyl naphthalene trisulfonate, tripotassium vinyl naphthalene trisulfonate, trirubidium vinyl naphthalene trisulfonate, triammonium vinyl naphthalene trisulfonate, magnesium vinyl naphthalene trisulfonate, calcium vinyl naphthalene trisulfonate, isopropenyl naphthalene trisulfonic acid, dilithium isopropenyl naphthalene trisulfonate, disodium isopropenyl naphthalene trisulfonate, dipotassium isopropenyl naphthalene trisulfonate, dirubidium isopropenyl naphthalene trisulfonate, diammonium isopropenyl naphthalene trisulfonate, magnesium isopropenyl naphthalene trisulfonate, calcium isopropenyl naphthalene trisulfonate and so on.

[Chem. 27]

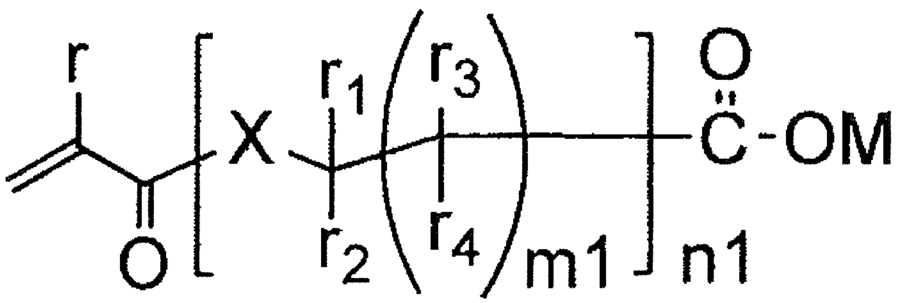

(I f)

In the formula (If), X is -O-, -S-, -NH- or $-NCH_3-$; r represents a hydrogen atom or a methyl group; $r_1$ to $r_4$ each independently represent a hydrogen atom, a methyl group, an ethyl group or a hydroxyl group; m1 is an integer of 0 to 10; n1 is an integer of 0 to 100; and M represents a hydrogen ion, an ammonium ion, an alkali metal ion or an alkaline earth metal ion having 1/2 atomic valence.

Examples of the compounds represented by the general formula (If) include (meth)acrylic acid, lithium (meth)acrylate, sodium (meth)acrylate, potassium (meth)acrylate, ammonium (meth)acrylate, magnesium (meth)acrylate, calcium (meth)acrylate, (meth)acryloyloxyglycolic acid, lithium (meth)acryloyloxyglycolate, sodium (meth)acryloyloxyglycolate, potassium (meth)acryloyloxyglycolate, ammonium (meth)acryloyloxyglycolate, magnesium (meth)acryloyloxyglycolate, calcium (meth)acryloyloxyglycolate, 2-(meth)acryloyloxy-propionic acid, lithium 2-(meth)acryloyloxy-propionate, sodium 2-(meth)acryloyloxy-propionate, potassium 2-(meth)acryloyloxy-propionate, ammonium 2-(meth)acryloyloxy-propionate, magnesium 2-(meth)acryloyloxy-propionate, calcium 2-(meth)acryloyloxy-propionate, 3-(meth)acryloyloxy-propionic acid, lithium 3-(meth)acryloyloxy-propionate, sodium 3-(meth)acryloyloxy-propionate, potassium 3-(meth)acryloyloxy-propionate, ammonium 3-(meth)acryloyloxy-propionate, magnesium 3-(meth)acryloyloxy-propionate, calcium

3-(meth)acryloyloxy-propionate, (meth)acryloyloxy-gluconic acid, lithium (meth)acryloyloxy-gluconate, sodium (meth)acryloyloxy-gluconate, potassium (meth)acryloyloxy-gluconate, ammonium (meth)acryloyloxy-gluconate, magnesium (meth)acryloyloxy-gluconate, calcium (meth)acryloyloxy-gluconate, (meth)acryloylthioglycolic acid, lithium (meth)acryloylthioglycolate, sodium (meth)acryloylthioglycolate, potassium (meth)acryloylthioglycolate, ammonium (meth)acryloylthioglycolate, magnesium (meth)acryloylthioglycolate, calcium (meth)acryloylthioglycolate, 2-(meth)acryloylthio-propionic acid, lithium 2-(meth)acryloylthio-propionate, sodium 2-(meth)acryloylthio-propionate, potassium 2-(meth)acryloylthio-propionate, ammonium 2-(meth)acryloylthio-propionate, magnesium 2-(meth)acryloylthio-propionate, calcium 2-(meth)acryloylthio-propionate, 3-(meth)acryloylthio-propionic acid, lithium 3-(meth)acryloylthio-propionate, sodium 3-(meth)acryloylthio-propionate, potassium 3-(meth)acryloylthio-propionate, ammonium 3-(meth)acryloylthio-propionate, magnesium 3-(meth)acryloylthio-propionate, calcium 3-(meth)acryloylthio-propionate, N-(meth)acryloyl-glycine, N-(meth)acryloyl-glycine lithium, N-(meth)acryloyl-glycine sodium, N-(meth)acryloyl-glycine potassium, N-(meth)acryloyl-glycine ammonium, N-(meth)acryloyl-glycine magnesium, N-(meth)acryloyl-glycine calcium, N-(meth)acryloyl-alanine, N-(meth)acryloyl-alanine lithium, N-(meth)acryloyl-alanine sodium, N-(meth)acryloyl-alanine potassium, N-(meth)acryloyl-alanine ammonium, N-(meth)acryloyl-alanine magnesium, N-(meth)acryloyl-alanine calcium and so on.

[Chem. 28]

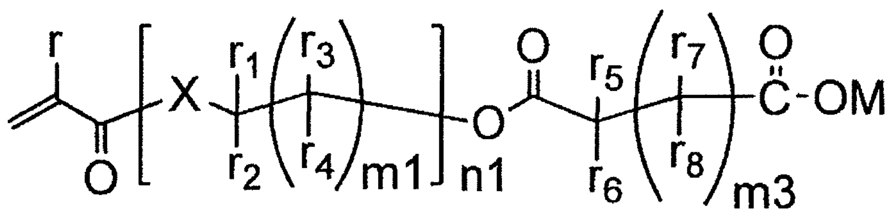

(Ig)

In the formula (Ig), X is -O-, -S-, -NH- or $-NCH_3-$; r represents a hydrogen atom or a methyl group; $r_1$ to $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 and m3 are each independetly an integer of 0 to 10; and M represents a hydrogen ion, an ammonium ion, an alkali metal ion or an alkaline earth metal ion having 1/2 atomic valence.

Examples of the compounds represented by the general formula (Ig) include malonic acid-mono{2-(meth)acryloyloxy-ethyl} ester, malonic acid-mono{2-(meth)acryloyloxy-ethyl} ester lithium, malonic acid-mono{2-(meth)acryloyloxy-ethyl} ester sodium, malonic acid-mono{2-(meth)acryloyloxy-ethyl} ester potassium, malonic acid-mono{2-(meth)acryloyloxy-ethyl} ester ammonium, malonic acid-mono{2-(meth)acryloyloxy-ethyl} ester magnesium, malonic acid-mono{2-(meth)acryloyloxy-ethyl} ester calcium, malonic acid-mono{2-(meth)acryloyloxy-propyl} ester, malonic acid-mono{2-(meth)acryloyloxy-propyl} ester lithium, malonic acid-mono{2-(meth)acryloyloxy-propyl} ester sodium, malonic acid-mono{2-(meth)acryloyloxy-propyl} ester potassium, malonic acid-mono{2-(meth)acryloyloxy-propyl} ester ammonium, malonic acid-mono{2-(meth)acryloyloxy-propyl} ester magnesium, malonic acid-mono{2-(meth)acryloyloxy-propyl} ester calcium, malonic acid-mono{3-(meth)acryloyloxy-propyl} ester, malonic acid-mono{3-(meth)acryloyloxy-propyl} ester lithium, malonic acid-mono{3-(meth)acryloyloxy-propyl} ester sodium, malonic acid-mono{3-(meth)acryloyloxy-propyl} ester potassium, malonic acid-mono{3-(meth)acryloyloxy-propyl} ester ammonium, malonic acid-mono{3-(meth)acryloyloxy-propyl} ester magnesium, malonic acid-mono{3-(meth)acryloyloxy-propyl} ester calcium, malonic acid-mono{4-(meth)acryloyloxy-butyl} ester, malonic acid-mono{4-(meth)acryloyloxy-butyl} ester lithium, malonic acid-mono{4-(meth)acryloyloxy-butyl} ester sodium, malonic acid-mono{4-(meth)acryloyloxy-butyl} ester potassium, malonic acid-mono{4-(meth)acryloyloxy-butyl} ester ammonium, malonic acid-mono{4-(meth)acryloyloxy-butyl} ester magnesium, malonic acid-mono{4-(meth)acryloyloxy-butyl} ester calcium, malonic acid-mono{6-(meth)acryloyloxy-hexyl} ester, malonic acid-mono{6-(meth)acryloyloxy-hexyl} ester lithium, malonic acid-mono{6-(meth)acryloyloxy-hexyl} ester sodium, malonic acid-mono{6-(meth)acryloyloxy-hexyl} ester potassium, malonic acid-mono{6-(meth)acryloyloxy-hexyl} ester ammonium, malonic acid-mono{6-(meth)acryloyloxy-hexyl} ester magnesium, malonic acid-mono{6-(meth)acryloyloxy-hexyl} ester calcium, succinic acid-mono{2-(meth)acryloyloxy-ethyl} ester, succinic acid-mono{2-(meth)acryloyloxy-ethyl} ester lithium, succinic acid-mono{2-(meth)acryloyloxy-ethyl} ester sodium, succinic acid-mono{2-(meth)acryloyloxy-ethyl} ester potassium, succinic acid-mono{2-(meth)acryloyloxy-ethyl} ester ammonium, succinic acid-mono{2-(meth)acryloyloxy-ethyl} ester magnesium, succinic acid-mono{2-(meth)acryloyloxy-ethyl} ester calcium, succinic acid-mono{2-(meth)acryloyloxy-propyl} ester, succinic acid-mono{2-(meth)acryloyloxy-propyl} ester lithium, succinic acid-mono{2-(meth)acryloyloxy-propyl} ester sodium, succinic acid-mono{2-(meth)acryloyloxy-propyl} ester potassium, succinic acid-mono{2-(meth)acryloyloxy-propyl} ester ammonium, succinic acid-mono{2-(meth)acryloyloxy-propyl} ester magnesium, succinic acid-mono{2-(meth)acryloyloxy-propyl} ester calcium, succinic acid-mono{3-(meth)acryloyloxy-propyl} ester, succinic acid-mono{3-(meth)acryloyloxy-propyl} ester lithium, succinic acid-mono{3-(meth)acryloyloxy-propyl} ester sodium, succinic acid-mono{3-(meth)acryloyloxy-propyl} ester potassium, succinic acid-mono{3-(meth)acryloyloxy-propyl} ester ammonium, succinic acid-mono{3-(meth)acryloyloxy-propyl} ester magnesium, succinic acid-mono{3-(meth)acryloyloxy-propyl} ester calcium, succinic acid-mono{4-(meth)acryloyloxy-butyl} ester, succinic acid-mono{4-(meth)acryloyloxy-butyl} ester lithium, succinic acid-mono{4-(meth)acryloyloxy-butyl} ester sodium, succinic acid-mono{4-(meth)acryloyloxy-butyl} ester potassium, succinic acid-mono{4-(meth)acryloyloxy-butyl} ester ammonium, succinic acid-mono{4-(meth)acryloyloxy-butyl} ester magnesium, succinic acid-mono{4-(meth)acryloyloxy-butyl} ester calcium, succinic acid-mono{6-(meth)acryloyloxy-hexyl} ester, succinic acid-mono{6-(meth)acryloyloxy-hexyl} ester lithium, succinic acid-mono{6-(meth)acryloyloxy-hexyl} ester sodium, succinic acid-mono{6-(meth)acryloyloxy-hexyl} ester potassium, succinic acid-mono{6-(meth)acryloyloxy-hexyl} ester ammonium, succinic acid-mono{6-(meth)acryloyloxy-hexyl} ester magnesium, succinic acid-mono{6-(meth)acryloyloxy-hexyl} ester calcium, glutaric acid-mono{2-(meth)acryloyloxy-ethyl} ester, glutaric acid-mono{2-(meth)acryloyloxy-ethyl} ester lithium, glutaric acid-mono{2-(meth)acryloyloxy-ethyl} ester sodium, glutaric acid-mono{2-(meth)acryloyloxy-ethyl} ester potassium, glutaric acid-mono{2-(meth)acryloyloxy-ethyl} ester ammonium, glutaric acid-mono{2-(meth)acryloyloxy-ethyl} ester magnesium, glutaric acid-mono{2-(meth)acryloyloxy-ethyl} ester calcium, glutaric acid-mono{2-(meth)acryloyloxy-propyl} ester, glutaric acid-mono{2-(meth)acryloyloxy-propyl} ester lithium, glutaric acid-mono{2-(meth)acryloyloxy-propyl} ester sodium, glutaric acid-mono{2-(meth)acryloyloxy-propyl} ester potassium, glutaric acid-mono{2-(meth)acryloyloxy-propyl} ester ammonium, glutaric acid-mono{2-(meth)acryloyloxy-propyl} ester magnesium, glutaric acid-mono{2-(meth)acryloyloxy-propyl} ester calcium, glutaric acid-mono{3-(meth)acryloyloxy-propyl} ester, glutaric acid-mono{3-(meth)acryloyloxy-propyl} ester lithium, glutaric acid-mono{3-(meth)acryloyloxy-propyl} ester sodium, glutaric acid-mono{3-(meth)acryloyloxy-propyl} ester potassium, glutaric acid-mono{3-(meth)acryloyloxy-propyl} ester ammonium, glutaric acid-mono{3-(meth)acryloyloxy-propyl} ester magnesium, glutaric acid-mono{3-(meth)acryloyloxy-propyl} ester calcium, glutaric acid-mono{4-(meth)acryloyloxy-butyl} ester, glutaric acid-mono{4-(meth)acryloyloxy-butyl} ester lithium, glutaric acid-mono{4-(meth)acryloyloxy-butyl} ester sodium, glutaric acid-mono{4-(meth)acryloyloxy-butyl} ester potassium, glutaric acid-mono{4-(meth)acryloyloxy-butyl} ester ammonium, glutaric acid-mono{4-(meth)acryloyloxy-butyl} ester magnesium, glutaric acid-mono{4-(meth)acryloyloxy-butyl} ester calcium, glutaric acid-mono{6-(meth)acryloyloxy-hexyl} ester, glutaric acid-mono{6-(meth)acryloyloxy-hexyl} ester lithium, glutaric acid-mono{6-(meth)acryloyloxy-hexyl} ester sodium, glutaric acid-mono{6-(meth)acryloyloxy-hexyl} ester potassium, glutaric acid-mono{6-(meth)acryloyloxy-hexyl} ester ammonium, glutaric acid-mono{6-(meth)acryloyloxy-hexyl} ester magnesium, glutaric acid-mono{6-(meth)acryloyloxy-hexyl} ester calcium, adipic acid-mono{2-(meth)acryloyloxy-ethyl} ester, adipic acid-mono{2-(meth)acryloyloxy-ethyl} ester lithium, adipic acid-mono{2-(meth)acryloyloxy-ethyl} ester sodium, adipic acid-mono{2-(meth)acryloyloxy-ethyl} ester potassium, adipic acid-mono{2-(meth)acryloyloxy-ethyl} ester ammonium, adipic acid-mono{2-(meth)acryloyloxy-ethyl} ester magnesium, adipic acid-mono{2-(meth)acryloyloxy-ethyl} ester calcium, adipic acid-mono{2-(meth)acryloyloxy-propyl} ester, adipic acid-mono{2-(meth)acryloyloxy-propyl} ester lithium, adipic acid-mono{2-(meth)acryloyloxy-propyl} ester sodium, adipic acid-mono{2-(meth)acryloyloxy-propyl} ester potassium, adipic acid-mono{2-(meth)acryloyloxy-propyl} ester ammonium, adipic acid-mono{2-(meth)acryloyloxy-propyl} ester magnesium, adipic acid-mono{2-(meth)acryloyloxy-propyl} ester calcium, adipic acid-mono{3-(meth)acryloyloxy-propyl} ester, adipic acid-mono{3-(meth)acryloyloxy-propyl} ester lithium, adipic acid-mono{3-(meth)acryloyloxy-propyl} ester sodium, adipic acid-mono{3-(meth)acryloyloxy-propyl} ester potassium, adipic acid-mono{3-(meth)acryloyloxy-propyl} ester ammonium, adipic acid-mono{3-(meth)acryloyloxy-propyl} ester magnesium, adipic acid-mono{3-(meth)acryloyloxy-propyl} ester calcium, adipic acid-mono{4-(meth)acryloyloxy-butyl} ester, adipic acid-mono{4-(meth)acryloyloxy-butyl} ester lithium, adipic acid-mono{4-(meth)acryloyloxy-butyl} ester sodium, adipic acid-mono{4-(meth)acryloyloxy-butyl} ester potassium, adipic acid-mono{4-(meth)acryloyloxy-butyl} ester ammonium, adipic acid-mono{4-(meth)acryloyloxy-butyl} ester magnesium, adipic acid-mono{4-(meth)acryloyloxy-butyl} ester calcium, adipic acid-mono{6-(meth)acryloyloxy-hexyl} ester, adipic acid-mono{6-(meth)acryloyloxy-hexyl} ester lithium, adipic acid-mono{6-(meth)acryloyloxy-hexyl} ester sodium, adipic acid-mono{6-(meth)acryloyloxy-hexyl} ester potassium, adipic acid-mono{6-(meth)acryloyloxy-hexyl} ester ammonium, adipic acid-mono{6-(meth)acryloyloxy-hexyl} ester magnesium, adipic acid-mono{6-(meth)acryloyloxy-hexyl} ester calcium, pimelic acid-mono{2-(meth)acryloyloxy-ethyl} ester, pimelic acid-mono{2-(meth)acryloyloxy-ethyl} ester lithium, pimelic acid-mono{2-(meth)acryloyloxy-ethyl} ester sodium, pimelic acid-mono{2-(meth)acryloyloxy-ethyl} ester potassium, pimelic acid-mono{2-(meth)acryloyloxy-ethyl} ester ammonium, pimelic acid-mono{2-(meth)acryloyloxy-ethyl} ester magnesium, pimelic acid-mono{2-(meth)acryloyloxy-ethyl} ester calcium, pimelic acid-mono{2-(meth)acryloyloxy-propyl} ester, pimelic acid-mono{2-(meth)acryloyloxy-propyl} ester lithium, pimelic acid-mono{2-(meth)acryloyloxy-propyl} ester sodium, pimelic acid-mono{2-(meth)acryloyloxy-propyl} ester potassium, pimelic acid-mono{2-(meth)acryloyloxy-propyl} ester ammonium, pimelic acid-mono{2-(meth)acryloyloxy-propyl} ester magnesium, pimelic acid-mono{2-(meth)acryloyloxy-propyl} ester calcium, pimelic acid-mono{3-(meth)acryloyloxy-propyl} ester,

pimelic acid-mono{3-(meth)acryloyloxy-propyl} ester lithium, pimelic acid-mono{3-(meth)acryloyloxy-propyl} ester sodium, pimelic acid-mono{3-(meth)acryloyloxy-propyl} ester potassium, pimelic acid-mono{3-(meth)acryloyloxy-propyl} ester ammonium, pimelic acid-mono{3-(meth)acryloyloxy-propyl} ester magnesium, pimelic acid-mono{3-(meth)acryloyloxy-propyl} ester calcium, pimelic acid-mono{4-(meth)acryloyloxy-butyl} ester, pimelic acid-mono{4-(meth)acryloyloxy-butyl} ester lithium, pimelic acid-mono{4-(meth)acryloyloxy-butyl} ester sodium, pimelic acid-mono{4-(meth)acryloyloxy-butyl} ester potassium, pimelic acid-mono{4-(meth)acryloyloxy-butyl} ester ammonium, pimelic acid-mono{4-(meth)acryloyloxy-butyl} ester magnesium, pimelic acid-mono{4-(meth)acryloyloxy-butyl} ester calcium, pimelic acid-mono{6-(meth)acryloyloxy-hexyl} ester, pimelic acid-mono{6-(meth)acryloyloxy-hexyl} ester lithium, pimelic acid-mono{6-(meth)acryloyloxy-hexyl} ester sodium, pimelic acid-mono{6-(meth)acryloyloxy-hexyl} ester potassium, pimelic acid-mono{6-(meth)acryloyloxy-hexyl} ester ammonium, pimelic acid-mono{6-(meth)acryloyloxy-hexyl} ester magnesium, pimelic acid-mono{6-(meth)acryloyloxy-hexyl} ester calcium, suberic acid-mono{2-(meth)acryloyloxy-ethyl} ester, suberic acid-mono{2-(meth)acryloyloxy-ethyl} ester lithium, suberic acid-mono{2-(meth)acryloyloxy-ethyl} ester sodium, suberic acid-mono{2-(meth)acryloyloxy-ethyl} ester potassium, suberic acid-mono{2-(meth)acryloyloxy-ethyl} ester ammonium, suberic acid-mono{2-(meth)acryloyloxy-ethyl} ester magnesium, suberic acid-mono{2-(meth)acryloyloxy-ethyl} ester calcium, suberic acid-mono{2-(meth)acryloyloxy-propyl} ester, suberic acid-mono{2-(meth)acryloyloxy-propyl} ester lithium, suberic acid-mono{2-(meth)acryloyloxy-propyl} ester sodium, suberic acid-mono{2-(meth)acryloyloxy-propyl} ester potassium, suberic acid-mono{2-(meth)acryloyloxy-propyl} ester ammonium, suberic acid-mono{2-(meth)acryloyloxy-propyl} ester magnesium, suberic acid-mono{2-(meth)acryloyloxy-propyl} ester calcium, suberic acid-mono{3-(meth)acryloyloxy-propyl} ester, suberic acid-mono{3-(meth)acryloyloxy-propyl} ester lithium, suberic acid-mono{3-(meth)acryloyloxy-propyl} ester sodium, suberic acid-mono{3-(meth)acryloyloxy-propyl} ester potassium, suberic acid-mono{3-(meth)acryloyloxy-propyl} ester ammonium, suberic acid-mono{3-(meth)acryloyloxy-propyl} ester magnesium, suberic acid-mono{3-(meth)acryloyloxy-propyl} ester calcium, suberic acid-mono{4-(meth)acryloyloxy-butyl} ester, suberic acid-mono{4-(meth)acryloyloxy-butyl} ester lithium, suberic acid-mono{4-(meth)acryloyloxy-butyl} ester sodium, suberic acid-mono{4-(meth)acryloyloxy-butyl} ester potassium, suberic acid-mono{4-(meth)acryloyloxy-butyl} ester ammonium, suberic acid-mono{4-(meth)acryloyloxy-butyl} ester magnesium, suberic acid-mono{4-(meth)acryloyloxy-butyl} ester calcium, suberic acid-mono{6-(meth)acryloyloxy-hexyl} ester, suberic acid-mono{6-(meth)acryloyloxy-hexyl} ester lithium, suberic acid-mono{6-(meth)acryloyloxy-hexyl} ester sodium, suberic acid-mono{6-(meth)acryloyloxy-hexyl} ester potassium, suberic acid-mono{6-(meth)acryloyloxy-hexyl} ester ammonium, suberic acid-mono{6-(meth)acryloyloxy-hexyl} ester magnesium, suberic acid-mono{6-(meth)acryloyloxy-hexyl} ester calcium, sebacic acid-mono{2-(meth)acryloyloxy-ethyl} ester, sebacic acid-mono{2-(meth)acryloyloxy-ethyl} ester lithium, sebacic acid-mono{2-(meth)acryloyloxy-ethyl} ester sodium, sebacic acid-mono{2-(meth)acryloyloxy-ethyl} ester potassium, sebacic acid-mono{2-(meth)acryloyloxy-ethyl} ester ammonium, sebacic acid-mono{2-(meth)acryloyloxy-ethyl} ester magnesium, sebacic acid-mono{2-(meth)acryloyloxy-ethyl} ester calcium, sebacic acid-mono{2-(meth)acryloyloxy-propyl} ester, sebacic acid-mono{2-(meth)acryloyloxy-propyl} ester lithium, sebacic acid-mono{2-(meth)acryloyloxy-propyl} ester sodium, sebacic acid-mono{2-(meth)acryloyloxy-propyl} ester potassium, sebacic acid-mono{2-(meth)acryloyloxy-propyl} ester ammonium, sebacic acid-mono{2-(meth)acryloyloxy-propyl} ester magnesium, sebacic acid-mono{2-(meth)acryloyloxy-propyl} ester calcium, sebacic acid-mono{3-(meth)acryloyloxy-propyl} ester, sebacic acid-mono{3-(meth)acryloyloxy-propyl} ester lithium, sebacic acid-mono{3-(meth)acryloyloxy-propyl} ester sodium, sebacic acid-mono{3-(meth)acryloyloxy-propyl} ester potassium, sebacic acid-mono{3-(meth)acryloyloxy-propyl} ester ammonium, sebacic acid-mono{3-(meth)acryloyloxy-propyl} ester magnesium, sebacic acid-mono{3-(meth)acryloyloxy-propyl} ester calcium, sebacic acid-mono{4-(meth)acryloyloxy-butyl} ester, sebacic acid-mono{4-(meth)acryloyloxy-butyl} ester lithium, sebacic acid-mono{4-(meth)acryloyloxy-butyl} ester sodium, sebacic acid-mono{4-(meth)acryloyloxy-butyl} ester potassium, sebacic acid-mono{4-(meth)acryloyloxy-butyl} ester ammonium, sebacic acid-mono{4-(meth)acryloyloxy-butyl} ester magnesium, sebacic acid-mono{4-(meth)acryloyloxy-butyl} ester calcium, sebacic acid-mono{6-(meth)acryloyloxy-hexyl} ester, sebacic acid-mono{6-(meth)acryloyloxy-hexyl} ester lithium, sebacic acid-mono{6-(meth)acryloyloxy-hexyl} ester sodium, sebacic acid-mono{6-(meth)acryloyloxy-hexyl} ester potassium, sebacic acid-mono{6-(meth)acryloyloxy-hexyl} ester ammonium, sebacic acid-mono{6-(meth)acryloyloxy-hexyl} ester magnesium, sebacic acid-mono{6-(meth)acryloyloxy-hexyl} ester calcium, dodecane dioic acid-mono{2-(meth)acryloyloxy-ethyl} ester, dodecane dioic acid-mono{2-(meth)acryloyloxy-ethyl} ester lithium, dodecane dioic acid-mono{2-(meth)acryloyloxy-ethyl} ester sodium, dodecane dioic acid-mono{2-(meth)acryloyloxy-ethyl} ester potassium, dodecane dioic acid-mono{2-(meth)acryloyloxy-ethyl} ester ammonium, dodecane dioic acid-mono{2-(meth)acryloyloxy-ethyl} ester magnesium, dodecane dioic acid-mono{2-(meth)acryloyloxy-ethyl} ester calcium, dodecane dioic acid-mono{2-(meth)acryloyloxy-propyl} ester, dodecane dioic acid-mono{2-(meth)acryloyloxy-propyl} ester lithium, dodecane dioic acid-mono{2-(meth)acryloyloxy-propyl} ester sodium, dodecane dioic acid-mono{2-(meth)acryloyloxy-propyl} ester potassium, dodecane dioic acid-mono{2-(meth)acryloyloxy-propyl} ester ammonium, dodecane dioic acid-mono{2-(meth)acryloyloxy-propyl} ester magnesium, dodecane dioic acid-mono{2-(meth)acryloyloxy-propyl} ester calcium, dodecane dioic acid-mono{3-(meth)acryloyloxy-propyl} ester, dodecane dioic acid-mono{3-(meth)acryloyloxy-propyl} ester lithium, dodecane dioic acid-mono{3-(meth)acryloyloxy-propyl} ester sodium, dodecane dioic acid-mono{3-(meth)acryloyloxy-propyl} ester potassium,

dodecane dioic acid-mono{3-(meth)acryloyloxy-propyl} ester ammonium, dodecane dioic acid-mono{3-(meth)acryloyloxy-propyl} ester magnesium, dodecane dioic acid-mono{3-(meth)acryloyloxy-propyl} ester calcium, dodecane dioic acid-mono{4-(meth)acryloyloxy-butyl} ester, dodecane dioic acid-mono{4-(meth)acryloyloxy-butyl} ester lithium, dodecane dioic acid-mono{4-(meth)acryloyloxy-butyl} ester sodium, dodecane dioic acid-mono{4-(meth)acryloyloxy-butyl} ester potassium, dodecane dioic acid-mono{4-(meth)acryloyloxy-butyl} ester ammonium, dodecane dioic acid-mono{4-(meth)acryloyloxy-butyl} ester magnesium, dodecane dioic acid-mono{4-(meth)acryloyloxy-butyl} ester calcium, dodecane dioic acid-mono{6-(meth)acryloyloxy-hexyl} ester, dodecane dioic acid-mono{6-(meth)acryloyloxy-hexyl} ester lithium, dodecane dioic acid-mono{6-(meth)acryloyloxy-hexyl} ester sodium, dodecane dioic acid-mono{6-(meth)acryloyloxy-hexyl} ester potassium, dodecane dioic acid-mono{6-(meth)acryloyloxy-hexyl} ester ammonium, dodecane dioic acid-mono{6-(meth)acryloyloxy-hexyl} ester magnesium, dodecane dioic acid-mono{6-(meth)acryloyloxy-hexyl} ester calcium, maleic acid-mono{2-(meth)acryloyloxy-ethyl} ester, maleic acid-mono{2-(meth)acryloyloxy-ethyl} ester lithium, maleic acid-mono{2-(meth)acryloyloxy-ethyl} ester sodium, maleic acid-mono{2-(meth)acryloyloxy-ethyl} ester potassium, maleic acid-mono{2-(meth)acryloyloxy-ethyl} ester ammonium, maleic acid-mono{2-(meth)acryloyloxy-ethyl} ester magnesium, maleic acid-mono{2-(meth)acryloyloxy-ethyl} ester calcium, maleic acid-mono{2-(meth)acryloyloxy-propyl} ester, maleic acid-mono{2-(meth)acryloyloxy-propyl} ester lithium, maleic acid-mono{2-(meth)acryloyloxy-propyl} ester sodium, maleic acid-mono{2-(meth)acryloyloxy-propyl} ester potassium, maleic acid-mono{2-(meth)acryloyloxy-propyl} ester ammonium, maleic acid-mono{2-(meth)acryloyloxy-propyl} ester magnesium, maleic acid-mono{2-(meth)acryloyloxy-propyl} ester calcium, maleic acid-mono{3-(meth)acryloyloxy-propyl} ester, maleic acid-mono{3-(meth)acryloyloxy-propyl} ester lithium, maleic acid-mono{3-(meth)acryloyloxy-propyl} ester sodium, maleic acid-mono{3-(meth)acryloyloxy-propyl} ester potassium, maleic acid-mono{3-(meth)acryloyloxy-propyl} ester ammonium, maleic acid-mono{3-(meth)acryloyloxy-propyl} ester magnesium, maleic acid-mono{3-(meth)acryloyloxy-propyl} ester calcium, maleic acid-mono{4-(meth)acryloyloxy-butyl} ester, maleic acid-mono{4-(meth)acryloyloxy-butyl} ester lithium, maleic acid-mono{4-(meth)acryloyloxy-butyl} ester sodium, maleic acid-mono{4-(meth)acryloyloxy-butyl} ester potassium, maleic acid-mono{4-(meth)acryloyloxy-butyl} ester ammonium, maleic acid-mono{4-(meth)acryloyloxy-butyl} ester magnesium, maleic acid-mono{4-(meth)acryloyloxy-butyl} ester calcium, maleic acid-mono{6-(meth)acryloyloxy-hexyl} ester, maleic acid-mono{6-(meth)acryloyloxy-hexyl} ester lithium, maleic acid-mono{6-(meth)acryloyloxy-hexyl} ester sodium, maleic acid-mono{6-(meth)acryloyloxy-hexyl} ester potassium, maleic acid-mono{6-(meth)acryloyloxy-hexyl} ester ammonium, maleic acid-mono{6-(meth)acryloyloxy-hexyl} ester magnesium, maleic acid-mono{6-(meth)acryloyloxy-hexyl} ester calcium, itaconic acid-mono{2-(meth)acryloyloxy-ethyl} ester, itaconic acid-mono{2-(meth)acryloyloxy-ethyl} ester lithium, itaconic acid-mono{2-(meth)acryloyloxy-ethyl} ester sodium, itaconic acid-mono{2-(meth)acryloyloxy-ethyl} ester potassium, itaconic acid-mono{2-(meth)acryloyloxy-ethyl} ester ammonium, itaconic acid-mono{2-(meth)acryloyloxy-ethyl} ester magnesium, itaconic acid-mono{2-(meth)acryloyloxy-ethyl} ester calcium, itaconic acid-mono{2-(meth)acryloyloxy-propyl} ester, itaconic acid-mono{2-(meth)acryloyloxy-propyl} ester lithium, itaconic acid-mono{2-(meth)acryloyloxy-propyl} ester sodium, itaconic acid-mono{2-(meth)acryloyloxy-propyl} ester potassium, itaconic acid-mono{2-(meth)acryloyloxy-propyl} ester ammonium, itaconic acid-mono{2-(meth)acryloyloxy-propyl} ester magnesium, itaconic acid-mono{2-(meth)acryloyloxy-propyl} ester calcium, itaconic acid-mono{3-(meth)acryloyloxy-propyl} ester, itaconic acid-mono{3-(meth)acryloyloxy-propyl} ester lithium, itaconic acid-mono{3-(meth)acryloyloxy-propyl} ester sodium, itaconic acid-mono{3-(meth)acryloyloxy-propyl} ester potassium, itaconic acid-mono{3-(meth)acryloyloxy-propyl} ester ammonium, itaconic acid-mono{3-(meth)acryloyloxy-propyl} ester magnesium, itaconic acid-mono{3-(meth)acryloyloxy-propyl} ester calcium, itaconic acid-mono{4-(meth)acryloyloxy-butyl} ester, itaconic acid-mono{4-(meth)acryloyloxy-butyl} ester lithium, itaconic acid-mono{4-(meth)acryloyloxy-butyl} ester sodium, itaconic acid-mono{4-(meth)acryloyloxy-butyl} ester potassium, itaconic acid-mono{4-(meth)acryloyloxy-butyl} ester ammonium, itaconic acid-mono{4-(meth)acryloyloxy-butyl} ester magnesium, itaconic acid-mono{4-(meth)acryloyloxy-butyl} ester calcium, itaconic acid-mono{6-(meth)acryloyloxy-hexyl} ester, itaconic acid-mono{6-(meth)acryloyloxy-hexyl} ester lithium, itaconic acid-mono{6-(meth)acryloyloxy-hexyl} ester sodium, itaconic acid-mono{6-(meth)acryloyloxy-hexyl} ester potassium, itaconic acid-mono{6-(meth)acryloyloxy-hexyl} ester ammonium, itaconic acid-mono{6-(meth)acryloyloxy-hexyl} ester magnesium, itaconic acid-mono{6-(meth)acryloyloxy-hexyl} ester calcium and so on.

[Chem. 29]

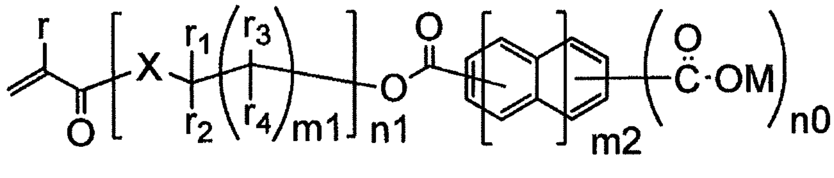

(I h)

In the formula (Ih), X is -O-, -S-, -NH- or -$NCH_3$-; r represents a hydrogen atom or a methyl group; $r_1$ to $r_4$ each independently represent a hydrogen atom, a methyl group, an ethyl group or a hydroxyl group; m1 is an integer of 0 to 10; m2 is an integer of 0 to 5; n0 is an integer of 1 to 5; n1 is an integer of 0 to 100; and M represents a hydrogen ion, an ammonium ion, an alkali metal ion or an alkaline earth metal ion having 1/2 atomic valence.

Examples of the compounds represented by the general formula (Ih) include phthalic acid-mono{2-(meth)acryloyloxy-ethyl} ester, phthalic acid-mono{2-(meth)acryloyloxy-ethyl} ester lithium, phthalic acid-mono{2-(meth)acryloyloxy-ethyl} ester sodium, phthalic acid-mono{2-(meth)acryloyloxy-ethyl} ester potassium, phthalic acid-mono{2-(meth)acryloyloxy-ethyl} ester ammonium, phthalic acid-mono{2-(meth)acryloyloxy-ethyl} ester magnesium, phthalic acid-mono{2-(meth)acryloyloxy-ethyl} ester calcium, phthalic acid-mono{2-(meth)acryloyloxy-propyl} ester, phthalic acid-mono{2-(meth)acryloyloxy-propyl} ester lithium, phthalic acid-mono{2-(meth)acryloyloxy-propyl} ester sodium, phthalic acid-mono{2-(meth)acryloyloxy-propyl} ester potassium, phthalic acid-mono{2-(meth)acryloyloxy-propyl} ester ammonium, phthalic acid-mono{2-(meth)acryloyloxy-propyl} ester magnesium, phthalic acid-mono{2-(meth)acryloyloxy-propyl} ester calcium, phthalic acid-mono{3-(meth)acryloyloxy-propyl} ester, phthalic acid-mono{3-(meth)acryloyloxy-propyl} ester lithium, phthalic acid-mono{3-(meth)acryloyloxy-propyl} ester sodium, phthalic acid-mono{3-(meth)acryloyloxy-propyl} ester potassium, phthalic acid-mono{3-(meth)acryloyloxy-propyl} ester ammonium, phthalic acid-mono{3-(meth)acryloyloxy-propyl} ester magnesium, phthalic acid-mono{3-(meth)acryloyloxy-propyl} ester calcium, phthalic acid-mono{4-(meth)acryloyloxy-butyl} ester, phthalic acid-mono{4-(meth)acryloyloxy-butyl} ester lithium, phthalic acid-mono{4-(meth)acryloyloxy-butyl} ester sodium, phthalic acid-mono{4-(meth)acryloyloxy-butyl} ester potassium, phthalic acid-mono{4-(meth)acryloyloxy-butyl} ester ammonium, phthalic acid-mono{4-(meth)acryloyloxy-butyl} ester magnesium, phthalic acid-mono{4-(meth)acryloyloxy-butyl} ester calcium, phthalic acid-mono{6-(meth)acryloyloxy-hexyl} ester, phthalic acid-mono{6-(meth)acryloyloxy-hexyl} ester lithium, phthalic acid-mono{6-(meth)acryloyloxy-hexyl} ester sodium, phthalic acid-mono{6-(meth)acryloyloxy-hexyl} ester potassium, phthalic acid-mono{6-(meth)acryloyloxy-hexyl} ester ammonium, phthalic acid-mono{6-(meth)acryloyloxy-hexyl} ester magnesium, phthalic acid-mono{6-(meth)acryloyloxy-hexyl} ester calcium, isophthalic acid-mono{2-(meth)acryloyloxy-ethyl} ester, isophthalic acid-mono{2-(meth)acryloyloxy-ethyl} ester lithium, isophthalic acid-mono{2-(meth)acryloyloxy-ethyl} ester sodium, isophthalic acid-mono{2-(meth)acryloyloxy-ethyl} ester potassium, isophthalic acid-mono{2-(meth)acryloyloxy-ethyl} ester ammonium, isophthalic acid-mono{2-(meth)acryloyloxy-ethyl} ester magnesium, isophthalic acid-mono{2-(meth)acryloyloxy-ethyl} ester calcium, isophthalic acid-mono{2-(meth)acryloyloxy-propyl} ester, isophthalic acid-mono{2-(meth)acryloyloxy-propyl} ester lithium, isophthalic acid-mono{2-(meth)acryloyloxy-propyl} ester sodium, isophthalic acid-mono{2-(meth)acryloyloxy-propyl} ester potassium, isophthalic acid-mono{2-(meth)acryloyloxy-propyl} ester ammonium, isophthalic acid-mono{2-(meth)acryloyloxy-propyl} ester magnesium, isophthalic acid-mono{2-(meth)acryloyloxy-propyl} ester calcium, isophthalic acid-mono{3-(meth)acryloyloxy-propyl} ester, isophthalic acid-mono{3-(meth)acryloyloxy-propyl} ester lithium, isophthalic acid-mono{3-(meth)acryloyloxy-propyl} ester sodium, isophthalic acid-mono{3-(meth)acryloyloxy-propyl} ester potassium, isophthalic acid-mono{3-(meth)acryloyloxy-propyl} ester ammonium, isophthalic acid-mono{3-(meth)acryloyloxy-propyl} ester magnesium, isophthalic acid-mono{3-(meth)acryloyloxy-propyl} ester calcium, isophthalic acid-mono{4-(meth)acryloyloxy-butyl} ester, isophthalic acid-mono{4-(meth)acryloyloxy-butyl} ester lithium, isophthalic acid-mono{4-(meth)acryloyloxy-butyl} ester sodium, isophthalic acid-mono{4-(meth)acryloyloxy-butyl} ester potassium, isophthalic acid-mono{4-(meth)acryloyloxy-butyl} ester ammonium, isophthalic acid-mono{4-(meth)acryloyloxy-butyl} ester magnesium, isophthalic acid-mono{4-(meth)acryloyloxy-butyl} ester calcium, isophthalic acid-mono{6-(meth)acryloyloxy-hexyl} ester, isophthalic acid-mono{6-(meth)acryloyloxy-hexyl} ester lithium, isophthalic acid-mono{6-(meth)acryloyloxy-hexyl} ester sodium, isophthalic acid-mono{6-(meth)acryloyloxy-hexyl} ester potassium, isophthalic acid-mono{6-(meth)acryloyloxy-hexyl} ester ammonium, isophthalic acid-mono{6-(meth)acryloyloxy-hexyl} ester magnesium, isophthalic acid-mono{6-(meth)acryloyloxy-hexyl} ester calcium, terephthalic acid-mono{2-(meth)acryloyloxy-ethyl} ester, terephthalic acid-mono{2-(meth)acryloyloxy-ethyl} ester lithium, terephthalic acid-mono{2-(meth)acryloyloxy-ethyl} ester sodium, terephthalic acid-mono{2-(meth)acryloyloxy-ethyl} ester potassium, terephthalic acid-mono{2-(meth)acryloyloxy-ethyl} ester ammonium, terephthalic acid-mono{2-(meth)acryloyloxy-ethyl} ester magnesium, terephthalic acid-mono{2-(meth)acryloyloxy-ethyl} ester calcium, terephthalic acid-mono{2-(meth)acryloyloxy-propyl} ester, terephthalic acid-mono{2-(meth)acryloyloxy-propyl} ester lithium, terephthalic acid-mono{2-(meth)acryloyloxy-propyl} ester sodium, terephthalic acid-mono{2-(meth)acryloyloxy-propyl} ester potassium, terephthalic acid-mono{2-(meth)acryloyloxy-propyl} ester ammonium, terephthalic acid-mono{2-(meth)acryloyloxy-propyl} ester magnesium, terephthalic acid-mono{2-(meth)acryloyloxy-propyl} ester calcium, terephthalic acid-mono{3-(meth)acryloyloxy-propyl} ester, terephthalic acid-mono{3-(meth)acryloyloxy-propyl} ester lithium, terephthalic acid-mono{3-(meth)acryloyloxy-propyl} ester sodium, terephthalic acid-mono{3-(meth)acryloyloxy-propyl} ester potassium, terephthalic acid-mono{3-(meth)acryloyloxy-propyl} ester ammonium, terephthalic acid-mono{3-(meth)acryloyloxy-propyl} ester magnesium, terephthalic acid-mono{3-(meth)acryloyloxy-propyl} ester calcium, terephthalic acid-mono{4-(meth)acryloyloxy-butyl} ester, terephthalic acid-mono{4-(meth)acryloyloxy-butyl} ester lithium, terephthalic acid-mono{4-(meth)acryloyloxy-butyl} ester sodium, terephthalic acid-mono{4-(meth)acryloyloxy-butyl} ester potassium, terephthalic acid-mono{4-(meth)acryloyloxy-butyl} ester ammonium, terephthalic acid-mono{4-(meth)acryloyloxy-butyl} ester magnesium, terephthalic acid-mono{4-(meth)acryloyloxy-butyl} ester calcium, terephthalic acid-mono{6-(meth)acryloyloxy-hexyl} ester, terephthalic acid-mono{6-(meth)acryloyloxy-hexyl} ester lithium, terephthalic acid-mono{6-(meth)acryloyloxy-hexyl} ester sodium, terephthalic acid-mono{6-(meth)acryloyloxy-hexyl} ester potassium, terephthalic acid-mono{6-(meth)acryloyloxy-hexyl} ester ammonium, terephthalic acid-mono{6-(meth)acryloyloxy-hexyl} ester magnesium, terephthalic acid-mono{6-(meth)acryloyloxy-hexyl} ester calcium, naphthalene dicarboxylic acid-mono{2-(meth)acryloyloxy-ethyl} ester, naphthalene dicarboxylic acid-mono{2-(meth)acryloyloxy-ethyl} ester lithium, naphthalene dicarboxylic acid-mono{2-(meth)acryloyloxy-ethyl} ester sodium, naphthalene dicarboxylic acid-mono{2-(meth)acryloyloxy-ethyl} ester potassium, naphthalene dicarboxylic acid-mono{2-(meth)acryloyloxy-ethyl} ester ammonium, naphthalene dicarboxylic acid-mono{2-(meth)acryloyloxy-ethyl} ester magnesium, naphthalene dicarboxylic acid-mono{2-(meth)acryloyloxy-ethyl} ester calcium, naphthalene dicarboxylic acid-mono{2-(meth)acryloyloxy-propyl} ester, naphthalene dicarboxylic acid-mono{2-(meth)acryloyloxy-propyl} ester lithium, naphthalene dicarboxylic acid-mono{2-(meth)acryloyloxy-propyl} ester sodium, naphthalene dicarboxylic acid-mono{2-(meth)acryloyloxy-propyl} ester potassium, naphthalene dicarboxylic acid-mono{2-(meth)acryloyloxy-propyl} ester ammonium, naphthalene dicarboxylic acid-mono{2-(meth)acryloyloxy-propyl} ester magnesium, naphthalene dicarboxylic acid-mono{2-(meth)acryloyloxy-propyl} ester calcium, naphthalene dicarboxylic acid-mono{3-(meth)acryloyloxy-propyl} ester, naphthalene dicarboxylic acid-mono{3-(meth)acryloyloxy-propyl} ester lithium, naphthalene dicarboxylic acid-mono{3-(meth)acryloyloxy-propyl} ester sodium, naphthalene dicarboxylic acid-mono{3-(meth)acryloyloxy-propyl} ester potassium, naphthalene dicarboxylic acid-mono{3-(meth)acryloyloxy-propyl} ester ammonium, naphthalene dicarboxylic acid-mono{3-(meth)acryloyloxy-propyl} ester magnesium, naphthalene dicarboxylic acid-mono{3-(meth)acryloyloxy-propyl} ester calcium, naphthalene dicarboxylic acid-mono{4-(meth)acryloyloxy-butyl} ester, naphthalene dicarboxylic acid-mono{4-(meth)acryloyloxy-butyl} ester lithium, naphthalene dicarboxylic acid-mono{4-(meth)acryloyloxy-butyl} ester sodium, naphthalene dicarboxylic acid-mono{4-(meth)acryloyloxy-butyl} ester potassium, naphthalene dicarboxylic acid-mono{4-(meth)acryloyloxy-butyl} ester ammonium, naphthalene dicarboxylic acid-mono{4-(meth)acryloyloxy-butyl} ester magnesium, naphthalene dicarboxylic acid-mono{4-(meth)acryloyloxy-butyl} ester calcium, naphthalene dicarboxylic acid-mono{6-(meth)acryloyloxy-hexyl} ester, naphthalene dicarboxylic acid-mono{6-(meth)acryloyloxy-hexyl} ester lithium, naphthalene dicarboxylic acid-mono{6-(meth)acryloyloxy-hexyl} ester sodium, naphthalene dicarboxylic acid-mono{6-(meth)acryloyloxy-hexyl} ester potassium, naphthalene dicarboxylic acid-mono{6-(meth)acryloyloxy-hexyl} ester ammonium, naphthalene dicarboxylic acid-mono{6-(meth)acryloyloxy-hexyl} ester magnesium, naphthalene dicarboxylic acid-mono{6-(meth)acryloyloxy-hexyl} ester calcium and so on.

[Chem. 30]

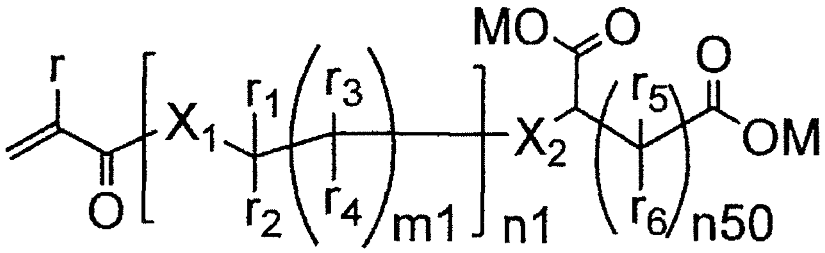

(I i)

In the formula (Ii), r represents a hydrogen atom or a methyl group; $r_1$ to $r_6$ each independently represent a hydrogen atom, a methyl group, an ethyl group or a hydroxyl group; n50 is an integer of 0 to 5; n1 is an integer of 0 to 100; m1 is an integer of 0 to 10; $X_1$ and $X_2$ are each independently -O-, - S-, -NH- or $-NCH_3-$; M at each occurrence represents a hydrogen ion, an ammonium ion, an alkali metal ion or an alkaline earth metal ion having 1/2 atomic valence; and when n1is 2 or greater, $r_1$s to $r_4$s, and $X_1$s each may be the same as or different from one another.

Examples of the compounds represented by the general formula (Ii) include (meth)acryloyloxymalonic acid, lithium (meth)acryloyloxymalonate, dilithium (meth)acryloyloxymalonate, sodium (meth)acryloyloxymalonate, disodium (meth)acryloyloxymalonate, potassium (meth)acryloyloxymalonate, dipotassium (meth)acryloyloxymalonate, ammonium (meth)acryloyloxymalonate, diammonium (meth)acryloyloxymalonate, magnesium (meth)acryloyloxymalonate, calcium (meth)acryloyloxymalonate, (meth)acrylamido malonic acid, lithium (meth)acrylamido malonate, dilithium (meth)acrylamido malonate, sodium (meth)acrylamido malonate, disodium (meth)acrylamido malonate, potassium (meth)acrylamido malonate, dipotassium (meth)acrylamido malonate, ammonium (meth)acrylamido malonate, diammonium (meth)acrylamido malonate, magnesium (meth)acrylamido malonate, calcium (meth)acrylamido malonate, (meth)acryloyloxysuccinic acid, lithium (meth)acryloyloxysuccinate, dilithium (meth)acryloyloxysuccinate, sodium

(meth)acryloyloxysuccinate, disodium (meth)acryloyloxysuccinate, potassium (meth)acryloyloxysuccinate, dipotassium (meth)acryloyloxysuccinate, ammonium (meth)acryloyloxysuccinate, diammonium (meth)acryloyloxysuccinate, magnesium (meth)acryloyloxysuccinate, calcium (meth)acryloyloxysuccinate, (meth)acryloylthio-succinic acid, lithium (meth)acryloylthio-succinate, dilithium (meth)acryloylthio-succinate, sodium (meth)acryloylthio-succinate, disodium (meth)acryloylthio-succinate, potassium (meth)acryloylthio-succinate, dipotassium (meth)acryloylthio-succinate, ammonium (meth)acryloylthio-succinate, diammonium (meth)acryloylthio-succinate, magnesium (meth)acryloylthio-succinate, calcium (meth)acryloylthio-succinate, malic acid(meth)acrylate, malic acid(meth)acrylate lithium, malic acid(meth)acrylate dilithium, malic acid(meth)acrylate sodium, malic acid(meth)acrylate disodium, malic acid(meth)acrylate potassium, malic acid(meth)acrylate dipotassium, malic acid(meth)acrylate ammonium, malic acid(meth)acrylate diammonium, malic acid(meth)acrylate magnesium, malic acid(meth)acrylate calcium, tartaric acid(meth)acrylate, tartaric acid(meth)acrylate lithium, tartaric acid(meth)acrylate dilithium, tartaric acid(meth)acrylate sodium, tartaric acid(meth)acrylate disodium, tartaric acid(meth)acrylate potassium, tartaric acid(meth)acrylate dipotassium, tartaric acid(meth)acrylate ammonium, tartaric acid(meth)acrylate diammonium, tartaric acid(meth)acrylate magnesium, tartaric acid(meth)acrylate calcium, N-(meth)acryloyl-aspartic acid, lithium N-(meth)acryloyl-aspartate, dilithium N-(meth)acryloyl-aspartate, sodium N-(meth)acryloyl-aspartate, disodium N-(meth)acryloyl-aspartate, potassium N-(meth)acryloyl-aspartate, dipotassium N-(meth)acryloyl-aspartate, ammonium N-(meth)acryloyl-aspartate, diammonium N-(meth)acryloyl-aspartate, magnesium N-(meth)acryloyl-aspartate, calcium N-(meth)acryloyl-aspartate, N-(meth)acryloyl-glutamic acid, lithium N-(meth)acryloyl-glutamate, dilithium N-(meth)acryloyl-glutamate, sodium N-(meth)acryloyl-glutamate, disodium N-(meth)acryloyl-glutamate, potassium N-(meth)acryloyl-glutamate, dipotassium N-(meth)acryloyl-glutamate, ammonium N-(meth)acryloyl-glutamate, diammonium N-(meth)acryloyl-glutamate, magnesium N-(meth)acryloyl-glutamate, calcium N-(meth)acryloyl-glutamate and so on.

[Chem. 31]

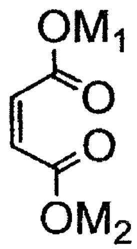

(I j)

In the formula (Ij), $M_1$ and $M_2$ each independently represent a hydrogen ion, an ammonium ion, an alkali metal ion or an alkaline earth metal ion having 1/2 atomic valence.

Examples of the compounds represented by the general formula (Ij) include maleic acid, lithium maleate, dilithium maleate, sodium maleate, disodium maleate, potassium maleate, dipotassium maleate, ammonium maleate, diammonium maleate, magnesium maleate and calcium maleate.

[Chem. 32]

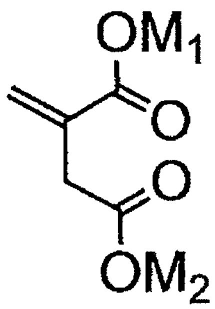

(I k)

In the formula (Ik), $M_1$ and $M_2$ each independently represent a hydrogen ion, an ammonium ion, an alkali metal ion or an alkaline earth metal ion having 1/2 atomic valence.

Examples of the compounds represented by the general formula (Ik) include itaconic acid, lithium itaconate,

dilithium itaconate, sodium itaconate, disodium itaconate, potassium itaconate, dipotassium itaconate, ammonium itaconate, diammonium itaconate, magnesium itaconate, calcium itaconate and so on.

[Chem. 33]

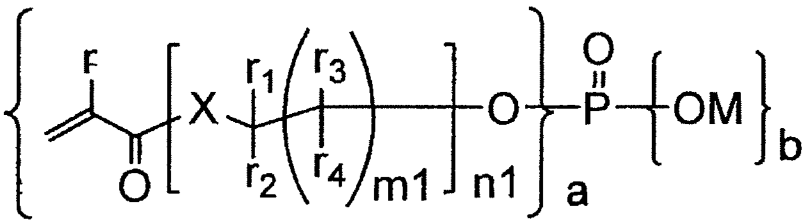

(I 1)

In the formula (II), X is -O-, -S-, -NH- or -$NCH_3$-; r represents a hydrogen atom or a methyl group; $r_1$ to $r_4$ each independently represent a hydrogen atom, a methyl group, an ethyl group or a hydroxyl group; m1 is an integer of 0 to 10; n1 is an integer of 0 to 100; M represents a hydrogen ion, an ammonium ion, an alkali metal ion or an alkaline earth metal ion having 1/2 atomic valence; a and b are each an integer of 1 or 2, and a + b = 3; when a is 2, Xs, r's, and $r_1$s to $r_4$s each may be the same as or different from each other; and when b is 2, Ms may be the same as or different from each other.

Examples of the compounds represented by the general formula (II) include (meth)acryloyloxymethyl phosphoric acid, disodium (meth)acryloyloxymethyl phosphate, 2-(meth)acryloyloxy-ethyl phosphoric acid, lithium 2-(meth)acryloyloxy-ethyl phosphate, dilithium 2-(meth)acryloyloxy-ethyl phosphate, sodium 2-(meth)acryloyloxy-ethyl phosphate, disodium 2-(meth)acryloyloxy-ethyl phosphate, potassium 2-(meth)acryloyloxy-ethyl phosphate, dipotassium 2-(meth)acryloyloxy-ethyl phosphate, ammonium 2-(meth)acryloyloxy-ethyl phosphate, diammonium 2-(meth)acryloyloxy-ethyl phosphate, magnesium 2-(meth)acryloyloxy-ethyl phosphate, calcium 2-(meth)acryloyloxy-ethyl phosphate, bis{2-(meth)acryloyloxy-ethyl}phosphoric acid, lithium bis{2-(meth)acryloyloxy-ethyl}phosphate, sodium bis{2-(meth)acryloyloxy-ethyl}phosphate, potassium bis{2-(meth)acryloyloxy-ethyl}phosphate, ammonium bis{2-(meth)acryloyloxy-ethyl}phosphate, magnesium bis{2-(meth)acryloyloxy-ethyl}phosphate, calcium bis{2-(meth)acryloyloxy-ethyl}phosphate, 2-(meth)acryloyloxy-propyl phosphoric acid, lithium 2-(meth)acryloyloxy-propyl phosphate, dilithium 2-(meth)acryloyloxy-propyl phosphate, sodium 2-(meth)acryloyloxy-propyl phosphate, disodium 2-(meth)acryloyloxy-propyl phosphate, potassium 2-(meth)acryloyloxy-propyl phosphate, dipotassium 2-(meth)acryloyloxy-propyl phosphate, ammonium 2-(meth)acryloyloxy-propyl phosphate, diammonium 2-(meth)acryloyloxy-propyl phosphate, magnesium 2-(meth)acryloyloxy-propyl phosphate, calcium 2-(meth)acryloyloxy-propyl phosphate, bis{2-(meth)acryloyloxy-propyl}phosphoric acid, lithium bis{2-(meth)acryloyloxy-propyl}phosphate, sodium bis{2-(meth)acryloyloxy-propyl}phosphate, potassium bis{2-(meth)acryloyloxy-propyl}phosphate, ammonium bis{2-(meth)acryloyloxy-propyl}phosphate, magnesium bis{2-(meth)acryloyloxy-propyl}phosphate, calcium bis{2-(meth)acryloyloxy-propyl}phosphate, 3-(meth)acryloyloxy-propyl phosphoric acid, lithium 3-(meth)acryloyloxy-propyl phosphate, dilithium 3-(meth)acryloyloxy-propyl phosphate, sodium 3-(meth)acryloyloxy-propyl phosphate, disodium 3-(meth)acryloyloxy-propyl phosphate, potassium 3-(meth)acryloyloxy-propyl phosphate, dipotassium 3-(meth)acryloyloxy-propyl phosphate, ammonium 3-(meth)acryloyloxy-propyl phosphate, diammonium 3-(meth)acryloyloxy-propyl phosphate, magnesium 3-(meth)acryloyloxy-propyl phosphate, calcium 3-(meth)acryloyloxy-propyl phosphate, bis{3-(meth)acryloyloxy-propyl}phosphoric acid, lithium bis{3-(meth)acryloyloxy-propyl}phosphate, sodium bis{3-(meth)acryloyloxy-propyl}phosphate, potassium bis{3-(meth)acryloyloxy-propyl}phosphate, ammonium bis{3-(meth)acryloyloxy-propyl}phosphate, magnesium bis{3-(meth)acryloyloxy-propyl}phosphate, calcium bis{3-(meth)acryloyloxy-propyl}phosphate, 4-(meth)acryloyloxy-butyl phosphoric acid, lithium 4-(meth)acryloyloxy-butyl phosphate, dilithium 4-(meth)acryloyloxy-butyl phosphate, sodium 4-(meth)acryloyloxy-butyl phosphate, disodium 4-(meth)acryloyloxy-butyl phosphate, potassium 4-(meth)acryloyloxy-butyl phosphate, dipotassium 4-(meth)acryloyloxy-butyl phosphate, ammonium 4-(meth)acryloyloxy-butyl phosphate, diammonium 4-(meth)acryloyloxy-butyl phosphate, magnesium 4-(meth)acryloyloxy-butyl phosphate, calcium 4-(meth)acryloyloxy-butyl phosphate, bis{4-(meth)acryloyloxy-butyl}phosphoric acid, lithium bis{4-(meth)acryloyloxy-butyl}phosphate, sodium bis{4-(meth)acryloyloxy-butyl}phosphate, potassium bis{4-(meth)acryloyloxy-butyl}phosphate, ammonium bis{4-(meth)acryloyloxy-butyl}phosphate, magnesium bis{4-(meth)acryloyloxy-butyl}phosphate, calcium bis{4-(meth)acryloyloxy-butyl}phosphate, 6-(meth)acryloyloxy-hexyl phosphoric acid, lithium 6-(meth)acryloyloxy-hexyl phosphate, dilithium 6-(meth)acryloyloxy-hexyl phosphate, sodium 6-(meth)acryloyloxy-hexyl phosphate, disodium 6-(meth)acryloyloxy-hexyl phosphate, potassium 6-(meth)acryloyloxy-hexyl phosphate, dipotassium 6-(meth)acryloyloxy-hexyl phosphate, ammonium 6-(meth)acryloyloxy-hexyl phosphate, diammonium 6-(meth)acryloyloxy-hexyl phosphate, magnesium 6-(meth)acryloyloxy-hexyl phosphate, calcium 6-(meth)acryloyloxy-hexyl phosphate, bis{6-(meth)acryloyloxy-hexyl}phosphoric acid, lithium bis{6-(meth)acryloyloxy-hexyl}phosphate, sodium bis{6-(meth)acryloyloxy-hexyl}phosphate, potassium bis{6-(meth)acryloyloxy-hexyl}phosphate, ammonium bis{6-(meth)acryloyloxy-hexyl}phosphate, magnesium bis{6-(meth)acryloyloxy-hexyl}phosphate, calcium bis{6-(meth)acryloyloxy-hexyl}phosphate, 5-(meth)acryloyloxy-3-oxapentyl phosphoric acid, lithium 5-(meth)acryloyloxy-3-oxapentyl phosphate, dilithium 5-(meth)acryloyloxy-3-oxapentyl phosphate, sodium 5-(meth)acryloyloxy-3-oxapentyl phosphate, disodium 5-(meth)acryloyloxy-3-oxapentyl phosphate, potassium 5-(meth)acryloyloxy-3-oxapentyl phosphate, dipotassium 5-(meth)acryloyloxy-3-oxapentyl phosphate, ammonium 5-(meth)acryloyloxy-3-oxapentyl phosphate, diammonium 5-(meth)acryloyloxy-3-oxapentyl phosphate, magnesium 5-(meth)acryloyloxy-3-oxapentyl phosphate, calcium 5-(meth)acryloyloxy-3-oxapentyl phosphate, bis{5-(meth)acryloyloxy-3-oxapentyl}phosphoric acid, lithium bis{5-(meth)acryloyloxy-3-oxapentyl}phosphate, sodium bis{5-(meth)acryloyloxy-3-oxapentyl}phosphate, potassium bis{5-(meth)acryloyloxy-3-oxapentyl}phosphate, ammonium bis{5-(meth)acryloyloxy-3-oxapentyl}phosphate, magnesium bis{5-(meth)acryloyloxy-3-oxapentyl}phosphate, calcium bis{5-(meth)acryloyloxy-3-oxapentyl}phosphate, 8-(meth)acryloyloxy-3,6-dioxaoctyl phosphoric acid, lithium 8-(meth)acryloyloxy-3,6-dioxaoctyl phosphate, dilithium 8-(meth)acryloyloxy-3,6-dioxaoctyl phosphate, sodium 8-(meth)acryloyloxy-3,6-dioxaoctyl phosphate, disodium 8-(meth)acryloyloxy-3,6-dioxaoctyl phosphate, potassium 8-(meth)acryloyloxy-3,6-dioxaoctyl phosphate, dipotassium 8-(meth)acryloyloxy-3,6-dioxaoctyl phosphate, ammonium 8-(meth)acryloyloxy-3,6-dioxaoctyl phosphate, diammonium 8-(meth)acryloyloxy-3,6-dioxaoctyl phosphate, magnesium 8-(meth)acryloyloxy-3,6-dioxaoctyl phosphate, calcium 8-(meth)acryloyloxy-3,6-dioxaoctyl phosphate, bis{8-(meth)acryloyloxy-3,6-dioxaoctyl}phosphoric acid, lithium bis{8-(meth)acryloyloxy-3,6-dioxaoctyl}phosphate, sodium bis{8-(meth)acryloyloxy-3,6-dioxaoctyl}phosphate, potassium bis{8-(meth)acryloyloxy-3,6-dioxaoctyl}phosphate, ammonium bis{8-(meth)acryloyloxy-3,6-dioxaoctyl}phosphate, magnesium bis{8-(meth)acryloyloxy-3,6-dioxaoctyl}phosphate, calcium bis{8-(meth)acryloyloxy-3,6-dioxaoctyl}phosphate and so on.

Examples of the compounds (I) having an anionic hydrophilic group and two or more functional groups with a polymerizable carbon-carbon double bond include those compounds represented by the general formulas I(u) to I(w) below.

[Chem. 34]

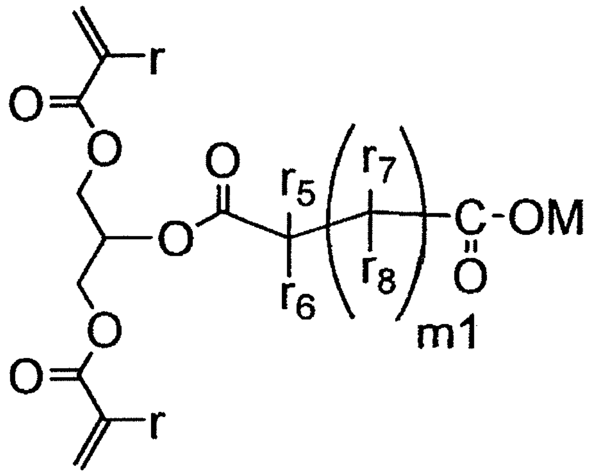

(I u)

In the formula (Iu), $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is each independently an integer of 0 to 10; and M represents a hydrogen ion, an ammonium ion, an alkali metal ion or an alkaline earth metal ion having 1/2 atomic valence.

Examples of the compounds represented by the general formula (Iu) include 1,3-(meth)acryloyloxy-propyl-2-malonic acid ester, 1,3-(meth)acryloyloxy-propyl-2-malonic acid ester sodium, 1,3-(meth)acryloyloxy-propyl-2-malonic acid ester potassium, 1,3-(meth)acryloyloxy-propyl-2-malonic acid ester ammonium, 1,3-(meth)acryloyloxy-propyl-2-malonic acid ester magnesium, 1,3-(meth)acryloyloxy-propyl-2-malonic acid ester calcium, 1,3-(meth)acryloyloxy-propyl-2-glutamic acid ester, 1,3-(meth)acryloyloxy-propyl-2-glutamic acid ester sodium, 1,3-(meth)acryloyloxy-propyl-2-glutamic acid ester potassium, 1,3-(meth)acryloyloxy-propyl-2-glutamic acid ester ammonium, 1,3-(meth)acryloyloxy-propyl-2-glutamic acid ester magnesium, 1,3-(meth)acryloyloxy-propyl-2-glutamic acid ester calcium, 1,3-(meth)acryloyloxy-propyl-2-adipic acid ester, 1,3-(meth)acryloyloxy-propyl-2-adipic acid ester sodium, 1,3-(meth)acryloyloxy-propyl-2-adipic acid ester potassium, 1,3-(meth)acryloyloxy-propyl-2-adipic acid ester ammonium, 1,3-(meth)acryloyloxy-propyl-2-adipic acid ester magnesium, 1,3-(meth)acryloyloxy-propyl-2-adipic acid ester calcium, 1,3-(meth)acryloyloxy-propyl-2-pimelic acid ester, 1,3-(meth)acryloyloxy-propyl-2-pimelic acid ester sodium, 1,3-(meth)acryloyloxy-propyl-2-pimelic acid ester potassium, 1,3-(meth)acryloyloxy-propyl-2-pimelic acid ester ammonium, 1,3-(meth)acryloyloxy-propyl-2-pimelic acid ester magnesium, 1,3-(meth)acryloyloxy-propyl-2-pimelic acid ester calcium, 1,3-(meth)acryloyloxy-propyl-2-suberic acid ester, 1,3-(meth)acryloyloxy-propyl-2-suberic acid ester sodium, 1,3-(meth)acryloyloxy-propyl-2-suberic acid ester potassium, 1,3-(meth)acryloyloxy-propyl-2-suberic acid ester ammonium, 1,3-(meth)acryloyloxy-propyl-2-suberic acid ester magnesium, 1,3-(meth)acryloyloxy-propyl-2-suberic acid ester calcium, 1,3-(meth)acryloyloxy-propyl-2-sebacic acid ester, 1,3-(meth)acryloyloxy-propyl-2-sebacic acid ester sodium, 1,3-(meth)acryloyloxy-propyl-2-sebacic acid ester potassium, 1,3-(meth)acryloyloxy-propyl-2-sebacic acid ester ammonium, 1,3-(meth)acryloyloxy-propyl-2-sebacic acid ester magnesium, 1,3-(meth)acryloyloxy-propyl-2-sebacic acid ester calcium, 1,3-(meth)acryloyloxy-propyl-2-dodecanedioic acid ester, 1,3-(meth)acryloyloxy-propyl-2-dodecanedioic acid ester sodium, 1,3-(meth)acryloyloxy-propyl-2-dodecanedioic acid ester potassium, 1,3-(meth)acryloyloxy-propyl-2-dodecanedioic acid ester ammonium, 1,3-(meth)acryloyloxy-propyl-2-dodecanedioic acid ester magnesium, 1,3-(meth)acryloyloxy-propyl-2-dodecanedioic acid ester calcium, 1,3-(meth)acryloyloxy-propyl-2-maleic acid ester, 1,3-(meth)acryloyloxy-propyl-2-maleic acid ester sodium, 1,3-(meth)acryloyloxy-propyl-2-maleic acid ester potassium, 1,3-(meth)acryloyloxy-propyl-2-maleic acid ester ammonium, 1,3-(meth)acryloyloxy-propyl-2-maleic acid ester magnesium, 1,3-(meth)acryloyloxy-propyl-2-maleic acid ester calcium, 1,3-(meth)acryloyloxy-propyl-2-itaconic acid ester, 1,3-(meth)acryloyloxy-propyl-2-itaconic acid ester sodium, 1,3-(meth)acryloyloxy-propyl-2-itaconic acid ester potassium, 1,3-(meth)acryloyloxy-propyl-2-itaconic acid ester ammonium, 1,3-(meth)acryloyloxy-propyl-2-itaconic acid ester magnesium, 1,3-(meth)acryloyloxy-propyl-2-itaconic acid ester calcium and so on.

[Chem. 35]

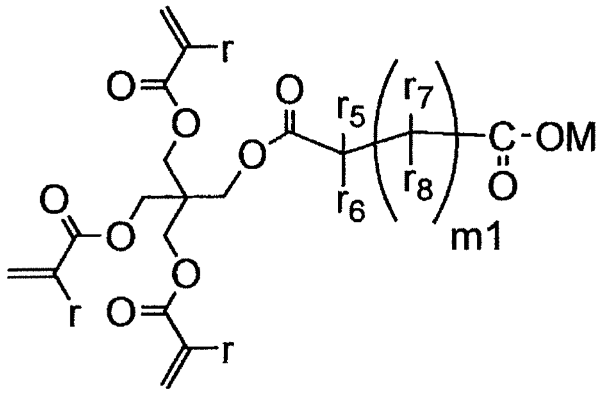

(I v)

In the formula (Iv), $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is each independently an integer of 0 to 10; and M represents a hydrogen ion, an ammonium ion, an alkali metal ion or an alkaline earth metal ion having 1/2 atomic valence.

Examples of the compounds represented by the general formula (Iv) include pentaerythritol tri(meth)acrylate-malonic acid ester, pentaerythritol tri(meth)acrylate-malonic acid ester sodium, pentaerythritol tri(meth)acrylate-malonic acid ester potassium, pentaerythritol tri(meth)acrylate-malonic acid ester ammonium, pentaerythritol tri(meth)acrylate-malonic acid ester magnesium, pentaerythritol tri(meth)acrylate-malonic acid ester calcium, pentaerythritol tri(meth)acrylate-glutamic acid ester, pentaerythritol tri(meth)acrylate-glutamic acid ester sodium, pentaerythritol tri(meth)acrylate-glutamic acid ester potassium, pentaerythritol tri(meth)acrylate-glutamic acid ester ammonium, pentaerythritol tri(meth)acrylate-glutamic acid ester magnesium, pentaerythritol tri(meth)acrylate-glutamic acid ester calcium, pentaerythritol tri(meth)acrylate-adipic acid ester, pentaerythritol tri(meth)acrylate-adipic acid ester sodium, pentaerythritol tri(meth)acrylate-adipic acid ester potassium, pentaerythritol tri(meth)acrylate-adipic acid ester ammonium, pentaerythritol tri(meth)acrylate-adipic acid ester magnesium, pentaerythritol tri(meth)acrylate-adipic acid ester calcium, pentaerythritol tri(meth)acrylate-pimelic acid ester, pentaerythritol tri(meth)acrylate-pimelic acid ester sodium, pentaerythritol

tri(meth)acrylate-pimelic acid ester potassium, pentaerythritol tri(meth)acrylate-pimelic acid ester ammonium, pentaerythritol tri(meth)acrylate-pimelic acid ester magnesium, pentaerythritol tri(meth)acrylate-pimelic acid ester calcium, pentaerythritol tri(meth)acrylate-suberic acid ester, pentaerythritol tri(meth)acrylate-suberic acid ester sodium, pentaerythritol tri(meth)acrylate-suberic acid ester potassium, pentaerythritol tri(meth)acrylate-suberic acid ester ammonium, pentaerythritol tri(meth)acrylate-suberic acid ester magnesium, pentaerythritol tri(meth)acrylate-suberic acid ester calcium, pentaerythritol tri(meth)acrylate-sebacic acid ester, pentaerythritol tri(meth)acrylate-sebacic acid ester sodium, pentaerythritol tri(meth)acrylate-sebacic acid ester potassium, pentaerythritol tri(meth)acrylate-sebacic acid ester ammonium, pentaerythritol tri(meth)acrylate-sebacic acid ester magnesium, pentaerythritol tri(meth)acrylate-sebacic acid ester calcium, pentaerythritol tri(meth)acrylate-dodecanedioic acid ester, pentaerythritol tri(meth)acrylate-dodecanedioic acid ester sodium, pentaerythritol tri(meth)acrylate-dodecanedioic acid ester potassium, pentaerythritol tri(meth)acrylate-dodecanedioic acid ester ammonium, pentaerythritol tri(meth)acrylate-dodecanedioic acid ester magnesium, pentaerythritol tri(meth)acrylate-dodecanedioic acid ester calcium, pentaerythritol tri(meth)acrylate-maleic acid ester, pentaerythritol tri(meth)acrylate-maleic acid ester sodium, pentaerythritol tri(meth)acrylate-maleic acid ester potassium, pentaerythritol tri(meth)acrylate-maleic acid ester ammonium, pentaerythritol tri(meth)acrylate-maleic acid ester magnesium, pentaerythritol tri(meth)acrylate-maleic acid ester calcium, pentaerythritol tri(meth)acrylate-itaconic acid ester, pentaerythritol tri(meth)acrylate-itaconic acid ester sodium, pentaerythritol tri(meth)acrylate-itaconic acid ester potassium, pentaerythritol tri(meth)acrylate-itaconic acid ester ammonium, pentaerythritol tri(meth)acrylate-itaconic acid ester magnesium, pentaerythritol tri(meth)acrylate-itaconic acid ester calcium and so on.

[Chem. 36]

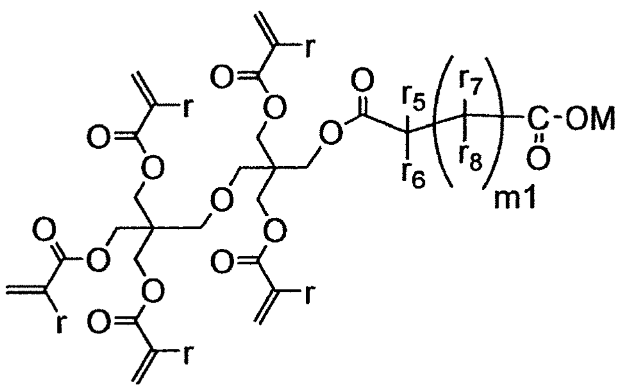

(I w)

In the formula (Iw), $r_5$ and $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 is each independently an integer of 0 to 10; and M represents a hydrogen ion, an ammonium ion, an alkali metal ion or an alkaline earth metal ion having 1/2 atomic valence.

Examples of the compounds represented by the general formula (Iw) include dipentaerythritol penta(meth)acrylate-malonic acid ester, dipentaerythritol penta(meth)acrylate-malonic acid ester sodium, dipentaerythritol penta(meth)acrylate-malonic acid ester potassium, dipentaerythritol penta(meth)acrylate-malonic acid ester ammonium, dipentaerythritol penta(meth)acrylate-malonic acid ester magnesium, dipentaerythritol penta(meth)acrylate-malonic acid ester calcium, dipentaerythritol penta(meth)acrylate-glutamic acid ester, dipentaerythritol penta(meth)acrylate-glutamic acid ester sodium, dipentaerythritol penta(meth)acrylate-glutamic acid ester potassium, dipentaerythritol penta(meth)acrylate-glutamic acid ester ammonium, dipentaerythritol penta(meth)acrylate-glutamic acid ester magnesium, dipentaerythritol penta(meth)acrylate-glutamic acid ester calcium, dipentaerythritol penta(meth)acrylate-adipic acid ester, dipentaerythritol penta(meth)acrylate-adipic acid ester sodium, dipentaerythritol penta(meth)acrylate-adipic acid ester potassium, dipentaerythritol penta(meth)acrylate-adipic acid ester ammonium, dipentaerythritol penta(meth)acrylate-adipic acid ester magnesium, dipentaerythritol penta(meth)acrylate-adipic acid ester calcium, dipentaerythritol penta(meth)acrylate-pimelic acid ester, dipentaerythritol penta(meth)acrylate-pimelic acid ester sodium, dipentaerythritol penta(meth)acrylate-pimelic acid ester potassium, dipentaerythritol penta(meth)acrylate-pimelic acid ester ammonium, dipentaerythritol penta(meth)acrylate-pimelic acid ester magnesium, dipentaerythritol penta(meth)acrylate-pimelic acid ester calcium, dipentaerythritol penta(meth)acrylate-suberic acid ester, dipentaerythritol penta(meth)acrylate-suberic

acid ester sodium, dipentaerythritol penta(meth)acrylate-suberic acid ester potassium, dipentaerythritol penta(meth)acrylate-suberic acid ester ammonium, dipentaerythritol penta(meth)acrylate-suberic acid ester magnesium, dipentaerythritol penta(meth)acrylate-suberic acid ester calcium, dipentaerythritol penta(meth)acrylate-sebacic acid ester, dipentaerythritol penta(meth)acrylate-sebacic acid ester sodium, dipentaerythritol penta(meth)acrylate-sebacic acid ester potassium, dipentaerythritol penta(meth)acrylate-sebacic acid ester ammonium, dipentaerythritol penta(meth)acrylate-sebacic acid ester magnesium, dipentaerythritol penta(meth)acrylate-sebacic acid ester calcium, dipentaerythritol penta(meth)acrylate-dodecanedioic acid ester, dipentaerythritol penta(meth)acrylate-dodecanedioic acid ester sodium, dipentaerythritol penta(meth)acrylate-dodecanedioic acid ester potassium, dipentaerythritol penta(meth)acrylate-dodecanedioic acid ester ammonium, dipentaerythritol penta(meth)acrylate-dodecanedioic acid ester magnesium, dipentaerythritol penta(meth)acrylate-dodecanedioic acid ester calcium, dipentaerythritol penta(meth)acrylate-maleic acid ester, dipentaerythritol penta(meth)acrylate-maleic acid ester sodium, dipentaerythritol penta(meth)acrylate-maleic acid ester potassium, dipentaerythritol penta(meth)acrylate-maleic acid ester ammonium, dipentaerythritol penta(meth)acrylate-maleic acid ester magnesium, dipentaerythritol penta(meth)acrylate-maleic acid ester calcium, dipentaerythritol penta(meth)acrylate-itaconic acid ester, dipentaerythritol penta(meth)acrylate-itaconic acid ester sodium, dipentaerythritol penta(meth)acrylate-itaconic acid ester potassium, dipentaerythritol penta(meth)acrylate-itaconic acid ester ammonium, dipentaerythritol penta(meth)acrylate-itaconic acid ester magnesium, dipentaerythritol penta(meth)acrylate-itaconic acid ester calcium and so on.

Of the compounds (I) having a cationic hydrophilic group, those compounds represented by the general formulas (Ir) to (It) below are preferable.

[Chem. 37]

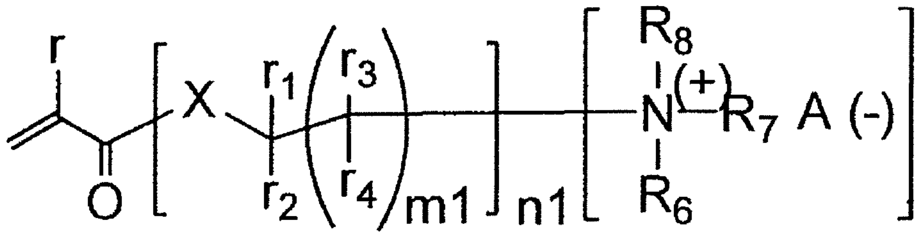

(I r)

In the formula (Ir), X is -O-, -S-, -NH- or -$NCH_3$-; $r_1$ to $r_4$ each independently represent a hydrogen atom, a methyl group, an ethyl group or a hydroxyl group; m1 is an integer of 0 to 10; n1 is an integer of 0 to 100; when n1 is 2 or greater, $r_1$s to $r_4$s, and Xs each may be the same as or different from one another; A(-) is a halogen ion, a formate ion, an acetate ion, a sulfate ion, a hydrogen sulfate ion, a phosphate ion or a hydrogen phosphate ion; and $R_6$ to $R_8$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group.

Examples of the compounds represented by the general formula (Ir) include N,N-dimethyl aminoethyl(meth)acrylate hydrochloric acid salt, N,N-dimethyl aminoethyl(meth)acrylate hydrobromide salt, N,N-dimethyl aminoethyl(meth)acrylate sulfuric acid salt, N,N-dimethyl aminoethyl(meth)acrylate formic acid salt, N,N-dimethyl aminoethyl(meth)acrylate acetic acid salt, N-dimethyl aminoethyl(meth)acrylate phosphoric acid salt, N,N-dimethyl amino-propyl-2-(meth)acrylate hydrochloric acid salt, N,N-dimethyl aminopropyl-2-(meth)acrylate hydrochloric acid salt, N,N-dimethyl amino-propyl-2-(meth)acrylate hydrobromide salt, N,N-dimethyl amino-propyl-2-(meth)acrylate sulfuric acid salt, N,N-dimethyl amino-propyl-2-(meth)acrylate acetic acid salt, N,N-dimethyl amino-propyl-2-(meth)acrylate phosphoric acid salt, N,N-dimethyl amino-propyl-3-(meth)acrylate hydrochloric acid salt, N,N-dimethyl amino-propyl-3-(meth)acrylate hydrochloric acid salt, N,N-dimethyl amino-propyl-3-(meth)acrylate hydrobromide salt, N,N-dimethyl amino-propyl-3-(meth)acrylate sulfuric acid salt, N,N-dimethyl amino-propyl-3-(meth)acrylate acetic acid salt, N,N-dimethyl amino-propyl-3-(meth)acrylate phosphoric acid salt, N,N-dimethyl aminobutyl-4-(meth)acrylate hydrochloric acid salt, N,N-dimethyl amino-butyl-4-(meth)acrylate hydrochloric acid salt, N,N-dimethyl amino-butyl-4-(meth)acrylate hydrobromide salt, N,N-dimethyl amino-butyl-4-(meth)acrylate sulfuric acid salt, N,N-dimethyl amino-butyl-4-(meth)acrylate acetic acid salt, N,N-dimethyl amino-butyl-4-(meth)acrylate phosphoric acid salt, N,N-dimethyl amino-hexyl-6-(meth)acrylate hydrochloric acid salt, N,N-dimethyl amino-hexyl-6-(meth)acrylate hydrochloric acid salt, N,N-dimethyl amino-hexyl-6-(meth)acrylate hydrobromide salt, N,N-dimethyl amino-hexyl-6-(meth)acrylate sulfuric acid salt, N,N-dimethyl amino-hexyl-6-(meth)acrylate acetic acid salt, N,N-dimethyl amino-hexyl-6-(meth)acrylate phosphoric acid salt, N,N-dimethyl aminooctyl-8-(meth)acrylate hydrochloric acid salt, N,N-dimethyl amino-octyl-8-(meth)acrylate hydrochloric acid salt, N,N-dimethyl amino-octyl-8-(meth)acrylate hydrobromide salt, N,N-dimethyl amino-octyl-8-(meth)acrylate sulfuric acid salt,

N,N-dimethyl amino-octyl-8-(meth)acrylate acetic acid salt, N,N-dimethyl amino-octyl-8-(meth)acrylate phosphoric acid salt, N,N-dimethyl amino-3-oxapentyl-5-(meth)acrylate hydrochloric acid salt, N,N-dimethyl amino-3-oxapentyl-5-(meth)acrylate hydrochloric acid salt, N,N-dimethyl amino-3-oxapentyl-5-(meth)acrylate hydrobromide salt, N,N-dimethyl amino-3-oxapentyl-5-(meth)acrylate sulfuric acid salt, N,N-dimethyl amino-3-oxapentyl-5-(meth)acrylate acetic acid salt, N,N-dimethyl amino-3-oxapentyl-5-(meth)acrylate phosphoric acid salt, N,N-diethyl aminoethyl(meth)acrylate hydrochloric acid salt, N,N-diethyl aminoethyl(meth)acrylate hydrobromide salt, N,N-diethyl aminoethyl(meth)acrylate sulfuric acid salt, N,N-diethyl aminoethyl(meth)acrylate formic acid salt, N,N-diethyl aminoethyl(meth)acrylate acetic acid salt, N-diethyl aminoethyl(meth)acrylate phosphoric acid salt, N,N-dipropyl aminoethyl(meth)acrylate hydrochloric acid salt, N,N-dipropyl aminoethyl(meth)acrylate hydrobromide salt, N,N-dipropyl aminoethyl(meth)acrylate sulfuric acid salt, N,N-dipropyl aminoethyl(meth)acrylate formic acid salt, N,N-dipropyl aminoethyl(meth)acrylate acetic acid salt, N-dipropyl aminoethyl(meth)acrylate phosphoric acid salt, 3-(meth)acryloyloxy-2-hydroxypropyl-1-triethylammonium chloride, 3-(meth)acryloyloxy-2-hydroxypropyl-1-triethylammonium bromide, 3-(meth)acryloyloxy-2-hydroxypropyl-1-triethylammonium sulfomide, 3-(meth)acryloyloxy-2-hydroxypropyl-1-triethylammonium phosphomide, N,N-dimethyl aminoethyl(meth)acrylamide hydrochloric acid salt, N,N-dimethyl aminoethyl(meth)acrylamide hydrobromide salt, N,N-dimethyl aminoethyl(meth)acrylamide sulfuric acid salt, N,N-dimethyl aminoethyl(meth)acrylamide formic acid salt, N,N-dimethyl aminoethyl(meth)acrylamide acetic acid salt, N-dimethyl aminoethyl(meth)acrylamide phosphoric acid salt, N,N-dimethyl amino-propyl-2-(meth)acrylamide hydrochloric acid salt, N,N-dimethyl amino-propyl-2-(meth)acrylamide hydrochloric acid salt, N,N-dimethyl amino-propyl-2-(meth)acrylamide hydrobromide salt, N,N-dimethyl aminopropyl-2-(meth)acrylamide sulfuric acid salt, N,N-dimethyl amino-propyl-2-(meth)acrylamide acetic acid salt, N,N-dimethyl amino-propyl-2-(meth)acrylamide phosphoric acid salt, N,N-dimethyl amino-propyl-3-(meth)acrylamide hydrochloric acid salt, N,N-dimethyl amino-propyl-3-(meth)acrylamide hydrochloric acid salt, N,N-dimethyl amino-propyl-3-(meth)acrylamide hydrobromide salt, N,N-dimethyl aminopropyl-3-(meth)acrylamide sulfuric acid salt, N,N-dimethyl amino-propyl-3-(meth)acrylamide acetic acid salt, N,N-dimethyl amino-propyl-3-(meth)acrylamide phosphoric acid salt, N,N-dimethyl amino-butyl-4-(meth)acrylamide hydrochloric acid salt, N,N-dimethyl amino-butyl-4-(meth)acrylamide hydrochloric acid salt, N,N-dimethyl amino-butyl-4-(meth)acrylamide hydrobromide salt, N,N-dimethyl amino-butyl-4-(meth)acrylamide sulfuric acid salt, N,N-dimethyl aminobutyl-4-(meth)acrylamide acetic acid salt, N,N-dimethyl amino-butyl-4-(meth)acrylamide phosphoric acid salt and so on.

[Chem. 38]

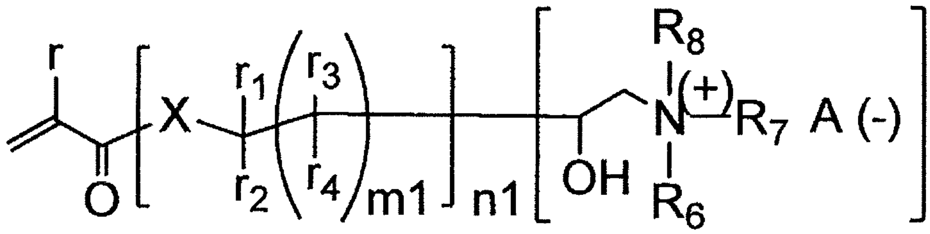

(I s)

In the formula (Is), X is -O-, -S-, -NH- or $-NCH_3-$; $r_1$ to $r_4$ each independently represent a hydrogen atom, a methyl group, an ethyl group or a hydroxyl group; m1 is an integer of 0 to 10; n1 is an integer of 0 to 100; when n1 is 2 or greater, $r_1$s to $r_4$s, and Xs each may be the same as or different from one another; A(-) is a halogen ion, a formate ion, an acetate ion, a sulfate ion, a hydrogen sulfate ion, a phosphate ion or a hydrogen phosphate ion; and $R_6$ to $R_8$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group.

Examples of the compounds represented by the general formula (Is) include 3-(meth)acryloyloxy-2-hydroxypropyl-1-trimethylammonium chloride, 3-(meth)acryloyloxy-2-hydroxypropyl-1-trimethylammonium bromide, 3-(meth)acryloyloxy-2-hydroxypropyl-1-trimethylammonium sulfomide, 3-(meth)acryloyloxy-2-hydroxypropyl-1-trimethylammonium phosphomide, 4-(meth)acryloyloxy-2-hydroxybutyl-1-trimethylammonium chloride, 4-(meth)acryloyloxy-2-hydroxybutyl-1-trimethylammonium bromide, 4-(meth)acryloyloxy-2-hydroxybutyl-1-trimethylammonium sulfomide, 4-(meth)acryloyloxy-2-hydroxybutyl-1-trimethylammonium phosphomide, 5-(meth)acryloyloxy-2-hydroxypentyl-1-trimethylammonium chloride, 5-(meth)acryloyloxy-2-hydroxypentyl-1-trimethylammonium bromide, 5-(meth)acryloyloxy-2-hydroxypentyl-1-trimethylammonium sulfomide, 5-(meth)acryloyloxy-2-hydroxypentyl-1-trimethylammonium phosphomide, 6-(meth)acryloyloxy-2-hydroxyhexyl-1-trimethylammonium chloride, 6-(meth)acryloyloxy-2-hydroxyhexyl-1-trimethylammonium bromide, 6-(meth)acryloyloxy-2-hydroxyhexyl-1-trimethylammonium sulfomide, 6-(meth)acryloyloxy-2-hydroxyhexyl-1-trimethylammonium phosphomide, 8-(meth)acryloyloxy-2-hydroxyoctyl-1-trimethylammonium

chloride, 8-(meth)acryloyloxy-2-hydroxyoctyl-1-trimethylammonium bromide, 8-(meth)acryloyloxy-2-hydroxyoctyl-1-trimethylammonium sulfomide, 8-(meth)acryloyloxy-2-hydroxyoctyl-1-trimethylammonium phosphomide, 10-(meth)acryloyloxy-2-hydroxydecyl-1-trimethylammonium chloride, 10-(meth)acryloyloxy-2-hydroxydecyl-1-trimethylammonium bromide, 10-(meth)acryloyloxy-2-hydroxydecyl-1-trimethylammonium sulfomide, 10-(meth)acryloyloxy-2-hydroxydecyl-1-trimethylammonium phosphomide, 3-(meth)acryloylthio 2-hydroxypropyl-1-trimethylammonium chloride, 3-(meth)acryloylthio 2-hydroxypropyl-1-trimethylammonium bromide, 3-(meth)acryloylthio 2-hydroxypropyl-1-trimethylammonium sulfomide, 3-(meth)acryloylthio 2-hydroxypropyl-1-trimethylammonium phosphomide, 3-(meth)acrylamido 2-hydroxypropyl-1-trimethylammonium chloride, 3-(meth)acrylamido 2-hydroxypropyl-1-trimethylammonium bromide, 3-(meth)acrylamido 2-hydroxypropyl-1-trimethylammonium sulfomide, 3-(meth)acrylamido 2-hydroxypropyl-1-trimethylammonium phosphomide and so on.

[Chem. 39]

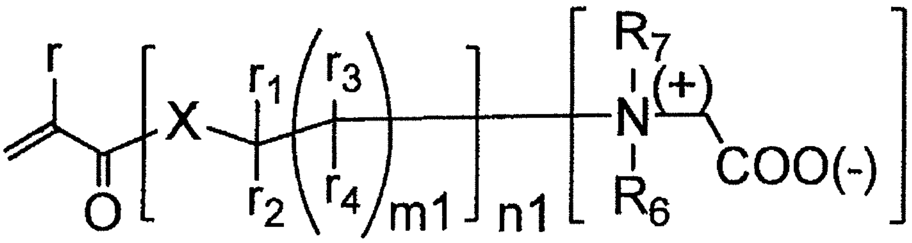

(I t)

In the formula (It), X is -O-, -S-, -NH- or $-NCH_3-$; $r_1$ to $r_4$ each independently represent a hydrogen atom, a methyl group, an ethyl group or a hydroxyl group; m1 is an integer of 0 to 10; n1 is an integer of 0 to 100; when n1 is 2 or greater, $r_1$s to $r_4$s, and Xs each may be the same as or different from one another; and $R_6$ and $R_7$ each independently represent a hydrogen atom, a $C_{1-20}$ alkyl, alkylaryl, alkylbenzyl, alkylcycloalkyl, alkylcycloalkylmethyl or cycloalkyl group, a phenyl group or a benzyl group.

Examples of the compounds represented by the general formula (It) include (meth)acryloyloxy-methyl betaine, 2-(meth)acryloyloxy-ethyl betaine, 2-(meth)acryloyloxy-propyl betaine, 3-(meth)acryloyloxy-propyl betaine, 4-(meth)acryloyloxy-butyl betaine, 5-(meth)acryloyloxy-pentyl betaine, 6-(meth)acryloyloxy-hexyl betaine, 7-(meth)acryloyloxy-heptyl betaine, 8-(meth)acryloyloxy-octyl betaine, 10-(meth)acryloyloxy-decyl betaine, 11-(meth)acryloyloxy-undecyl betaine, 5-(meth)acryloyloxy-3-oxapentyl betaine, 5-(meth)acryloyloxy-2,5-dimethyl-3-oxapentyl betaine, 8-(meth)acryloyloxy-2,5,8-trimethyl-3,6-dioxaoctyl betaine and so on.

Of the compounds having a cationic hydrophilic group, those compounds represented by the general formulas (Ir) to (Is) are more preferable, and those compounds represented by the general formula (Is) are still more preferable.

The molecular weight of the compounds (I) is usually 72 to 18,000, preferably 72 to 3,000, and more preferably 72 to 1000.

The compounds (I) may be used singly, or two or more may be used in combination. The composition (A) of the invention contains the compound (I). At least some of the molecules of the compound (I) may be reacted to form an oligomer in the composition. Here, the oligomer usually contains 2 to 20 repeating units derived from the compound (I).

The compounds (I) may be produced by a known method or by a method in accordance with a known method. Alternatively, the compounds (I) may be purchased from the market.

The compound (I') that is a constituent of the composition (B) has at least one hydrophilic group selected from anionic hydrophilic groups, cationic hydrophilic groups and hydroxyl groups, and at least one functional group with a polymerizable carbon-carbon double bond. When the hydrophilic group is a hydroxyl group, the compound (I') contains one functional group with a polymerizable carbon-carbon double bond. As a result of the incorporation of the compound having such a hydrophilic group and such a functional group with a carbon-carbon double bond, the polymerization of the composition provides hydrophilic cured products.

The compound (I') may be the compound (1) contained in the composition (A) or a compound having at least one hydrophilic group that is a hydroxyl group and one functional group with a polymerizable carbon-carbon double bond.

The hydroxyl groups may be any of alcoholic hydroxyl groups and phenolic hydroxyl groups as long as the advantageous effects of the invention are obtained. Alcoholic hydroxyl groups are preferable.

The hydrophilic groups present in the compounds (I') are preferably anionic hydrophilic groups.

The functional groups with a polymerizable carbon-carbon double bond are not particularly limited as long as the functional groups can initiate radical polymerization or ion polymerization. Examples include acryloyl group, methacryloyl group, acryloyloxy group, methacryloyloxy group, acryloylthio group, methacryloylthio group, acrylamide group, methacrylamide group, allyl group, vinyl group, isopropenyl group, maleyl group (-CO-CH=CH-CO-), itaconyl group (-CO-CH=CH-CO-) and styryl group.

Specific examples and preferred examples of the compound that has at least one functional group with a polymerizable carbon-carbon double bond and at least one hydrophilic group selected from an anionic hydrophilic group and a cationic hydrophilic group and that is used as the compound (I') are the same as those of a compound (1) contained in the polymerizable composition (A).

A preferred compound having at least one hydroxyl group as a hydrophilic group and one functional group with a polymerizable carbon-carbon double bond is any of compounds represented by the general formula (200).

[Chem. 40]

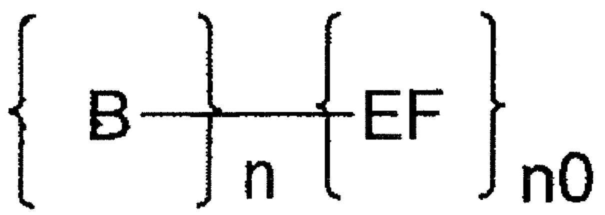

(200)

In the formula (200), B represents a $C_{2-100}$ organic group having one functional group with a polymerizable carbon-carbon double bond, EF represents a group represented by any one selected from the general formulas (201) to (204) and containing at least one hydroxyl group, n represents the number of B bonded to EF and is 1, and n0 represents the number of EF bonded to B.

Examples of the groups EF include those hydrophilic groups represented by the general formulas (201) to (204) below.

[Chem. 41]

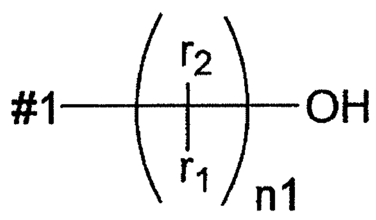

(201)

In the formula (201), n1 is an integer of 0 to 100; $r_1$ and $r_2$ each independently represent a hydrogen atom, a methyl group, an ethyl group or a hydroxyl group; when n1 is 2 or greater, $r_1$s and $r_2$s each may be the same as or different from one another; and #1 indicates a hand bonded to a carbon atom present in B in the formula (200).

[Chem. 42]

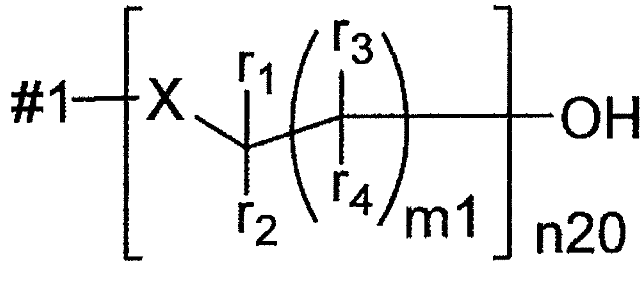

(202)

In the formula (202), X is -O-, -S-, -NH- or -$NCH_3$-; Xs may be the same as or different from one another; m1 is an integer of 0 to 10; n20 is an integer of 2 to 100; r represents a hydrogen atom or a methyl group; $r_1$ to $r_4$ each independently represent a hydrogen atom, a methyl group, an ethyl group or a hydroxyl group; Xs, $r_1$s, $r_2$s, $r_3$s and $r_4$s each may be the same as or different from one another; and #1 indicates a hand bonded to a carbon atom present in B in the formula (200).

[Chem. 43]

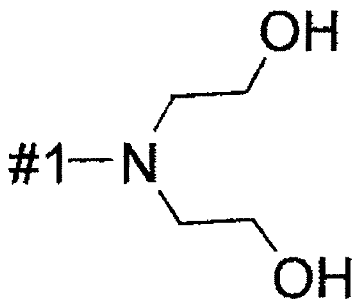

(2 0 3)

In the formula (203), #1 indicates a hand bonded to a carbon atom present in B in the formula (200).

[Chem. 44]

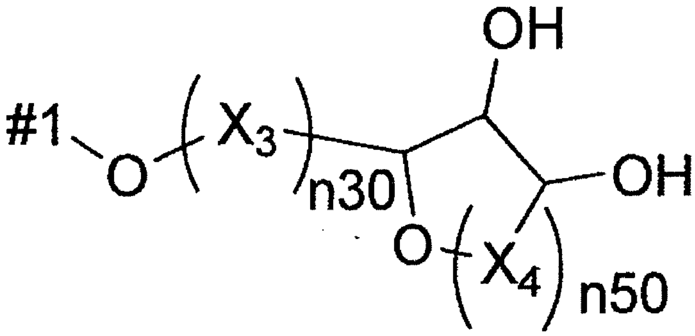

(2 0 4)

In the formula (204), $X_3$ and $X_4$ are each independently - $CH_2$-, -CH(OH) - or -CO-; n30 is an integer of 0 to 3; n50 is an integer of 0 to 5; when n30 is 2 or greater, $X_3$s may be the same as or different from one another; when n50 is 2 or greater, $X_4$s may be the same as or different from one another; and #1 indicates a hand bonded to a carbon atom present in B in the formula (200).

In the formula (200) described hereinabove, B is preferably a group selected from groups represented by the general formulas (210) to (216) below.

[Chem. 45]

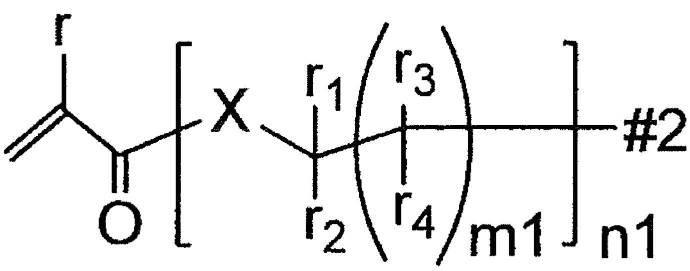

(2 1 0)

In the formula (210), X is -O-, -S-, -NH- or $-NCH_3-$; r represents a hydrogen atom or a methyl group; $r_1$ to $r_4$ each independently represent a hydrogen atom, a methyl group, an ethyl group or a hydroxyl group; m1 is an integer of 0 to 10; n1 is an integer of 0 to 100; and #2 indicates a hand bonded to #1 present in at least one group selected from those groups represented by the general formulas (201) to (204).

[Chem. 46]

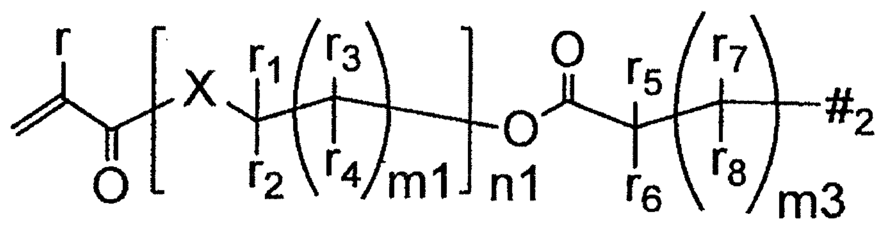

(2 1 1)

In the formula (211), X is -O-, -S-, -NH- or $-NCH_3-$; r represents a hydrogen atom or a methyl group; $r_1$ to $r_6$ each independently represent a hydrogen atom, a methyl group, an ethyl group or a hydroxyl group; $r_7$ and $r_8$ each independently represent a hydrogen atom, a methylidene group, a methyl group, an ethyl group or a hydroxyl group; the bond between the carbon atom to which $r_5$ and $r_6$ are bonded and the carbon atom to which $r_7$ and $r_8$ are bonded may be a single bond or a double bond; m1 and m3 are each independently an integer of 0 to 10; n1 is an integer of 0 to 100; and #2 indicates a hand bonded to #1 present in at least one group selected from those groups represented by the general formulas (201) to (204) .

[Chem. 47]

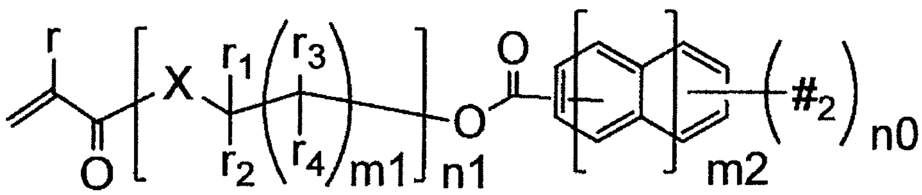

(2 1 2)

In the formula (212), X is -O-, -S-, -NH- or $-NCH_3-$; r represents a hydrogen atom or a methyl group; $r_1$ to $r_4$ each independently represent a hydrogen atom, a methyl group, an ethyl group or a hydroxyl group; m2 is an integer of 0 to 5; m1 is an integer of 0 to 10; is an integer of 1 to 5; n1 is an integer of 0 to 100; and #2 indicates a hand bonded to #1 present in at least one group selected from those groups represented by the general formulas (201) to (204).

[Chem. 48]

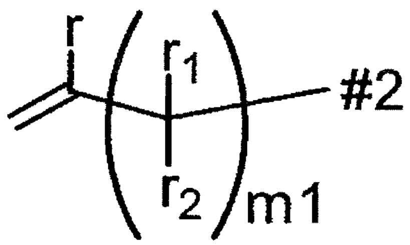

(2 1 3)

In the formula (213), r represents a hydrogen atom or a methyl group; $r_1$ and $r_2$ each independently represent a hydrogen atom, a methyl group, an ethyl group or a hydroxyl group; m1 is an integer of 0 to 10; and #2 indicates a hand bonded to #1 present in at least one group selected from those groups represented by the general formulas (201) to (204) .

[Chem. 49]

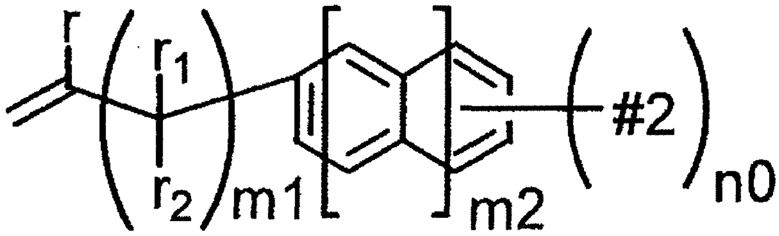

(2 1 4)

In the formula (214), r represents a hydrogen atom or a methyl group; $r_1$ and $r_2$ each independently represent a hydrogen atom, a methyl group, an ethyl group or a hydroxyl group; m1 is an integer of 0 to 10; m2 each independently represents an integer of 0 to 5; is an integer of 1 to 5; and #2 indicates a hand bonded to #1 present in at least one group selected from those groups represented by the general formulas (201) to (204).

[Chem. 50]

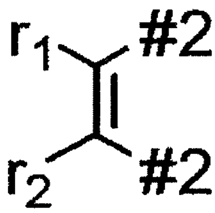

(2 1 5)

In the formula (215), $r_1$ and $r_2$ each independently represent a hydrogen atom, a methyl group, an ethyl group or a hydroxyl group; and #2 at each occurrence indicates a hand bonded to #1 present in at least one group selected from those groups represented by the general formulas (201) to (204) .

[Chem. 51]

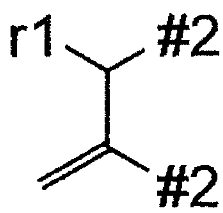

(2 1 6)

In the formula (216), $r_1$ represents a hydrogen atom, a methyl group, an ethyl group or a hydroxyl group; and #2 at each occurrence indicates a hand bonded to #1 present in at least one group selected from those groups represented by the general formulas (201) to (204).

The hydroxyl group-containing compounds serving as the compound (I') are preferably compounds represented by the general formulas (Im) to (Iq) below.

[Chem. 52]

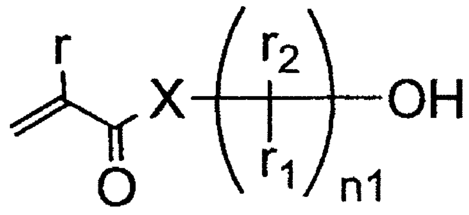

(I m)

In the formula (Im), X is -O-, -S-, -NH- or $-NCH_3-$; r represents a hydrogen atom or a methyl group; $r_1$ and $r_2$ each independently represent a hydrogen atom, a methyl group, an ethyl group or a hydroxyl group; n1 is an integer of 0 to 100; and when n1 is 2 or greater, $r_1$s and $r_2$s each may be the same as or different from one another.

Examples of the compounds represented by the general formula (Im) include hydroxymethyl(meth)acrylate, 2-hydroxyethyl(meth)acrylate, 2-hydroxypropyl(meth)acrylate, 3-hydroxypropyl(meth)acrylate, 4-hydroxybutyl(meth)acrylate, 3-hydroxybutyl(meth)acrylate, 3-hydroxybutyl-2-(meth)acrylate, 2-hydroxybutyl(meth)acrylate, 5-hydroxypentyl(meth)acrylate, 4-methyl-4-hydroxypentyl-2-(meth)acrylate, 6-hydroxyhexyl(meth)acrylate, 7-hydroxyheptyl(meth)acrylate, 8-hydroxyoctyl(meth)acrylate, 12-hydroxylauryl(meth)acrylate, 18-hydroxystearyl(meth)acrylate, (meth)acryloylthio-methanol, (meth)acryloylthio-2-ethanol, (meth)acryloylthio-2-propanol, (meth)acryloylthio-3-propanol, (meth)acryloylthio-4-butanol, (meth)acryloylthio-3-butanol, 2-(meth)acryloylthio-3-butanol, (meth)acryloylthio-2-butanol, (meth)acryloylthio-6-hexanol, (meth)acryloylthio-8-octanol, (meth)acryloylthio-12-lauryl alcohol, (meth)acryloylthio-18-stearyl alcohol, hydroxymethyl(meth)acrylamide, 2-hydroxyethyl(meth)acrylamide, 2-hydroxypropyl(meth)acrylamide, 3-hydroxypropyl(meth)acrylamide, 4-hydroxybutyl(meth)acrylamide, 4-hydroxybutyl(meth)acrylamide, 3-hydroxybutyl(meth)acrylamide, 3-hydroxybutyl-2-(meth)acrylamide, 2-hydroxybutyl(meth)acrylamide, 5-hydroxypentyl(meth)acrylamide, 4-methyl-4-hydroxypentyl-2-(meth)acrylamide, 6-hydroxyhexyl(meth)acrylamide, 7-hydroxyheptyl(meth)acrylamide, 8-hydroxyoctyl(meth)acrylamide, 12-hydroxylauryl(meth)acrylamide, 18-hydroxystearyl(meth)acrylamide and so on.

Of the compounds represented by the general formula (Im), those compounds represented by the general formula (Im-2) below are more preferable.

[Chem. 53]

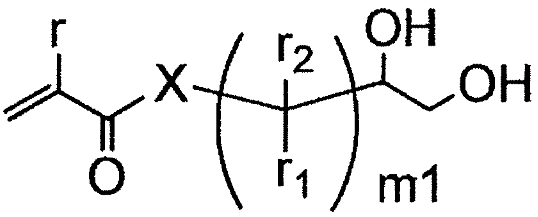

(I m−2)

In the formula (Im-2), X is -O-, -S-, -NH- or $-NCH_3-$; r represents a hydrogen atom or a methyl group; $r_1$ and $r_2$ each independently represent a hydrogen atom, a methyl group, an ethyl group or a hydroxyl group; m1 is an integer of 0 to 10; and when m1 is 2 or greater, $r_1$s and $r_2$s each may be the same as or different from one another.

Examples of the compounds represented by the general formula (Im-2) include 1-(meth)acryloyloxy-2,3-dihydroxypropane, 1-(meth)acryloylthio-2,3-dihydroxypropane, 1-(meth)acrylamido-2,3-dihydroxypropane, 1-(meth)acrylamido-3,4-dihydroxybutane, N-(meth)acryloyl-glucamine, 1-(meth)acryloyloxy-3,4-dihydroxybutane, 1-(meth)acryloyloxy-4,5-dihydroxyheptane, 1-(meth)acryloyloxy-5,6-dihydroxyhexane, 1-(meth)acryloyloxy-6,7-dihydroxyheptane, 1-(meth)acryloyloxy-7,8-dihydroxyoctane, 1-(meth)acryloyloxy-7,8-dihydroxyoctane, 1-(meth)acryloyloxy-8,9-dihydroxynonane, 1-(meth)acryloyloxy-9,10-dihydroxydecane, L-threitol(meth)acrylic acid ester{1-(meth)acryloyloxy-2,3,4-trihydroxybutane, etc.}, xylitol(meth)acrylic acid ester{1-(meth)acryloyloxy-2,3,4,5-tetrahydroxypentane, etc.}, sorbitol(meth)acrylic acid ester{1-(meth)acryloyloxy-2,3,4,5,6-pentahydroxyhexane, etc.} and so on.

[Chem. 54]

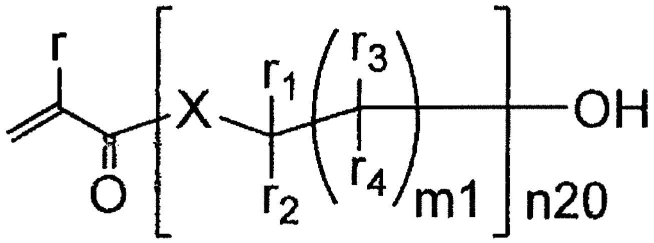

(I n)

In the formula (In), m1 is an integer of 0 to 10; n20 is an integer of 2 to 100; r represents a hydrogen atom or a methyl group; X is -O-, -S-, -NH- or $-NCH_3-$; Xs may be the same as or different from one another; $r_1$ to $r_4$ each independently represent a hydrogen atom, a methyl group, an ethyl group or a hydroxyl group; and Xs, $r_1$S, $r_2$S, $r_3$S and $r_4$S each may be the same as or different from one another.

Examples of the compounds represented by the general formula (In) include di(ethylene glycol)mono{(meth)acrylate}, tri(ethylene glycol)mono{(meth)acrylate}, tetra(ethylene glycol)mono{(meth)acrylate}, penta(ethylene glycol)mono{(meth)acrylate}, hexa(ethylene glycol)mono{(meth)acrylate}, octa(ethylene glycol)mono{(meth)acrylate}, deca(ethylene glycol)mono{(meth)acrylate}, tetradeca(ethylene glycol)mono{(meth)acrylate}, dodeca(ethylene glycol)mono{(meth)acrylate}, octadeca(ethylene glycol)mono{(meth)acrylate}, di(1,3-propylene glycol)mono{(meth)acrylate}, tri(1,3-propylene glycol)mono{(meth)acrylate}, tetra(1,3-propylene glycol)mono{(meth)acrylate}, penta(1,3-propylene glycol)mono{(meth)acrylate}, hexa(1,3-propylene glycol)mono{(meth)acrylate}, octa(1,3-propylene glycol)mono{(meth)acrylate}, deca(1,3-propylene glycol)mono{(meth)acrylate}, tetradeca(1,3-propylene glycol)mono{(meth)acrylate}, dodeca(1,3-propylene glycol)mono{(meth)acrylate}, octadeca(1,3-propylene glycol)mono{(meth)acrylate}, di(1,2-propylene glycol)mono{(meth)acrylate}, tri(1,2-propylene glycol)mono{(meth)acrylate}, tetra(1,2-propylene glycol)mono{(meth)acrylate}, penta(1,2-propylene glycol)mono{(meth)acrylate}, hexa(1,2-propylene glycol)mono{(meth)acrylate}, octa(1,2-propylene glycol)mono{(meth)acrylate}, deca(1,2-propylene glycol)mono{(meth)acrylate}, tetradeca(1,2-propylene glycol)mono{(meth)acrylate}, dodeca(1,2-propylene glycol)mono{(meth)acrylate}, octadeca(1,2-propylene glycol)mono{(meth)acrylate}, di(1,4-butylene glycol)mono{(meth)acrylate}, tri(1,4-butylene glycol)mono{(meth)acrylate}, tetra(1,4-butylene glycol)mono{(meth)acrylate}, penta(1,4-butylene glycol)mono{(meth)acrylate}, hexa(1,4-butylene glycol)mono{(meth)acrylate}, octa(1,4-butylene glycol)mono{(meth)acrylate}, deca(1,4-butylene glycol)mono{(meth)acrylate}, tetradeca(1,4-butylene glycol)mono{(meth)acrylate}, dodeca(1,4-butylene glycol)mono{(meth)acrylate}, octadeca(1,4-butylene glycol)mono{(meth)acrylate}, di(1,2-butylene glycol)mono{(meth)acrylate}, tri(1,2-butylene glycol)mono{(meth)acrylate}, tetra(1,2-butylene glycol)mono{(meth)acrylate}, penta(1,2-butylene glycol)mono{(meth)acrylate}, hexa(1,2-butylene glycol)mono{(meth)acrylate}, octa(1,2-butylene glycol)mono{(meth)acrylate}, deca(1,2-butylene glycol)mono{(meth)acrylate}, tetradeca(1,2-butylene glycol)mono{(meth)acrylate}, dodeca(1,2-butylene glycol)mono{(meth)acrylate}, octadeca(1,2-butylene glycol)mono{(meth)acrylate}, di(1,3-butylene glycol)mono{(meth)acrylate}, tri(1,3-butylene glycol)mono{(meth)acrylate}, tetra(1,3-butylene glycol)mono{(meth)acrylate}, penta(1,3-butylene glycol)mono{(meth)acrylate}, hexa(1,3-butylene glycol)mono{(meth)acrylate}, octa(1,3-butylene glycol)mono{(meth)acrylate}, deca(1,3-butylene glycol)mono{(meth)acrylate}, tetradeca(1,3-butylene glycol)mono{(meth)acrylate}, dodeca(1,3-butylene glycol)mono{(meth)acrylate}, octadeca(1,3-butylene glycol)mono{(meth)acrylate}, di(2,3-butylene glycol)mono{(meth)acrylate}, tri(2,3-butylene glycol)mono{(meth)acrylate}, tetra(2,3-butylene glycol)mono{(meth)acrylate}, penta(2,3-butylene glycol)mono{(meth)acrylate}, hexa(2,3-butylene glycol)mono{(meth)acrylate}, octa(2,3-butylene glycol)mono{(meth)acrylate}, deca(2,3-butylene glycol)mono{(meth)acrylate}, tetradeca(2,3-butylene glycol)mono{(meth)acrylate}, dodeca(2,3-butylene glycol)mono{(meth)acrylate}, octadeca(2,3-butylene glycol)mono{(meth)acrylate}, di(1,5-pentylene glycol)mono{(meth)acrylate}, tri(1,5-pentylene glycol)mono{(meth)acrylate}, tetra(1,5-pentylene glycol)mono{(meth)acrylate}, penta(1,5-pentylene glycol)mono{(meth)acrylate}, hexa(1,5-pentylene glycol)mono{(meth)acrylate}, octa(1,5-pentylene glycol)mono{(meth)acrylate}, deca(1,5-pentylene glycol)mono{(meth)acrylate}, tetradeca(1,5-pentylene glycol)mono{(meth)acrylate}, dodeca(1,5-pentylene glycol)mono{(meth)acrylate}, octadeca(1,5-pentylene glycol)mono{(meth)acrylate}, di(1,6-hexylene glycol)mono{(meth)acrylate}, tri(1,6-hexylene glycol)mono{(meth)acrylate}, tetra(1,6-hexylene glycol)mono{(meth)acrylate}, penta(1,6-hexylene glycol)mono{(meth)acrylate}, hexa(1,6-hexylene glycol)mono{(meth)acrylate}, octa(1,6-hexylene glycol)mono{(meth)acrylate}, deca(1,6-hexylene glycol)mono{(meth)acrylate}, dodeca(1,6-hexylene glycol)mono{(meth)acrylate}, tetradeca(1,6-hexylene glycol)mono{(meth)acrylate}, octadeca(1,6-hexylene glycol)mono{(meth)acrylate}, mono{(meth)acryloylthioethyl}ethylene glycol, mono{(meth)acryloylthioethyl}-di(ethylene glycol), mono{(meth)acryloylthioethyl}-tri(ethylene glycol), mono{(meth)acryloylthioethyl}-tetra(ethylene glycol), mono{(meth)acryloylthioethyl}-penta(ethylene glycol), mono{(meth)acryloylthioethyl}-hexa(ethylene glycol), mono{(meth)acryloylthioethyl}-octa(ethylene glycol), mono{(meth)acryloylthioethyl}-deca(ethylene glycol), mono{(meth)acryloylthioethyl}-dodeca(ethylene glycol), mono{(meth)acryloylthioethyl}-tetradeca(ethylene glycol), mono{(meth)acryloylthioethyl}-octadeca(ethylene glycol), mono{1-(meth)acryloylthio-2-propyl ethyl}ethylene glycol, mono{1-(meth)acryloylthio-2-propyl ethyl}-di(ethylene glycol), mono{1-(meth)acryloylthio-2-propyl ethyl}-tri(ethylene glycol), mono{1-(meth)acryloylthio-2-propyl ethyl}-tetra(ethylene glycol), mono{1-(meth)acryloylthio-2-propyl ethyl}-penta(ethylene glycol), mono{1-(meth)acryloylthio-2-propyl ethyl}-hexa(ethylene glycol), mono{1-(meth)acryloylthio-2-propyl ethyl}-octa(ethylene glycol), mono{1-(meth)acryloylthio-2-propyl ethyl}-deca(ethylene glycol), mono{1-(meth)acryloylthio-2-propyl ethyl}-dodeca(ethylene glycol), mono{1-(meth)acryloylthio-2-propyl ethyl}-tetradeca(ethylene glycol), mono{1-(meth)acryloylthio-2-propyl ethyl}-octadeca(ethylene glycol), mono{1-(meth)acryloylthio-3-propyl ethyl}ethylene glycol, mono{1-(meth)acryloylthio-3-propyl ethyl}-di(ethylene glycol), mono{1-(meth)acryloylthio-3-propyl ethyl}-tri(ethylene glycol), mono{1-(meth)acryloylthio-3-propyl ethyl}-tetra(ethylene glycol), mono{1-(meth)acryloylthio-3-propyl ethyl}-penta(ethylene glycol), mono{1-(meth)acryloylthio-3-propyl ethyl}-hexa(ethylene glycol), mono{1-(meth)acryloylthio-3-propyl ethyl}-octa(ethylene glycol), mono{1-(meth)acryloylthio-3-propyl ethyl}-deca(ethylene glycol), mono{1-(meth)acryloylthio-3-propyl ethyl}-dodeca(ethylene glycol), mono{1-(meth)acryloylthio-3-propyl ethyl}-tetradeca(ethylene glycol), mono{1-(meth)acryloylthio-3-propyl ethyl}-octadeca(ethylene glycol), mono{1-(meth)acryloylthio-4-butyl ethyl}ethylene glycol, mono{1-(meth)acryloylthio-4-butyl ethyl}-di(ethylene glycol), mono{1-(meth)acryloylthio-4-butyl ethyl}-tri(ethylene glycol), mono{1-(meth)acryloylthio-4-butyl ethyl}-tetra(ethylene glycol), mono{1-(meth)acryloylthio-4-butyl ethyl}-penta(ethylene glycol), mono{1-(meth)acryloylthio-4-butyl ethyl}-hexa(ethylene glycol), mono{1-(meth)acryloylthio-4-butyl ethyl}-octa(ethylene glycol), mono{1-(meth)acryloylthio-4-butyl ethyl}-deca(ethylene glycol), mono{1-(meth)acryloylthio-4-butyl ethyl}-dodeca(ethylene glycol), mono{1-(meth)acryloylthio-4-butyl ethyl}-tetradeca(ethylene glycol), mono{1-(meth)acryloylthio-4-butyl ethyl}-octadeca(ethylene glycol), mono{(meth)acrylamido ethyl}ethylene glycol, mono{(meth)acrylamido ethyl}-di(ethylene glycol), mono{(meth)acrylamido ethyl}-tri(ethylene glycol), mono{(meth)acrylamido ethyl}-tetra(ethylene glycol), mono{(meth)acrylamido ethyl}-penta(ethylene glycol), mono{(meth)acrylamido ethyl}-hexa(ethylene glycol), mono{(meth)acrylamido ethyl}-octa(ethylene glycol), mono{(meth)acrylamido ethyl}-deca(ethylene glycol), mono{(meth)acrylamido ethyl}-dodeca(ethylene glycol), mono{(meth)acrylamido ethyl}-tetradeca(ethylene glycol), mono{(meth)acrylamido ethyl}-octadeca(ethylene glycol), mono{1-(meth)acrylamido 2-propyl ethyl}ethylene glycol, mono{1-(meth)acrylamido 2-propyl ethyl}-di(ethylene glycol), mono{1-(meth)acrylamido 2-propyl ethyl}-tri(ethylene glycol), mono{1-(meth)acrylamido 2-propyl ethyl}-tetra(ethylene glycol), mono{1-(meth)acrylamido 2-propyl thyl}-penta(ethylene glycol), mono{1-(meth)acrylamido 2-propyl ethyl}-hexa(ethylene glycol), mono{1-(meth)acrylamido 2-propyl ethyl}-octa(ethylene glycol), mono{1-(meth)acrylamido 2-propyl ethyl}-deca(ethylene glycol), mono{1-(meth)acrylamido 2-propyl ethyl}-dodeca(ethylene glycol), mono{1-(meth)acrylamido 2-propyl ethyl}-tetradeca(ethylene glycol), mono{1-(meth)acrylamido 2-propyl ethyl}-octadeca(ethylene glycol), mono{1-(meth)acrylamido 3-propyl ethyl}ethylene glycol, mono{1-(meth)acrylamido 3-propyl ethyl}-di(ethylene glycol), mono{1-(meth)acrylamido 3-propyl ethyl}-tri(ethylene glycol), mono{1-(meth)acrylamido 3-propyl ethyl}-tetra(ethylene glycol), mono{1-(meth)acrylamido 3-propyl thyl}-penta(ethylene glycol), mono{1-(meth)acrylamido 3-propyl ethyl}-hexa(ethylene glycol), mono{1-(meth)acrylamido 3-propyl ethyl}-octa(ethylene glycol), mono{1-(meth)acrylamido 3-propyl ethyl}-deca(ethylene glycol), mono{1-(meth)acrylamido 3-propyl ethyl}-dodeca(ethylene glycol), mono{1-(meth)acrylamido 3-propyl ethyl}-tetradeca(ethylene glycol), mono{1-(meth)acrylamido 3-propyl ethyl}-octadeca(ethylene glycol), mono{1-(meth)acrylamido 4-butyl ethyl}ethylene glycol, mono{1-(meth)acrylamido 4-butyl ethyl}-di(ethylene glycol), mono{1-(meth)acrylamido 4-butyl ethyl}-tri(ethylene glycol), mono{1-(meth)acrylamido 4-butyl ethyl}-tetra(ethylene glycol), mono{1-(meth)acrylamido 4-butyl thyl}-penta(ethylene glycol), mono{1-(meth)acrylamido 4-butyl ethyl}-hexa(ethylene glycol), mono{1-(meth)acrylamido 4-butyl ethyl}-octa(ethylene glycol), mono{1-(meth)acrylamido 4-butyl ethyl}-deca(ethylene glycol), mono{1-(meth)acrylamido 4-butyl ethyl}-dodeca(ethylene glycol), mono{1-(meth)acrylamido 4-butyl ethyl}-tetradeca(ethylene glycol), mono{1-(meth)acrylamido 4-butyl ethyl}-octadeca(ethylene glycol), 5-{(meth)acryloyloxy}-3-thiapentyl alcohol, 8-{(meth)acryloyloxy}-3,6-dithiaoctyl alcohol, 5-{(meth)acryloylthio}-3-thiapentyl alcohol, 8-{(meth)acryloylthio}-3,6-dithiaoctyl alcohol, 5-{(meth)acrylamido}-3-thiapentyl alcohol, 8-{(meth)acrylamido}-3,6-dithiaoctyl alcohol and so on.

[Chem. 55]

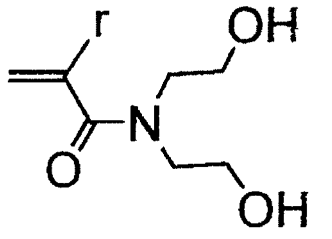

(I p)

In the formula (Ip), r represents a hydrogen atom or a methyl group.

Examples of the compounds represented by the general formula (Ip) include N-(meth)acryloyl-diethanolamine.

[Chem. 56]

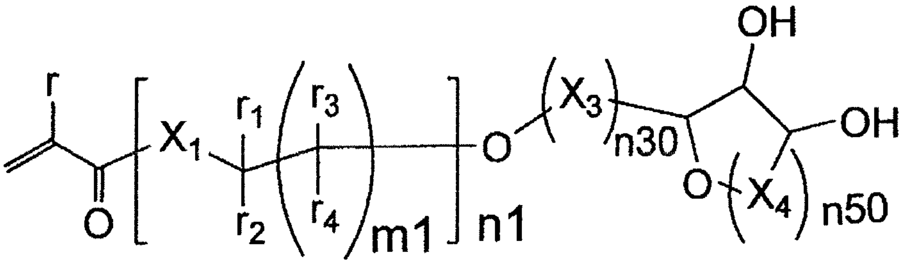

(I q)

In the formula (Iq), $X_1$ is -O-, -S-, -NH- or $-NCH_3-$; $X_3$ and $X_4$ are each $-CH_2-$, -CH(OH)- or -CO-; r represents a hydrogen atom or a methyl group; $r_1$ to $r_4$ each independently represent a hydrogen atom, a methyl group, an ethyl group or a hydroxyl group; m1 is an integer of 0 to 10; n1 is an integer of 0 to 100; n30 is an integer of 0 to 3; n50 is an integer of 0 to 5; when n1 is 2 or greater, $r_1$s to $r_4$s, and $X_1$s each may be the same as or different from one another; when n30 is 2 or greater, $X_3$s may be the same as or different from one another; and when n50 is 2 or greater, $X_4$s may be the same as or different from one another.

Examples of the compounds represented by the general formula (Iq) include ribose(meth)acrylate, ascorbic acid-(meth)acrylate, xylose-(meth)acrylate, sorbitan-(meth)acrylate, glucose-(meth)acrylate, glucono-1,5-lactone-(meth)acrylate, ribose(meth)acryloyloxyethyl, ascorbic acid-(meth)acryloyloxyethyl, xylose-(meth)acryloyloxyethyl, sorbitan-(meth)acryloyloxyethyl, glucose-(meth)acryloyloxyethyl, glucono-1,5-lactone-(meth)acryloyloxyethyl, ribose(meth)acryloyloxy-1,2-propyl, ascorbic acid-(meth)acryloyloxy-1,2-propyl, xylose-(meth)acryloyloxy-1,2-propyl, sorbitan-(meth)acryloyloxy-1,2-propyl, glucose-(meth)acryloyloxy-1,2-propyl, glucono-1,5-lactone-(meth)acryloyloxy-1,2-propyl, ribose(meth)acryloyloxy-2-hydroxy-1,3-propyl, ascorbic acid-(meth)acryloyloxy-2-hydroxy-1,3-propyl, xylose-(meth)acryloyloxy-2-hydroxy-1,3-propyl, sorbitan-(meth)acryloyloxy-2-hydroxy-1,3-propyl, glucose-(meth)acryloyloxy-2-hydroxy-1,3-propyl, glucono-1,5-lactone-(meth)acryloyloxy-2-hydroxy-1,3-propyl, ribose(meth)acryloyloxy-3-oxapentyl, ascorbic acid-(meth)acryloyloxy-3-oxapentyl, xylose-(meth)acryloyloxy-3-oxapentyl, sorbitan-(meth)acryloyloxy-3-oxapentyl, glucose-(meth)acryloyloxy-3-oxapentyl, glucono-1,5-lactone-(meth)acryloyloxy-3-oxapentyl, and adducts thereof such as ethylene oxide adduct, propylene oxide adduct, and butyrolactone adduct and so on.

Of the compounds having a hydroxyl group, those compounds represented by the general formulas (Im) to (In) are more preferable, those compounds represented by the general formula (Im) are still more preferable, and those compounds represented by the general formula (Im-2) are particularly preferable.

The polymerizable composition (B) contains the surfactant (III) that will be described later, which enables formation of a highly hydrophilic film having a surface enriched with a compound having a hydroxyl group. Even when the polymerizable composition (B) containing the surfactant is used, the compound (I') is likely to preferably have an anionic hydrophilic group and a cationic hydrophilic group as hydrophilic groups, and more preferably an anionic hydrophilic group.

The molecular weight of the compounds (I') is usually 72 to 18,000, preferably 72 to 3,000, and more preferably 72 to 1000.

The compounds (I') may be used singly, or two or more may be used in combination. The composition (B) of the invention contains the compound (I'). At least some of the molecules of the compound (I') may be reacted to form an oligomer in the composition. Here, the oligomer usually contains 2 to 20 repeating units derived from the compound (I').

The compounds (I') may be produced by a known method or by a method in accordance with a known method. Alternatively, the compounds (I) may be purchased from the market.

The compound (II) that is a constituent of the polymerizable composition (A) or (B) has two or more functional groups with a polymerizable carbon-carbon double bond. The compound (II) may contain a hydroxyl group but is free from anionic hydrophilic groups and cationic hydrophilic groups. As a result of the incorporation of such a compound, the polymerization of the composition provides cured products having a sufficient degree of crosslinking.

Examples of the functional group with a polymerizable carbon-carbon double bond are the same as those of the functional group with a polymerizable carbon-carbon double bond which can be used in the compound (I). In particular, (meth)acryloyl group is preferred.

Examples of the (meth)acryloyl groups include (meth)acryloyloxy groups, (meth)acryloylthio groups and (meth)acrylamide groups. Of these (meth)acryloyl groups, (meth)acryloyloxy groups and (meth)acryloylthio groups are preferable.

Preferred compounds (II) are those compounds which have one or more hydroxyl groups, and two or more (meth)acryloyl groups; those compounds which have one or more bonds selected from ether bonds and thioether bonds, and two or more (meth)acryloyl groups; those compounds which have one or more ester bonds (except ester bonds also forming moieties of (meth)acryloyl groups), and two or more (meth)acryloyl groups; those compounds which have one or more groups selected from alicyclic groups and aromatic groups, and two or more (meth)acryloyl groups; and those compounds which have one or more heterorings, and two or more (meth)acryloyl groups.

Examples of the compounds (II) include ethylene glycol di(meth)acrylate, 1,2-propanediol di(meth)acrylate, 1,3-propanediol di(meth)acrylate, 1,4-butanediol di(meth)acrylate, 1,6-hexanediol di(meth)acrylate, 1,9-nonanediol di(meth)acrylate, 1,10-decanediol di(meth)acrylate, neopentyl glycol di(meth)acrylate, 2-methyl-1,8-octanediol di(meth)acrylate, 2-butyl-2-ethyl-1,3-propanediol di(meth)acrylate, 1,2-bis{3-(meth)acryloyloxy-2-hydroxy-propyloxy}ethane, 1,2-bis{3-(meth)acryloyloxy-2-hydroxy-propyloxy}propane, 1,3-bis{3-(meth)acryloyloxy-2-hydroxy-propyloxy}propane, 1,4-bis{3-(meth)acryloyloxy-2-hydroxy-propyloxy}heptane, 1,6-bis{3-(meth)acryloyloxy-2-hydroxy-propyloxy}hexane; neopentyl glycol hydroxypivalic acid di(meth)acrylate; polyethylene glycol di(meth)acrylate, 1,2-polypropylene glycol di(meth)acrylate, 1,3-polypropylene glycol di(meth)acrylate, 1,4-polybutylene glycol di(meth)acrylate, polyethylene glycol-bis{3-(meth)acryloyloxy-2-hydroxy-propyl} ether, 1,2-polypropylene glycol-bis{3-(meth)acryloyloxy-2-hydroxy-propyl} ether; 1,2-polypropylene glycol-bis{(meth)acryloyl-poly(oxyethylene)} ether; 1,3-polypropylene glycol di(meth)acrylate, 1,4-polybutylene glycol di(meth)acrylate, 1,4-polybutylene glycol-bis{3-(meth)acryloyloxy-2-hydroxypropyl} ether and so on.

Further, examples of the compounds (II) include bis{2-(meth)acryloylthio-ethyl}sulfide, bis{5-(meth)acryloylthio-3-thiapentyl}sulfide; cyclohexanediol di(meth)acrylate, bis{(meth)acryloyloxy-methyl}cyclohexane, bis{7-(meth)acryloyloxy-2,5-dioxaheptyl}cyclohexane, bis{(meth)acryloyloxy-poly(ethyleneoxy)-methyl}cyclohexane; tricyclodecane dimethanol di(meth)acrylate; 2-propenoic acid{2-(1,1,-dimethyl-2-{(1-oxo-2-propenyl)oxy}ethyl)-5-ethyl-1,3-dioxane-5-yl}methyl ester (KAYARAD R-604, manufactured by Nippon Kayaku Co., Ltd.); N,N',N''-tris{2-(meth)acryloyloxy-ethyl}isocyanurate; xylylenediol di(meth)acrylate, bis{7-(meth)acryloyloxy-2,5-dioxaheptyl}benzene, bis{(meth)acryloyloxy-poly(ethyleneoxy)-methyl}benzene; bisphenol A di(meth)acrylate, bis{(meth)acryloyl-oxyethyl}bisphenol A, bis{(meth)acryloyl-oxypropyl}bisphenol A, bis{(meth)acryloyl-poly(oxyethylene)}bisphenol A, bis{(meth)acryloyl-poly(oxy-1,2-propylene)lbisphenol A, bis{3-(meth)acryloyloxy-2-hydroxy-propyl}bisphenol A, bis{3-(meth)acryloyloxy-2-hydroxy-propyl-oxyethyl}bisphenol A, bis{3-(meth)acryloyloxy-2-hydroxy-propyl-oxypropyl}bisphenol A, bis{3-(meth)acryloyloxy-2-hydroxy-propyl-poly(oxyethylene)}bisphenol A, bis{3-(meth)acryloyloxy-2-hydroxy-propyl-poly(oxy-1,2-propylene)}bisphenol A; bis{(meth)acryloyl-oxyethyl-oxypropyl}bisphenol A, bis{(meth)acryloyl poly(oxyethylene)-poly(oxy-1,2-propylene)}bisphenol A; naphthalenediol di(meth)acrylate, bis{3-(meth)acryloyloxy-2-hydroxy-propyl-oxy}naphthalene; 9,9-fluorenediol di(meth)acrylate, 9,9-bis{4-(2-(meth)acryloyloxy-ethyl-oxy)}fluorene, 9,9-bis{3-phenyl-4-(meth)acryloyloxy-poly(ethyleneoxy)}fluorene; and so on.

Further, examples of the compounds (II) include phenol novolak epoxy (meth)acrylate (trade names "NK Oligo EA-6320, EA-7120 and EA-7420", manufactured by Shin-Nakamura Chemical Co., Ltd.); glycerol-1,3-di(meth)acrylate, -acryloyloxy-2-hydroxy-3-methacryloyloxy-propane, 2,6,10-trihydroxy-4,8-dioxaundecane-1,11-di(meth)acrylate, 1,3-bis{3-(meth)acryloyloxy-2-hydroxy-propyl-oxy}-2-hydroxypropane, 1,2,3-tris{3-(meth)acryloyloxy-2-hydroxy-propyl-oxy}propane, 1,2,3-tris{2-(meth)acryloyloxy-ethyl-oxy}propane, 1,2,3-tris{2-(meth)acryloyloxy-propyl-oxy}propane, 1,2,3-tris{(meth)acryloyloxy-poly(1,2-ethyleneoxy)}propane, 1,2,3-tris{(meth)acryloyloxy-poly(1,2-propyleneoxy)}propane, 1,2,3-tris{(meth)acryloyloxy-poly(1,3-propyleneoxy)}propane; trimethylolpropane tri(meth)acrylate, trimethylolpropane-tris{(meth)acryloyloxy-ethyl-oxy} ether, trimethylolpropane-tris{2-(meth)acryloyloxy-propyl-oxy} ether, trimethylolpropane-tris{(meth)acryloyloxy-poly(ethyleneoxy)} ether, trimethylolpropane-tris{(meth)acryloyloxy-poly(1,2-propyleneoxy)} ether, pentaerythritol tri(meth)acrylate, pentaerythritol tetra(meth)acrylate, pentaerythritol-tetrakis{(meth)acryloyloxy-ethyl-oxy} ether, pentaerythritol-tetrakis{2-(meth)acryloyloxy-propyl-oxy} ether, pentaerythritol-tetrakis{(meth)acryloyloxy-poly(ethyleneoxy)} ether, pentaerythritol-tetrakis{(meth)acryloyloxy-poly(1,2-propyleneoxy)} ether; ditrimethylolpropane tetra(meth)acrylate, ditrimethylolpropane-tetrakis{(meth)acryloyloxy-ethyl-oxy} ether, ditrimethylolpropane-tetrakis{2-(meth)acryloyloxy-propyl-oxy} ether, ditrimethylolpropane-tetrakis{(meth)acryloyloxy-poly(ethyleneoxy)} ether, ditrimethylolpropane-tetrakis{(meth)acryloyloxy-poly(1,2-propyleneoxy)} ether, dipentaerythritol penta(meth)acrylate,

dipentaerythritol hexa(meth)acrylate, dipentaerythritol-hexa{(meth)acryloyloxy-ethyl-oxy} ether, dipentaerythritol-hexa{2-(meth)acryloyloxy-propyl-oxy} ether, dipentaerythritol-hexa{(meth)acryloyloxy-poly(ethyleneoxy)} ether, dipentaerythritol-hexa{(meth)acryloyloxy-poly(1,2-propyleneoxy)} ether; and so on.

In addition, examples of the compounds (II) include a urethane reaction product of hexamethylene diisocyanate with 2-hydroxyethyl(meth)acrylate, 2-hydroxypropyl(meth)acrylate, 3-hydroxypropyl(meth)acrylate, or 4-hydroxybutyl(meth)acrylate; a urethane reaction product of isophorone diisocyanate with 2-hydroxyethyl(meth)acrylate, 2-hydroxypropyl(meth)acrylate, 3-hydroxypropyl(meth)acrylate, or 4-hydroxybutyl(meth)acrylate; a urethane reaction product of bis(isocyanatomethyl)norbornane with 2-hydroxyethyl(meth)acrylate, 2-hydroxypropyl(meth)acrylate, 3-hydroxypropyl(meth)acrylate, or 4-hydroxybutyl(meth)acrylate; a urethane reaction product of norbis(4-isocyanatocyclohexyl)methane with 2-hydroxyethyl(meth)acrylate, 2-hydroxypropyl(meth)acrylate, 3-hydroxypropyl(meth)acrylate, or 4-hydroxybutyl(meth)acrylate; a urethane reaction product of 1,3-bis(isocyanatomethyl)cyclohexane with 2-hydroxyethyl(meth)acrylate, 2-hydroxypropyl(meth)acrylate, 3-hydroxypropyl(meth)acrylate, or 4-hydroxybutyl(meth)acrylate; a urethane reaction product of m-xylylene diisocyanate with 2-hydroxyethyl(meth)acrylate, 2-hydroxypropyl(meth)acrylate, 3-hydroxypropyl(meth)acrylate, or 4-hydroxybutyl(meth)acrylate; and so on.

The compounds (II) may be used singly, or two or more may be used in combination. The compounds (II) may be produced by a known method or by a method in accordance with a known method, or may be purchased from the market.

The compound (I) and the compound (II) are preferably blended in such a ratio that the amount of the compound (I) is 0.1 to 50 wt% and the amount of the compound (II) is 99.9 to 50 wt% relative to the total weight of the compound (I) and the compound (II). More preferably, the amount of the compound (I) is 0.3 to 30 wt% and the amount of the compound (II) is 99.7 to 70 wt%. Still more preferably, the amount of the compound (I) is 0.5 to 20 wt% and the amount of the compound (II) is 99.5 to 80 wt%.

In addition to the compound (I') and the compound (II), the polymerizable composition (B) contains the surfactant (III) that has a hydrophobic moiety including an organic residue and a hydrophilic moiety having an anionic hydrophilic group, a cationic hydrophilic group, or two or more hydroxyl groups. Polymerizing the composition containing such a surfactant makes it easy for the hydrophilic groups derived from the compound (I') to be easily concentrated at the surface of a cured product, and the surface of a monolayer film is readily enriched with the hydrophilic groups. The polymerizable composition (A) may contain the surfactant (III) as well.

The compound (III) present in the polymerizable composition allows the hydrophilic groups derived from the compound (I') to be enriched (concentrated) at the surface of a monolayer film in the absence of solvents. This characteristic allows a highly hydrophilic monolayer film to be produced under a wider range of conditions. In addition, the transparency of the monolayer film is relatively increased probably due to the compatibilizing effect that prevents the separation of the compound (I') or (I) and the compound (II). A conventional method (for example, WO 2007/064003) causes hydrophilic groups to be enriched (concentrated) at the surface in synchronism with the evaporation of a polar solvent. Such a method has been incapable of realizing the enrichment for some of the general hydrophilic polymerizable compounds (for example, hydrophilic polymerizable compounds except those compounds described in the claims of WO 2007/064003). In contrast, the use of the compound (III) makes it possible to produce hydrophilic cured products in which hydrophilic groups are enriched (concentrated) at the surface even when the compositions include those barely enriched hydrophilic groups. When, further, the compositions include those hydrophilic compounds which are described in the above publication, the obtainable cured products, for example, monolayer films tend to have a higher concentration (a higher enrichment) of the hydrophilic groups at the surface and thus tend to exhibit higher hydrophilicity. The use of low-polarity solvents having a solubility parameter (SP value) of less than 9.1 $(cal/cm^3)^{1/2}$ conventionally encounters a difficulty in obtaining the enrichment. Even in such cases, the inventive technique makes it relatively easy to obtain hydrophilic cured products in which hydrophilic groups are enriched (concentrated) at the surface. Thus, as compared to the conventional techniques, the invention increases the easiness and the options of materials in the manufacturing of cured monolayer films having high hydrophilicity and high transparency as well as highly hydrophilic stacks including such monolayer films.

Of the surfactants (III), those compounds represented by the general formula (300) below are preferable.

[Chem. 57]

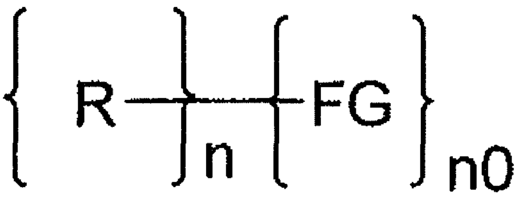

(300)

In the formula (300) , R represents a $C_{4-100}$ organic residue; FG represents a hydrophilic group including at least one group selected from anionic hydrophilic groups, cationic hydrophilic groups and hydroxyl groups; n indicates the number of Rs bonded to FG and is 1 or 2; n0 indicates the number of FGs bonded to R and is an integer of 1 to 5; and when FG is a group including one hydroxyl group, n0 is an integer of 2 to 5.

Examples of the groups FG including an anionic hydrophilic group include those hydrophilic groups represented by the general formulas (301) to (308) below.

[Chem. 58]

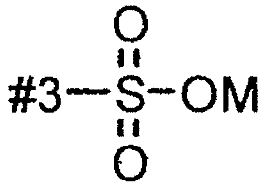

(301)

In the formula (301), M is a hydrogen atom, an alkali metal, an alkaline earth metal having 1/2 atomic valence or an ammonium ion; and #3 indicates a hand bonded to a carbon atom present in R in the formula (300).

Of the surfactants in which FG is represented by the general formula (301), sulfosuccinic acid ester surfactants are relatively preferable. Examples of the sulfosuccinic acid ester surfactants include mono(methyl)sulfosuccinic acid ester disodium, mono(ethyl)sulfosuccinic acid ester disodium, mono(propyl)sulfosuccinic acid ester disodium, mono(butyl)sulfosuccinic acid ester, mono(butyl)sulfosuccinic acid ester disodium, mono(butyl)sulfosuccinic acid ester dipotassium, mono(butyl)sulfosuccinic acid ester diammonium, mono(butyl)sulfosuccinic acid ester magnesium, mono(butyl)sulfosuccinic acid ester calcium, mono(pentyl)sulfosuccinic acid ester disodium, mono(hexyl)sulfosuccinic acid ester disodium, mono(heptyl)sulfosuccinic acid ester disodium, mono(octyl)sulfosuccinic acid ester, mono(octyl)sulfosuccinic acid ester disodium, mono(octyl)sulfosuccinic acid ester dipotassium, mono(octyl)sulfosuccinic acid ester diammonium, mono(octyl)sulfosuccinic acid ester magnesium, mono(octyl)sulfosuccinic acid ester calcium, (nonyl)sulfosuccinic acid ester, mono(nonyl)sulfosuccinic acid ester disodium, mono(nonyl)sulfosuccinic acid ester dipotassium, mono(nonyl)sulfosuccinic acid ester diammonium, mono(nonyl)sulfosuccinic acid ester magnesium, mono(nonyl)sulfosuccinic acid ester calcium, mono(decyl)sulfosuccinic acid ester disodium, mono(undecyl)sulfosuccinic acid ester disodium, mono(dodecyl)sulfosuccinic acid ester, mono(dodecyl)sulfosuccinic acid ester disodium, mono(dodecyl)sulfosuccinic acid ester dipotassium, mono(dodecyl)sulfosuccinic acid ester diammonium, mono(dodecyl)sulfosuccinic acid ester magnesium, mono(dodecyl)sulfosuccinic acid ester calcium, mono(tridecyl)sulfosuccinic acid ester, mono(tridecyl)sulfosuccinic acid ester disodium, mono(tridecyl)sulfosuccinic acid ester dipotassium, mono(tridecyl)sulfosuccinic acid ester diammonium, mono(tridecyl)sulfosuccinic acid ester magnesium, mono(tridecyl)sulfosuccinic acid ester calcium, mono(tetradecyl)sulfosuccinic acid ester, mono(tetradecyl)sulfosuccinic acid ester disodium, mono(tetradecyl)sulfosuccinic acid ester dipotassium, mono(tetradecyl)sulfosuccinic acid ester diammonium, mono(tetradecyl)sulfosuccinic acid ester magnesium, mono(tetradecyl)sulfosuccinic acid ester calcium, mono(pentadecyl)sulfosuccinic acid ester disodium, mono(hexadecyl)sulfosuccinic acid ester, mono(hexadecyl)sulfosuccinic acid ester disodium, mono(hexadecyl)sulfosuccinic acid ester dipotassium, mono(hexadecyl)sulfosuccinic acid ester diammonium, mono(hexadecyl)sulfosuccinic acid ester magnesium, mono(hexadecyl)sulfosuccinic acid ester calcium, mono(heptadecyl)sulfosuccinic acid ester disodium, mono(octadecyl)sulfosuccinic acid ester, mono(octadecyl)sulfosuccinic acid ester disodium, mono(octadecyl)sulfosuccinic acid ester dipotassium, mono(octadecyl)sulfosuccinic acid ester diammonium, mono(octadecyl)sulfosuccinic acid ester magnesium, mono(octadecyl)sulfosuccinic acid ester calcium, mono(nonadecyl)sulfosuccinic acid ester disodium, mono(icosanyl)sulfosuccinic acid ester disodium, mono(benzyl)sulfosuccinic acid ester disodium, mono(butoxyethyl)sulfosuccinic acid ester disodium, mono(hexyloxyethyl)sulfosuccinic acid ester disodium, mono(octyloxyethyl)sulfosuccinic acid ester disodium, mono(nonyloxyethyl)sulfosuccinic acid ester disodium, mono(decyloxyethyl)sulfosuccinic acid ester disodium, mono(undecyloxyethyl)sulfosuccinic acid ester disodium, mono(dodecyloxyethyl)sulfosuccinic acid ester disodium, mono(tridecyloxyethyl)sulfosuccinic acid ester disodium, mono(tetradecyloxyethyl)sulfosuccinic acid ester disodium, mono(pentadecyloxyethyl)sulfosuccinic acid ester disodium, mono(hexadecyloxyethyl)sulfosuccinic acid ester disodium, mono(heptadecyloxyethyl)sulfosuccinic acid ester disodium, mono(octadecyloxyethyl)sulfosuccinic acid ester sodium, mono(octadecyloxyethyl)sulfosuccinic acid ester disodium, mono(octadecyloxyethyl)sulfosuccinic acid ester potassium, mono(octadecyloxyethyl)sulfosuccinic acid ester dipotassium, mono(octadecyloxyethyl)sulfosuccinic acid ester ammonium, mono(octadecyloxyethyl)sulfosuccinic acid ester diammonium, mono(octadecyloxyethyl)sulfosuccinic acid ester calcium, mono(nonadecyloxyethyl)sulfosuccinic acid ester disodium, mono(icosanyloxyethyl)sulfosuccinic acid ester disodium, di(methyl)sulfosuccinic acid ester sodium, di(ethyl)sulfosuccinic acid ester sodium, di(propyl)sulfosuccinic acid ester sodium, di(butyl)sulfosuccinic acid ester, di(butyl)sulfosuccinic acid ester sodium, di(butyl)sulfosuccinic acid ester potassium, di(butyl)sulfosuccinic acid ester ammonium, di(butyl)sulfosuccinic acid ester magnesium, di(butyl)sulfosuccinic acid ester calcium, di(pentyl)sulfosuccinic acid ester sodium, di(hexyl)sulfosuccinic acid ester sodium, di(heptyl)sulfosuccinic acid ester sodium, di(octyl)sulfosuccinic acid ester, di(octyl)sulfosuccinic acid ester sodium, di(octyl)sulfosuccinic acid ester potassium, di(octyl)sulfosuccinic acid ester ammonium, di(octyl)sulfosuccinic acid ester magnesium, di(octyl)sulfosuccinic acid ester calcium, (nonyl)sulfosuccinic acid ester, di(nonyl)sulfosuccinic acid ester sodium, di(nonyl)sulfosuccinic acid ester potassium, di(nonyl)sulfosuccinic acid ester ammonium, di(nonyl)sulfosuccinic acid ester magnesium, di(nonyl)sulfosuccinic acid ester calcium, di(decyl)sulfosuccinic acid ester sodium, di(undecyl)sulfosuccinic acid ester sodium, di(dodecyl)sulfosuccinic acid ester, di(dodecyl)sulfosuccinic acid ester sodium, di(dodecyl)sulfosuccinic acid ester potassium, di(dodecyl)sulfosuccinic acid ester ammonium, di(dodecyl)sulfosuccinic acid ester magnesium, di(dodecyl)sulfosuccinic acid ester calcium, di(tridecyl)sulfosuccinic acid ester, di(tridecyl)sulfosuccinic acid ester sodium, di(tridecyl)sulfosuccinic acid ester potassium, di(tridecyl)sulfosuccinic acid ester ammonium, di(tridecyl)sulfosuccinic acid ester magnesium, di(tridecyl)sulfosuccinic acid ester calcium, di(tetradecyl)sulfosuccinic acid ester, di(tetradecyl)sulfosuccinic acid ester sodium, di(tetradecyl)sulfosuccinic acid ester potassium, di(tetradecyl)sulfosuccinic acid ester ammonium, di(tetradecyl)sulfosuccinic acid ester magnesium, di(tetradecyl)sulfosuccinic acid ester calcium, di(pentadecyl)sulfosuccinic acid ester sodium, di(hexadecyl)sulfosuccinic acid ester, di(hexadecyl)sulfosuccinic acid ester sodium, di(hexadecyl)sulfosuccinic acid ester potassium, di(hexadecyl)sulfosuccinic acid ester ammonium, di(hexadecyl)sulfosuccinic acid ester magnesium, di(hexadecyl)sulfosuccinic acid ester calcium, di(heptadecyl)sulfosuccinic acid ester sodium, di(octadecyl)sulfosuccinic acid ester, di(octadecyl)sulfosuccinic acid ester sodium, di(octadecyl)sulfosuccinic acid ester potassium, di(octadecyl)sulfosuccinic acid ester ammonium, di(octadecyl)sulfosuccinic acid ester magnesium, di(octadecyl)sulfosuccinic acid ester calcium, di(nonadecyl)sulfosuccinic acid ester sodium, di(icosanyl)sulfosuccinic acid ester sodium, dibenzylsulfosuccinic acid ester sodium, di(butoxyethyl)sulfosuccinic acid ester sodium, di(hexyloxyethyl)sulfosuccinic acid ester sodium, di(octyloxyethyl)sulfosuccinic acid ester sodium, di(nonyloxyethyl)sulfosuccinic acid ester sodium, di(decyloxyethyl)sulfosuccinic acid ester sodium, di(undecyloxyethyl)sulfosuccinic acid ester sodium, di(dodecyloxyethyl)sulfosuccinic acid ester sodium, di(tridecyloxyethyl)sulfosuccinic acid ester sodium, di(tetradecyloxyethyl)sulfosuccinic acid ester sodium, di(pentadecyloxyethyl)sulfosuccinic acid ester sodium, di(hexadecyloxyethyl)sulfosuccinic acid ester sodium, di(octadecyloxyethyl)sulfosuccinic acid ester sodium, di(octadecyloxyethyl)sulfosuccinic acid ester potassium, di(octadecyloxyethyl)sulfosuccinic acid ester ammonium, di(octadecyloxyethyl)sulfosuccinic acid ester magnesium, di(octadecyloxyethyl)sulfosuccinic acid ester calcium, (nonadecyloxyethyl)sulfosuccinic acid ester sodium, (icosanyloxyethyl)sulfosuccinic acid ester sodium and so on.

[Chem. 59]

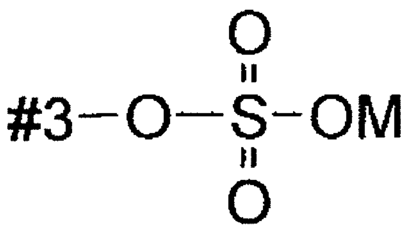

(302)

In the formula (302), M is a hydrogen atom, an alkali metal, an alkaline earth metal having 1/2 atomic valence or an ammonium ion; and #3 indicates a hand bonded to a carbon atom present in R in the formula (300).

Of the surfactants in which FG is represented by the general formula (302), alcohol sulfuric acid ester salt surfactants are relatively preferable. Examples of the alcohol sulfuric acid ester salt surfactants include butyl sulfuric acid ester sodium, pentyl sulfuric acid ester sodium, hexyl sulfuric acid ester sodium, heptyl sulfuric acid ester sodium, octyl sulfuric acid ester sodium, nonyl sulfuric acid ester sodium, decyl sulfuric acid ester sodium, undecyl sulfuric acid ester sodium, dodecyl sulfuric acid ester triethanolamine salt, dodecyl sulfuric acid ester ammonium, dodecyl sulfuric acid ester sodium, dodecyl sulfuric acid ester potassium, dodecyl sulfuric acid ester ammonium, dodecyl sulfuric acid ester magnesium, dodecyl sulfuric acid ester calcium, tridecyl sulfuric acid ester sodium, tetradecyl sulfuric acid ester sodium, pentadecyl sulfuric acid ester sodium, hexadecyl sulfuric acid ester sodium, heptadecyl sulfuric acid ester sodium, octadecyl sulfuric acid ester sodium, nonadecyl sulfuric acid ester sodium, icosanyl sulfuric acid ester sodium, 3-lauric acid-2-hydroxypropyl sulfuric acid ester sodium, 3-lauric acid-2-hydroxypropyl sulfuric acid ester potassium, 3-lauric acid-2-hydroxy-propyl sulfuric acid ester ammonium, 3-lauric acid-2-hydroxy-propyl sulfuric acid ester magnesium, 3-lauric acid-2-hydroxy-propyl sulfuric acid ester calcium, 3-myristic acid-2-hydroxy-propyl sulfuric acid ester sodium, 3-myristic acid-2-hydroxy-propyl sulfuric acid ester potassium, 3-myristic acid-2-hydroxy-propyl sulfuric acid ester ammonium, 3-myristic acid-2-hydroxy-propyl sulfuric acid ester magnesium, 3-myristic acid-2-hydroxy-propyl sulfuric acid ester calcium, 3-palmitic acid-2-hydroxy-propyl sulfuric acid ester sodium, 3-palmitic acid-2-hydroxy-propyl sulfuric acid ester potassium, 3-palmitic acid-2-hydroxy-propyl sulfuric acid ester ammonium, 3-palmitic acid-2-hydroxy-propyl sulfuric acid ester magnesium, 3-palmitic acid-2-hydroxypropyl sulfuric acid ester calcium, 3-stearic acid-2-hydroxypropyl sulfuric acid ester sodium, 3-stearic acid-2-hydroxypropyl sulfuric acid ester potassium, 3-stearic acid-2-hydroxy-propyl sulfuric acid ester ammonium, 3-stearic acid-2-hydroxy-propyl sulfuric acid ester magnesium, 3-stearic acid-2-hydroxy-propyl sulfuric acid ester calcium, 3-oleic acid-2-hydroxy-propyl sulfuric acid ester sodium, 3-oleic acid-2-hydroxy-propyl sulfuric acid ester potassium, 3-oleic acid-2-hydroxy-propyl sulfuric acid ester ammonium, 3-oleic acid-2-hydroxy-propyl sulfuric acid ester magnesium, 3-oleic acid-2-hydroxy-propyl sulfuric acid ester calcium, 3-behenic acid-2-hydroxy-propyl sulfuric acid ester sodium, 3-behenic acid-2-hydroxy-propyl sulfuric acid ester potassium, 3-behenic acid-2-hydroxy-propyl sulfuric acid ester ammonium, 3-behenic acid-2-hydroxy-propyl sulfuric acid ester magnesium, 3-behenic acid-2-hydroxypropyl sulfuric acid ester calcium, ethylene glycol mono(octylphenyl) ether sulfuric acid ester sodium, ethylene glycol mono(octylphenyl) ether sulfuric acid ester potassium, ethylene glycol mono(octylphenyl) ether sulfuric acid ester ammonium, ethylene glycol mono(octylphenyl) ether sulfuric acid ester magnesium, ethylene glycol mono(octylphenyl) ether sulfuric acid ester calcium, diethylene glycol mono(octylphenyl) ether sulfuric acid ester sodium, diethylene glycol mono(octylphenyl) ether sulfuric acid ester potassium, diethylene glycol mono(octylphenyl) ether sulfuric acid ester ammonium, diethylene glycol mono(octylphenyl) ether sulfuric acid ester magnesium, diethylene glycol mono(octylphenyl) ether sulfuric acid ester calcium, triethylene glycol mono(octylphenyl) ether sulfuric acid ester sodium, triethylene glycol mono(octylphenyl) ether sulfuric acid ester potassium, triethylene glycol mono(octylphenyl) ether sulfuric acid ester ammonium, triethylene glycol mono(octylphenyl) ether sulfuric acid ester magnesium, triethylene glycol mono(octylphenyl) ether sulfuric acid ester calcium, tetraethylene glycol mono(octylphenyl) ether sulfuric acid ester sodium, tetraethylene glycol mono(octylphenyl) ether sulfuric acid ester potassium, tetraethylene glycol mono(octylphenyl) ether sulfuric acid ester ammonium, tetraethylene glycol mono(octylphenyl) ether sulfuric acid ester magnesium, tetraethylene glycol mono(octylphenyl) ether sulfuric acid ester calcium, polyethylene glycol mono(octylphenyl) ether sulfuric acid ester sodium, polyethylene glycol mono(octylphenyl) ether sulfuric acid ester potassium, polyethylene glycol mono(octylphenyl) ether sulfuric acid ester ammonium, polyethylene glycol mono(octylphenyl) ether sulfuric acid ester magnesium, polyethylene glycol mono(octylphenyl) ether sulfuric acid ester calcium, ethylene glycol mono(nonylphenyl) ether sulfuric acid ester sodium, ethylene glycol mono(nonylphenyl) ether sulfuric acid ester potassium, ethylene glycol mono(nonylphenyl) ether sulfuric acid ester ammonium, ethylene glycol mono(nonylphenyl) ether sulfuric acid ester magnesium, ethylene glycol mono(nonylphenyl) ether sulfuric acid ester calcium, diethylene glycol mono(nonylphenyl) ether sulfuric acid ester sodium, diethylene glycol mono(nonylphenyl) ether sulfuric acid ester potassium, diethylene glycol mono(nonylphenyl) ether sulfuric acid ester ammonium, diethylene glycol mono(nonylphenyl) ether sulfuric acid ester magnesium, diethylene glycol mono(nonylphenyl) ether sulfuric acid ester calcium, triethylene glycol mono(nonylphenyl) ether sulfuric acid ester sodium, triethylene glycol mono(nonylphenyl) ether sulfuric acid ester potassium, triethylene glycol mono(nonylphenyl) ether sulfuric acid ester ammonium, triethylene glycol mono(nonylphenyl) ether sulfuric acid ester magnesium, triethylene glycol mono(nonylphenyl) ether sulfuric acid ester calcium, tetraethylene glycol mono(nonylphenyl) ether sulfuric acid ester sodium, tetraethylene glycol mono(nonylphenyl) ether sulfuric acid ester potassium, tetraethylene glycol mono(nonylphenyl) ether sulfuric acid ester ammonium, tetraethylene glycol mono(nonylphenyl) ether sulfuric acid ester magnesium, tetraethylene glycol mono(nonylphenyl) ether sulfuric acid ester calcium, polyethylene glycol mono(nonylphenyl) ether sulfuric acid ester sodium, polyethylene glycol mono(nonylphenyl) ether sulfuric acid ester potassium, polyethylene glycol mono(nonylphenyl) ether sulfuric acid ester ammonium, polyethylene glycol mono(nonylphenyl) ether sulfuric acid ester magnesium, polyethylene glycol mono(nonylphenyl) ether sulfuric acid ester calcium, butyloxyethyl sulfuric acid ester sodium, isobutyloxyethyl sulfuric acid ester sodium, t-butyloxyethyl sulfuric acid

ester sodium, pentyloxyethyl sulfuric acid ester sodium, hexyloxyethyl sulfuric acid ester sodium, heptyloxyethyl sulfuric acid ester sodium, octyloxyethyl sulfuric acid ester sodium, nonyloxyethyl sulfuric acid ester sodium, decyloxyethyl sulfuric acid ester sodium, undecyloxyethyl sulfuric acid ester sodium, dodecyloxyethyl sulfuric acid ester (lauryloxyethyl sulfuric acid ester) triethanolamine, dodecyloxyethyl sulfuric acid ester (lauryloxyethyl sulfuric acid ester) sodium, dodecyloxyethyl sulfuric acid ester (lauryloxyethyl sulfuric acid ester) potassium, dodecyloxyethyl sulfuric acid ester (lauryloxyethyl sulfuric acid ester) ammonium, dodecyloxyethyl sulfuric acid ester (lauryloxyethyl sulfuric acid ester) magnesium, dodecyloxyethyl sulfuric acid ester (lauryloxyethyl sulfuric acid ester) calcium, tridecyloxyethyl sulfuric acid ester sodium, tetradecyloxyethyl sulfuric acid ester sodium, pentadecyloxyethyl sulfuric acid ester sodium, hexadecyloxyethyl sulfuric acid ester sodium, heptadecyloxyethyl sulfuric acid ester sodium, octadecyloxyethyl sulfuric acid ester sodium, nonadecyloxyethyl sulfuric acid ester sodium, icosanyloxyethyl sulfuric acid ester sodium, butyloxypropyl-2-sulfuric acid ester sodium, isobutyloxypropyl-2-sulfuric acid ester sodium, t-butyloxypropyl-2-sulfuric acid ester sodium, pentyloxypropyl-2-sulfuric acid ester sodium, hexyloxypropyl-2-sulfuric acid ester sodium, heptyloxypropyl-2-sulfuric acid ester sodium, octyloxypropyl-2-sulfuric acid ester sodium, nonyloxypropyl-2-sulfuric acid ester sodium, decyloxypropyl-2-sulfuric acid ester sodium, undecyloxypropyl-2-sulfuric acid ester sodium, dodecyloxypropyl-2-sulfuric acid ester (lauryloxypropyl-2-sulfuric acid ester), dodecyloxypropyl-2-sulfuric acid ester (lauryloxypropyl-2-sulfuric acid ester) sodium, dodecyloxypropyl-2-sulfuric acid ester (lauryloxypropyl-2-sulfuric acid ester) potassium, dodecyloxypropyl-2-sulfuric acid ester (lauryloxypropyl-2-sulfuric acid ester) ammonium, dodecyloxypropyl-2-sulfuric acid ester (lauryloxypropyl-2-sulfuric acid ester) magnesium, dodecyloxypropyl-2-sulfuric acid ester (lauryloxypropyl-2-sulfuric acid ester) calcium, tridecyloxypropyl-2-sulfuric acid ester sodium, tetradecyloxypropyl-2-sulfuric acid ester sodium, pentadecyloxypropyl-2-sulfuric acid ester sodium, hexadecyloxypropyl-2-sulfuric acid ester sodium, heptadecyloxypropyl-2-sulfuric acid ester sodium, octadecyloxypropyl-2-sulfuric acid ester sodium, nonadecyloxypropyl-2-sulfuric acid ester sodium, icosanyloxypropyl-2-sulfuric acid ester sodium, butyloxy-3-oxapentyl sulfuric acid ester sodium, isobutyloxy-3-oxapentyl sulfuric acid ester sodium, t-butyloxy-3-oxapentyl sulfuric acid ester sodium, pentyloxy-3-oxapentyl sulfuric acid ester sodium, hexyloxy-3-oxapentyl sulfuric acid ester sodium, heptyloxy-3-oxapentyl sulfuric acid ester sodium, octyloxy-3-oxapentyl sulfuric acid ester sodium, nonyloxy-3-oxapentyl sulfuric acid ester sodium, decyloxy-3-oxapentyl sulfuric acid ester sodium, undecyloxy-3-oxapentyl sulfuric acid ester sodium, dodecyloxy-3-oxapentyl sulfuric acid ester (lauryloxy-3-oxapentyl sulfuric acid ester) triethanolamine, dodecyloxy-3-oxapentyl sulfuric acid ester (lauryloxy-3-oxapentyl sulfuric acid ester) sodium, dodecyloxy-3-oxapentyl sulfuric acid ester (lauryloxy-3-oxapentyl sulfuric acid ester) potassium, dodecyloxy-3-oxapentyl sulfuric acid ester (lauryloxy-3-oxapentyl sulfuric acid ester) ammonium, dodecyloxy-3-oxapentyl sulfuric acid ester (lauryloxy-3-oxapentyl sulfuric acid ester) magnesium, dodecyloxy-3-oxapentyl sulfuric acid ester (lauryloxy-3-oxapentyl sulfuric acid ester) calcium, tridecyloxy-3-oxapentyl sulfuric acid ester sodium, tetradecyloxy-3-oxapentyl sulfuric acid ester sodium, pentadecyloxy-3-oxapentyl sulfuric acid ester sodium, hexadecyloxy-3-oxapentyl sulfuric acid ester sodium, heptadecyloxy-3-oxapentyl sulfuric acid ester sodium, octadecyloxy-3-oxapentyl sulfuric acid ester sodium, nonadecyloxy-3-oxapentyl sulfuric acid ester sodium, icosanyloxy-3-oxapentyl sulfuric acid ester sodium, butyloxy-3,6-dioxaoctyl sulfuric acid ester sodium, isobutyloxy-3,6-dioxaoctyl sulfuric acid ester sodium, t-butyloxy-3,6-dioxaoctyl sulfuric acid ester sodium, pentyloxy-3,6-dioxaoctyl sulfuric acid ester sodium, hexyloxy-3,6-dioxaoctyl sulfuric acid ester sodium, heptyloxy-3,6-dioxaoctyl sulfuric acid ester sodium, octyloxy-3,6-dioxaoctyl sulfuric acid ester sodium, nonyloxy-3,6-dioxaoctyl sulfuric acid ester sodium, decyloxy-3,6-dioxaoctyl sulfuric acid ester sodium, undecyloxy-3,6-dioxaoctyl sulfuric acid ester sodium, dodecyloxy-3,6-dioxaoctyl sulfuric acid ester (lauryloxy-3,6-dioxaoctyl sulfuric acid ester), dodecyloxy-3,6-dioxaoctyl sulfuric acid ester (lauryloxy-3,6-dioxaoctyl sulfuric acid ester) sodium, dodecyloxy-3,6-dioxaoctyl sulfuric acid ester (lauryloxy-3,6-dioxaoctyl sulfuric acid ester) potassium, dodecyloxy-3,6-dioxaoctyl sulfuric acid ester (lauryloxy-3,6-dioxaoctyl sulfuric acid ester) ammonium, dodecyloxy-3,6-dioxaoctyl sulfuric acid ester (lauryloxy-3,6-dioxaoctyl sulfuric acid ester) magnesium, tridecyloxy-3,6-dioxaoctyl sulfuric acid ester sodium, tetradecyloxy-3,6-dioxaoctyl sulfuric acid ester sodium, pentadecyloxy-3,6-dioxaoctyl sulfuric acid ester sodium, hexadecyloxy-3,6-dioxaoctyl sulfuric acid ester sodium, heptadecyloxy-3,6-dioxaoctyl sulfuric acid ester sodium, octadecyloxy-3,6-dioxaoctyl sulfuric acid ester sodium, nonadecyloxy-3,6-dioxaoctyl sulfuric acid ester sodium, icosanyloxy-3,6-dioxaoctyl sulfuric acid ester sodium and so on.

[Chem. 60]

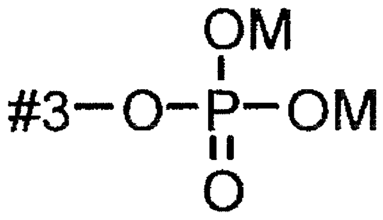

(3 0 3)

In the formula (303), M at each occurrence is a hydrogen atom, an alkali metal, an alkaline earth metal having 1/2 atomic valence or an ammonium ion; and #3 indicates a hand bonded to a carbon atom present in R in the formula (300).

Of the surfactants in which FG is represented by the general formula (303), alkoxyalkylphosphoric acid ester surfactants and aryloxyalkylphosphoric acid ester surfactants are relatively preferable. Examples of the alkoxyalkylphosphoric acid surfactants include butyloxyethyl phosphoric acid monoester, pentyloxyethyl phosphoric acid monoester, hexyloxyethyl phosphoric acid monoester, heptyloxyethyl phosphoric acid monoester, octyloxyethyl phosphoric acid monoester, nonyloxyethyl phosphoric acid monoester, decyloxyethyl phosphoric acid monoester, undecyloxyethyl phosphoric acid monoester, dodecyloxyethyl phosphoric acid monoester(lauryloxyethyl phosphoric acid monoester), tridecyloxyethyl phosphoric acid monoester, tetradecyloxyethyl phosphoric acid monoester, pentadecyloxyethyl phosphoric acid monoester, hexadecyloxyethyl phosphoric acid monoester, heptadecyloxyethyl phosphoric acid monoester, octadecyloxyethyl phosphoric acid monoester, nonadecyloxyethyl phosphoric acid monoester, icosanyloxyethyl phosphoric acid monoester, butyloxy-3-oxapentyl phosphoric acid monoester, pentyloxy-3-oxapentyl phosphoric acid monoester, hexyloxy-3-oxapentyl phosphoric acid monoester, heptyloxy-3-oxapentyl phosphoric acid monoester, octyloxy-3-oxapentyl phosphoric acid monoester, nonyloxy-3-oxapentyl phosphoric acid monoester, decyloxy-3-oxapentyl phosphoric acid monoester, undecyloxy-3-oxapentyl phosphoric acid monoester, dodecyloxy-3-oxapentyl phosphoric acid monoester(lauryloxy-3-oxapentyl phosphoric acid monoester), tridecyloxy-3-oxapentyl phosphoric acid monoester, tetradecyloxy-3-oxapentyl phosphoric acid monoester, pentadecyloxy-3-oxapentyl phosphoric acid monoester, hexadecyloxy-3-oxapentyl phosphoric acid monoester, heptadecyloxy-3-oxapentyl phosphoric acid monoester, octadecyloxy-3-oxapentyl phosphoric acid monoester, nonadecyloxy-3-oxapentyl phosphoric acid monoester, icosanyloxy-3-oxapentyl phosphoric acid monoester, butyloxy-3,6-dioxaoctyl phosphoric acid monoester, pentyloxy-3,6-dioxaoctyl phosphoric acid monoester, hexyloxy-3,6-dioxaoctyl phosphoric acid monoester, heptyloxy-3,6-dioxaoctyl phosphoric acid monoester, octyloxy-3,6-dioxaoctyl phosphoric acid monoester, nonyloxy-3,6-dioxaoctyl phosphoric acid monoester, decyloxy-3,6-dioxaoctyl phosphoric acid monoester, undecyloxy-3,6-dioxaoctyl phosphoric acid monoester, dodecyloxy-3,6-dioxaoctyl phosphoric acid monoester(lauryloxy-3,6-dioxaoctyl phosphoric acid monoester), tridecyloxy-3,6-dioxaoctyl phosphoric acid monoester, tetradecyloxy-3,6-dioxaoctyl phosphoric acid monoester, pentadecyloxy-3,6-dioxaoctyl phosphoric acid monoester, hexadecyloxy-3,6-dioxaoctyl phosphoric acid monoester, heptadecyloxy-3,6-dioxaoctyl phosphoric acid monoester, octadecyloxy-3,6-dioxaoctyl phosphoric acid monoester, nonadecyloxy-3,6-dioxaoctyl phosphoric acid monoester, icosanyloxy-3,6-dioxaoctyl phosphoric acid monoester, and salts thereof such as sodium salt, potassium salt, ammonium salt, triethanolamine salt, magnesium salt, and calcium salt, and so on.

Examples of the aryloxyalkylphosphoric acid surfactants include methylphenoxyethyl phosphoric acid monoester, ethylphenoxyethyl phosphoric acid monoester, propylphenoxyethyl phosphoric acid monoester, butylphenoxyethyl phosphoric acid monoester, pentylphenoxyethyl phosphoric acid monoester, hexylphenoxyethyl phosphoric acid monoester, heptylphenoxyethyl phosphoric acid monoester, octylphenoxyethyl phosphoric acid monoester, nonylphenoxyethyl phosphoric acid monoester, decylphenoxyethyl phosphoric acid monoester, undecylphenoxyethyl phosphoric acid monoester, dodecylphenoxyethyl phosphoric acid monoester(laurylphenoxyethyl phosphoric acid monoester), tridecylphenoxyethyl phosphoric acid monoester, tetradecylphenoxyethyl phosphoric acid monoester, pentadecylphenoxyethyl phosphoric acid monoester, hexadecylphenoxyethyl phosphoric acid monoester, heptadecylphenoxyethyl phosphoric acid monoester, octadecylphenoxyethyl phosphoric acid monoester, nonadecylphenoxyethyl phosphoric acid monoester, icosanylphenoxyethyl phosphoric acid monoester, butylphenoxy-3-oxapentyl phosphoric acid monoester, pentylphenoxy-3-oxapentyl phosphoric acid monoester, hexylphenoxy-3-oxapentyl phosphoric acid monoester, heptylphenoxy-3-oxapentyl phosphoric acid monoester, octylphenoxy-3-oxapentyl phosphoric acid monoester, nonylphenoxy-3-oxapentyl phosphoric acid monoester, decylphenoxy-3-oxapentyl phosphoric acid monoester, undecylphenoxy-3-oxapentyl phosphoric acid monoester, dodecylphenoxy-3-oxapentyl phosphoric acid monoester(laurylphenoxy-3-oxapentyl phosphoric acid monoester), tridecylphenoxy-3-oxapentyl phosphoric acid monoester, tetradecylphenoxy-3-oxapentyl phosphoric acid monoester, pentadecylphenoxy-3-oxapentyl phosphoric acid monoester, hexadecylphenoxy-3-oxapentyl phosphoric acid monoester, heptadecylphenoxy-3-oxapentyl phosphoric acid monoester, octadecylphenoxy-3-oxapentyl phosphoric acid monoester, nonadecylphenoxy-3-oxapentyl phosphoric acid monoester, icosanylphenoxy-3-oxapentyl phosphoric acid monoester, butylphenoxy-3,6-dioxaoctyl phosphoric acid monoester, pentylphenoxy-3,6-dioxaoctyl phosphoric acid monoester, hexylphenoxy-3,6-dioxaoctyl phosphoric acid monoester, heptylphenoxy-3,6-dioxaoctyl phosphoric acid monoester, octylphenoxy-3,6-dioxaoctyl phosphoric acid monoester, nonylphenoxy-3,6-dioxaoctyl phosphoric acid monoester, decylphenoxy-3,6-dioxaoctyl phosphoric acid monoester, undecylphenoxy-3,6-dioxaoctyl phosphoric acid monoester, dodecylphenoxy-3,6-dioxaoctyl phosphoric acid monoester(laurylphenoxy-3,6-dioxaoctyl phosphoric acid monoester), tridecylphenoxy-3,6-dioxaoctyl phosphoric acid monoester, tetradecylphenoxy-3,6-dioxaoctyl phosphoric acid monoester, pentadecylphenoxy-3,6-dioxaoctyl phosphoric acid monoester, hexadecylphenoxy-3,6-dioxaoctyl phosphoric acid monoester, heptadecylphenoxy-3,6-dioxaoctyl phosphoric acid monoester, octadecylphenoxy-3,6-dioxaoctyl phosphoric acid monoester, nonadecylphenoxy-3,6-dioxaoctyl phosphoric acid monoester, icosanylphenoxy-3,6-dioxaoctyl phosphoric acid monoester, butylphenoxy-3,6,9-trioxaundecyl phosphoric acid monoester, pentylphenoxy-3,6,9-trioxaundecyl phosphoric acid monoester, hexylphenoxy-3,6,9-trioxaundecyl phosphoric acid monoester, heptylphenoxy-3,6,9-trioxaundecyl phosphoric acid monoester, octylphenoxy-3,6,9-trioxaundecyl phosphoric acid monoester, nonylphenoxy-3,6,9-trioxaundecyl phosphoric acid monoester, decylphenoxy-3,6,9-trioxaundecyl phosphoric acid monoester, undecylphenoxy-3,6,9-trioxaundecyl phosphoric acid monoester, dodecylphenoxy-3,6,9-trioxaundecyl phosphoric acid monoester(laurylphenoxy-3,6,9-trioxaundecyl phosphoric acid monoester), dodecylphenoxy-3,6,9-trioxaundecyl phosphoric acid monoester(laurylphenoxy-3,6,9-trioxaundecyl phosphoric acid monoester), tridecylphenoxy-3,6,9-trioxaundecyl phosphoric acid monoester, tetradecylphenoxy-3,6,9-trioxaundecyl phosphoric acid monoester, pentadecylphenoxy-3,6,9-trioxaundecyl phosphoric acid monoester, hexadecylphenoxy-3,6,9-trioxaundecyl phosphoric acid monoester, heptadecylphenoxy-3,6,9-trioxaundecyl phosphoric acid monoester, octadecylphenoxy-3,6,9-trioxaundecyl phosphoric acid monoester, nonadecylphenoxy-3,6,9-trioxaundecyl phosphoric acid monoester, icosanylphenoxy-3,6,9-trioxaundecyl phosphoric acid monoester, methyl naphthalenoxyethyl phosphoric acid monoester, ethyl naphthalenoxyethyl phosphoric acid monoester, propyl naphthalenoxyethyl phosphoric acid monoester, butyl naphthalenoxyethyl phosphoric acid monoester, pentyl naphthalenoxyethyl phosphoric acid monoester, hexyl naphthalenoxyethyl phosphoric acid monoester, heptyl naphthalenoxyethyl phosphoric acid monoester, octyl naphthalenoxyethyl phosphoric acid monoester, nonyl naphthalenoxyethyl phosphoric acid monoester, decyl naphthalenoxyethyl phosphoric acid monoester, undecyl naphthalenoxyethyl phosphoric acid monoester, dodecyl naphthalenoxyethyl phosphoric acid monoester(lauryl naphthalenoxyethyl phosphoric acid monoester), tridecyl naphthalenoxyethyl phosphoric acid monoester, tetradecyl naphthalenoxyethyl phosphoric acid monoester, pentadecyl naphthalenoxyethyl phosphoric acid monoester, hexadecyl naphthalenoxyethyl phosphoric acid monoester, heptadecyl naphthalenoxyethyl phosphoric acid monoester, octadecyl naphthalenoxyethyl phosphoric acid monoester, nonadecyl naphthalenoxyethyl phosphoric acid monoester, icosanyl naphthalenoxyethyl phosphoric acid monoester, butyl naphthalenoxy 3-oxapentyl phosphoric acid monoester, pentyl naphthalenoxy 3-oxapentyl phosphoric acid monoester, hexyl naphthalenoxy 3-oxapentyl phosphoric acid monoester, heptyl naphthalenoxy 3-oxapentyl phosphoric acid monoester, octyl naphthalenoxy 3-oxapentyl phosphoric acid monoester, nonyl naphthalenoxy 3-oxapentyl phosphoric acid monoester, decyl naphthalenoxy 3-oxapentyl phosphoric acid monoester, undecyl naphthalenoxy 3-oxapentyl phosphoric acid monoester, dodecyl naphthalenoxy 3-oxapentyl phosphoric acid monoester(lauryl naphthalenoxy 3-oxapentyl phosphoric acid monoester), tridecyl naphthalenoxy 3-oxapentyl phosphoric acid monoester, tetradecyl naphthalenoxy 3-oxapentyl phosphoric acid monoester, pentadecyl naphthalenoxy 3-oxapentyl phosphoric acid monoester, hexadecyl naphthalenoxy 3-oxapentyl phosphoric acid monoester, heptadecyl naphthalenoxy 3-oxapentyl phosphoric acid monoester, octadecyl naphthalenoxy 3-oxapentyl phosphoric acid monoester, nonadecyl naphthalenoxy 3-oxapentyl phosphoric acid monoester, icosanyl naphthalenoxy 3-oxapentyl phosphoric acid monoester, butyl naphthalenoxy 3,6-dioxaoctyl phosphoric acid monoester, pentyl naphthalenoxy 3,6-dioxaoctyl phosphoric acid monoester, hexyl naphthalenoxy 3,6-dioxaoctyl phosphoric acid monoester, heptyl naphthalenoxy 3,6-dioxaoctyl phosphoric acid monoester, octyl naphthalenoxy 3,6-dioxaoctyl phosphoric acid monoester, nonyl naphthalenoxy 3,6-dioxaoctyl phosphoric acid monoester, decyl naphthalenoxy 3,6-dioxaoctyl phosphoric acid monoester, undecyl naphthalenoxy 3,6-dioxaoctyl phosphoric acid monoester, dodecyl naphthalenoxy 3,6-dioxaoctyl phosphoric acid monoester(lauryl naphthalenoxy 3,6-dioxaoctyl phosphoric acid monoester), tridecyl naphthalenoxy 3,6-dioxaoctyl phosphoric acid monoester, tetradecyl naphthalenoxy 3,6-dioxaoctyl phosphoric acid monoester, pentadecyl naphthalenoxy 3,6-dioxaoctyl phosphoric acid monoester, hexadecyl naphthalenoxy 3,6-dioxaoctyl phosphoric acid monoester, heptadecyl naphthalenoxy 3,6-dioxaoctyl phosphoric acid monoester, octadecyl naphthalenoxy 3,6-dioxaoctyl phosphoric acid monoester, nonadecyl naphthalenoxy 3,6-dioxaoctyl phosphoric acid monoester, icosanyl naphthalenoxy 3,6-dioxaoctyl phosphoric acid monoester, butyl naphthalenoxy 3,6,9-trioxaundecyl phosphoric acid monoester, pentyl naphthalenoxy 3,6,9-trioxaundecyl phosphoric acid monoester, hexyl naphthalenoxy 3,6,9-trioxaundecyl phosphoric acid monoester, heptyl naphthalenoxy 3,6,9-trioxaundecyl phosphoric acid monoester, octyl naphthalenoxy 3,6,9-trioxaundecyl phosphoric acid monoester, nonyl naphthalenoxy 3,6,9-trioxaundecyl phosphoric acid monoester, decyl naphthalenoxy 3,6,9-trioxaundecyl phosphoric acid monoester, undecyl naphthalenoxy 3,6,9-trioxaundecyl phosphoric acid monoester, dodecyl naphthalenoxy 3,6,9-trioxaundecyl phosphoric acid monoester(lauryl naphthalenoxy 3,6,9-trioxaundecyl phosphoric acid monoester), tridecyl naphthalenoxy 3,6,9-trioxaundecyl phosphoric

acid monoester, tetradecyl naphthalenoxy 3,6,9-trioxaundecyl phosphoric acid monoester, pentadecyl naphthalenoxy 3,6,9-trioxaundecyl phosphoric acid monoester, hexadecyl naphthalenoxy 3,6,9-trioxaundecyl phosphoric acid monoester, heptadecyl naphthalenoxy 3,6,9-trioxaundecyl phosphoric acid monoester, octadecyl naphthalenoxy 3,6,9-trioxaundecyl phosphoric acid monoester, nonadecyl naphthalenoxy 3,6,9-trioxaundecyl phosphoric acid monoester, icosanyl naphthalenoxy 3,6,9-trioxaundecyl phosphoric acid monoester, and salts thereof such as sodium salt, potassium salt, ammonium salt, triethanolamine salt, magnesium salt, and calcium salt, and so on.

[Chem. 61]

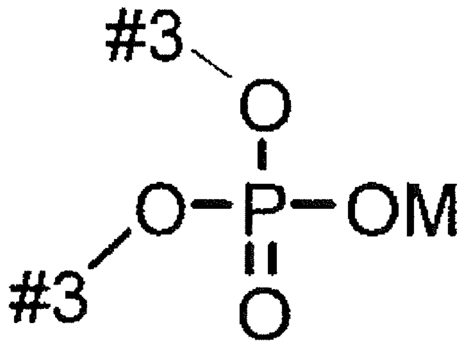

(3 0 4)

In the formula (304), M is a hydrogen atom, an alkali metal, an alkaline earth metal having 1/2 atomic valence or an ammonium ion; and #3 at each occurrence indicates a hand bonded to a carbon atom present in R in the formula (300).

Of the surfactants in which FG is represented by the general formula (304), alkyl phosphoric acid ester surfactants and aryloxyalkylphosphoric acid ester surfactants are relatively preferable.

Examples of the alkyl phosphoric acid ester surfactants include butyl phosphoric acid diester, pentyl phosphoric acid diester, hexyl phosphoric acid diester, heptyl phosphoric acid diester, octyl phosphoric acid diester, nonyl phosphoric acid diester, decyl phosphoric acid diester, undecyl phosphoric acid diester, dodecyl phosphoric acid diester(lauryl phosphoric acid diester), tridecyl phosphoric acid diester, tetradecyl phosphoric acid diester, pentadecyl phosphoric acid diester, hexadecyl phosphoric acid diester, heptadecyl phosphoric acid diester, octadecyl phosphoric acid diester, nonadecyl phosphoric acid diester, icosanyl phosphoric acid diester, and salts thereof such as sodium salt, potassium salt, ammonium salt, triethanolamine salt, magnesium salt, and calcium salt, and so on.

Examples of the aryloxyalkyl phosphoric acid ester surfactants include butylphenoxyethyl phosphoric acid diester, pentylphenoxyethyl phosphoric acid diester, hexylphenoxyethyl phosphoric acid diester, heptylphenoxyethyl phosphoric acid diester, octylphenoxyethyl phosphoric acid diester, nonylphenoxyethyl phosphoric acid diester, decylphenoxyethyl phosphoric acid diester, undecylphenoxyethyl phosphoric acid diester, dodecylphenoxyethyl phosphoric acid diester(laurylphenoxyethyl phosphoric acid diester), dodecylphenoxyethyl phosphoric acid diester(laurylphenoxyethyl phosphoric acid diester), tridecylphenoxyethyl phosphoric acid diester, tetradecylphenoxyethyl phosphoric acid diester, pentadecylphenoxyethyl phosphoric acid diester, hexadecylphenoxyethyl phosphoric acid diester, heptadecylphenoxyethyl phosphoric acid diester, octadecylphenoxyethyl phosphoric acid diester, nonadecylphenoxyethyl phosphoric acid diester, icosanylphenoxyethyl phosphoric acid diester, butylphenoxy-3-oxapentyl phosphoric acid diester, pentylphenoxy-3-oxapentyl phosphoric acid diester, hexylphenoxy-3-oxapentyl phosphoric acid diester, heptylphenoxy-3-oxapentyl phosphoric acid diester, octylphenoxy-3-oxapentyl phosphoric acid diester, nonylphenoxy-3-oxapentyl phosphoric acid diester, decylphenoxy-3-oxapentyl phosphoric acid diester, undecylphenoxy-3-oxapentyl phosphoric acid diester, dodecylphenoxy-3-oxapentyl phosphoric acid diester(laurylphenoxy-3-oxapentyl phosphoric acid diester), dodecylphenoxy-3-oxapentyl phosphoric acid diester(laurylphenoxy-3-oxapentyl phosphoric acid diester), tridecylphenoxy-3-oxapentyl phosphoric acid diester, tetradecylphenoxy-3-oxapentyl phosphoric acid diester, pentadecylphenoxy-3-oxapentyl phosphoric acid diester, hexadecylphenoxy-3-oxapentyl phosphoric acid diester, heptadecylphenoxy-3-oxapentyl phosphoric acid diester, octadecylphenoxy-3-oxapentyl phosphoric acid diester, nonadecylphenoxy-3-oxapentyl phosphoric acid diester, icosanylphenoxy-3-oxapentyl phosphoric acid diester, butylphenoxy-3,6-dioxaoctyl phosphoric acid diester, pentylphenoxy-3,6-dioxaoctyl phosphoric acid diester, hexylphenoxy-3,6-dioxaoctyl phosphoric acid diester, heptylphenoxy-3,6-dioxaoctyl phosphoric acid diester, octylphenoxy-3,6-dioxaoctyl phosphoric acid diester, nonylphenoxy-3,6-dioxaoctyl phosphoric acid diester, decylphenoxy-3,6-dioxaoctyl phosphoric acid diester, undecylphenoxy-3,6-dioxaoctyl phosphoric acid diester, dodecylphenoxy-3,6-dioxaoctyl phosphoric acid diester(laurylphenoxy-3,6-dioxaoctyl phosphoric acid diester), dodecylphenoxy-3,6-dioxaoctyl phosphoric acid diester(laurylphenoxy-3,6-dioxaoctyl phosphoric acid diester), tridecylphenoxy-3,6-dioxaoctyl phosphoric acid diester, tetradecylphenoxy-3,6-dioxaoctyl phosphoric acid diester, pentadecylphenoxy-3,6-dioxaoctyl phosphoric acid diester, hexadecylphenoxy-3,6-dioxaoctyl phosphoric acid diester, heptadecylphenoxy-3,6-dioxaoctyl phosphoric acid diester, octadecylphenoxy-3,6-dioxaoctyl phosphoric acid diester, nonadecylphenoxy-3,6-dioxaoctyl phosphoric acid diester, icosanylphenoxy-3,6-dioxaoctyl phosphoric acid diester, butylphenoxy-3,6,9-trioxaundecyl phosphoric acid diester, pentylphenoxy-3,6,9-trioxaundecyl phosphoric acid diester, hexylphenoxy-3,6,9-trioxaundecyl phosphoric acid diester, heptylphenoxy-3,6,9-trioxaundecyl phosphoric acid diester, octylphenoxy-3,6,9-trioxaundecyl phosphoric acid diester, nonylphenoxy-3,6,9-trioxaundecyl phosphoric acid diester, decylphenoxy-3,6,9-trioxaundecyl phosphoric acid diester, undecylphenoxy-3,6,9-trioxaundecyl phosphoric acid diester, dodecylphenoxy-3,6,9-trioxaundecyl phosphoric acid diester(laurylphenoxy-3,6,9-trioxaundecyl phosphoric acid diester), tridecylphenoxy-3,6,9-trioxaundecyl phosphoric acid diester, tetradecylphenoxy-3,6,9-trioxaundecyl phosphoric acid diester, pentadecylphenoxy-3,6,9-trioxaundecyl phosphoric acid diester, hexadecylphenoxy-3,6,9-trioxaundecyl phosphoric acid diester, heptadecylphenoxy-3,6,9-trioxaundecyl phosphoric acid diester, octadecylphenoxy-3,6,9-trioxaundecyl phosphoric acid diester, nonadecylphenoxy-3,6,9-trioxaundecyl phosphoric acid diester, icosanylphenoxy-3,6,9-trioxaundecyl phosphoric acid diester, butyl naphthalenoxyethyl phosphoric acid diester, pentyl naphthalenoxyethyl phosphoric acid diester, hexyl naphthalenoxyethyl phosphoric acid diester, heptyl naphthalenoxyethyl phosphoric acid diester, octyl naphthalenoxyethyl phosphoric acid diester, nonyl naphthalenoxyethyl phosphoric acid diester, decyl naphthalenoxyethyl phosphoric acid diester, undecyl naphthalenoxyethyl phosphoric acid diester, dodecyl naphthalenoxyethyl phosphoric acid diester(lauryl naphthalenoxyethyl phosphoric acid diester), dodecyl naphthalenoxyethyl phosphoric acid diester(lauryl naphthalenoxyethyl phosphoric acid diester), tridecyl naphthalenoxyethyl phosphoric acid diester, tetradecyl naphthalenoxyethyl phosphoric acid diester, pentadecyl naphthalenoxyethyl phosphoric acid diester, hexadecyl naphthalenoxyethyl phosphoric acid diester, heptadecyl naphthalenoxyethyl phosphoric acid diester, octadecyl naphthalenoxyethyl phosphoric acid diester, nonadecyl naphthalenoxyethyl phosphoric acid diester, icosanyl naphthalenoxyethyl phosphoric acid diester, butyl naphthalenoxy 3-oxapentyl phosphoric acid diester, pentyl naphthalenoxy 3-oxapentyl phosphoric acid diester, hexyl naphthalenoxy 3-oxapentyl phosphoric acid diester, heptyl naphthalenoxy 3-oxapentyl phosphoric acid diester, octyl naphthalenoxy 3-oxapentyl phosphoric acid diester, nonyl naphthalenoxy 3-oxapentyl phosphoric acid diester, decyl naphthalenoxy 3-oxapentyl phosphoric acid diester, undecyl naphthalenoxy 3-oxapentyl phosphoric acid diester, dodecyl naphthalenoxy 3-oxapentyl phosphoric acid diester(lauryl naphthalenoxy 3-oxapentyl phosphoric acid diester), dodecyl naphthalenoxy 3-oxapentyl phosphoric acid diester(lauryl naphthalenoxy 3-oxapentyl phosphoric acid diester), tridecyl naphthalenoxy 3-oxapentyl phosphoric acid diester, tetradecyl naphthalenoxy 3-oxapentyl phosphoric acid diester, pentadecyl naphthalenoxy 3-oxapentyl phosphoric acid diester, hexadecyl naphthalenoxy 3-oxapentyl phosphoric acid diester, heptadecyl naphthalenoxy 3-oxapentyl phosphoric acid diester, octadecyl naphthalenoxy 3-oxapentyl phosphoric acid diester, nonadecyl naphthalenoxy 3-oxapentyl phosphoric acid diester, icosanyl naphthalenoxy 3-oxapentyl phosphoric acid diester, butyl naphthalenoxy 3,6,9-trioxaundecyl phosphoric acid diester, pentyl naphthalenoxy 3,6,9-trioxaundecyl phosphoric acid diester, hexyl naphthalenoxy 3,6,9-trioxaundecyl phosphoric acid diester, heptyl naphthalenoxy 3,6,9-trioxaundecyl phosphoric acid diester, octyl naphthalenoxy 3,6,9-trioxaundecyl phosphoric acid diester, nonyl naphthalenoxy 3,6,9-trioxaundecyl phosphoric acid diester, decyl naphthalenoxy 3,6,9-trioxaundecyl phosphoric acid diester, undecyl naphthalenoxy 3,6,9-trioxaundecyl phosphoric acid diester, dodecyl naphthalenoxy 3,6,9-trioxaundecyl phosphoric acid diester(lauryl naphthalenoxy 3,6,9-trioxaundecyl phosphoric acid diester), dodecyl naphthalenoxy 3,6,9-trioxaundecyl phosphoric acid diester(lauryl naphthalenoxy 3,6,9-trioxaundecyl phosphoric acid diester), tridecyl naphthalenoxy 3,6,9-trioxaundecyl phosphoric acid diester, tetradecyl naphthalenoxy 3,6,9-trioxaundecyl phosphoric acid diester, pentadecyl naphthalenoxy 3,6,9-trioxaundecyl phosphoric acid diester, hexadecyl naphthalenoxy 3,6,9-trioxaundecyl phosphoric acid diester, heptadecyl naphthalenoxy 3,6,9-trioxaundecyl phosphoric acid diester, octadecyl naphthalenoxy 3,6,9-trioxaundecyl phosphoric acid diester, nonadecyl naphthalenoxy 3,6,9-trioxaundecyl phosphoric acid diester, icosanyl naphthalenoxy 3,6,9-trioxaundecyl phosphoric acid diester, and salts thereof such as sodium salt, potassium salt, ammonium salt, triethanolamine salt, magnesium salt, and calcium salt, and so on.

[Chem. 62]

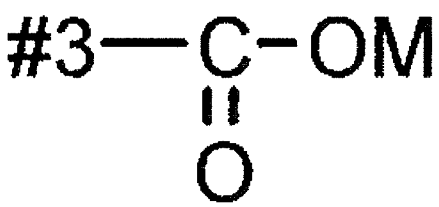

(305)

In the formula (305), M is a hydrogen atom, an alkali metal, an alkaline earth metal having 1/2 atomic valence or an ammonium ion; and #3 indicates a hand bonded to a carbon atom present in R in the formula (300).

Examples of the surfactants in which FG is represented by the general formula (305) include aliphatic carboxylic acid surfactants, alkyloxy aliphatic carboxylic acid surfactants, aryloxy aliphatic carboxylic acid surfactants, aromatic carboxylic acid surfactants and N-acylamino acid surfactants.

Examples of the aliphatic carboxylic acid surfactants include butyric acid, valeric acid, caproic acid, caprylic acid, capric acid, lauric acid, myristic acid, palmitic acid, stearic acid, isostearic acid, oleic acid, behenic acid, cyclohexanecarboxylic acid, phenyl acetic acid, soybean oil, coconut oil, palm oil, flaxseed oil, cotton oil, canola oil, tung oil, castor oil, polyacrylic acid, copolymer of acrylic acid and methyl methacrylate, and salts thereof such as sodium salt, potassium salt, ammonium salt, triethanolamine salt, magnesium salt, and calcium salt, and so on.

Examples of the alkyloxy aliphatic carboxylic acid surfactants include butoxyethyloxyacetic acid, pentyloxyethyloxyacetic acid, hexyloxyethyloxyacetic acid, heptyloxyethyloxyacetic acid, octyloxyethyloxyacetic acid, nonyloxyethyloxyacetic acid, decyloxyethyloxyacetic acid, undecyloxyethyloxyacetic acid, dodecyloxyethyloxyacetic acid, tridecyloxyethyloxyacetic acid, tetradecyloxyethyloxyacetic acid, pentadecyloxyethyloxyacetic acid, hexadecyloxyethyloxyacetic acid, heptadecyloxyethyloxyacetic acid, octadecyloxyethyloxyacetic acid, nonadecyloxyethyloxyacetic acid, icosanyloxyethyloxyacetic acid, butoxy-3-oxapentyloxyacetic acid, pentyloxy-3-oxapentyloxyacetic acid, hexyloxy-3-oxapentyloxyacetic acid, heptyloxy-3-oxapentyloxyacetic acid, octyloxy-3-oxapentyloxyacetic acid, nonyloxy-3-oxapentyloxyacetic acid, decyloxy-3-oxapentyloxyacetic acid, undecyloxy-3-oxapentyloxyacetic acid, dodecyloxy-3-oxapentyloxyacetic acid, tridecyloxy-3-oxapentyloxyacetic acid, tetradecyloxy-3-oxapentyloxyacetic acid, pentadecyloxy-3-oxapentyloxyacetic acid, hexadecyloxy-3-oxapentyloxyacetic acid, heptadecyloxy-3-oxapentyloxyacetic acid, octadecyloxy-3-oxapentyloxyacetic acid, nonadecyloxy-3-oxapentyloxyacetic acid, icosanyloxy-3-oxapentyloxyacetic acid, butoxy-3,6-dioxaoctyloxyacetic acid, pentyloxy-3,6-dioxaoctyloxyacetic acid, hexyloxy-3,6-dioxaoctyloxyacetic acid, heptyloxy-3,6-dioxaoctyloxyacetic acid, octyloxy-3,6-dioxaoctyloxyacetic acid, nonyloxy-3,6-dioxaoctyloxyacetic acid, decyloxy-3,6-dioxaoctyloxyacetic acid, undecyloxy-3,6-dioxaoctyloxyacetic acid, dodecyloxy-3,6-dioxaoctyloxyacetic acid, tridecyloxy-3,6-dioxaoctyloxyacetic acid, tetradecyloxy-3,6-dioxaoctyloxyacetic acid, pentadecyloxy-3,6-dioxaoctyloxyacetic acid, hexadecyloxy-3,6-dioxaoctyloxyacetic acid, heptadecyloxy-3,6-dioxaoctyloxyacetic acid, octadecyloxy-3,6-dioxaoctyloxyacetic acid, nonadecyloxy-3,6-dioxaoctyloxyacetic acid, icosanyloxy-3,6-dioxaoctyloxyacetic acid, butoxy-3,6,9-trioxaundecyloxyacetic acid, pentyloxy-3,6,9-trioxaundecyloxyacetic acid, hexyloxy-3,6,9-trioxaundecyloxyacetic acid, heptyloxy-3,6,9-trioxaundecyloxyacetic acid, octyloxy-3,6,9-trioxaundecyloxyacetic acid, nonyloxy-3,6,9-trioxaundecyloxyacetic acid, decyloxy-3,6,9-trioxaundecyloxyacetic acid, undecyloxy-3,6,9-trioxaundecyloxyacetic acid, dodecyloxy-3,6,9-trioxaundecyloxyacetic acid, tridecyloxy-3,6,9-trioxaundecyloxyacetic acid, tetradecyloxy-3,6,9-trioxaundecyloxyacetic acid, pentadecyloxy-3,6,9-trioxaundecyloxyacetic acid, hexadecyloxy-3,6,9-trioxaundecyloxyacetic acid, heptadecyloxy-3,6,9-trioxaundecyloxyacetic acid, octadecyloxy-3,6,9-trioxaundecyloxyacetic acid, nonadecyloxy-3,6,9-trioxaundecyloxyacetic acid, icosanyloxy-3,6,9-trioxaundecyloxyacetic acid, and salts thereof such as sodium salt, potassium salt, ammonium salt, triethanolamine salt, magnesium salt, and calcium salt, and so on.

Examples of the aryloxy aliphatic carboxylic acid surfactants include butylphenoxyethyloxyacetic acid, pentylphenoxyethyloxyacetic acid, hexylphenoxyethyloxyacetic acid, heptylphenoxyethyloxyacetic acid, octylphenoxyethyloxyacetic acid, nonylphenoxyethyloxyacetic acid, decylphenoxyethyloxyacetic acid, undecylphenoxyethyloxyacetic acid, dodecylphenoxyethyloxyacetic acid, tridecylphenoxyethyloxyacetic acid, tetradecylphenoxyethyloxyacetic acid, pentadecylphenoxyethyloxyacetic acid, hexadecylphenoxyethyloxyacetic acid, heptadecylphenoxyethyloxyacetic acid, octadecylphenoxyethyloxyacetic acid, nonadecylphenoxyethyloxyacetic acid, icosanylphenoxyethyloxyacetic acid, butylphenoxy-3-oxapentyloxyacetic acid, pentylphenoxy-3-oxapentyloxyacetic acid, hexylphenoxy-3-oxapentyloxyacetic acid, heptylphenoxy-3-oxapentyloxyacetic acid, octylphenoxy-3-oxapentyloxyacetic acid, nonylphenoxy-3-oxapentyloxyacetic acid, decylphenoxy-3-oxapentyloxyacetic acid, dodecylphenoxy-3-oxapentyloxyacetic acid, tridecylphenoxy-3-oxapentyloxyacetic acid, tetradecylphenoxy-3-oxapentyloxyacetic acid, pentadecylphenoxy-3-oxapentyloxyacetic acid, hexadecylphenoxy-3-oxapentyloxyacetic acid, heptadecylphenoxy-3-oxapentyloxyacetic acid, octadecylphenoxy-3-oxapentyloxyacetic acid, nonadecylphenoxy-3-oxapentyloxyacetic acid, icosanylphenoxy-3-oxapentyloxyacetic acid, butylphenoxy-3,6-dioxaoctyloxyacetic acid, pentylphenoxy-3,6-dioxaoctyloxyacetic acid, hexylphenoxy-3,6-dioxaoctyloxyacetic acid, heptylphenoxy-3,6-dioxaoctyloxyacetic acid, octylphenoxy-3,6-dioxaoctyloxyacetic acid, nonylphenoxy-3,6-dioxaoctyloxyacetic acid, decylphenoxy-3,6-dioxaoctyloxyacetic acid, undecylphenoxy-3,6-dioxaoctyloxyacetic acid, dodecylphenoxy-3,6-dioxaoctyloxyacetic acid(laurylphenoxy-3,6-dioxaoctyloxyacetic acid), tridecylphenoxy-3,6-dioxaoctyloxyacetic acid, tetradecylphenoxy-3,6-dioxaoctyloxyacetic acid, pentadecylphenoxy-3,6-dioxaoctyloxyacetic acid, hexadecylphenoxy-3,6-dioxaoctyloxyacetic acid, heptadecylphenoxy-3,6-dioxaoctyloxyacetic acid, octadecylphenoxy-3,6-dioxaoctyloxyacetic acid, nonadecylphenoxy-3,6-dioxaoctyloxyacetic acid, icosanylphenoxy-3,6-dioxaoctyloxyacetic acid, butylphenoxy-3,6,9-trioxaundecyloxyacetic acid, pentylphenoxy-3,6,9-trioxaundecyloxyacetic acid, hexylphenoxy-3,6,9-trioxaundecyloxyacetic acid, heptylphenoxy-3,6,9-trioxaundecyloxyacetic acid, octylphenoxy-3,6,9-trioxaundecyloxyacetic acid, nonylphenoxy-3,6,9-trioxaundecyloxyacetic acid, decylphenoxy-3,6,9-trioxaundecyloxyacetic acid, undecylphenoxy-3,6,9-trioxaundecyloxyacetic acid, dodecylphenoxy-3,6,9-trioxaundecyloxyacetic acid(laurylphenoxy-3,6,9-trioxaundecyloxyacetic acid), tridecylphenoxy-3,6,9-trioxaundecyloxyacetic acid, tetradecylphenoxy-3,6,9-trioxaundecyloxyacetic acid, pentadecylphenoxy-3,6,9-trioxaundecyloxyacetic acid, hexadecylphenoxy-3,6,9-trioxaundecyloxyacetic acid, heptadecylphenoxy-3,6,9-trioxaundecyloxyacetic acid, octadecylphenoxy-3,6,9-trioxaundecyloxyacetic acid, nonadecylphenoxy-3,6,9-trioxaundecyloxyacetic acid, icosanylphenoxy-3,6,9-trioxaundecyloxyacetic acid, and salts thereof such as sodium salt, potassium salt, ammonium salt, triethanolamine salt, magnesium salt, and calcium salt, and so on.

Examples of the aromatic carboxylic acid surfactants include benzoic acid, toluic acid, chlorobenzoic acid, nitrobenzoic acid, hydroxybenzoic acid, methoxybenzoic acid, butoxybenzoic acid, pentyloxybenzoic acid, hexyloxybenzoic acid, heptyloxybenzoic acid, octyloxybenzoic acid, nonyloxybenzoic acid, decyloxybenzoic acid, undecyloxybenzoic acid, dodecyloxybenzoic acid, tridecyloxybenzoic acid, tetradecyloxybenzoic acid, pentadecyloxybenzoic acid, hexadecyloxybenzoic acid, heptadecyloxybenzoic acid, octadecyloxybenzoic acid, nonadecyloxybenzoic acid, icosanyloxybenzoic acid, and salts thereof such as sodium salt, potassium salt, ammonium salt, triethanolamine salt, magnesium salt, and calcium salt, and so on.

Examples of the N-acylamino acid surfactants include -N-acyl ester of butyric acid with glycine, -N-acyl ester of valeric acid with glycine, -N-acyl ester of caproic acid with glycine, -N-acyl ester of caprylic acid with glycine, -N-acyl ester of capric acid with glycine, -N-acyl ester of lauric acid with glycine, -N-acyl ester of myristic acid with glycine, -N-acyl ester of palmitic acid with glycine, -N-acyl ester of stearic acid with glycine, -N-acyl ester of isostearic acid with glycine, -N-acyl ester of oleic acid with glycine, -N-acyl ester of behenic acid with glycine, -N-acyl ester of cyclohexanecarboxylic acid with glycine, -N-acyl ester of phenyl acetic acid with glycine, -N-acyl ester of butyric acid with N-methyl glycine, -N-acyl ester of valeric acid with N-methyl glycine, -N-acyl ester of caproic acid with N-methyl glycine, -N-acyl ester of caprylic acid with N-methyl glycine, -N-acyl ester of capric acid with N-methyl glycine, -N-acyl ester of lauric acid with N-methyl glycine, -N-acyl ester of myristic acid with N-methyl glycine, -N-acyl ester of palmitic acid with N-methyl glycine, -N-acyl ester of stearic acid with N-methyl glycine, -N-acyl ester of isostearic acid with N-methyl glycine, -N-acyl ester of oleic acid with N-methyl glycine, -N-acyl ester of behenic acid with N-methyl glycine, -N-acyl ester of cyclohexanecarboxylic acid with N-methyl glycine, -N-acyl ester of phenyl acetic acid with N-methyl glycine, -N-acyl ester of butyric acid with alanine, -N-acyl ester of valeric acid with alanine, -N-acyl ester of caproic acid with alanine, -N-acyl ester of caprylic acid with alanine, -N-acyl ester of capric acid with alanine, -N-acyl ester of lauric acid with alanine, -N-acyl ester of myristic acid with alanine, -N-acyl ester of palmitic acid with alanine, -N-acyl ester of stearic acid with alanine, -N-acyl ester of isostearic acid with alanine, -N-acyl ester of oleic acid with alanine, -N-acyl ester of behenic acid with alanine, -N-acyl ester of cyclohexanecarboxylic acid with alanine, -N-acyl ester of phenyl acetic acid with alanine, -N-acyl ester of butyric acid with N-methyl alanine, -N-acyl ester of valeric acid with N-methyl alanine, -N-acyl ester of caproic acid with N-methyl alanine, -N-acyl ester of caprylic acid with N-methyl alanine, -N-acyl ester of capric acid with N-methyl alanine, -N-acyl ester of lauric acid with N-methyl alanine, -N-acyl ester of myristic acid with N-methyl alanine, -N-acyl ester of palmitic acid with N-methyl alanine, -N-acyl ester of stearic acid with N-methyl alanine, -N-acyl ester of isostearic acid with N-methyl alanine, -N-acyl ester of oleic acid with N-methyl alanine, -N-acyl ester of behenic acid with N-methyl alanine, -N-acyl ester of cyclohexanecarboxylic acid with N-methyl alanine, -N-acyl ester of phenyl acetic acid with N-methyl alanine, -N-acyl ester of butyric acid with collagen peptide, -N-acyl ester of valeric acid with collagen peptide, -N-acyl ester of caproic acid with collagen peptide, -N-acyl ester of caprylic acid with collagen peptide, -N-acyl ester of capric acid with collagen peptide, -N-acyl ester of lauric acid with collagen peptide, -N-acyl ester of myristic acid with collagen peptide, -N-acyl ester of palmitic acid with collagen peptide, -N-acyl ester of stearic acid with collagen peptide, -N-acyl ester of isostearic acid with collagen peptide, -N-acyl ester of oleic acid with collagen peptide, -N-acyl ester of behenic acid with collagen peptide, -N-acyl ester of cyclohexanecarboxylic acid with collagen peptide, -N-acyl ester of phenyl acetic acid with collagen peptide, and salts thereof such as sodium salt, potassium salt, ammonium salt, triethanolamine salt, magnesium salt, and calcium salt, and so on.

Of the surfactants in which FG is represented by the general formula (305), those compounds in which the organic residue has 8 to 60 carbon atoms are more preferable. Glycine -N-acyl esters in which the organic residue has 10 to 40 carbon atoms are still more preferable.

[Chem. 63]

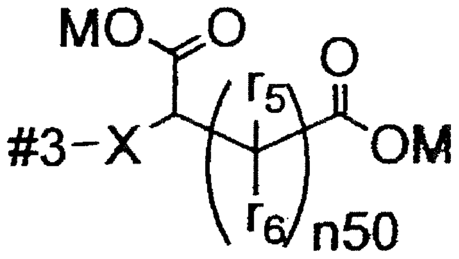

(3 0 6)

In the formula (306), $r_5$ and $r_6$ each independently represent a hydrogen atom, a methyl group, an ethyl group or a hydroxyl group; n50 is an integer of 0 to 5; X is -O-, -S-, -NH- or $-NCH_3-$; M at each occurrence is a hydrogen atom, an alkali metal, an alkaline earth metal having 1/2 atomic valence or an ammonium ion; and #3 indicates a hand bonded to a carbon atom present in R in the formula (300).

Examples of the surfactants in which FG is represented by the general formula (306) include alkylsuccinic acid surfactants, alkyl ether succinic acid surfactants, alkyl ester succinic acid surfactants, succinic acid thioester surfactants, N-acylaminosuccinic acid ester surfactants and N-acylglutamic acid ester surfactants.

Examples of the alkylsuccinic acid surfactants include butyl succinic acid, pentyl succinic acid, hexyl succinic acid, heptyl succinic acid, octyl succinic acid, nonyl succinic acid, decyl succinic acid, undecyl succinic acid, dodecyl succinic acid, tridecyl succinic acid, tetradecyl succinic acid, pentadecyl succinic acid, hexadecyl succinic acid, heptadecyl succinic acid, octadecyl succinic acid, nonadecyl succinic acid, icosanyl succinic acid, and salts thereof such as sodium salt, potassium salt, ammonium salt, triethanolamine salt, magnesium salt, and calcium salt, and so on.

Examples of the alkyl ether succinic acid surfactants include butyloxysuccinic acid, pentyloxysuccinic acid, hexyloxysuccinic acid, heptyloxysuccinic acid, octyloxysuccinic acid, nonyloxysuccinic acid, decyloxysuccinic acid, undecyloxysuccinic acid, dodecyloxysuccinic acid, tridecyloxysuccinic acid, tetradecyloxysuccinic acid, pentadecyloxysuccinic acid, hexadecyloxysuccinic acid, heptadecyloxysuccinic acid, octadecyloxysuccinic acid, nonadecyloxysuccinic acid, icosanyloxysuccinic acid, and salts thereof such as sodium salt, potassium salt, ammonium salt, triethanolamine salt, magnesium salt, and calcium salt, and so on.

Examples of the alkyl ester succinic acid surfactants include ester of butyric acid with hydroxysuccinic acid, ester of valeric acid with hydroxysuccinic acid, ester of caproic acid with hydroxysuccinic acid, ester of caprylic acid with hydroxysuccinic acid, ester of capric acid with hydroxysuccinic acid, ester of lauric acid with hydroxysuccinic acid, ester of myristic acid with hydroxysuccinic acid, ester of palmitic acid with hydroxysuccinic acid, ester of stearic acid with hydroxysuccinic acid, ester of isostearic acid with hydroxysuccinic acid, ester of oleic acid with hydroxysuccinic acid, ester of behenic acid with hydroxysuccinic acid, ester of cyclohexanecarboxylic acid with hydroxysuccinic acid, ester of phenyl acetic acid with hydroxysuccinic acid and salts thereof such as sodium salt, potassium salt, ammonium salt, triethanolamine salt, magnesium salt, and calcium salt, and so on.

Examples of the succinic acid thioester surfactants include thioester of butyric acid with mercaptosuccinic acid, thioester of valeric acid with mercaptosuccinic acid, thioester of caproic acid with mercaptosuccinic acid, thioester of caprylic acid with mercaptosuccinic acid, thioester of capric acid with mercaptosuccinic acid, thioester of lauric acid with mercaptosuccinic acid, thioester of myristic acid with mercaptosuccinic acid, thioester of palmitic acid with mercaptosuccinic acid, thioester of stearic acid with mercaptosuccinic acid, thioester of isostearic acid with mercaptosuccinic acid, thioester of oleic acid with mercaptosuccinic acid, thioester of behenic acid with mercaptosuccinic acid, thioester of cyclohexanecarboxylic acid with mercaptosuccinic acid, thioester of phenyl acetic acid with mercaptosuccinic acid and salts thereof such as sodium salt, potassium salt, ammonium salt, triethanolamine salt, magnesium salt, and calcium salt, and so on.

Examples of the N-acylaminosuccinic acid ester surfactants include N-acyl ester of butyric acid with aminosuccinic acid, N-acyl ester of valeric acid with aminosuccinic acid, N-acyl ester of caproic acid with aminosuccinic acid, N-acyl ester of caprylic acid with aminosuccinic acid, N-acyl ester of capric acid with aminosuccinic acid, N-acyl ester of lauric acid with aminosuccinic acid, N-acyl ester of myristic acid with aminosuccinic acid, N-acyl ester of palmitic acid with aminosuccinic acid, N-acyl ester of stearic acid with aminosuccinic acid, N-acyl ester of isostearic acid with aminosuccinic acid, N-acyl ester of oleic acid with aminosuccinic acid, N-acyl ester of behenic acid with aminosuccinic acid, N-acyl ester of cyclohexanecarboxylic acid with aminosuccinic acid, N-acyl ester of phenyl acetic acid with aminosuccinic acid, and salts thereof such as sodium salt, potassium salt, ammonium salt, triethanolamine salt, magnesium salt, and calcium salt, and so on.

Examples of the N-acylglutamic acid ester surfactants include N-acyl ester of butyric acid with glutamic acid,

N-acyl ester of valeric acid with glutamic acid, N-acyl ester of caproic acid with glutamic acid, N-acyl ester of caprylic acid with glutamic acid, N-acyl ester of capric acid with glutamic acid, N-acyl ester of lauric acid with glutamic acid, N-acyl ester of myristic acid with glutamic acid, N-acyl ester of palmitic acid with glutamic acid, N-acyl ester of stearic acid with glutamic acid, N-acyl ester of isostearic acid with glutamic acid, N-acyl ester of oleic acid with glutamic acid, N-acyl ester of behenic acid with glutamic acid, N-acyl ester of cyclohexanecarboxylic acid with glutamic acid, N-acyl ester of phenyl acetic acid with glutamic acid, and salts thereof such as sodium salt, potassium salt, ammonium salt, triethanolamine salt, magnesium salt, and calcium salt, and so on.

Of the surfactants in which FG is represented by the general formula (306), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

[Chem. 64]

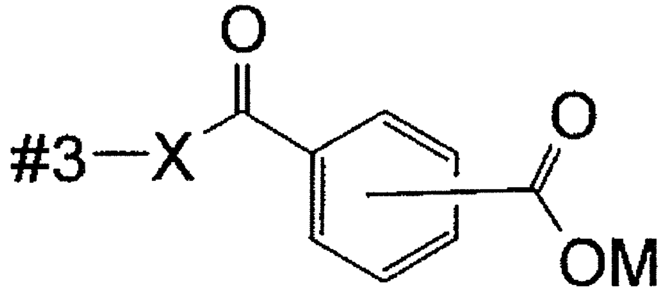

(307)

In the formula (307), X is -O-, -S-, -NH- or $-NCH_3-$; M is a hydrogen atom, an alkali metal, an alkaline earth metal having 1/2 atomic valence or an ammonium ion; and #3 indicates a hand bonded to a carbon atom present in R in the formula (300).

Examples of the surfactants in which FG is represented by the general formula (307) include phthalic acid ester surfactants.

Examples of the phthalic acid ester surfactants include butyl phthalate, pentyl phthalate, hexyl phthalate, heptyl phthalate, octyl phthalate, nonyl phthalate, decyl phthalate, undecyl phthalate, phthalic acid dodecyl(lauryl), tridecyl phthalate, tetradecyl phthalate, pentadecyl phthalate, hexadecyl phthalate, heptadecyl phthalate, octadecyl phthalate, nonadecyl phthalate, icosanyl phthalate, phthalic acid butyloxy, phthalic acid hexyloxy, phthalic acid octyloxy, phthalic acid decyloxy, phthalic acid dodecyloxy, phthalic acid tetradecyloxy, phthalic acid hexadecyloxy, phthalic acid octadecyloxy, phthalic acid icosanyloxy, phthalic acid butyloxy-3-oxapentyl, phthalic acid hexyloxy-3-oxapentyl, phthalic acid octyloxy-3-oxapentyl, phthalic acid decyloxy-3-oxapentyl, phthalic acid dodecyloxy-3-oxapentyl, phthalic acid tetradecyloxy-3-oxapentyl, phthalic acid hexadecyloxy-3-oxapentyl, phthalic acid octadecyloxy-3-oxapentyl, phthalic acid icosanyloxy-3-oxapentyl, phthalic acid butyloxy-3,6-dioxaoctyl, phthalic acid hexyloxy-3,6-dioxaoctyl, phthalic acid octyloxy-3,6-dioxaoctyl, phthalic acid decyloxy-3,6-dioxaoctyl, phthalic acid dodecyloxy-3,6-dioxaoctyl, phthalic acid tetradecyloxy-3,6-dioxaoctyl, phthalic acid hexadecyloxy-3,6-dioxaoctyl, phthalic acid octadecyloxy-3,6-dioxaoctyl, phthalic acid icosanyloxy-3,6-dioxaoctyl, phthalic acid butyloxy-3,6,9-trioxaundecyl, phthalic acid hexyloxy-3,6,9-trioxaundecyl, phthalic acid octyloxy-3,6,9-trioxaundecyl, phthalic acid decyloxy-3,6,9-trioxaundecyl, phthalic acid dodecyloxy-3,6,9-trioxaundecyl, phthalic acid tetradecyloxy-3,6,9-trioxaundecyl, phthalic acid hexadecyloxy-3,6,9-trioxaundecyl, phthalic acid octadecyloxy-3,6,9-trioxaundecyl, phthalic acid icosanyloxy-3,6,9-trioxaundecyl, and salts thereof such as sodium salt, potassium salt, ammonium salt, triethanolamine salt, magnesium salt, and calcium salt, and so on.

Of the surfactants in which FG is represented by the general formula (307), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

[Chem. 65]

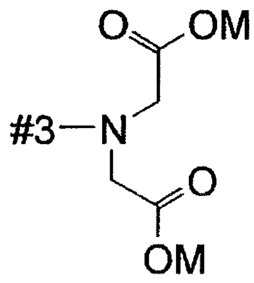

(3 0 8)

In the formula (308), M at each occurrence is a hydrogen atom, an alkali metal, an alkaline earth metal having 1/2 atomic valence or an ammonium ion; and #3 indicates a hand bonded to a carbon atom present in R in the formula (300).

Examples of the surfactants in which FG is represented by the general formula (308) include iminodiacetic acid-N-acyl ester surfactants.

Examples of the iminodiacetic acid-N-acyl ester surfactants include -N-acyl ester of butyric acid with iminodiacetic acid, -N-acyl ester of valeric acid with iminodiacetic acid, -N-acyl ester of caproic acid with iminodiacetic acid, -N-acyl ester of caprylic acid with iminodiacetic acid, -N-acyl ester of capric acid with iminodiacetic acid, -N-acyl ester of lauric acid with iminodiacetic acid, -N-acyl ester of myristic acid with iminodiacetic acid, -N-acyl ester of palmitic acid with iminodiacetic acid, -N-acyl ester of stearic acid with iminodiacetic acid, -N-acyl ester of isostearic acid with iminodiacetic acid, -N-acyl ester of oleic acid with iminodiacetic acid, -N-acyl ester of behenic acid with iminodiacetic acid, -N-acyl ester of cyclohexanecarboxylic acid with iminodiacetic acid, -N-acyl ester of phenyl acetic acid with iminodiacetic acid, and salts thereof such as sodium salt, potassium salt, ammonium salt, triethanolamine salt, magnesium salt, and calcium salt, and so on.

Of the surfactants in which FG is represented by the general formula (308), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Examples of the groups FG including a hydroxyl group include those hydrophilic groups represented by the general formulas (309), (310), (312) and (313) below.

[Chem. 66]

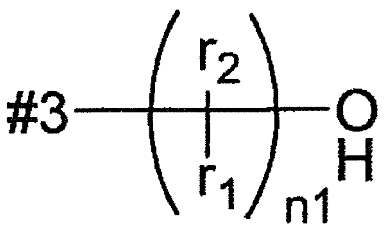

(3 0 9)

In the formula (309), $r_1$ and $r_2$ each independently represent a hydrogen atom, a methyl group, an ethyl group or a hydroxyl group; n1 is an integer of 0 to 100; and #3 indicates a hand bonded to a carbon atom present in R in the formula (300). When the group represented by the formula (309) contains one hydroxyl group, n0 in the formula (300) is an integer of 2 to 5.

Examples of the surfactants wherein FG is represented by the general formula (309) include butyric acid trimethylolpropane monoester, valeric acid trimethylolpropane monoester, caproic acid trimethylolpropane monoester, caprylic acid trimethylolpropane monoester, capric acid trimethylolpropane monoester, lauric acid trimethylolpropane monoester, myristic acid trimethylolpropane monoester, palmitic acid trimethylolpropane monoester, stearic acid trimethylolpropane monoester, isostearic acid trimethylolpropane monoester, oleic acid trimethylolpropane monoester, behenic acid trimethylolpropane monoester, cyclohexanecarboxylic acid trimethylolpropane monoester, phenyl acetic acid trimethylolpropane monoester, butyric acid pentaerythritol monoester, valeric acid pentaerythritol monoester, caproic acid

pentaerythritol monoester, caprylic acid pentaerythritol monoester, capric acid pentaerythritol monoester, lauric acid pentaerythritol monoester, myristic acid pentaerythritol monoester, palmitic acid pentaerythritol monoester, stearic acid pentaerythritol monoester, isostearic acid pentaerythritol monoester, oleic acid pentaerythritol monoester, behenic acid pentaerythritol monoester, cyclohexanecarboxylic acid pentaerythritol monoester, phenyl acetic acid pentaerythritol monoester, butyric acid pentaerythritol diester, valeric acid pentaerythritol diester, caproic acid pentaerythritol diester, caprylic acid pentaerythritol diester, capric acid pentaerythritol diester, lauric acid pentaerythritol diester, myristic acid pentaerythritol diester, palmitic acid pentaerythritol diester, stearic acid pentaerythritol diester, isostearic acid pentaerythritol diester, oleic acid pentaerythritol diester, behenic acid pentaerythritol diester, cyclohexanecarboxylic acid pentaerythritol diester, phenyl acetic acid pentaerythritol diester, butyric acid dipentaerythritol diester, valeric acid dipentaerythritol diester, caproic acid dipentaerythritol diester, caprylic acid dipentaerythritol diester, capric acid dipentaerythritol diester, lauric acid dipentaerythritol diester, myristic acid dipentaerythritol diester, palmitic acid dipentaerythritol diester, stearic acid dipentaerythritol diester, isostearic acid dipentaerythritol diester, oleic acid dipentaerythritol diester, behenic acid dipentaerythritol diester, cyclohexanecarboxylic acid dipentaerythritol diester, phenyl acetic acid dipentaerythritol diester, butyric acid dipentaerythritol triester, valeric acid dipentaerythritol triester, caproic acid dipentaerythritol triester, caprylic acid dipentaerythritol triester, capric acid dipentaerythritol triester, lauric acid dipentaerythritol triester, myristic acid dipentaerythritol triester, palmitic acid dipentaerythritol triester, stearic acid dipentaerythritol triester, isostearic acid dipentaerythritol triester, oleic acid dipentaerythritol triester, behenic acid dipentaerythritol triester, cyclohexanecarboxylic acid dipentaerythritol triester, phenyl acetic acid dipentaerythritol triester, butyric acid dipentaerythritol tetraester, valeric acid dipentaerythritol tetraester, caproic acid dipentaerythritol tetraester, caprylic acid dipentaerythritol tetraester, capric acid dipentaerythritol tetraester, lauric acid dipentaerythritol tetraester, myristic acid dipentaerythritol tetraester, palmitic acid dipentaerythritol tetraester, stearic acid dipentaerythritol tetraester, isostearic acid dipentaerythritol tetraester, oleic acid dipentaerythritol tetraester, behenic acid dipentaerythritol tetraester, cyclohexanecarboxylic acid dipentaerythritol tetraester, phenyl acetic acid dipentaerythritol tetraester, and adducts thereof such as ethylene oxide adduct, propylene oxide adduct, and butyrolactone adduct and so on.

Of the surfactants represented by the general formula (309) , those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

[Chem. 67]

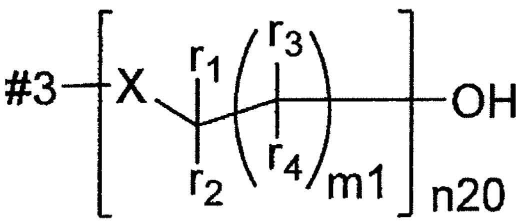

(3 1 0)

In the formula (310), X is -O-, -S-, -NH- or $-NCH_3-$; Xs may be the same as or different from one another; m1 is an integer of 0 to 10; n20 is an integer of 2 to 100; r represents a hydrogen atom or a methyl group; $r_1$ to $r_4$ each independently represent a hydrogen atom, a methyl group, an ethyl group or a hydroxyl group; Xs, $r_1$s, $r_2$s, $r_3$s and $r_4$s each may be the same as or different from one another; and #3 indicates a hand bonded to a carbon atom present in R in the formula (300). When the group represented by the formula (310) contains one hydroxyl group, n0 in the formula (300) is an integer of 2 to 5.

Examples of the surfactants wherein FG is represented by the general formula (310) include butyric acid glycerol monoester, valeric acid glycerol monoester, caproic acid glycerol monoester, caprylic acid glycerol monoester, capric acid glycerol monoester, lauric acid glycerol monoester, myristic acid glycerol monoester, palmitic acid glycerol monoester, stearic acid glycerol monoester, isostearic acid glycerol monoester, oleic acid glycerol monoester, behenic acid glycerol monoester, cyclohexanecarboxylic acid glycerol monoester, phenyl acetic acid glycerol monoester, glycerol butyl ether, glycerol pentyl ether, glycerol hexyl ether, glycerol heptyl ether, glycerol octyl ether, glycerol nonyl ether, glycerol decyl ether, glycerol undecyl ether, glycerol dodecyl ether, glycerol tridecyl tetradecyl ether, glycerol pentadecyl ether, glycerol hexadecyl ether, glycerol heptadecyl ether, glycerol octadecyl ether, glycerol nonadecyl ether, glycerol icosanyl ether, glycerol-butyloxyethyl ether, glycerol-pentyloxyethyl ether, glycerol-hexyloxyethyl ether, glycerol-heptyloxyethyl ether, glycerol-octyloxyethyl ether, glycerol-nonyloxyethyl ether, glycerol-decyloxyethyl ether, glycerol-undecyloxyethyl ether, glycerol-dodecyloxyethyl ether, glycerol-tridecyl tetradecyloxyethyl ether, glycerol-pentadecyloxyethyl

ether, glycerol-hexadecyloxyethyl ether, glycerol-heptadecyloxyethyl ether, glycerol-octadecyloxyethyl ether, glycerol-nonadecyloxyethyl ether, glycerol-icosanyloxyethyl ether, butyric acid diglycerol monoester, valeric acid diglycerol monoester, caproic acid diglycerol monoester, caprylic acid diglycerol monoester, capric acid diglycerol monoester, lauric acid diglycerol monoester, myristic acid diglycerol monoester, palmitic acid diglycerol monoester, stearic acid diglycerol monoester, isostearic acid diglycerol monoester, oleic acid diglycerol monoester, behenic acid diglycerol monoester, cyclohexanecarboxylic acid diglycerol monoester, phenyl acetic acid diglycerol monoester, butyric acid thioglycerol monothioester, valeric acid thioglycerol monothioester, caproic acid thioglycerol monothioester, caprylic acid thioglycerol monothioester, capric acid thioglycerol monothioester, lauric acid thioglycerol monothioester, myristic acid thioglycerol monothioester, palmitic acid thioglycerol monothioester, stearic acid thioglycerol monothioester, isostearic acid thioglycerol monothioester, oleic acid thioglycerol monothioester, behenic acid thioglycerol monothioester, cyclohexanecarboxylic acid thioglycerol monothioester, phenyl acetic acid thioglycerol monothioester, 1-butyric acid amido-2,3-propanediol, 1-valeric acid amido-2,3-propanediol, 1-caproic acid amido-2,3-propanediol, 1-caprylic acid amido-2,3-propanediol, 1-capric acid amido-2,3-propanediol, 1-lauric acid amido-2,3-propanediol, 1-myristic acid amido-2,3-propanediol, 1-palmitic acid amido-2,3-propanediol, 1-stearic acid amido-2,3-propanediol, 1-isostearic acid amido-2,3-propanediol, 1-oleic acid amido-2,3-propanediol, 1-behenic acid amido-2,3-propanediol, 1-cyclohexanecarboxylic acid amido-2,3-propanediol, 1-phenyl acetic acid amido-2,3-propanediol, butyric acid sorbitol monoester, valeric acid sorbitol monoester, caproic acid sorbitol monoester, caprylic acid sorbitol monoester, capric acid sorbitol monoester, lauric acid sorbitol monoester, myristic acid sorbitol monoester, palmitic acid sorbitol monoester, stearic acid sorbitol monoester, isostearic acid sorbitol monoester, oleic acid sorbitol monoester, behenic acid sorbitol monoester, cyclohexanecarboxylic acid sorbitol monoester, phenyl acetic acid sorbitol monoester, butyric acid sorbitol diester, valeric acid sorbitol diester, caproic acid sorbitol diester, caprylic acid sorbitol diester, capric acid sorbitol diester, lauric acid sorbitol diester, myristic acid sorbitol diester, palmitic acid sorbitol diester, stearic acid sorbitol diester, isostearic acid sorbitol diester, oleic acid sorbitol diester, behenic acid sorbitol diester, cyclohexanecarboxylic acid sorbitol diester, phenyl acetic acid sorbitol diester, butyric acid mannitol monoester, valeric acid mannitol monoester, caproic acid mannitol monoester, caprylic acid mannitol monoester, capric acid mannitol monoester, lauric acid mannitol monoester, myristic acid mannitol monoester, palmitic acid mannitol monoester, stearic acid mannitol monoester, isostearic acid mannitol monoester, oleic acid mannitol monoester, behenic acid mannitol monoester, cyclohexanecarboxylic acid mannitol monoester, phenyl acetic acid mannitol monoester, butyric acid mannitol diester, valeric acid mannitol diester, caproic acid mannitol diester, caprylic acid mannitol diester, capric acid mannitol diester, lauric acid mannitol diester, myristic acid mannitol diester, palmitic acid mannitol diester, stearic acid mannitol diester, isostearic acid mannitol diester, oleic acid mannitol diester, behenic acid mannitol diester, cyclohexanecarboxylic acid mannitol diester, phenyl acetic acid mannitol diester, butyric acid mannitol triester, valeric acid mannitol triester, caproic acid mannitol triester, caprylic acid mannitol triester, capric acid mannitol triester, lauric acid mannitol triester, myristic acid mannitol triester, palmitic acid mannitol triester, stearic acid mannitol triester, isostearic acid mannitol triester, oleic acid mannitol triester, behenic acid mannitol triester, cyclohexanecarboxylic acid mannitol triester, phenyl acetic acid mannitol triester, butyric acid mannitol tetraester, valeric acid mannitol tetraester, caproic acid mannitol tetraester, caprylic acid mannitol tetraester, capric acid mannitol tetraester, lauric acid mannitol tetraester, myristic acid mannitol tetraester, palmitic acid mannitol tetraester, stearic acid mannitol tetraester, isostearic acid mannitol tetraester, oleic acid mannitol tetraester, behenic acid mannitol tetraester, cyclohexanecarboxylic acid mannitol tetraester, phenyl acetic acid mannitol tetraester, and adducts thereof such as ethylene oxide adduct, propylene oxide adduct, and butyrolactone adduct and so on.

Of the surfactants represented by the general formula (310), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

[Chem. 68]

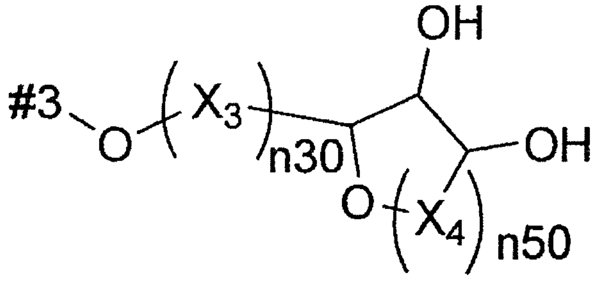

(3 1 2)

In the formula (312), $X_3$ and $X_4$ are each independently - $CH_2$-, -CH(OH)- or -CO-; n30 is an integer of 0 to 3; n50 is an integer of 0 to 5; when n30 is 2 or greater, $X_3$s may be the same as or different from one another; when n50 is 2 or greater, $X_4$s may be the same as or different from one another; and #3 indicates a hand bonded to a carbon atom present in R in the formula (300).

Examples of the surfactants wherein FG is represented by the general formula (312) include butyric acid ribose, valeric acid ribose, caproic acid ribose, caprylic acid ribose, capric acid ribose, lauric acid ribose, myristic acid ribose, palmitic acid ribose, stearic acid ribose, isostearic acid ribose, oleic acid ribose, behenic acid ribose, cyclohexanecarboxylic acid ribose, phenyl acetic acid ribose, butyric acid ascorbic acid, valeric acid ascorbic acid, caproic acid ascorbic acid, caprylic acid ascorbic acid, capric acid ascorbic acid, lauric acid ascorbic acid, myristic acid ascorbic acid, palmitic acid ascorbic acid, stearic acid ascorbic acid, isostearic acid ascorbic acid, oleic acid ascorbic acid, behenic acid ascorbic acid, cyclohexanecarboxylic acid ascorbic acid, phenyl acetic acid ascorbic acid, butyric acid xylol, valeric acid xylol, caproic acid xylol, caprylic acid xylol, capric acid xylol, lauric acid xylol, myristic acid xylol, palmitic acid xylol, stearic acid xylol, isostearic acid xylol, oleic acid xylol, behenic acid xylol, cyclohexanecarboxylic acid xylol, phenyl acetic acid xylol, butyric acid sorbitan, valeric acid sorbitan, caproic acid sorbitan, caprylic acid sorbitan, capric acid sorbitan, lauric acid sorbitan, myristic acid sorbitan, palmitic acid sorbitan, stearic acid sorbitan, isostearic acid sorbitan, oleic acid sorbitan, behenic acid sorbitan, cyclohexanecarboxylic acid sorbitan, phenyl acetic acid sorbitan, butyric acid glucose, valeric acid glucose, caproic acid glucose, caprylic acid glucose, capric acid glucose, lauric acid glucose, myristic acid glucose, palmitic acid glucose, stearic acid glucose, isostearic acid glucose, oleic acid glucose, behenic acid glucose, cyclohexanecarboxylic acid glucose, phenyl acetic acid glucose, butyric acid glucono-1,5-lactone, valeric acid glucono-1,5-lactone, caproic acid glucono-1,5-lactone, caprylic acid glucono-1,5-lactone, capric acid glucono-1,5-lactone, lauric acid glucono-1,5-lactone, myristic acid glucono-1,5-lactone, palmitic acid glucono-1,5-lactone, stearic acid glucono-1,5-lactone, isostearic acid glucono-1,5-lactone, oleic acid glucono-1,5-lactone, behenic acid glucono-1,5-lactone, cyclohexanecarboxylic acid glucono-1,5-lactone, phenyl acetic acid glucono-1,5-lactone, and adducts thereof such as ethylene oxide adduct, propylene oxide adduct, and butyrolactone adduct, and the dehydration-condensed multimer thereof and so on.

Of the surfactants represented by the general formula (312), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

[Chem. 69]

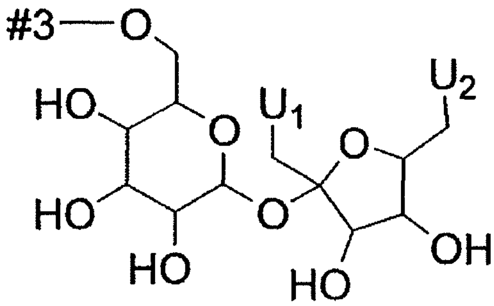

(3 1 3)

In the formula (313), #3 indicates a hand bonded to a carbon atom present in R in the formula (300) ; and $U_1$ to $U_3$ each independently represent a hydroxyl group or an oxygen atom bonded to a carbon atom present in R (O-#3).

Examples of the surfactants wherein FG is represented by the general formula (313) include butyric acid sucrose, valeric acid sucrose, caproic acid sucrose, caprylic acid sucrose, capric acid sucrose, lauric acid sucrose, myristic acid sucrose, palmitic acid sucrose, stearic acid sucrose, isostearic acid sucrose, oleic acid sucrose, behenic acid sucrose, cyclohexanecarboxylic acid sucrose, phenyl acetic acid sucrose, and adducts thereof such as ethylene oxide adduct, propylene oxide adduct, and butyrolactone adduct, and the dehydration-condensed multimer thereof and so on.

Of the surfactants in which FG is represented by the general formula (313), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

Of the surfactants in which FG is represented by any of the general formulas (309) to (313) and has two or more hydroxyl groups, those surfactants in which FG is represented by the general formula (310) or (312) are relatively

preferable.

Examples of the groups FG including a cationic hydrophilic group include those hydrophilic groups represented by the general formulas (314) to (319) below.

[Chem. 70]

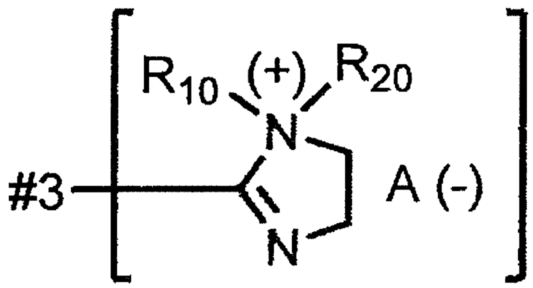

(314)

In the formula (314), A(-) is a halogen ion, a formate ion, an acetate ion, a sulfate ion, a hydrogen sulfate ion, a phosphate ion or a hydrogen phosphate ion; $R_{10}$ and $R_{20}$ each independently represent a hydrogen atom, a $C_{1-4}$ alkyl group, a hydroxyl group or a $C_{1-4}$ hydroxyalkyl group; and #3 indicates a hand bonded to a carbon atom present in R in the formula (300) .

[Chem. 71]

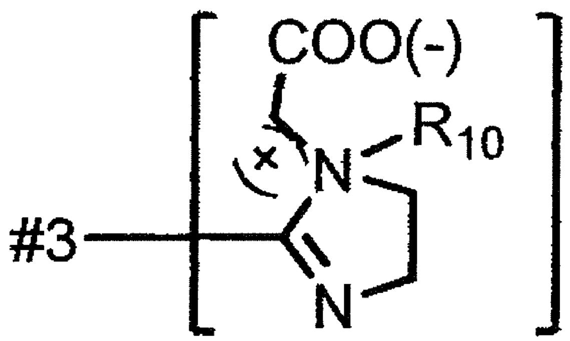

(315)

In the formula (315), $R_{10}$ represents a hydrogen atom, a $C_{1-4}$ alkyl group, a hydroxyl group or a $C_{1-4}$ hydroxyalkyl group; and #3 indicates a hand bonded to a carbon atom present in R in the formula (300).

[Chem. 72]

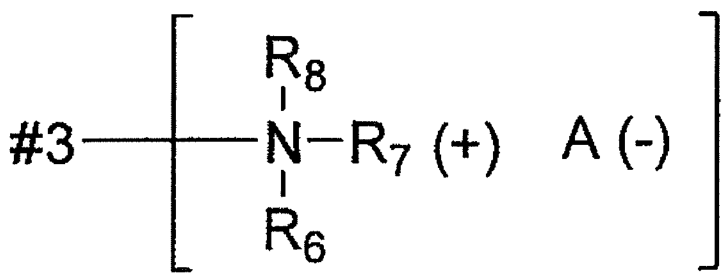

(316)

In the formula (316), A(-) is a halogen ion, a formate ion, an acetate ion, a sulfate ion, a hydrogen sulfate ion, a phosphate ion or a hydrogen phosphate ion; $R_6$ to $R_8$ each independently represent a hydrogen atom, a $C_{1-20}$ alkyl,

alkylaryl, alkylbenzyl, alkylcycloalkyl, alkylcycloalkylmethyl or cycloalkyl group, a phenyl group or a benzyl group; and #3 indicates a hand bonded to a carbon atom present in R in the formula (300).

Examples of the surfactants wherein FG is represented by the general formula (316) include octyl-trimethylammonium chloride, nonyl-trimethylammonium chloride, decyl-trimethylammonium chloride, dodecyl-trimethylammonium chloride, tetradecyl-trimethylammonium chloride, hexadecyl-trimethylammonium chloride, octadecyl-trimethylammonium chloride, icosanyl-trimethylammonium chloride, octyl-benzyldimethylammonium chloride, nonyl-benzyldimethylammonium chloride, decyl-benzyldimethylammonium chloride, dodecylbenzyldimethylammonium chloride, tetradecylbenzyldimethylammonium chloride, hexadecyl-benzyldimethylammonium chloride, octadecyl-benzyldimethylammonium chloride, icosanyl-benzyldimethylammonium chloride, octyl-dodecyl dimethylammonium chloride, nonyl-dodecyl dimethylammonium chloride, decyl-dodecyl dimethylammonium chloride, dodecyl-dodecyl dimethylammonium chloride, tetradecyl-dodecyl dimethylammonium chloride, hexadecyl-dodecyl dimethylammonium chloride, octadecyl-dodecyl dimethylammonium chloride, icosanyl-dodecyl dimethylammonium chloride, octyl-octadecyl dimethylammonium chloride, nonyl-octadecyl dimethylammonium chloride, decyl-octadecyl dimethylammonium chloride, dodecyl-octadecyl dimethylammonium chloride, tetradecyl-octadecyl dimethylammonium chloride, hexadecyl-octadecyl dimethylammonium chloride, octadecyl-octadecyl dimethylammonium chloride, icosanyl-octadecyl dimethylammonium chloride, octyltrimethylammonium bromide, nonyl-trimethylammonium bromide, decyl-trimethylammonium bromide, dodecyl-trimethylammonium bromide, tetradecyl-trimethylammonium bromide, hexadecyl-trimethylammonium bromide, octadecyl-trimethylammonium bromide, icosanyl-trimethylammonium bromide, octyl-benzyldimethylammonium bromide, nonyl-benzyldimethylammonium bromide, decyl-benzyldimethylammonium bromide, dodecylbenzyldimethylammonium bromide, tetradecyl-benzyldimethylammonium bromide, hexadecyl-benzyldimethylammonium bromide, octadecyl-benzyldimethylammonium bromide, icosanyl-benzyldimethylammonium bromide, octyl-dodecyl dimethylammonium bromide, nonyldodecyl dimethylammonium bromide, decyl-dodecyl dimethylammonium bromide, dodecyl-dodecyl dimethylammonium bromide, tetradecyl-dodecyl dimethylammonium bromide, hexadecyl-dodecyl dimethylammonium bromide, octadecyldodecyl dimethylammonium bromide, icosanyl-dodecyl dimethylammonium bromide, octyl-octadecyl dimethylammonium bromide, nonyl-octadecyl dimethylammonium bromide, decyl-octadecyl dimethylammonium bromide, dodecyl-octadecyl dimethylammonium bromide, tetradecyl-octadecyl dimethylammonium bromide, hexadecyl-octadecyl dimethylammonium bromide, octadecyl-octadecyl dimethylammonium bromide, icosanyl-octadecyl dimethylammonium bromide, dibutyl-dimethyl-ammonium chloride, dipentyl-dimethyl-ammonium chloride, dihexyl-dimethyl-ammonium chloride, dipentyl-dimethyl-ammonium chloride, dioctyl-dimethyl-ammonium chloride, dinonyl-dimethyl-ammonium chloride, didecyl-dimethyl-ammonium chloride, diundecyl-dimethyl-ammonium chloride, ditridecyl-dimethyl-ammonium chloride, ditetradecyl-dimethyl-ammonium chloride, dipentadecyl-dimethyl-ammonium chloride, dihexadecyl-dimethyl-ammonium chloride, diheptadecyl-dimethyl-ammonium chloride, dioctadecyl-dimethyl-ammonium chloride, dinonadecyl-dimethyl-ammonium chloride, diicosanyl-dimethyl-ammonium chloride, dibutyl-dimethyl-ammonium bromide, dipentyl-dimethyl-ammonium bromide, dihexyl-dimethyl-ammonium bromide, dipentyl-dimethyl-ammonium bromide, dioctyl-dimethylammonium bromide, dinonyl-dimethyl-ammonium bromide, didecyl-dimethyl-ammonium bromide, diundecyl-dimethylammonium bromide, ditridecyl-dimethyl-ammonium bromide, ditetradecyl-dimethyl-ammonium bromide, dipentadecyldimethyl-ammonium bromide, dihexadecyl-dimethyl-ammonium bromide, diheptadecyl-dimethyl-ammonium bromide, dioctadecyl-dimethyl-ammonium bromide, dinonadecyl-dimethyl-ammonium bromide, diicosanyl-dimethyl-ammonium bromide and so on.

Of the surfactants in which FG is represented by the general formula (316), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

[Chem. 73]

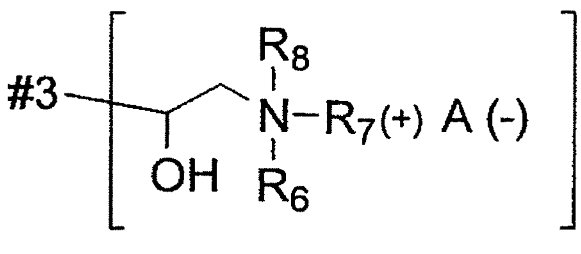

(3 1 7)

In the formula (317), A(-) is a halogen ion, a formate ion, an acetate ion, a sulfate ion, a hydrogen sulfate ion, a phosphate ion or a hydrogen phosphate ion; $R_6$ to $R_8$ each independently represent a hydrogen atom, a $C_{1-20}$ alkyl,

alkylaryl, alkylbenzyl, alkylcycloalkyl, alkylcycloalkylmethyl or cycloalkyl group, a phenyl group or a benzyl group; and #3 indicates a hand bonded to a carbon atom present in R in the formula (300).

[Chem. 74]

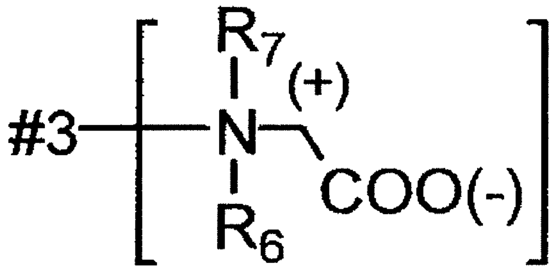

(3 1 8)

In the formula (318), $R_6$ and $R_7$ each independently represent a hydrogen atom, a $C_{1-20}$ alkyl, alkylaryl, alkylbenzyl, alkylcycloalkyl, alkylcycloalkylmethyl cycloalkyl group, a phenyl group or a benzyl group; and #3 indicates a hand bonded to R (a carbon atom present in R) in the formula (300) .

Examples of the surfactants wherein FG is represented by the general formula (318) include butyl-dimethyl betaine, pentyl-dimethyl betaine, hexyl-dimethyl betaine, heptyl-dimethyl betaine, octyl-dimethyl betaine, nonyl-dimethyl betaine, decyl-dimethyl betaine, undecyl-dimethyl betaine, dodecyl-dimethyl betaine, tetradecyl-dimethyl betaine, tridecyl-dimethyl betaine, pentadecyl-dimethyl betaine, hexadecyl-dimethyl betaine, heptadecyl-dimethyl betaine, octadecyl-dimethyl betaine, nonadecyl-dimethyl betaine, icosanyl-dimethyl betaine, butyl-benzylmethyl betaine, pentyl-benzylmethyl betaine, hexyl-benzylmethyl betaine, heptyl-benzylmethyl betaine, octyl-benzylmethyl betaine, nonyl-benzylmethyl betaine, decyl-benzylmethyl betaine, undecyl-benzylmethyl betaine, dodecyl-benzylmethyl betaine, tridecyl benzylmethyl betaine, tetradecyl benzylmethyl betaine, pentadecyl-benzylmethyl betaine, hexadecyl-benzylmethyl betaine, heptadecyl-benzylmethyl betaine, octadecyl-benzylmethyl betaine, nonadecyl-benzylmethyl betaine, icosanyl-benzylmethyl betaine, butyl-cyclohexyl methyl betaine, pentyl-cyclohexyl methyl betaine, hexyl-cyclohexyl methyl betaine, heptyl-cyclohexyl methyl betaine, octyl-cyclohexyl methyl betaine, nonyl-cyclohexyl methyl betaine, decyl-cyclohexyl methyl betaine, undecyl-cyclohexyl methyl betaine, dodecyl-cyclohexyl methyl betaine, tridecyl cyclohexyl methyl betaine, tetradecyl cyclohexyl methyl betaine, pentadecyl-cyclohexyl methyl betaine, hexadecyl-cyclohexyl methyl betaine, heptadecyl-cyclohexyl methyl betaine, octadecyl-cyclohexyl methyl betaine, nonadecyl-cyclohexyl methyl betaine, icosanyl-cyclohexyl methyl betaine, butyl-dodecyl methyl betaine, pentyl-dodecyl methyl betaine, hexyl-dodecyl methyl betaine, heptyl-dodecyl methyl betaine, octyl-dodecyl methyl betaine, nonyl-dodecyl methyl betaine, decyl-dodecyl methyl betaine, undecyl-dodecyl methyl betaine, dodecyl-dodecyl methyl betaine, tridecyl dodecyl methyl betaine, tetradecyl dodecyl methyl betaine, pentadecyl-dodecyl methyl betaine, hexadecyl-dodecyl methyl betaine, heptadecyl-dodecyl methyl betaine, octadecyl-dodecyl methyl betaine, nonadecyl-dodecyl methyl betaine, icosanyl-dodecyl methyl betaine, and adducts thereof such as hydrogen halide adduct, carvone adduct, ammonia adduct, amine adduct, alkali metal hydroxide adduct, and alkaline-earth metal hydroxide adduct and so on.

Of the surfactants in which FG is represented by the general formula (318), those compounds in which the organic residue has 6 to 100 carbon atoms are preferable. Those compounds in which the organic residue has 8 to 60 carbon atoms are more preferable, and those compounds in which the organic residue has 10 to 40 carbon atoms are still more preferable.

[Chem. 75]

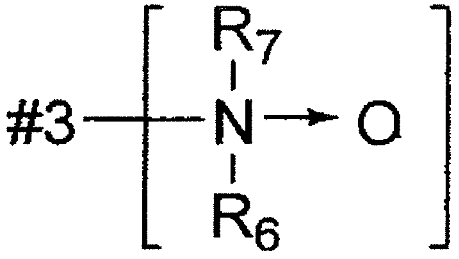

(3 1 9)

In the formula (319), $R_6$ and $R_7$ each independently represent a hydrogen atom, a $C_{1-20}$ alkyl, alkylaryl, alkylbenzyl, alkylcycloalkyl, alkylcycloalkylmethyl cycloalkyl group, a phenyl group or a benzyl group; and #3 indicates a hand bonded to a carbon atom present in R in the formula (300) . In the formula (319), N→O indicates a group expressed as $N^+$-$O^-$ or N=O.

Of the cationic surfactants in which FG is represented by any of the general formulas (314) to (319), those surfactants in which FG is represented by the general formula (316) or (318) are relatively preferable.

Another type of the surfactant (III) can be, for example, a betaine surfactant having a sulfonate group and an ammonium group. Examples thereof include dimethylethylammonium propanesulfonate, 3-(benzene dimethylammonio)propanesulfonate, 3-(N,N-dimethyllaurylammonio)propanesulfonate, 3-(N,N-dimethylmyristylammonio)propanesulfonate, 3-(N,N-dimethylpalmitylammonio)propanesulfonate, and 3-(N,N-dimethylstearylammonio)propanesulfonate.

The polymerizable composition (B) contains the surfactant (III) in an amount usually ranging from 0.0001 to 50 wt%, preferably from 0.001 to 20 wt%, and more preferably from 0.01 to 10 wt% relative to the total amount of the compound (I') and the compound (II). Such an amount of the surfactant (III) in the composition ensures that the hydrophilic groups derived from the compound (I') will be easily concentrated at the surface of a cured product produced by the polymerization of the composition. When, for example, the cured product is a monolayer film, the enrichment of the hydrophilic groups at the surface is facilitated. In the case where the polymerizable composition (A) contains the surfactant (III), the amount thereof is generally in the range of 0.0001 to 50 wt%, preferably 0.001 to 20 wt%, and more preferably 0.01 to 10 wt% relative to the total amount of the compound (I) and the compound (II).

The polymerizable composition (A) preferably contains a solvent having a solubility parameter $\sigma$ of not less than 9.1 $(cal/cm^3)^{1/2}$ in addition to the compound (I) and the composition (II). In the case where the polymerizable composition (A) containing such a solvent is used to form a coating film, the solvent is removed from the coating film to produce a monolayer film having a surface enriched with the hydrophilic groups derived from the compound (I).

Examples of the solvents which have a SP value in the preferred range include methanol, ethanol, 1-propanol, isopropanol (IPA), 1-butanol, isobutanol, 1-pentanol (1-amyl alcohol), isopentanol, 2-pentanol, 3-pentanol, cyclohexanol, 1-methoxy-2-propanol (methoxypropanol), 2-methoxy-1-propanol, 2-methoxy-1-ethanol (methoxyethanol), 2-isopropoxy-1-ethanol, acetonitrile and water. Of these solvents, primary alcohols having a SP value of not less than 9.0 $(cal/cm^3)$ such as methanol, ethanol, 1-propanol, 1-butanol and 1-pentanol (1-amyl alcohol), and alkoxy alcohols having a SP value of not less than 9.1 $(cal/cm^3)$ such as 1-methoxy-2-propanol (methoxypropanol), 2-methoxy-1-ethanol (methoxyethanol) and 2-isopropoxy-1-ethanol are more preferable.

The solubility parameter (SP value) can be herein easily calculated from the following simplified calculation method.

Equation for Calculating Solubility Parameter $\sigma$

1) Latent heat of vaporization per 1 mol Hb = 21 × (273 + Tb) (unit: cal/mol), Tb: boiling point (°C)
2) Latent heat of vaporization per 1 mol at 25°C H25 = Hb × {1 + 0.175 × (Tb - 25)/100} (unit: cal/mol), Tb: boiling point (°C)
3) Intermolecular binding energy E = H25 - 596 (unit: cal/mol)
4) Intermolecular binding energy per 1 ml $(cm^3)$ of solvent E1 = E × D/Mw (unit: $cal/cm^3$), D: density $(g/cm^3)$, MW: molecular weight
5) Solubility parameter (SP value) $\sigma = (E1)^{1/2}$ (unit: $cal/cm^3)^{1/2}$

In the case where the polymerizable composition (B) contains the surfactant (III) as well as the compound (I') and the compound (II), a cured product having a surface enriched with hydrophilic groups can be produced without addition of a solvent to the composition. In view of workability when a cured product, such as a monolayer film, is formed

of the composition, the polymerizable composition (B) may contain a solvent.

In the case where the polymerizable composition (B) has a relatively large solvent content (low solid content), using only a solvent of low polarity in a large quantity may cause separation of the compound (I') or the compound (II), which make it impossible to produce a composition having uniform constitution in some cases. Application of such a composition to a substrate may lead to formation of a coating film having non-uniform constitution. Hence, in view of solubility, using at least one solvent of high polarity is likely to be preferred. Such a solvent of high polarity is preferably a solvent having a solubility parameter (SP value) $\sigma$ of not less than 9.1 $(cal/cm^3)^{1/2}$. Examples of such a solvent having a solubility parameter (SP value) $\sigma$ of not less than 9.1 $(cal/cm^3)^{1/2}$ include the above-mentioned compounds.

The solvents that can be contained in the polymerizable composition (A) or (B) are not particularly limited as long as the composition can give cured products having a hydrophilic surface. It is, however, not preferable to use solvents which have excessively strong interactions with the constituents present in the monomer composition in the invention, for example, solvents which can react or form salts with the constituents, or to use solvents having an excessively high boiling point, for example, solvents having a boiling point of above 200°C. For example, ethanolamine compounds having a hydroxyethylamino structure [$NRaRb(CH_2CH_2OH)$: Ra and Rb are each independently hydrogen, a $C_{1-15}$ alkyl group or a $CH_2CH_2OH$ group] are prone to interact with the hydrophilic groups present in the compound (I), for example, the anionic hydrophilic groups such as the sulfonate groups to form a salt or a pseudo salt, and are difficult to evaporate. When an attempt is made to remove such a solvent from the mixture applied, the solvent barely moves to the surface in contact with the air and tends to remain in the inside. Consequently, the hydrophilic groups present in the compound (I) or in the compound (I') tend to be prevented from being enriched (concentrated) at the surface of the coating in contact with the air. Thus, such ethanolamine compounds are not suited for use as the solvents. Examples of such compounds include ethanolamine, diethanolamine, triethanolamine, N-ethyl-ethanolamine, N-(2-ethylhexyl)ethanolamine, N-butyl-diethanolamine, N-hexyl-diethanolamine, N-lauryl-diethanolamine and N-cetyl-diethanolamine.

The amount of the solvent that is to be contained in the polymerizable composition (A) or (B) can be appropriately determined in view of, for instance, the physical properties and economic efficiency of the monolayer film obtained in the present invention. The concentration of the solid content in the polymerizable composition (A) or (B) (total amount of the compound (I) or (I'); (II); (III); and optionally an alkoxysilane compound, silica particles, and additives that will be all described later) (solid content/(solid content + solvent content) $\times$ 100) is generally not less than 1 wt%, preferably from 10 to 90 wt%, more preferably from 20 to 80 wt%, and further preferably from 30 to 70 wt%.

The composition used in the present invention may optionally further contain additional components.

Examples of the additional components include alkoxysilane compounds. Addition of an alkoxysilane compound to the composition used in the present invention enables an enhancement in the hardness of the film.

Examples of the alkoxysilane compound include vinyltrimethoxysilane, vinyltriethoxysilane, 2-(3,4-epoxycyclohexyl)ethyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2(aminoethyl)3-aminopropylmethyldimethoxysilane, N-2(aminoethyl)3-aminopropyltrimethoxysilane, N-2(aminoethyl)3-aminopropyltriethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane hydrochloride, 3-ureidopropyltriethoxysilane, 3-chloropropyltrimethoxysilane, 3-mercaptopropylmethyldimethoxysilane, 3-mercaptopropyltrimethoxysilane, bis(triethoxysilylpropyl)tetrasulfide, 3-isocyanatopropyltriethoxysilane, tetramethoxysilane, tetraethoxysilane, methyltrimethoxysilane, methyltriethoxysilane, dimethyldiethoxysilane, phenyltriethoxysilane, hexamethyldisilazane, hexyltrimethoxysilane, and decyltrimethoxysilane.

Compounds produced through hydrolysis or condensation of the above-mentioned alkoxysilane compounds may be used as the additional components.

Other examples of the additional components include silica particles. Addition of silica particles to the composition used in the present invention leads to an improvement in leveling properties and production of matte effects (control of gloss).

In the polymerizable composition (A) or (B), the silica particles are usually present in the range of 0.00001 to 50 wt%, preferably in the range of 0.0001 to 30 wt%, and more preferably 0.001 to 20 wt%.

Examples of the additional components other than the alkoxysilane compounds and the silica particles which may be added to the polymerizable composition (A) or (B) include such additives as polymerization initiators, polymerization accelerators, UV absorbers, hindered amine light stabilizers (HALSs), solvents, catalysts, infrared absorbers, radical scavengers, internal mold release agents, antioxidants, polymerization inhibitors, dyes, binders, dispersants and leveling agents.

For the production of the inventive monolayer films from the polymerizable composition (A) or (B), the composition is cured. When the composition is cured with radiations such as UV lights, a photopolymerization initiator is preferably added to the mixture. In the case of thermal polymerization, a thermal polymerization initiator is preferably added.

Examples of the photopolymerization initiators include photo radical polymerization initiators, photo cationic polymerization initiators and photo anionic polymerization initiators. Of these photopolymerization initiators, photo radical polymerization initiators are preferable.

Examples of the photo radical polymerization initiators include IRGACURE 127 (manufactured by Ciba Specialty Chemicals Inc.), IRGACURE 651 (manufactured by Ciba Specialty Chemicals Inc.), IRGACURE 184 (manufactured by Ciba Specialty Chemicals Inc.), DAROCUR 1173 (manufactured by Ciba Specialty Chemicals, Inc.), benzophenone, 4-phenylbenzophenone, IRGACURE 500 (manufactured by Ciba Specialty Chemicals Inc.), IRGACURE 2959 (manufactured by Ciba Specialty Chemicals Inc.), IRGACURE 907 (manufactured by Ciba Specialty Chemicals Inc.), IRGACURE 369 (manufactured by Ciba Specialty Chemicals Inc.), IRGACURE 1300 (manufactured by Ciba Specialty Chemicals Inc.), IRGACURE 819 (manufactured by Ciba Specialty Chemicals Inc.), IRGACURE 1800 (manufactured by Ciba Specialty Chemicals Inc.), DAROCUR TPO (manufactured by Ciba Specialty Chemicals Inc.), DAROCUR 4265 (manufactured by Ciba Specialty Chemicals Inc.), IRGACURE OXE01 (manufactured by Ciba Specialty Chemicals, Inc.), IRGACURE OXE02 (manufactured by Ciba Specialty Chemicals Inc.), ESACURE KT55 (manufactured by Lamberti S.P.A.), ESACURE ONE (manufactured by Lamberti S.P.A.), ESACURE KIP150 (manufactured by Lamberti S.P.A.), ESACURE KIP100F (manufactured by Lamberti S.P.A.), ESACURE KT37 (manufactured by Lamberti S.P.A.), ESACURE KTO46 (manufactured by Lamberti S.P.A.), ESACURE 1001M (manufactured by Lamberti S.P.A.), ESACURE KIP/EM (manufactured by Lamberti S.P.A.), ESACURE DP250 (manufactured by Lamberti S.P.A.), ESACURE KB1 (manufactured by Lamberti S.P.A.) and 2,4-diethylthioxanthone.

Of the above photo polymerization initiators, for example, IRGACURE 127 (manufactured by Ciba Specialty Chemicals Inc.), IRGACURE 184 (manufactured by Ciba Specialty Chemicals Inc.), DAROCUR 1173 (manufactured by Ciba Specialty Chemicals Inc.), IRGACURE 500 (manufactured by Ciba Specialty Chemicals Inc.), IRGACURE 819 (manufactured by Ciba Specialty Chemicals Inc.), DAROCUR TPO (manufactured by Ciba Specialty Chemicals Inc.), ESACURE ONE (manufactured by Lamberti S.P.A.), ESACURE KIP100F (manufactured by Lamberti S.P.A.), ESACURE KT37 (manufactured by Lamberti S.P.A.) and ESACURE KTO46 (manufactured by Lamberti S.P.A.) are preferable.

Examples of the photo cationic polymerization initiators include IRGACURE 250 (manufactured by Ciba Specialty Chemicals Inc.), IRGACURE 784 (manufactured by Ciba Specialty Chemicals Inc.), ESACURE 1064 (manufactured by Lamberti S.P.A.), CYRAURE UVI6990 (manufactured by Union Carbide Corp. Japan), ADEKA OPTOMER SP-172 (manufactured by ADEKA CORPORATION), ADEKA OPTOMER SP-170 (manufactured by ADEKA CORPORATION), ADEKA OPTOMER SP-152 (manufactured by ADEKA CORPORATION) and ADEKA OPTOMER SP-150 (manufactured by ADEKA CORPORATION).

Examples of the thermal polymerization initiators include:

ketone peroxides such as methyl isobutyl ketone peroxide and cyclohexanone peroxide;
diacyl peroxides such as isobutyryl peroxide, o-chlorobenzoyl peroxide and benzoyl peroxide;
dialkyl peroxides such as tris(t-butylperoxy)triazine and t-butylcumyl peroxide;
peroxyketals such as 2,2-bis(4,4-di-t-butylperoxycyclohexyl)propane and 2,2-di(t-butylperoxy)butane;
alkyl peresters such as $\alpha$-cumyl peroxyneodecanoate, t-butyl peroxypivalate, 2,4,4-trimethylpentyl peroxy-2-ethylhexanoate, t-butyl peroxy-2-ethylhexanoate and t-butyl peroxy-3,5,5-trimethylhexanoate; and
percarbonates such as di-3-methoxybutyl peroxydicarbonate, bis(4-t-butylcyclohexyl) peroxydicarbonate, t-butyl peroxyisopropyl carbonate and diethylene glycol bis(t-butyl peroxycarbonate).

The amount of the photopolymerization initiators and the thermal polymerization initiators is preferably in the range of 0.1 to 20 wt%, more preferably in the range of 0.5 to 10 wt%, and still more preferably in the range of 1 to 5 wt% relative to the total of the compounds (I) and (II) or of the compounds (I') and (II).

The photopolymerization initiators may be used in combination with photopolymerization accelerators. Examples of the photopolymerization accelerators include 2,2-bis(2-chlorophenyl)-4,5'-tetraphenyl-2'H-<1,2'>biimidazolyl, tris(4-dimethylaminophenyl)methane, 4,4'-bis(dimethylamino)benzophenone, 2-ethylanthraquinone and camphorquinone.

To ensure that the inventive monolayer films used as, for example, optical functional films such as antireflection films will not be denatured even by prolonged exposure to the outdoor, it is desirable to impart weather resistance to the composition of the invention by the addition of a UV absorber and/or a hindered amine light stabilizer.

The UV absorbers are not particularly limited. Various UV absorbers may be used, with examples including benzotriazole UV absorbers, triazine UV absorbers, benzophenone UV absorbers, benzoate UV absorbers, propanedioate ester UV absorbers and oxanilide UV absorbers.

Examples of the UV absorbers include benzotriazole UV absorbers such as 2-(2H-benzotriazol-2-yl)-p-cresol, 2-(2H-benzotriazol-2-yl)-4-tert-butylphenol, 2-(2H-benzotriazol-2-yl)-4,6-di-tert-butylphenol, 2-(2H-benzotriazol-2-yl)-4,6-bis(1-methyl-1-phenylethyl)phenol, 2-(2H-benzotriazol-2-yl)-4-(1,1,3,3-tetramethylbutyl)-6-(1-methyl-1-phenylethyl)phenol, 2-(2H-benzotriazol-2-yl)-4-(3-on-4-oxa-dodecyl)-6-tert-butylphenol, 2-{5-chloro(2H)-benzotriazol-2-yl}-

4-(3-on-4-oxa-dodecyl)-6-tert-butyl-phenol, 2-{5-chloro(2H)-benzotriazol-2-yl}-4-methyl-6-tert-butyl-phenol, 2-(2H-benzotriazol-2-yl)-4,6-di-tert-pentylphenol, 2-{5-chloro(2H)-benzotriazol-2-yl}-4,6-di-tert-butylphenol, 2-(2H-benzotriazol-2-yl)-4-tert-octylphenol, 2-(2H-benzotriazol-2-yl)-4-methyl-6-n-dodecylphenol, and methyl-3-{3-(2H-benzotriazol-2-yl)-5-tert-butyl-4-hydroxyphenyl} propionate/polyethylene glycol 300 reaction product;

triazine UV absorbers such as 2-(4-phenoxy-2-hydroxyphenyl)-4,6-diphenyl-1,3,5-triazine, 2-(2-hydroxy-4-oxa-hexadecyloxy)-4,6-di(2,4-dimethyl-phenyl)-1,3,5-triazine, 2-(2-hydroxy-4-oxa-heptadecyloxy)-4,6-di(2,4-dimethyl-phenyl)-1,3,5-triazine, 2-(2-hydroxy-4-iso-octyloxy-phenyl)-4,6-di(2,4-dimethyl-phenyl)-1,3,5-triazine, TINUVIN 400 (trade name, manufactured by Ciba Specialty Chemicals, Inc.), TINUVIN 405 (trade name, manufactured by Ciba Specialty Chemicals, Inc.), TINUVIN 460 (trade name, manufactured by Ciba Specialty Chemicals, Inc.) and TINUVIN 479 (trade name, manufactured by Ciba Specialty Chemicals, Inc.);

benzophenone UV absorbers such as 2-hydroxy-4-n-octoxybenzophenone;

benzoate UV absorbers such as 2,4-di-tert-butylphenyl-3,5-di-tert-butyl-4-hydroxybenzoate;

propanedioate ester UV absorbers such as {(4-methoxyphenyl)-methylene}-dimethyl propanedioate ester, HOSTAVIN PR-25 (trade name, manufactured by Clariant (Japan) K.K.) and HOSTAVIN B-CAP (trade name, manufactured by Clariant (Japan) K.K.); and

oxanilide UV absorbers such as 2-ethyl-2'-ethoxy-oxanilide and Sanduvor VSU (trade name, manufactured by Clariant (Japan) K.K.). Of these UV absorbers, triazine UV absorbers tend to be preferable.

The hindered amine light stabilizers (written as HALSs) are a general term for compounds which usually have a 2,2,6,6-tetramethylpiperidine skeleton, and are broadly categorized according to molecular weight into low-molecular weight HALSs, medium-molecular weight HALSs, high-molecular weight HALSs and reactive HALSs. Examples of the hindered amine light stabilizers include TINUVIN 111FDL (trade name, (manufactured by Ciba Specialty Chemicals Inc.), bis(1-octyloxy-2,2,6,6-tetramethyl-4-piperidyl) sebacate (TINUVIN 123 (trade name, manufactured by Ciba Specialty Chemicals Inc.)), TINUVIN 144 (trade name, manufactured by Ciba Specialty Chemicals Inc.), TINUVIN 292 (trade name, manufactured by Ciba Specialty Chemicals Inc.), TINUVIN 765 (trade name, manufactured by Ciba Specialty Chemicals Inc.), TINUVIN 770 (trade name, manufactured by Ciba Specialty Chemicals Inc.), N,N'-bis(3-aminopropyl)ethylenediamine-2,4-bis[N-butyl-N-(1,2,2,6,6-pentamethyl-4-piperidyl)amino] -6-chloro-1,3,5-triazine condensate (CHIMASSORB 119FL (trade name, manufactured by Ciba Specialty Chemicals Inc.)), CHIMASSORB 2020FDL (trade name, manufactured by Ciba Specialty Chemicals Inc.), dimethyl succinate-1-(2-hydroxyethyl)-4-hydroxy-2,2,6,6-tetramethylpiperidine polycondensate (CHIMASSORB 622LD (trade name, manufactured by Ciba Specialty Chemicals Inc.)), poly[{6-(1,1,3,3-tetramethyl-butyl)amino-1,3,5-triazine-2,4-diyl}{(2,2,6,6-tetramethyl-4-piperidyl)imino}hexamethylene{(2,2,6,6-tetramethyllauryl-4-piperidyl)imino}] (CHIMASSORB 944FD (trade name, manufactured by Ciba Specialty Chemicals Inc.)), Sanduvor 3050 Liq. (trade name, manufactured by Clariant (Japan) K.K.), Sanduvor 3052 Liq. (trade name, (manufactured by Clariant (Japan) K.K.), Sanduvor 3058 Liq. (trade name, manufactured by Clariant (Japan) K.K.), Sanduvor 3051 Powder. (trade name, manufactured by Clariant (Japan) K.K.), Sanduvor 3070 Powder. (trade name, manufactured by Clariant (Japan) K.K.), VP Sanduvor PR-31 (trade name, manufactured by Clariant (Japan) K.K.), HOSTAVIN N20 (trade name, manufactured by Clariant (Japan) K.K.), HOSTAVIN N24 (trade name, manufactured by Clariant (Japan) K.K.), HOSTAVIN N30 (trade name, manufactured by Clariant (Japan) K.K.), HOSTAVIN N321 (trade name, manufactured by Clariant (Japan) K.K.), HOSTAVIN PR-31 (trade name, manufactured by Clariant (Japan) K.K.), HOSTAVIN 845 (trade name, manufactured by Clariant (Japan) K.K.) and NYLOSTAB S-EED (trade name, manufactured by Clariant (Japan) K.K.).

The UV absorber and the hindered amine light stabilizer may be added in any amounts without limitation. The amount of the UV absorber is usually 0.1 to 20 wt%, and preferably 0.5 to 10 wt%, and the amount of the hindered amine light stabilizer is usually 0.1 to 10 wt%, preferably 0.5 to 5 wt%, and more preferably 1 to 3 wt% relative to the total of the compounds (I) and (II) or of the compounds (I') and (II). These amounts of the UV absorber and the hindered amine light stabilizer ensure that the composition of the invention will give hydrophilic cured products, for example, monolayer films that exhibit markedly improved weather resistance. The UV absorber and the hindered amine light stabilizer added in amounts below the above ranges tend to produce only small effects in the enhancement of the weather resistance of the obtainable hydrophilic cured products, for example, monolayer films. On the other hand, adding the UV absorber and the hindered amine light stabilizer in amounts exceeding the above ranges may result in insufficient polymerization of the monomer composition.

Where necessary, the polymerizable composition may contain additives other than those additives described hereinabove. For example, additives such as titanium oxides, metals and metal oxides may be added to the inventive composition for purposes such as enhancing the mechanical and thermal strengths of the obtainable hydrophilic cured products, and imparting properties such as photoresponsive properties and bactericidal properties. For purposes such as increasing the refractive index of the obtainable hydrophilic cured products, sulfur-containing compounds may be added. For purposes such as imparting bactericidal properties and antibacterial properties, salts of metals such as silver and lithium, and such materials as iodine and iodonium salts may be added to the composition. The amount of these additives may be determined appropriately in accordance with the purpose, but is usually in the range of 0.01 to 200

wt%, and preferably in the range of 0.1 to 100 wt% relative to the total of the compound (I) and the compound (II) or of the compound (I') and the compound (II).

[Method for Producing Monolayer Film]

The monolayer of the present invention can be produced, for example, as follows.

In production of the monolayer film of the present invention, the polymerizable composition (A) or (B) is generally used to form a coating film. The coating film is desirably formed by a step of forming a coating film of the polymerizable composition (A) or (B).

In the case where the polymerizable composition (A) or (B) containing a solvent is used to form the coating film, the solvent is desirably removed by a step of removing the solvent after the formation of the coating film. As a result, the hydrophilic groups derived from the compound (I) or the compound (I') are more likely to move to the ambient-air side surface of the coat. Even when the hydrophilic groups move to the surface of the coat that is in contact with ambient air, the presence of the solvent in the composition causes the counter effect with air (hydrophobic) that is present in the surface that is in contact with ambient air, and the hydrophilic groups are therefore more likely to move to the inside of the coat. Hence, the concentration of the hydrophilic groups at the ambient-air side surface of a hydrophilic cured product to be produced, such as a monolayer film, is insufficient in some cases; in addition, the hydrophilicity thereof may be reduced, and also its adherence to the substrate tends to be reduced. Accordingly, the residual solvent content in the composition immediately before the polymerization is likely to be preferably small; it is generally not more than 10 wt%, preferably not more than 5 wt%, more preferably not more than 3 wt%, and further preferably not more than 1 wt%.

The temperature during the removal of the solvent may be determined appropriately, but is usually in the range of room temperature to 200°C, preferably in the range of 30 to 150°C, and more preferably 40 to 120°C.

The removal of the solvent from the composition may be performed for an appropriately determined time. In consideration of productivity, a shorter time tends to be preferable. For example, the solvent removal is usually performed for not more than 30 minutes, preferably not more than 10 minutes, more preferably not more than 5 minutes, still more preferably not more than 3 minutes, and particularly preferably not more than 2 minutes. The solvent removal may take place in the air atmosphere or in an inert gas such as nitrogen. An atmosphere having a lower humidity tends to be more preferable for reasons such as that the obtainable hydrophilic cured products (for example, monolayer films) are free from deteriorations in appearance (such as the occurrence of orange peels, and a decrease in transparency). Specifically, the humidity in the atmosphere is preferably not more than 80%, more preferably not more than 65%, and still more preferably not more than 55%.

When the solvent is removed by the application of wind, the wind speed is preferably not more than 30 m/sec, more preferably in the range of 0.1 to 30 m/sec, still more preferably in the range of 0.2 to 20 m/sec, and particularly preferably in the range of 0.3 to 10 m/sec.

The pressure during the solvent removal is not particularly limited. Normal pressure or a reduced pressure is relatively preferable. A slightly increased pressure may also be used.

After the step of forming the coating film and the optional step of removing a solvent, the depressions and protrusions are generally formed on the surface of the coating film so as to give the intended depressions and protrusions to a monolayer film that is to be produced by curing. The depressions and protrusions are desirably formed by a step of bringing a shaping die with a pattern corresponding to the intended depressions and protrusions into close contact with the surface of the coating film to transfer the pattern to the surface of the coating film. The shaping die (mold) generally has a fine pattern of depressions and protrusions in which the intervals between the depressions and between the protrusions have been controlled to be less than or equal to the wavelength of visible light, and the pattern side of the shaping die is brought into contact with the coating film to transfer the pattern to the surface of the coating film; in this state, a step of curing the coating film, which will be described later, is preferably performed (also referred to as nanoimprinting). In the nanoimprinting, for instance, the coating film can be brought into contact with the shaping die from the center to the outside as follows to accurately transfer the pattern of depressions and protrusions of the shaping die to the coating film: coating film is first brought into contact with the center of the pattern side of the shaping die, and the coating film and the pattern side come in close contact with each other with the aid of capillary action, and the shaping die and the coating film are further brought into contact with each other from the center to the outside such that air is released to the outside of the shaping die.

Examples of other conditions of the nanoimprinting include compressing the shaping die and the coating film in a contact state under vacuum and compressing them under vacuum and application of a predetermined load.

Such application of a load can be in any manner; for example, the load can be applied by use of gas pressure.

In the case where a shaping die is used to give the structure of depressions and protrusions to the surface of the coating film and where a step of curing the coating film, which will be described later, involves exposure to radiations, the shaping die is desirably formed of a material through which the radiations can pass.

In the formation of the depressions and protrusions on the surface of the coating film, it is desirable that the

surface of the coating film be treated with the compound (I') contained in the polymerizable composition (B) or with the compound (IV) having at least one hydrophilic group selected from an anionic hydrophilic group and a cationic hydrophilic group and at least one group selected from an amino group, a mercapto group, and a hydroxyl group and that the surface of the coating film of the monolayer film to be produced be thus in a state of being surface-treated with the composition (I') or (IV). Such a surface treatment of the coating film can be carried out by, for example, applying the composition (I') or (IV) to the surface of the pattern of the shaping die, which corresponds to the depressions and protrusions, and then bringing the shaping die into close contact with the surface of the coating film to transfer the pattern thereto.

In the case where the surface of the coating film for the monolayer film is treated with the compound (I') or (IV) in this manner, high concentration of the hydrophilic groups (for example, anionic hydrophilic groups) existing at or near the surface of the coating film are easily miscible with the compound (I') or (IV); hence, the hydrophilic groups (for example, anionic hydrophilic groups) are presumed to be able to be present at enhanced concentration by grafting carbon-carbon double bonds existing near the surface of the coating film. Accordingly, the concentration of the hydrophilic groups (for example, anionic hydrophilic groups) at and near the surface is readily further increased, and the hydrophilicity is therefore greatly enhanced; in addition, even in the case where the surface is somewhat degraded or damaged, the hydrophilic groups (for example, anionic hydrophilic groups) existing near and inside the surface supports the surface, which suppresses a reduction in the hydrophilicity (enhances durability). Moreover, such a treatment is likely to enable production of a monolayer film with well-balanced physical properties such as hydrophilicity and transparency.

Examples of the compound (IV) include compounds represented by the general formulas (1) and (3) to (9).

[Chem. 76]

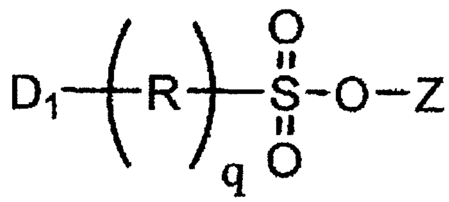

(1)

In the formula (1), $D_1$ represents a mercapto group, an amino group, a methylamino group, or an ethylamino group; and Z represents a hydrogen ion, an ammonium ion, an amine ion, an alkali metal ion, or an alkaline earth metal ion having 1/2 atomic valence. R is a $C_{1-600}$ divalent aliphatic hydrocarbon group optionally containing one or more groups selected from an aromatic ring, an alicyclic group, an ether group, and an ester group. q represents 0 or 1.

[Chem. 77]

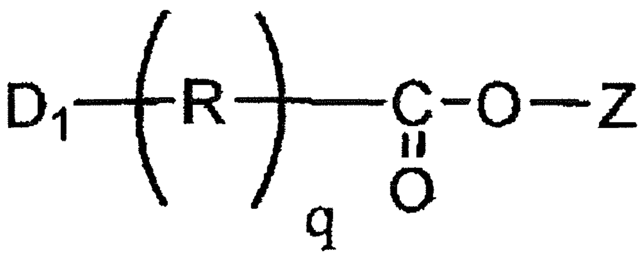

(3)

In the formula (3), $D_1$ represents a mercapto group, an amino group, a methylamino group, or an ethylamino group; and Z represents a hydrogen ion, an ammonium ion, an amine ion, an alkali metal ion, or an alkaline earth metal ion having 1/2 atomic valence. R is a $C_{1-600}$ divalent aliphatic hydrocarbon group optionally containing one or more groups selected from an aromatic ring, an alicyclic group, an ether group, and an ester group. q represents 0 or 1.

[Chem. 78]

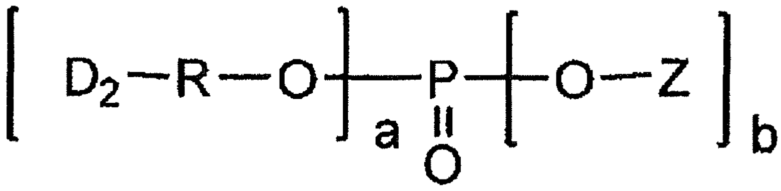

(4)

In the formula (4), $D_2$ represents a mercapto group, an amino group, a methylamino group, or an ethylamino group; and Z represents a hydrogen ion, an ammonium ion, an amine ion, an alkali metal ion, or an alkaline earth metal ion having 1/2 atomic valence. R is a $C_{1-600}$ divalent aliphatic hydrocarbon group optionally containing one or more groups selected from an aromatic ring, an alicyclic group, an ether group, and an ester group. a and b each represent an integer of 1 or 2 and satisfy the relationship of a + b = 3. In the case where a is 2, $D_2$s may be the same as or different from each other, and Rs may be the same as or different from each other. In the case where b is 2, Zs may be the same as or different from each other.

[Chem. 79]

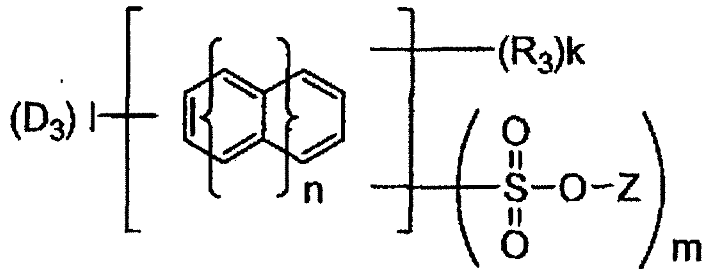

(5)

In the formula (5), $D_3$, $R_3$, and $SO_3Z$ are groups bonded to carbon atoms on the ring in the formula; $D_3$ independently at each occurrence represents a mercapto group, an amino group, a methylamino group, an ethylamino group, or a hydroxyl group; Z represents a hydrogen ion, an ammonium ion, an amine ion, an alkali metal ion, or an alkaline earth metal ion having 1/2 atomic valence; and $R_3$ independently at each occurrence represents a hydrogen atom, a methyl group, an ethyl group, a methoxy group, an ethoxy group, a fluorine atom, a chlorine atom, a bromine atom, or an iodine atom. k is an integer from 0 to 10, and 1 and m independently represent an integer from 1 to 11, where they satisfy the relationship of k + 1 + m = 2 to 6 + 2n. n is an integer from 0 to 3. In the case where 1 is 2 or greater, $D_3$s may be the same as or different from each other; in the case where k is 2 or greater, $R_3$s may be the same as or different from each other; and in the case where m is 2 or greater, Zs may be the same as or different from each other. The compounds represented by the general formula (1) are desirably excluded from the category of the compounds represented by the formula (5) .

[Chem. 80]

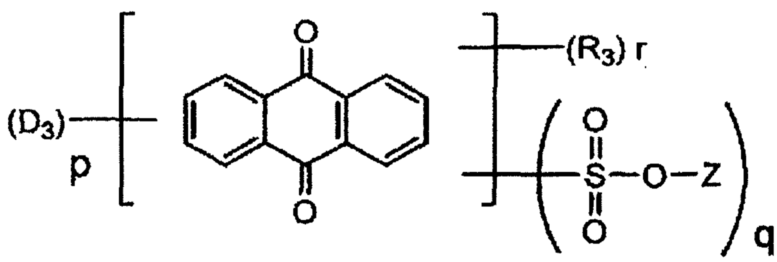

(6)

In the formula (6), $D_3$, $R_3$, and $SO_3Z$ are groups bonded to carbon atoms on the ring in the formula; $D_3$ independently at each occurrence represents a mercapto group, an amino group, a methylamino group, an ethylamino group, or a hydroxyl group; Z represents a hydrogen ion, an ammonium ion, an amine ion, an alkali metal ion, or an alkaline earth metal ion having 1/2 atomic valence; and $R_3$ independently at each occurrence represents a hydrogen atom, a methyl group, an ethyl group, a methoxy group, an ethoxy group, a fluorine atom, a chlorine atom, a bromine atom, or an iodine atom. r is an integer from 0 to 6, and q and p independently represent an integer from 1 to 7 where they satisfy the relationship of p + q + r = 2 to 8. In the case where p is 2 or greater, $D_3$s may be the same as or different from each other; in the case where r is 2 or greater, $R_3$s may be the same as or different from each other; and in the case where q is 2 or greater, Zs may be the same as or different from each other.
Such compounds are used.

The letters k, 1, m and n in the formula (5) above will be described. The letter n is an integer of 0 to 3. When n = 0, k is an integer of 0 to 4, 1 and m are each independently an integer of 1 to 5, and k + 1 + m is an integer of 2 to 6. When n = 1, k is an integer of 0 to 6, 1 and m are each independently an integer of 1 to 7, and k + 1 + m is an integer of 2 to 8. When n = 2, k is an integer of 0 to 8, 1 and m are each independently an integer of 1 to 9, and k + 1 + m is an integer of 2 to 10. When n = 3, k is an integer of 0 to 10, 1 and m are each independently an integer of 1 to 11, and k + 1 + m is an integer of 2 to 12.

Among the compounds represented by the general formula (1), a preferred compound is any of compounds represented by the general formula (7).

[Chem. 81]

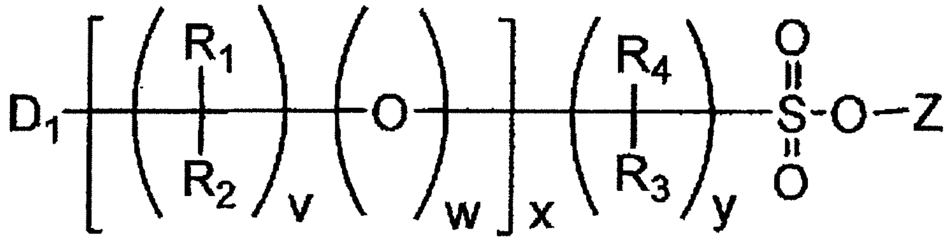

(7)

In the formula (7), $D_1$ represents a mercapto group, an amino group, a methylamino group, or an ethylamino group; and Z represents a hydrogen ion, an ammonium ion, an amine ion, an alkali metal ion, or an alkaline earth metal ion having 1/2 atomic valence. $R_1$ to $R_4$ each independently represent a hydrogen atom, a $C_{1-6}$ alkyl group, or a $C_{1-6}$ alkoxy group. v and y independently represent an integer from 0 to 10, w represents 0 or 1 (where in the case where any of v and y is 0, w is 0 as well). x represents an integer from 0 to 10. In the case where v is 2 or greater, $R_1$s may be the same as or different from each other, and $R_2$s may be the same as or different from each other; in the case where y is 2 or greater, $R_3$s may be the same as or different from each other, and $R_4$s may be the same as or different from each other. In the case where x is 2 or greater, $R_1$s may be the same as or different from each other, and $R_2$s may be the same as or different from each other.

Among the compounds represented by the general formula (7), compounds in which the relationship of v = w = x = 0 is given and y is an integer from 1 to 10 are preferred, and compounds in which the relationship of v = w = x = 0 is given and y is an integer from 1 to 3 are more preferred.

Representative examples of the compounds represented by the general formula (7) include sodium 2-mercaptoethylsulfonate, sodium 3-mercaptopropylsulfonate, 8-mercapto-3,6-dioxaoctylsulfonic acid, aminomethanesulfonic acid, sodium aminomethanesulfonate, potassium aminomethanesulfonate, taurine, taurine sodium salt, taurine potassium salt, sodium 2-methylamino-ethanesulfonate, and sodium 2-ethylamino-ethanesulfonate.

Among the compounds represented by the general formula (3), a preferred compound is any of compounds represented by the general formula (8).

[Chem. 82]

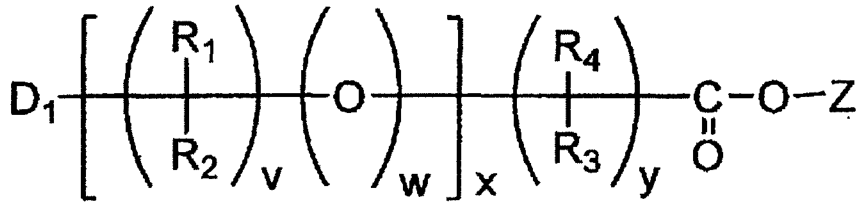

(8)

In the formula (8), $D_1$ represents a mercapto group, an amino group, a methylamino group, or an ethylamino group; and Z represents a hydrogen ion, an ammonium ion, an amine ion, an alkali metal ion, or an alkaline earth metal ion having 1/2 atomic valence. $R_1$ to $R_4$ each independently represent a hydrogen atom, a $C_{1-6}$ alkyl group, or a $C_{1-6}$ alkoxy group. v and y independently represent an integer from 0 to 10, w represents 0 or 1 (where in the case where any of v and y is 0, w is 0 as well). x represents an integer from 0 to 10. In the case where v is 2 or greater, $R_1$s may be the same as or different from each other, and $R_2$s may be the same as or different from each other; in the case where y is 2 or greater, $R_3$s may be the same as or different from each other, and $R_4$s may be the same as or different from each other. In the case where x is 2 or greater, $R_1$s may be the same as or different from each other, and $R_2$s may be the same as or different from each other.

Examples of preferred embodiments of the compounds represented by the general formula (8) include compounds that satisfy the relationship of v = w = x0.

Representative examples of the compounds represented by the general formula (8) include thioglycolic acid, sodium thioglycolate, 3-mercaptopropionic acid, sodium 3-mercaptopropionate, L-aspartic acid, potassium L-aspartate, sodium D-aspartate, sodium β-alanine, potassium L-arginine, sodium glycine, sodium L-glutamatepotassium L-cystine, potassium L-serine, and sodium glycylglycine.

Among the compounds represented by the general formula (4), a preferred compound is any of compounds represented by the general formula (9).

[Chem. 83]

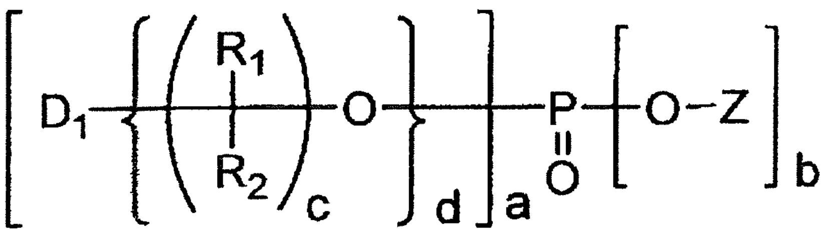

(9)

In the formula (9), $D_1$ represents a mercapto group, an amino group, a methylamino group, or an ethylamino group; and Z represents a hydrogen ion, an ammonium ion, an amine ion, an alkali metal ion, or an alkaline earth metal ion having 1/2 atomic valence. $R_1$ and $R_2$ each independently represent a hydrogen atom, a $C_{1-6}$ alkyl group, or a $C_{1-6}$ alkoxy group. a and b each represent 1 or 2 and satisfy the relationship of a + b = 3. c represents an integer from 1 to 20, and d represents an integer from 1 to 10. In the case where c is 2 or greater, $R_1$s may be the same as or different from each other, and $R_2$s may be the same as or different from each other; in the case where d is 2 or greater, $R_1$s may be the same as or different from each other, and $R_2$s may be the same as or different from each other. In the case where a is 2, $D_1$s may be the same as or different from each other, $R_1$s may be the same as or different from each other, and $R_2$s may be the same as or different from each other. In the case where b is 2, Zs may be the same as or different from each other.

Examples of the compounds represented by the general formula (5) include 3-aminobenzenesulfonic acid, sodium 4-aminobenzenesulfonate, 5-aminotoluene-2-sulfonic acid, sodium 4-amino-3-methoxybenzenesulfonate, potassium 3-amino-4-methoxybenzenesulfonate, monopotassium 7-amino-1,3-naphthalenedisulfonate, monosodium 8-amino-1,3-naphthalenedisulfonate, disodium 7-amino-1,3,6-naphthalenetrisulfonate, trisodium 8-amino-1,3,6-naphthalenetrisulfonate, sodium 4-hydroxybenzenesulfonate, potassium 4-hydroxy-3-methoxybenzenesulfonate, disodium 1,2-dihydroxy-3,5-benzenedisulfonate, dipotassium 2-hydroxy-6,8-naphthalenesulfonate, and trisodium 8-hydroxypyrene-1,3,6-trisulfonate. Of these compounds, sodium 4-aminobenzenesulfonate, sodium 5-aminotoluene-2-sulfonate, monopotassium 7-amino-1,3-naphthalenedisulfonate, trisodium 8-amino-1,3,6-naphthalenetrisulfonate, and sodium 4-hydroxybenzenesulfonate are preferred.

Examples of the compounds represented by the general formula (6) include sodium 1-aminoanthraquinone-2-sulfonate, sodium 1-aminoanthraquinone-4-sulfonate, sodium 1-aminoanthraquinone-8-sulfonate, sodium 1-amino-4-bromoanthraquinone-2-sulfonate, and sodium 1-amino-2,4-dihydroxyanthraquinone-3-sulfonate. Of these compounds, sodium 1-amino-4-bromoanthraquinone-2-sulfonate and sodium 1-amino-2,4-dihydroxyanthraquinone-3-sulfonate are preferable.

Examples of the compounds (IV) having one or more groups selected from a cationic hydrophilic group, an amino group, a mercapt group, and a hydroxyl group include 2-mercaptoethylammonium chloride, 2-mercaptoethyldimethylammonium chloride, 3-mercaptopropylammonium chloride, 3-mercaptobenzeneammonium chloride, 4-mercaptobenzeneammonium chloride, 4-mercaptomethylbenzeneammonium chloride, 2-aminoethylammonium chloride, 3-aminopropylammonium chloride, 3-aminobenzenammonium chloride, 4-aminobenzenammonium chloride, 4-aminomethylbenzenammonium chloride, 3-hydroxybenzenammonium chloride, and 4-hydroxybenzenammonium chloride.

The shaping die used in the formation of the depressions and protrusions on the surface of the coating film may be subjected to external release treatment to be easily released from a cured monolayer film in a step of releasing the shaping die from the monolayer film, which will be described later. The term "external release treatment" refers to that the top layer of the shaping die having a pattern corresponding to the intended depressions and protrusions is treated with fluorine in advance.

In the case where a shaping die subjected to the external release treatment is used in the formation of the depressions and protrusions on the surface of the coating film and where the compound (I') or (IV) is applied to the patterned surface of this shaping die, such a compound is easily repelled and therefore hard to uniformly coat the patterned surface. Hence, the surfactant (III) (free from a polymerizable carbon-carbon double bond) can be preliminarily added to the compound (I') or (IV) to prevent such repelling.

In the formation of the depressions and protrusions on the surface of the coating film, the coating film is in a non-cured state, and the reaction rate of the polymerizable carbon-carbon double bond contained in the polymerizable composition (A) or (B) is preferably not more than 60 mol%, and more preferably not more than 40 mol%.

After the step of forming the coating film, the optional step of removing a solvent, and the step of forming the depressions and protrusions on the surface of the coating film, a step of curing the coating film is generally carried out. In the case where a shaping die having a pattern corresponding to the depressions and protrusions is brought into close contact with the surface of the coating film to transfer the pattern to the surface of the coating film, the curing step is desirably carried out in a state in which the shaping die has been in close contact with the surface of the coating film.

The curing (polymerization) can be performed in any manner; for example, either or both of heat and radiations can be used for the curing.

The curing may be performed in air atmosphere. However, the curing time can be advantageously reduced by performing the curing in an inert gas atmosphere such as nitrogen.

When the curing involves heating, a thermal radical generator such as an organic peroxide is usually added to the composition and the mixture is heated at a temperature in the range of room temperature to 300°C.

In the case of radiation curing, an energy ray having a wavelength in the range of 0.0001 to 800 nm can be used as the radiation. Such radiations are categorized into $\alpha$-rays, $\beta$-rays, $\gamma$-rays, X-rays, electron beams, UV lights and visible lights. An appropriate radiation may be selected in accordance with the chemical composition of the polymerizable composition. Of the radiations, UV lights are preferable. The output peak of the UV lights is preferably in the range of 200 to 450 nm, more preferably in the range of 230 to 445 nm, still more preferably in the range of 240 to 430 nm, and particularly preferably in the range of 250 to 400 nm. The use of UV lights having an output peak in the above range is advantageous in that defects such as yellowing and thermal deformation during the polymerization are remedied and the polymerization can be completed in a relatively short time even when the composition contains the UV absorber.

When the polymerizable composition contains the UV absorber and/or the hindered amine stabilizer, it is preferable to use UV lights having an output peak in the range of 250 to 280 nm or 370 to 430 nm.

In order to prevent the radiation curing of the polymerizable composition from being inhibited by oxygen, the curing may be performed in such a manner that a covering material (such as a film) is applied onto the coating film and thereafter the covered coating film is irradiated. The coating layer is desirably covered with the covering material tightly so that air (oxygen) will not be entrapped between the coating layer and the covering material. By blocking oxygen, for example, the amount of the (photo)polymerization initiator and the radiation dose can be reduced at times.

The covering materials are not particularly limited, and various materials can be used in various forms as long as oxygen can be blocked. Films are preferable in terms of handling. Of the films, transparent films allowing for easy radiation polymerization are preferable. The thickness of the films is usually in the range of 3 to 200 $\mu$m, preferably 5 to 100 $\mu$m, and more preferably 10 to 50 $\mu$m.

Examples of the film materials suitably used as the covering materials include vinyl alcohol polymers such as polyvinyl alcohols (PVAs) and ethylene·vinyl alcohol copolymers, polyacrylamides, polyisopropylacrylamides, polyacrylonitriles, polycarbonates (PCs), polymethyl methacrylates (PMMAs), polyethylene terephthalates (PETs), polystyrenes (PSs) and biaxially oriented polypropylenes (OPPs).

Electron beams in the range of 0.01 to 0.002 nm are preferable as the radiations because the curing can be completed in a short time, although such apparatuses are expensive.

After the formation of the depressions and protrusions on the surface of the coating film by bringing a shaping die having a pattern corresponding to the intended depressions and protrusions, which are to be formed on the surface of a monolayer film to be produced, into close contact with the surface of the coating film to transfer the pattern to the surface of the coating film and the subsequent curing of the coating film in a state in which the shaping die has been in close contact with the surface of the coating film, the step of releasing the shaping die from the film is carried out to release the shaping die.

The monolayer film of the present invention is produced in this manner.

The resin used for forming the monolayer film of the present invention may be a cured product of a copolymer having a sulfonate group and at least one group selected from an epoxy group and an alkoxysilyl group in place of the crosslinked resin produced from the polymerizable composition (A) or (B). Such a copolymer used for producing a cured product is typically a copolymer (i) containing at least one of structural units represented by the general formulas (2a) and (3a) and a structural unit represented by the general formula (1a).

[Chem. 84]

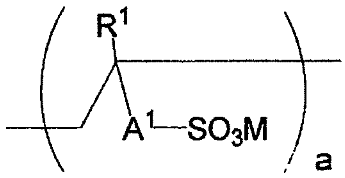

(1a)

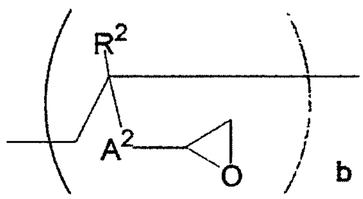

(2a)

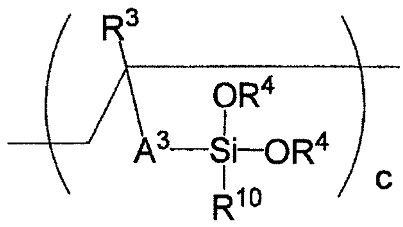

(3a)

In the formulas (1a), (2a), and (3a), a, b, and c that satisfy the relationship of a + b + c = 1 indicate the constitutional proportions of the corresponding structural units, a = 0 to 1, b = 0 to 1, and c = 0 to 1;

$A^1$ represents a single bond, a $C_{1-10}$ divalent hydrocarbon group, a group represented by the formula (1-1), or a group represented by the formula (1-2); $A^2$ represents a single bond, a $C_{1-10}$ divalent hydrocarbon group, a group represented by the formula (2-1), or a group represented by the formula (2-2);

$A^3$ represents a single bond, a $C_{1-10}$ divalent hydrocarbon group, a group represented by the formula (3-1), or a group represented by the following formula (3-2);

$R^1$, $R^2$, and $R^3$ each independently represent a hydrogen atom, or a methyl group; $R_4$ independently represents a hydrogen atom, a methyl group, an ethyl group, a propyl group, or a butyl group; $R^{10}$ represents a hydrogen atom, a methyl group, an ethyl group, a propyl group, a butyl group, a methoxy group, an ethoxy group, a propoxy group, or a butoxy group; and

M represents a hydrogen atom, an alkali metal ion, an alkaline earth metal ion having 1/2 atomic valence, an ammonium ion, or an amine ion;
where in the formulas (1-1), (1-2), (2-1), (2-2), (3-1), and (3-2), n and $n_2$ are each independently an integer from 1 to 10; $n_1$ is an integer from 0 to 10; m is an integer from 1 to 6; $m_1$ is an integer from 0 to 6; 1 is an integer from 0 to 4; $R^5$ and $R^6$ each independently represent a hydrogen atom or a methyl group; * represents an end linking to $SO_3M$; ** represents an end linking to the epoxy group; and *** represents an end linking to the Si atom.

[Chem. 85]

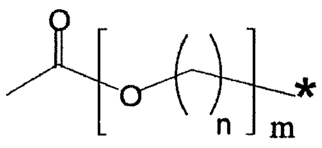 (1-1) 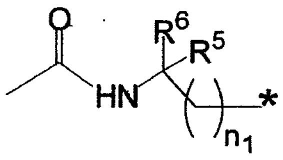 (1-2)

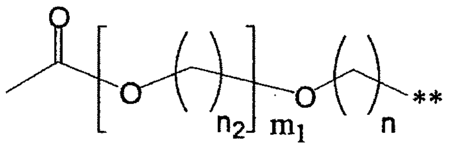 (2-1) 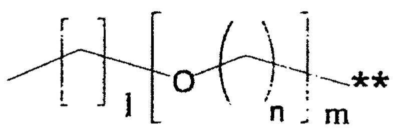 (2-2)

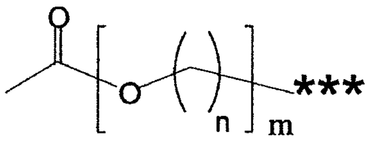 (3-1) 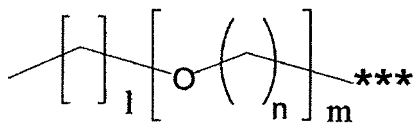 (3-2)

Preferred embodiments of the copolymer (i) are a copolymer (i1) containing the structural units represented by the general formulas (1a) and (2a) and a copolymer (i3) containing the structural units represented by the general formulas (1a), (2a), and (3a).

More preferred embodiments of the copolymer (i) are a copolymer (il-1) containing structural units represented by the general formulas (4a) and (5a) and a copolymer (i3-1) containing structural units represented by the general formulas (4a), (5a), and (6a).

[Chem. 86]

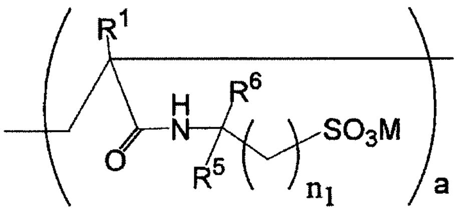

(4 a)

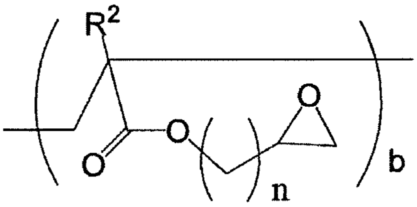

(5 a)

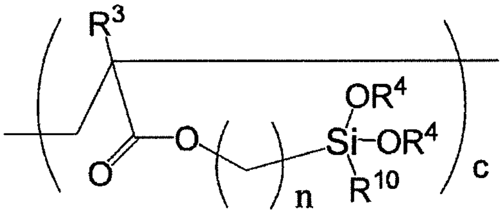

(6 a)

In the formulas (4a), (5a), and (6a), a, b, and c that satisfy the relationship of a + b + c = 1 indicate the constitutional proportions of the corresponding structural units, a = 0 to 1, b = 0 to 1, and c = 0 to 1;
n is an integer from 1 to 10; $n_1$ is an integer from 0 to 10; $R^1$, $R^2$, $R^3$, $R^5$, and $R^6$ each independently represent a hydrogen atom or a methyl group; $R^4$ independently represents a hydrogen atom, a methyl group, an ethyl group, a propyl group, or a butyl group; $R^{10}$ represents a hydrogen atom, a methyl group, an ethyl group, a propyl group, a butyl group, a methoxy group, an ethoxy group, a propoxy group, or a butoxy group; and
M represents a hydrogen atom, an alkali metal ion, an alkaline earth metal ion having 1/2 atomic valence, an ammonium ion, or an amine ion.

The copolymer (i) can be produced by, for example, copolymerization of at least one compound selected from compounds represented by the formula (5'a) and compounds represented by the formula (6'a) with any of compounds represented by the formula (1'a).

[Chem. 87]

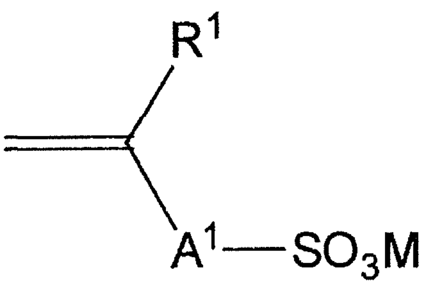

(1' a)

In the formula (1'a), $R^1$, $A^1$, and M have the same definitions as those in the formula (1a).

Among the compounds represented by the formula (1'a), a sulfonate compound having a (meth)acrylamide group is preferred, and any of compounds represented by the general formula (4'a) is more preferred.

[Chem. 88]

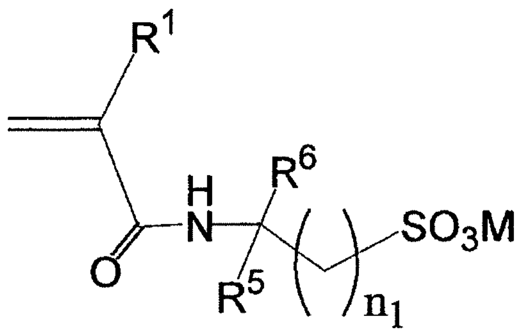

(4' a)

In the formula (4'a), $R^1$, $R^5$, $R^6$, M, and $n_1$ have the same definitions as those in the formula (4a).

[Chem. 89]

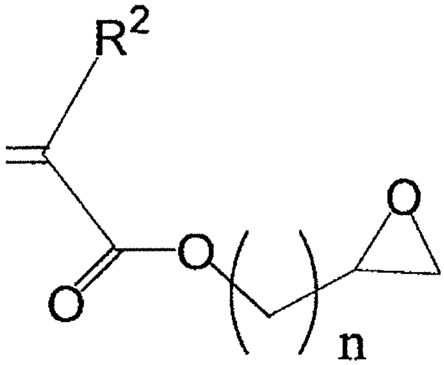

(5' a)

In the formula (5'a), $R^2$ and n have the same definitions as those in the formula (5a).

[Chem. 90]

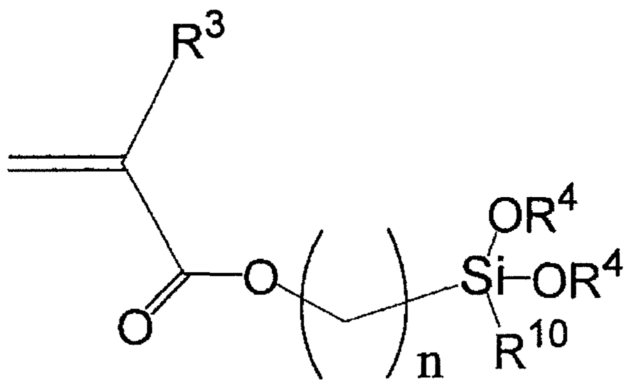

(6' a)

In the formula (6'a), $R^3$, $R^4$, $R^{10}$, and n have the same definitions as those in the formula (6a).

Examples of the compounds represented by the formula (4'a) include sulfonate compounds having a (meth)acryloylamide group, such as 1-(meth)acrylamide-methanesulfonate, potassium 1-(meth)acrylamide-methanesulfonate, 2-(meth)acrylamide-ethanesulfonate, sodium 2-(meth)acrylamide-ethanesulfonate, 2-(meth)acrylamide-propanesulfonate, potassium 2-(meth)acrylamide-propanesulfonate, 2-(meth)acrylamide-2-methyl-propanesulfonic acid ((meth)acrylamide-t-butyl sulfonic acid), sodium 2-(meth)acrylamide-2-methyl-propanesulfonate, potassium 2-(meth)acrylamide-2-methyl-propanesulfonate, rubidium 2-(meth)acrylamide-2-methyl-propanesulfonate, calcium 2-(meth)acrylamide-2-methyl-propanesulfonate, magnesium 2-(meth)acrylamide-2-methyl-propanesulfonate, ammonium 2-(meth)acrylamide-2-methyl-propylsulfonate, and potassium 3-(meth)acrylamide-propanesulfonate.

Examples of the compounds represented by the formula (5'a) include glycidyl-(meth)acrylate, epoxy-(meth)acrylate, 2-glycidyloxy-ethyl-(meth)acrylate, 3-glycidyloxy-propyl-(meth)acrylate, 4-glycidyloxy-butyl-(meth)acrylate, 6-glycidyloxy-hexyl-(meth)acrylate, 5-glycidyloxy-3-oxapentyl-(meth)acrylate, 3-glycidyloxy-2-hydroxy-propyl-(meth)acrylate, 2,3-bis(glycidyloxy)-propyl-(meth)acrylate, trimethylolpropane-diglycidyl ether-(meth)acrylate, {4-glycidyloxyphenyl}-{(4-(meth)acryloyloxy-3-hydroxy-1-oxabutyl)phenyl}-2,2-propane, and 7-glycidyloxy-6,6-dimethyl-2-hydroxy-4-oxaheptyl-(meth)acrylate.

Examples of the compounds represented by the formula (6'a) include (meth)acryloyloxy-ethyltrimethoxysilane, (meth)acryloyloxy-propyl-trimethoxysilane, (meth)acryloyloxy-butyl-trimethoxysilane, (meth)acryloyloxy-hexyltrimethoxysilane, (meth)acryloyloxy-decyl-trimethoxysilane, (meth)acryloyloxy-propyl-triethoxysilane, (meth)acryloyloxy-propyl-tripropoxysilane, (meth)acryloyloxy-propyl-tributoxysilane, (meth)acryloyloxy-propyl-methyldimethoxysilane, and (meth)acryloyloxy-propyl-ethyldiethoxysilane.

The weight average molecular weight (Mw) of the copolymer (i) measured by gel permeation chromatography (GPC) is preferably in the range of 500 to 3,000,000 in terms of standard polymethyl methacrylate.

A cured product produced from a composition containing the copolymer (i) and at least one selected from amino resins (ii) represented by the general formula (7a), silane compounds (iii) represented by the general formula (11a), and inorganic particles (iv) may be used in place of the crosslinked resin produced from the polymerizable composition (A) or (B).

[Chem. 91]

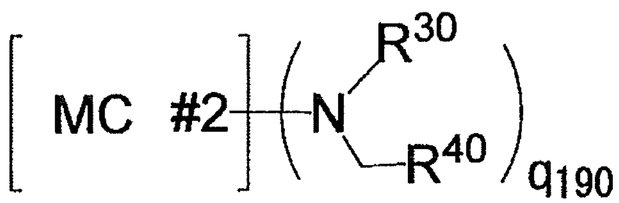

(7 a)

In the formula (7a), $R^{30}$ represents a hydrogen atom, a $C_{1-10}$ alkyl group, a hydroxymethyl group, or a $C_{1-10}$ alkoxymethyl group; $R^{40}$ represents a hydroxyl group, a hydrogen atom, a $C_{1-10}$ alkyl group, or a $C_{1-10}$ alkoxy group; q190 is an integer from 1 to 90; MC represents a scaffold represented by any of the general formulas (8a) to (10a); #2 is a bond linking to #1 in the general formulas (8a) to (10a); the numbers of #1 and #2 are the same as each other; $q_{030}$s in the formula (8a) are each an integer from 0 to 30; $q_{030}$s may be the same as or different from each other; $R^{30}$ and $R^{40}$ have the same definitions as those in the formula (7a); $q_{050}$ in the formula (9a) is an integer from 0 to 50; X represents an oxygen atom or a sulfur atom; $R^{30}$ and $R^{40}$ have the same definitions as those in the formula (7a); and $q_{050}$ in the formula (10a) is an integer from 0 to 50.

[Chem. 92]

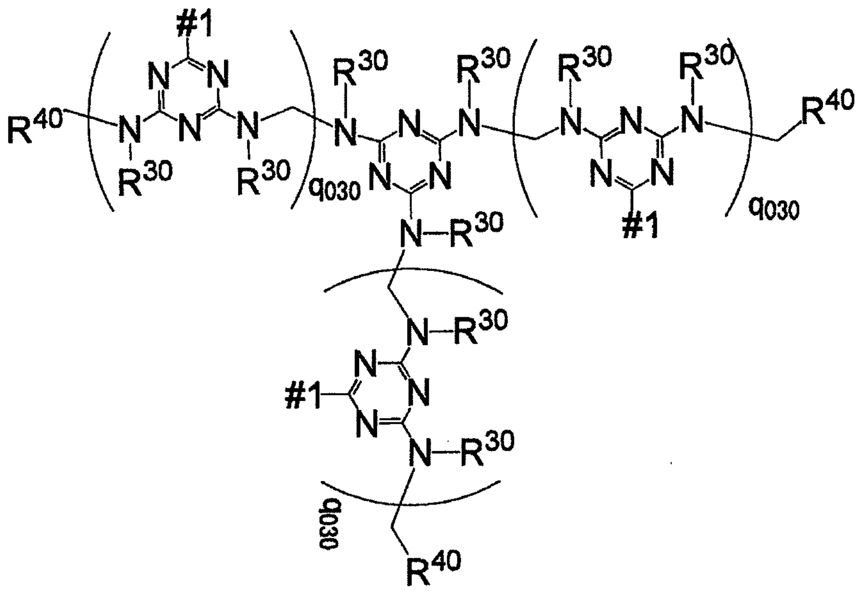

(8 a)

[Chem. 93]

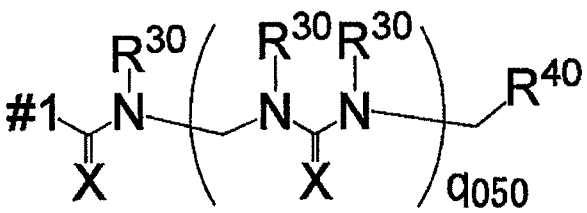

(9 a)

[Chem. 94]

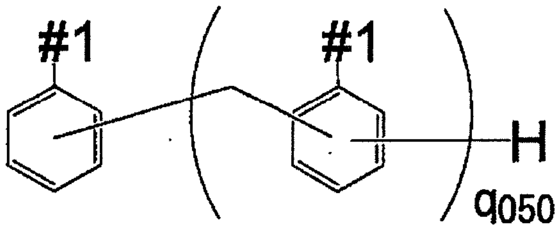

(1 0 a)

[Chem. 95]

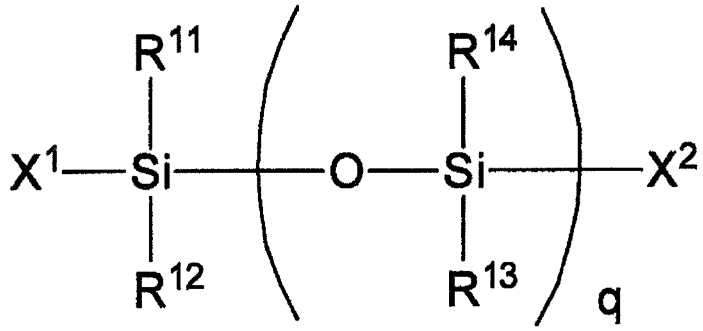

(11a)

In the formula (11a), $X^1$ and $X^2$ each independently represent a hydroxyl group, a $C_{1-4}$ alkoxy group, or a halogen atom;

$R^{11}$ to $R^{14}$ each independently represent a hydroxyl group, a hydrogen atom, a $C_{1-4}$ alkyl group, a vinyl group, an allyl group, a phenyl group, a 2-phenyl-ethyl group, a $C_{1-4}$ alkoxy group, or a halogen atom; and q is an integer from 0 to 10000.

Examples of the inorganic particles (iv) include silver particles, copper particles, copper oxide particles, silica particles, hollow silica particles, alumina particles, iron oxide particles, cobalt oxide particles, zirconia dioxide particles, titanium dioxide particles, and antimony oxide particles. Such inorganic particles include inorganic particles each having a surface that has been modified with, for example, an organic group having an alkyl group or a (meth)acryloyl group to improve the dispersibility of the particles.

In the case where the cured product is produced from a composition containing the amino resin (ii) and the copolymer (i), the weight ratio (i)/(ii) of the copolymer (i) to the amino resin (ii) in the composition is preferably in the range of 99/1 to 1/99.

In the case where the cured product is produced from a composition containing the amino resin (ii), the inorganic particles (iv), and the copolymer (i), the copolymer (i) content, the amino resin (ii) content, and the inorganic particles (iv) content in the composition are preferably from 5 to 98 parts by weight, 1 to 70 parts by weight, and 1 to 90 parts by weight relative to 100 parts by weight of the total weight of the copolymer (i), the amino resin (ii), and the inorganic particles (iv), respectively.

In the case where the cured product is produced from a composition containing the silane compound (iii) and the copolymer (i), the weight ratio (i)/(ii) of the copolymer (i) to the silane compound (iii) in the composition is preferably in the range of 99.1/0.1 to 0.1/99.9, more preferably 99/1 to 1/99, and further preferably 90/10 to 10/90 in terms of the weight of $SiO_2$.

A cured product is produced from the copolymer (i) or from a composition containing the copolymer (i) and at least one selected from the amino resin (ii), the silane compound (iii), and the inorganic particles (iv) by, for example, heating (namely, thermosetting).

Such a monolayer film has an antireflective function and is therefore suitable for an antireflection film. The above-mentioned method for producing the monolayer film may further include a step of laminating a metal layer on the protrusions or in the depressions of a produced monolayer film, particularly a monolayer film having the protrusions arranged in a lattice pattern. The metal layer laminated on the protrusions or the depressions gives the monolayer film a polarizing function, and thus the monolayer film can be used as a wire-grid polarizer such as a polarizing film.

In the case where a metal layer is laminated on the protrusions or depositions of the monolayer film of the present invention to, for example, give a polarizing function, sufficiently conductive metal is preferably used. Examples of such metal include gold, silver, copper, aluminum, iron, nickel, tungsten, and chromium. Such metal can be laminated by any technique, and examples of the lamination technique include sputtering, chemical vapor deposition, physical vapor deposition, and plating. The thickness of the metal layer can be appropriately determined on the basis of, for instance, the depth of the depressions of the monolayer film; for example, the thickness can be in the range of 50 to 300 nm.

The thickness $d_a$ of the monolayer film of the present invention is properly determined on the basis of its application; it is generally in the range of 0.0001 to 500 μm, preferably 0.05 to 500 μm, more preferably 0.1 to 300 μm, further preferably 0.5 to 100 μm, still further preferably 1 to 50 μm, and especially preferably 2 to 30 μm.

The ratio $d_b/d_a$ of the thickness $d_b$ of the structure of depressions and protrusions, which are formed on the surface of the monolayer film of the present invention, to the thickness $d_a$ of the monolayer film is generally from 0.003 to 0.6, preferably from 0.006 to 0.3, and more preferably 0.01 to 0.15.

The monolayer film of the present invention may be formed on a substrate. In the case where the monolayer film is formed on a substrate, the film may be formed at least one side of the substrate.

Examples of the substrate include substrates formed of inorganic materials such as glass, silica, metal, and metal oxides; substrates formed of organic materials such as polymethyl methacrylate (PMMA), polycarbonate, polyethylene terephthalate, polyethylene, polypropylene, polystyrene, polyurethane resins, polythiourethane resins, epoxy resins, vinyl chloride resins, silicone resins, paper, and pulp; substrates of organic-inorganic materials, such as SMC and BMC, formed by compounding, for instance, an unsaturated polyester resin, a filler such as calcium carbonate, and glass fibers; and substrates each having a cured coating layer, which are produced by coating the surfaces of substrates formed of these inorganic, organic, or organic-inorganic materials.

In order to activate the substrate surface, the surface of these substrates may be optionally subjected to physical or chemical treatments such as corona treatment, ozone treatment, low-temperature plasma treatment using a gas such as oxygen gas or nitrogen gas, glow discharge treatment, oxidation treatment with agents such as chemicals, and flame treatment. Instead of or in addition to such treatments, the substrate surface may be subjected to primer treatment, undercoating treatment or anchor coating treatment.

Examples of the coating agents used in the primer treatment, the undercoating treatment and the anchor coating treatment include coating agents containing, as the main components of vehicles, resins such as polyester resins, polyamide resins, polyurethane resins, epoxy resins, phenolic resins, (meth)acrylic resins, polyvinyl acetate resins, polyolefin resins including polyethylenes and polypropylenes as well as copolymers thereof and modified resins thereof, and cellulose resins. The coating agents may be any of solvent-based coating agents and aqueous coating agents.

Of the coating agents, preferred coating agents are:

modified polyolefin coating agents, ethyl vinyl alcohol coating agents, polyethyleneimine coating agents, polybutadiene coating agents, polyurethane coating agents;

polyester polyurethane emulsion coating agents, polyvinyl chloride emulsion coating agents, urethane acrylic emulsion coating agents, silicon acrylic emulsion coating agents, vinyl acetate acrylic emulsion coating agents, acrylic emulsion coating agents;

styrene-butadiene copolymer latex coating agents, acrylonitrile-butadiene copolymer latex coating agents, methyl methacrylate-butadiene copolymer latex coating agents, chloroprene latex coating agents, rubber latex coating agents containing polybutadiene latex, polyacrylate ester latex coating agents, polyvinylidene chloride latex coating agents, polybutadiene latex coating agents, and coating agents which include latexes or dispersions resulting from the carboxylic acid modification of the resins present in the above latex coating agents.

For example, these coating agents may be applied by methods such as gravure coating methods, reverse roll coating methods, knife coating methods and kiss-roll coating methods. The mass of coating on the substrate is usually 0.05 $g/m^2$ to 10 $g/m^2$ as measured at the dry state.

Of the coating agents, polyurethane coating agents are more preferable. The polyurethane coating agents have urethane bonds in the main chains or side chains of the resins present in the coating agents. For example, the polyurethane coating agents contain a polyurethane obtained by reacting a polyol such as a polyester polyol, a polyether polyol or an acrylic polyol, with an isocyanate compound.

Of the polyurethane coating agents, those polyurethane coating agents which are obtained by mixing a polyester polyol such as a condensed polyester polyol or a lactone-based polyester polyol with an isocyanate compound such as tolylene diisocyanate, hexamethylene diisocyanate or xylene diisocyanate are preferable because of their excellent adhesion.

The polyol compounds and the isocyanate compounds may be mixed with each other by any methods without limitation. The mixing ratio is not particularly limited. When, however, the amount of the isocyanate compound is excessively small, curing failures may be caused. Thus, the equivalent ratio of the OH groups of the polyol compound to the NCO groups of the isocyanate compound is preferably in the range of 2/1 to 1/40.

The substrates in the invention may have a surface that has been treated by the aforementioned surface activation.

The substrate whose surface is coated with a monolayer film including a hydrophilic cured product of the invention may be used as a stack including the substrate and the monolayer film. For example, the monolayer film is an antifogging film, an antifouling film, a quick-dry film or an antistatic film. That is, the stack includes the substrate coated with such an antifogging film, antifouling film, quick-dry film or antistatic film.

When the substrate is a film, a pressure-sensitive adhesive layer described later may be provided on, for example, the surface of the substrate on which the monolayer film of the invention is not disposed. Further, a release film may be provided on the surface of the pressure-sensitive adhesive layer. The pressure-sensitive adhesive layers that are laminated on the surface of the substrate films opposite to the inventive monolayer films allow users to attach easily the stack films as antifogging films or antifouling films onto objects such as glasses, bathroom mirrors or the like, surfaces of display devices such as displays and televisions, information boards such as signboards, advertisements and guideboards, signs such as railroad signs and traffic signs, exterior walls of buildings, and window glasses.

The pressure-sensitive adhesives used in the pressure-sensitive adhesive layers are not particularly limited, and known pressure-sensitive adhesives may be used. Examples of the pressure-sensitive adhesives include acrylic pressure-sensitive adhesives, rubber pressure-sensitive adhesives, vinyl ether polymer pressure-sensitive adhesives and silicone pressure-sensitive adhesives. The thickness of the pressure-sensitive adhesive layers is usually in the range of 2 to 50 μm, and preferably in the range of 5 to 30 μm.

In the inventive monolayer film and a stack including the monolayer film, the surface of the monolayer film in contact with the air may be covered with a covering material. The covering material disposed on the single monolayer film or the monolayer film constituting a stack can prevent the monolayer film from being scratched or fouled during actions such as transportation, storage and laying out.

As described hereinabove, a covering material is provided in close contact with the coating during the formation of an inventive monolayer film on an object such as a substrate by radiation polymerization. This covering material may be continuously used as the covering material for the above purposes.

Examples of the film materials suitably used as the covering materials include vinyl alcohol polymers such as polyvinyl alcohols (PVAs), polyacetyl celluloses (TACs) and ethylene·vinyl alcohol copolymers, polyacrylamides, polyisopropylacrylamides, polyacrylonitriles, polycarbonates (PCs), polymethyl methacrylates (PMMAs), polyethylene terephthalates (PETs), polyacrylonitrile·butadiene·styrene copolymers (ABSs), polystyrenes (PSs) and biaxially oriented polypropylenes (OPPs).

The polymerizable composition (A) or (B) can be polymerized in a variety of molds having different shapes to produce a cured product having various shapes, such as a monolayer film or a shaped product.

The hydrophilic cured products obtained in the present invention, such as a monolayer film and a stack including the monolayer film, can be suitably used as such materials as antifogging materials, antifouling materials, quick-drying materials, antistatic materials, and antireflection materials. In the case where a metal layer is laminated on the protrusions or in the depressions of the monolayer film and stack including the monolayer film, which are obtained in the present invention, (particularly in the case where the shapes of the protrusions and depressions are suitable for producing a polarizing function), the film and the stack can be suitably used as a material having a polarizing function.

Coatings formed of the hydrophilic cured products, such as a monolayer film and a stack, can be used to impart hydrophilicity, antifogging properties, antifouling properties, and antireflective properties to, for example, vehicles and materials used in vehicles; ships and materials used in ships; aircraft and materials used in aircraft; buildings and building materials; windows, mirrors, exterior walls, exteriors, bodies, wheels, interior walls, interiors, and floors of, for instance, vehicles, ships, aircraft, and buildings; furniture and materials used in furniture; utilities, such as pipes and wires, and materials used in such utilities; fiber products such as garments and cloths; household equipment, such as sinks, bathrooms, restrooms, ventilation fans, and kitchens, and materials used in such equipment; electric appliances such as washing machines, dish dryers, refrigerators, microwaves, ovens, and shavers, and materials used in such appliances; displays and display materials; optical products such as optical films, optical disks, optical lenses, eyeglass lenses, contact lenses, and goggles; dental materials such as artificial teeth and dentures; lighting items, such as lamps and lights, and materials used in such items; components used in heat exchangers, such as cooling fins, and materials used in such components; record printing materials such as photoresists and inkjet recording plates; cosmetic containers and materials used in such containers; reflective materials such as reflective films and reflective boards; sound insulating boards used at, for instance, expressways; display materials; printing or typing primers; other primers; flat panels; touch panels; sheets; quick-drying properties; films; tapes; and transparent materials such as transparent resins and glasses. Furthermore, the coatings can impart anti-condensation properties and antistatic properties.

EXAMPLES

Hereinbelow, the present invention will be described in further detail by discussions such as examples. The scope of the invention is not limited to such examples.

Properties of films in the invention were evaluated as described below.

(Measurement of Concentration Ratio of Hydrophilic Groups)

A sample was cut at an angle as in the preparation of a sample illustrated in Fig. 1. The sample was analyzed with a time-of-flight secondary ion mass spectrometer (TOF-SIMS) for fragment ions of a hydrophilic compound having a hydrophilic group, such as a sulfonate group, a carboxyl group, a phosphate group, or a quaternary ammonium group, and a hydroxyl group. In particular, the concentration of the fragment ions derived from the hydrophilic compound was measured at the top surface (Sa), and the concentration of the fragment ions was measured at half the thickness (Da). Then, from these measured concentrations of the hydrophilic groups derived from the hydrophilic compound, the ratio of the concentration of the hydrophilic groups at the top surface of the film being in contact with the ambient air to the concentration of the hydrophilic groups at the middle point between the top surface and the bottom surface was determined. In this manner, the gradient (Sa/Da) of the concentration of the hydrophilic groups was determined.

(Analyzer and Measurement Conditions)

TOF-SIMS: TOF-SIMS 5 manufactured by ION·TOF
Primary ions: $Bi_3^{2+}$ (accelerating voltage 25 kV)
Measurement area: 400 $\mu m^2$

In the measurement, a neutralizing gun for correcting electric charges was used.

(Preparation and Analysis of Sample)

As illustrated in Fig. 1, a sample in which a coating layer 20 was disposed on a surface of a substrate 10 was cut accurately at an angle in a cutting direction 30. Then, a piece of approximately 10 × 10 $mm^2$ was cut out, and a mesh was placed on the measurement surface. The sample was then fixed to a sample holder, and the concentration of hydrophilic groups was measured with the time-of-flight secondary ion mass spectrometer (TOF-SIMS) with respect to a surface 40 of the coating layer being in contact with ambient air and to an inner portion 50 of the coating layer which was positioned inside the film (at 1/2 of the film thickness, a surface exposed at the inside of the coating layer being in contact with the substrate 10).

(Evaluation)

The evaluation was made on the basis of the below equation. The ion concentrations at the individual measurement points were relative intensities (relative to the total of the detected ions).

Sa/Da (ratio of concentrations of hydrophilic groups, gradient) = Concentration of hydrophilic groups at surface 40 of coating layer/Concentration of hydrophilic groups at 1/2 of film thickness of coating layer 20

(Measurement of Water Contact Angle)

The water contact angle was measured with respect to three points for each sample with use of water contact angle meter CA-V manufactured by Kyowa Interface Science Co., Ltd. The water contact angles measured were averaged.

⟨Measurement of haze⟩

The haze was measured with respect to 4 points for each sample with use of haze meter NDH2000 manufactured by NIPPON DENSHOKU INDUSTRIES CO., LTD. The haze values measured were averaged.

⟨Surface Analysis⟩

A surface was analyzed with a scanning electron microscope (SEM) S-4800 manufactured by Hitachi High-Technologies Corporation). The accelerating voltage was 3 kV, and a secondary electron detector (Mix) was used. $OsO_4$ sputtering was performed in advance.

⟨Analysis of Cross Section⟩

A Cross section was analyzed with a scanning electron microscope (SEM) S-4800 manufactured by Hitachi High-Technologies Corporation). The accelerating voltage was 3 kV, and a secondary electron detector (Mix) was used.

Freeze-fracture and subsequent $OsO_4$ sputtering were performed in advance.

⟨Evaluation of Antifouling Properties⟩

A mixture of 100 g of oleic acid, 150 g of castor oil, and 0.4 g of Mitsui Blue RR was prepared to produce a pseudo-staining substance (hereinafter referred to as "staining substance"). Approximately 2 ml of the staining substance was dropped to the surface of a sample and then spread over the surface. Distilled water was subsequently sprayed thereto 50 times, and then the state of the stain was visually observed.

A: Almost no staining substances remaining on the surface of the sample sheet
B: Staining substances slightly remaining on the surface
C: Staining substances clearly remaining on the surface

⟨Evaluation of Resistance to Breath Fogging⟩

The resistance to breath fogging was evaluated as A when the surface did not become fogged with breath and as B when the surface became fogged with breath.

(Reflectance)

The reflectance was measured by a total reflection method with a spectrophotometer U4100 manufactured by Hitachi, Ltd. The reference used was a standard white plate of Spectralon SRS-99. The average of the measured reflectance within a wavelength ranging from 400 nm to 800 nm was defined as the value of the reflectance.

⟨Coefficient of Static Friction⟩

A coefficient of static friction was measured with a universal material testing machine 2001 manufactured by INTESCO co., ltd.

Measurement temperature: 23.0 °C
Test speed: 200 mm/min
Conditions of treatment: For TORAYSEE (OA TORAYSEE manufactured by Toray Industries, Inc.), dry condition
Weight: 199.0 g

⟨Water Contact Angle for Durability of Antifogging Properties⟩

Wiping with TORAYSEE (OA TORAYSEE manufactured by Toray Industries, Inc.) was carried out 1000 times under a constant load of 300 g, and then a water contact angle was measured at 3 points for each sample with a water contact angle meter CA-V manufactured by Kyowa Interface Science Co., Ltd. The average of measurement results was defined as a water contact angle for the durability of antifogging properties.

⟨Resistance to Breath Fogging for Durability of Antifogging Properties⟩

Wiping with TORAYSEE was carried out 1000 times under a constant load of 300 g, and then temperature was adjusted to be 23°C. When the sample did not become fogged with breath, it was evaluated as A; when the sample became fogged with breath, it was evaluated as B.

[Example 1]

(Preparation of Polymerizable Composition 1)

A polymerizable composition 1 having a solid content of 80 wt% was prepared in accordance with Table 1.

[Table 1]

Polymerizable composition 1 (Solid content 80 wt%

| Component | Amount (g) | Concentration (wt%) |
|---|---|---|
| SPA-K | 1.74 | 1.37 |

(continued)

| Polymerizable composition 1 (Solid content 80 wt% | | | |
|---|---|---|---|
| Component | Amount (g) | Concentration (wt%) | |
| EA5721 | 20.00 | 15.70 | Manufactured by Shin Nakamura Chemical Co., Ltd. |
| A-BPE-10 | 10.00 | 7.85 | Manufactured by Shin Nakamura Chemical Co., Ltd. |
| U-15HA | 70.00 | 54.94 | Manufactured by Shin Nakamura Chemical Co., Ltd. |
| S-EED | 0.10 | 0.080 | |
| DS-Na | 0.10 | 0.080 | |
| Water | 1.45 | 1.14 | |
| PGM | 24.03 | 18.86 | |
| Total | 127.42 | 100.00 | |

[Chem. 96]

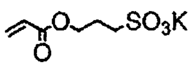

SPA-K
232.30

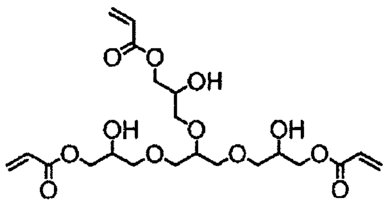

EA-5721: 476.47

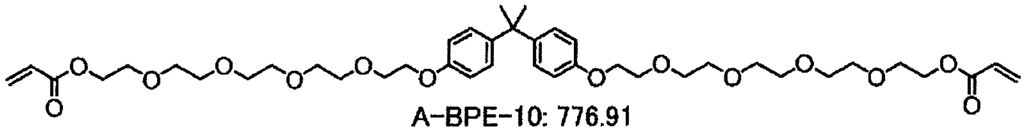

A-BPE-10: 776.91

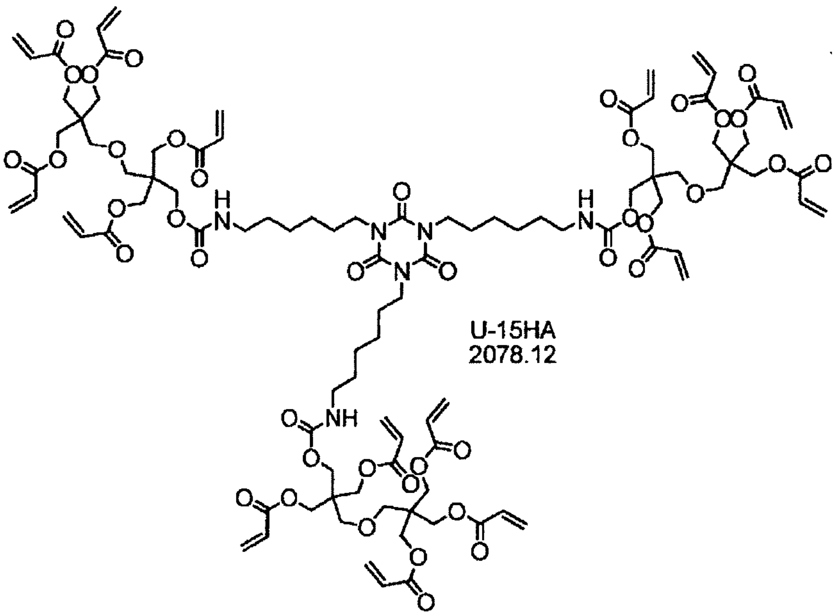

U-15HA
2078.12

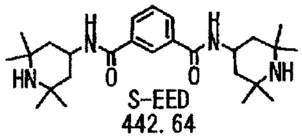

S-EED
442. 64

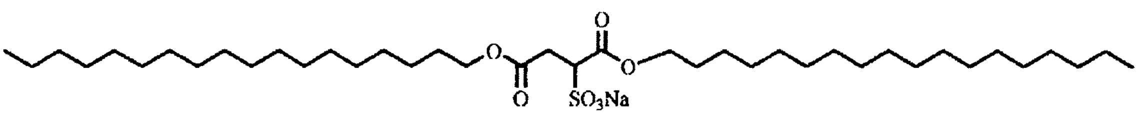

DS-Na

(Preparation of Polymerizable Composition 2)

A polymerizable composition 2 having a solid content of 80 wt% was prepared in accordance with Table 2.

[Table 2]

Polymerizable composition 2 (Solid content 80 wt%)

| Component | Amount (g) | Concentration (wt%) |
|---|---|---|
| SPA-K | 2.14 | 1.94 |

(continued)

Polymerizable composition 2 (Solid content 80 wt%)

| Component | Amount (g) | Concentration (wt%) | |
|---|---|---|---|
| EA5721 | 16.36 | 14.86 | Manufactured by Shin Nakamura Chemical Co., Ltd. |
| A-BPE-1 | | | Manufactured by Shin Nakamura Chemical Co., Ltd. |
| 0 | 31.70 | 28.80 | |
| UA-122 | | | Manufactured by Shin Nakamura Chemical Co., Ltd. |
| P | 37.70 | 34.25 | |
| S-EED | 0.086 | 0.078 | |
| DS-Na | 0.095 | 0.086 | |
| Water | 1.24 | 1.13 | |
| PGM | 20.76 | 18.86 | |
| Total | 110.08 | 100.00 | |

(Preparation of Coating Composition 1)

To a mixture solution of 7.0 g of the polymerizable composition 1 and 3.0 g of the polymerizable composition 2, 0.24 g of Darocur 1173 (BASF) as a UV polymerization initiator and 10.0 g of 1-methoxy-2-propanol as a diluent were added. Then, the mixture was blended to prepare a coating composition 1 having a solid content of 40 wt%.

(Preparation of Coating Composition 2)

A coating composition 2 having a solid content of 25 wt% was prepared in accordance with Table 3.

[Table 3]

Coating composition 2 (Solid content 25 wt%)

| Component | Amount (g) | Concentration (wt%) |
|---|---|---|
| 98.7%ATBS | 550.0 | 22.41 |
| 98.5%NaOH | | |
| Flake | 107.5 | 4.38 |
| Water | 1170.0 | 47.67 |
| PGM | 204.0 | 8.32 |
| 1-pentanol | 410.0 | 16.70 |
| 25-wt% AQUALEN SB-630 | 3.0 | 0.12 |
| 3-(N,N-dimethylpalmitylammonio)propanesulfonate | 9.74 | 0.40 |
| Total | 2459.24 | 100.00 |

(Coating, Nanoimprinting, and UV Radiation to Substrate)

The coating composition 1 was applied to a plate of polymethyl methacrylate (transparent plate for general purpose, trade name CLAREX, manufactured by NITTO JUSHI KOGYO CO., LTD., hereinafter referred to as "PMMA plate") with a bar coater #30 and then heated at 70°C for 5 minutes. The coating composition 2 was applied to a nanoimprinting resin mold with a structure of depressions and protrusions having a pitch of 250 nm and a height of 360 nm (manufactured by SCIVAX Corporation) with a bar coater #4 and then dried at 70°C for 2 minutes. Then, the resin mold having the coating layer of the dried coating composition 2 was placed on the coating layer of the thermally dried coating composition 1 such that the coating layer of the coating composition 2 exactly faced the coating layer of the coating composition 1, and a constant load was subsequently applied thereto to transfer the structure of depressions and protrusions of the resin mold to the coat of the coating composition. This one was left to stand for 15 minutes. Then, this product was subjected to UV radiation (metal halide lamp for ultraviolet curing, UB012-5BM manufactured by EYE GRAPHICS CO., LTD., UVA intensity of 300 mW/$cm^2$, UVA accumulated dose of 3400 mJ/$cm^2$, measured with UVCURE PLUS II manufactured by Heraeus) to form an antireflective monolayer film of a crosslinked resin having a hydrophilic surface with a thickness of 15 μm on the PMMA plate. Likewise, the coating, the nanoimprinting, and the UV radiation were performed to the back side of the PMMA plate, thereby forming the antireflective monolayer films of a crosslinked

resin having hydrophilic surfaces with a thickness of 15 μm on the both sides of the PMMA plate. Table 4 shows results of the evaluations. Fig. 2 is a surface view of the formed monolayer film, and Fig. 3 is a cross-sectional view thereof.

[Comparative Example 1]

Except that the nanoimprinting with a nanoimprinting resin mold (manufactured by SCIVAX Corporation) having the structure of depressions and protrusions of less than or equal to the wavelength of visible light was not performed, the preparation of the polymerizable compositions and coating composition and the coating and UV radiation to a substrate were performed as in Example 1 to form a monolayer film.
Table 4 shows results of the evaluations.

[Table 4]

Table 4

| | Example 1 (Nanoimprinted) | Comparative Example 1 (Not nanoimprinted) |
|---|---|---|
| Appearance | Transparent | Transparent |
| Water contact angle [°] | 12.8 | 26.1 |
| Resistance to breath fogging | A | A |
| Haze [%] | 0.36 | 0.14 |
| Reflectance | 0.59 | 7.76 |
| Coefficient of static friction | 0.48 | 1.10 |
| Antifouling properties | A | A |
| Analysis in direction of thickness (sulfonate groups) | | |
| Intensity* of sulfonate groups at surface of film | 1.4E-01 | 6.3E-02 |
| Intensity* of sulfonate groups at middle of film | 1.0E-01 | 4.8E-02 |
| Ratio of sulfonate concentrations (surface/ middle) | 1.4 | 1.3 |
| *Relative intensity of secondary ions $SO_3^-$ (m/z 80)<br>Analyzer: TOF-SIMS 5 manufactured by ION-TOF<br>Measurement conditions: primary ions applied $Bi_3^{2+}$, primary ion accelerating voltage 25 kV, measurement area 400 μm × 400 μm | | |

[Example 2]

(Coating, Nanoimprinting, and UV Radiation to Substrate)

The coating composition 1 was applied to a PMMA plate with a bar coater #30 and then heated at 70°C for 5 minutes. The coating composition 2 was applied to a nanoimprinting resin mold with a structure of depressions and protrusions having a pitch of 350 nm and a height of 300 nm (FleFimo manufactured by Soken Chemical & Engineering Co., Ltd.) with a bar coater #4 and then dried at 70°C for 2 minutes. Then, the resin mold having the coating layer of the dried coating composition 2 was placed on the coating layer of the thermally dried coating composition 1 such that the coating layer of the coating composition 2 exactly faced the coating layer of the coating composition 1, and a constant load was subsequently applied thereto to transfer the structure of depressions and protrusions of the resin mold to the coat of the coating composition. This one was left to stand for 15 minutes. Then, this product was subjected to UV radiation (metal halide lamp for ultraviolet curing, UB012-5BM manufactured by EYE GRAPHICS CO., LTD., UVA intensity of 300 mW/cm$^2$, UVA accumulated dose of 3400 mJ/cm$^2$, measured with UVCURE PLUS II manufactured by Heraeus) to form an antireflective monolayer film of a crosslinked resin having a hydrophilic surface with a thickness of 15 μm on the PMMA plate. Likewise, the coating, the nanoimprinting, and the UV radiation were performed also to the back side of the PMMA plate, thereby forming the antireflective monolayer films of a crosslinked resin having hydrophilic surfaces with a thickness of 15 μm on the both sides of the PMMA plate.

Table 5 shows results of the evaluations.

[Example 3]

To a mixture solution of 8.0 g of the polymerizable composition 1 and 2.0 g of the polymerizable composition 2, 0.24 g of Darocur 1173 (BASF) as a UV polymerization initiator and 10.0 g of 1-methoxy-2-propanol as a diluent were added, and then the mixture was blended to prepare a coating composition 3 having a solid content of 40 wt%.
The coating, nanoimprinting, and UV radiation to a substrate were carried out as in Example 2. Table 5 shows results of the evaluations.

[Example 4]

To 10.0 g of the polymerizable composition 1, 0.24 g of Darocur 1173 (BASF) as a UV polymerization initiator and 10.0 g of 1-methoxy-2-propanol as a diluent were added, and then the mixture was blended to prepare a coating composition 4 having a solid content of 40 wt%.
The coating, nanoimprinting, and UV radiation to a substrate were carried out as in Example 2. Table 5 shows results of the evaluations.

[Example 5]

Except that the application of the coating composition 2 to the nanoimprinting resin mold (FleFimo manufactured by Soken Chemical & Engineering Co., Ltd.) and the subsequent drying were not performed, the process of Example 4 was similarly carried out. Table 5 shows results of the evaluations. Table 6 shows results of the measurement of the concentration ratio of hydrophilic groups.

[Example 6]

(Preparation Example 1: Preparation of 10-wt% DS-Na)

With 10 g of sodium distearylsulfosuccinate (hereinafter referred to as "DS-Na"), 30 g of water and 60 g of 1-methoxy-2-propanol (hereinafter referred to as "PGM") were mixed to prepare a DS-Na liquid mixture having a solid content of 10 wt%.

[Chem. 97]

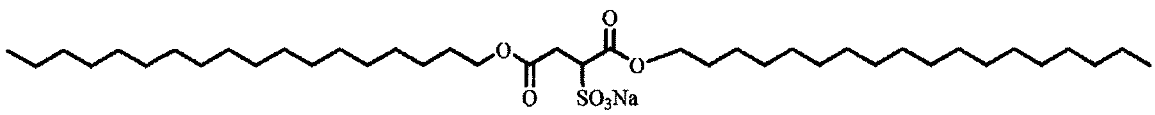

DS-Na

(Preparation Example 2: Preparation of 10-wt% STS-Na)

With 10 g of sodium p-styrenesulfonate (hereinafter referred to as "STS-Na"), 30 g of water and 60 g of PGM were mixed to prepare an STS-Na liquid mixture having a solid content of 10 wt%.

(Preparation of Coating Composition 5 and Coating, Nanoimprinting, and UV Radiation to Substrate)

To a mixture solution of 15.0 g of the 10-wt% STS-Na liquid mixture (Preparation Example 2), 1.0 g of the 10-wt% DS-Na liquid mixture
(Preparation Example 1), and 50.0 g of EA5721, 1.55 g of Darocur 1173 (BASF) as a UV polymerization initiator and 63.0 g of 1-methoxy-2-propanol as a diluent were added, and then the mixture was blended to prepare a coating composition 5 having a solid content of 40 wt%.
The coating, nanoimprinting, and UV radiation to a substrate were carried out as in Example 2. Table 5 shows results of the evaluations.

[Table 5]

Table 5

| | Example 2 | Example 3 | Example 4 | Example 5 | Example 6 |
|---|---|---|---|---|---|
| Coating composition | 1 | 3 | 4 | 4 | 5 |
| Coating composition 2 | Used | Used | Used | None | Used |
| Moth-eye film | Soken | Soken | Soken | Soken | Soken |
| Water contact angle [°] | 17.8 | 16.5 | 11.2 | 28.8 | 20.2 |
| Resistance to breath fogging | A | A | A | A | A |
| Haze | 0.36 | 0.25 | 0.42 | 0.84 | 0.45 |
| Reflectance | 1.18 | 1.15 | 1.26 | 1.41 | 1.27 |
| Coefficient of static friction | 0.48 | 0.41 | 0.41 | 0.70 | 0.38 |
| Antifouling properties | A | A | A | A | A |
| Water contact angle for durability of Antifogging properties [°] | 17.7 | 16.9 | 11.6 | | 59.2 |
| Resistance to breath fogging for durability of antifogging properties | A | A | A | A | B |

[Table 6]

Table 6 Concentration ratio of hydrophilic groups in Example 5

| | |
|---|---|
| Analysis in direction of thickness (sulfonate groups) | |
| Intensity* of sulfonate groups at surface of film | 4.6E-02 |
| Intensity* of sulfonate groups at middle of film | 2.3E-02 |
| Ratio of sulfonate concentrations (surface/middle) | 2.0 |

[Comparative Example 2]

Except that the nanoimprinting with the nanoimprinting resin mold having the structure of depressions and protrusions (FleFimo manufactured by Soken Chemical & Engineering Co., Ltd.) was not performed, the preparation of a polymerizable composition and coating composition and the coating and UV radiation to a substrate were carried out as in Example 2 to produce a monolayer film. Table 7 shows results.

[Comparative Example 3]

Except that the nanoimprinting with the nanoimprinting resin mold having the structure of depressions and protrusions (FleFimo manufactured by Soken Chemical & Engineering Co., Ltd.) was not performed, the preparation of a polymerizable composition and coating composition and the coating and UV radiation to a substrate were carried out as in Example 3 to produce a monolayer film. Table 7 shows results.

[Comparative Example 4]

Except that the nanoimprinting with the nanoimprinting resin mold having the structure of depressions and protrusions (FleFimo manufactured by Soken Chemical & Engineering Co., Ltd.) was not performed, the preparation of a polymerizable composition and coating composition and the coating and UV radiation to a substrate were carried out as in Example 4 to produce a monolayer film. Table 7 shows results.

[Comparative Example 5]

Except that the nanoimprinting with the nanoimprinting resin mold having the structure of depressions and protrusions (FleFimo manufactured by Soken Chemical & Engineering Co., Ltd.) was not performed, the preparation of a polymerizable composition and coating composition and the coating and UV radiation to a substrate were carried out as in Example 6 to produce a monolayer film. Table 7 shows results.

[Comparative Example 6]

Table 7 shows results of the evaluations of a water contact angle on a plate of polymethyl methacrylate (transparent plate for general purpose, trade name CLAREX, manufactured by NITTO JUSHI KOGYO CO., LTD.), reflectance, a coefficient of static friction, and antifouling properties.

[Comparative Example 7]

Table 7 shows results of the evaluations of a water contact angle on a polycarbonate plate, reflectance, a coefficient of static friction, and antifouling properties.

[Comparative Example 8]

Table 7 shows results of the evaluations of a water contact angle on a glass plate, reflectance, a coefficient of static friction, and antifouling properties.

[Comparative Example 9]

To a mixture solution of 10 g of A-BPE-10 (manufactured by Shin Nakamura Chemical Co., Ltd.) and 15 g of 1-methoxy-2-propanol, 0.3 g of Darocur 1173 (manufactured by BASF) as a polymerization initiator was added, and then the mixture was blended to prepare a coating composition 6 having a solid content of 40 wt%.

(Coating, Nanoimprinting, and UV Radiation to Substrate)

The coating composition 6 was applied to a PMMA plate with a bar coater #30 and then heated at 70°C for 5 minutes. Then, a nanoimprinting resin mold with a structure of depressions and protrusions having a pitch of 350 nm and a height of 300 nm (FleFimo manufactured by Soken Chemical & Engineering Co., Ltd.) was placed on the coating layer of the thermally dried coating composition 6 such that the coating layer of the coating composition 1 exactly faced the depressions and protrusions side of the resin mold, and a constant load was subsequently applied thereto to transfer the structure of depressions and protrusions of the resin mold to the coat of the coating composition. Then, this product was subsequently subjected to UV radiation (metal halide lamp for ultraviolet curing, UB012-5BM manufactured by EYE GRAPHICS CO., LTD., UVA intensity of 300 $mW/cm^2$, UVA accumulated dose of 3400 $mJ/cm^2$, measured with UVCURE PLUS II manufactured by Heraeus) to form an antireflective monolayer film having a thickness of 15 μm on the PMMA plate. Likewise, the coating, the nanoimprinting, and the UV radiation were performed also to the back side of the PMMA plate, thereby forming the antireflective monolayer films having a thickness of 15 μm on the both sides of the PMMA plate. Table 8 shows results of the evaluations.

[Comparative Example 10]

$SiO_2$ (manufactured by Kojundo Chemical Laboratory Co., Ltd.) was sputtered on the surface of an antireflective monolayer film formed as in Comparative Example 9 to form an antireflection film subjected to sputtering.

(Sputtering System, Target, and Sputtering Conditions)

System: thin-film-forming sputtering system, manufactured by ULVAC, Inc.
Type: JSP-8000
Target: $SiO_2$
Supplier: Kojundo Chemical Laboratory Co., Ltd.
SILICON (IV) OXIDE TARGET

SILICON (IV) oxide target: $SiO_2$
Purity: 99.99%
Form: 101.6 Φ × 5 t

Sputtering Conditions

Pre-sputtering (pretreatment, washing)

Gaseous species: Ar
Flow rate (sccm): 15
Pressure: $4.7 \times 10^{-1}$
Valve: HALF
DC power: -
RF power (W): 400
Time (s): 120

Temperature (°C): RT
$SiO_2$ sputtering

Gaseous species: Ar
Flow rate (sccm): 15
Pressure: $4.7 \times 10^{-1}$
Valve: HALF
DC power (W): -
RF power (W): 400
Time (s): 2500
Temperature (°C): RT

RF
Pr (W): 0
T (%): 40
M (%): 60
VDC (V): -660
VPP (V): -
DC
VOLT (V):
CURRENT (A):

An $SiO_2$ film formed by the sputtering under these conditions had a thickness of 63 nm. In order to determine the thickness, a silicon wafer was subjected to sputtering at the same time as the sputtering of the sample, and then the thickness of the $SiO_2$ film on the silicon wafer was measured with an ellipsometer.

[Comparative Example 11]

To a mixture solution of 5 g of 2-hydroxyethyl acrylate (manufactured by Tokyo Chemical Industry Co., Ltd.), 5 g of EA-5721 (manufactured by Shin Nakamura Chemical Co., Ltd.), and 10 g of 1-methoxy-2-propanol, 0.3 g of Darocur 1173 (manufactured by BASF) as a polymerization initiator was added, and then the mixture was blended to prepare a coating composition 7 having a solid content of 50 wt%.

(Coating, Nanoimprinting, and UV Radiation to Substrate)

The coating composition 7 was applied to a PMMA plate with a bar coater #30 and then heated at 70°C for 5 minutes. Then, a nanoimprinting resin mold with a structure of depressions and protrusions having a pitch of 350 nm and a height of 300 nm (FleFimo manufactured by Soken Chemical & Engineering Co., Ltd.) was placed on the coating layer of the thermally dried coating composition 7 such that the coating layer of the coating composition 1 exactly faced the depressions and protrusions side of the resin mold, and a constant load was subsequently applied thereto to transfer

the structure of depressions and protrusions of the resin mold to the coat of the coating composition. Then, this product was subsequently subjected to UV radiation (metal halide lamp for ultraviolet curing, UB012-5BM manufactured by EYE GRAPHICS CO., LTD., UVA intensity of 300 mW/$cm^2$, UVA accumulated dose of 3400 mJ/$cm^2$, measured with UVCURE PLUS II manufactured by Heraeus) to form an antireflective monolayer film having a thickness of 15 μm on the PMMA plate. Likewise, the coating, the nanoimprinting, and the UV radiation to the substrate were performed to the back side, thereby forming the antireflective monolayer films having a thickness of 15 μm on the both sides of the PMMA plate. Table 8 shows results of the evaluations.

[Table 7]

Table 7

| | Comparative Example 2 | Comparative Example 3 | Comparative Example 4 | Comparative Example 5 | Comparative Example 6 | Comparative Example 7 | Comparative Example 8 |
|---|---|---|---|---|---|---|---|
| Substrate | PMMA | PMMA | PMMA | PMMA | PMMA | PC | Glass |
| Coating composition | 1 | 3 | 4 | 5 | - | - | - |
| Water contact angle [°] | 15.7 | 17.2 | 5.9 | 47.5 | 84.5 | 85.0 | 3.0 |
| Resistance to breath fogging | A | A | A | B | B | B | A |
| Haze [%] | 0.14 | 0.17 | 0.47 | 0.09 | | | |
| Reflectance [%] | 7.76 | 7.76 | 7.78 | 7.75 | 7.01 | 9.10 | 7.48 |
| Coefficient of static friction | 1.10 | 1.15 | 1.22 | - | 0.93 | 0.80 | 0.61 |
| Antifouling properties | A | A | A | A | B | B | B |
| Water contact angle for durability of Antifogging properties [°] | 11.4 | 15.0 | 15.0 | - | - | - | - |
| Resistance to breath fogging for durability of antifogging properties | B | B | B | B | - | - | - |

[Table 8]

Table 8

| | Comparative Example 9 | Comparative Example 10 | Comparative Example 11 |
|---|---|---|---|
| Prepared Solution | 6 | 6 | 7 |
| Water contact angle [°] | 72.4 | <3 | 33.1 |
| Resistance to breath fogging | B | A | B |
| Haze [%] | 0.14 | 0.17 | 0.47 |
| Reflectance [%] | 1.25 | 1.23 | 1.25 |
| Coefficient of static friction | 1.17 | 0.93 | 0.70 |
| Antifouling properties | B | A | B |
| Water contact angle for durability of Antifogging properties [°] | - | 32.8 | - |
| Resistance to breath fogging for durability of antifogging properties | - | B | - |

[Example 7]

(Preparation Example 3: Preparation of 10-wt% of AS-Na)

With 10 g of sodium allylsulfonate (hereinafter referred to as "AS-Na"), 30 g of water and 60 g of PGM were mixed to prepare an AS-Na liquid mixture having a solid content of 10 wt%.

A polymerizable composition 3 having a solid content of 40 wt% was produced in accordance with Table 9.

[Table 9]

Polymerizable composition 3 (Solid content 40 wt%)

| Component | Amount (g) | Concentration (wt%) | |
|---|---|---|---|
| 10%AS-Na | 15.00 | | Preparation Example 3 |
| AS-Na | | 1.16 | |
| A9530 | 12.50 | 9.69 | |
| EA5721 | 37.60 | 29.14 | |
| 10%DS-Na | 0.75 | | Preparation Example 1 |
| DS-Na | | 0.06 | |
| H2O | | 3.66 | |
| PGM | 63.19 | 56.28 | |
| Total | 129.04 | 100.00 | |

(Preparation of Coating Composition 8)

To 10.0 g of the polymerizable composition 3, 0.12 g of Darocur 1173 (BASF) as a UV polymerization initiator was added, and then the mixture was blended to prepare a coating composition 8 having a solid content of 40 wt%.

The coating, nanoimprinting, and UV radiation to a substrate were carried out as in Example 2. Table 11 shows results of the evaluations.

[Example 8]

(Preparation of Coating Composition 9)

To 10.0 g of the polymerizable composition 2, 0.24 g of Darocur 1173 (BASF) as a UV polymerization initiator and 10.0 g of 1-methoxy-2-propanol as a diluent were added, and then the mixture was blended to prepare a coating composition 9 having a solid content of 40 wt%.

The coating, nanoimprinting, and UV radiation to a substrate were carried out as in Example 2. Table 11 shows results of the evaluations.

[Example 9]

(Preparation Example 4: Preparation of 10-wt% LS-Na)

With 10 g of sodium allylsulfonate (hereinafter referred to as "LS-Na"), 30 g of water and 60 g of PGM were mixed. Then, the mixture was stirred with a homomixer (ROBOMIX (registered trademark) S-model, manufactured by PRIMIX Corporation) at 15000 rpm for 3 minutes to prepare an LS-Na liquid mixture having a solid content of 10 wt%.

(Preparation Example 5: Preparation of 10-wt% ATBS-Na)

With 1.63 g of sodium hydroxide, 55.8 g of PGM, 27.06 g of water, and 8.51 g of ATBS were mixed to prepare an ATBS-Na liquid mixture having a solid content of 10 wt%.

A polymerizable composition 4 having a solid content of 40 wt% was produced in accordance with Table 10.

[Table 10]

Table 10

Polymerizable composition 4 (Solid content 40 wt%)

| Component | Amount (g) | Concentration (wt%) | |
|---|---|---|---|
| 10%ATBS-Na | 10.00 | | Preparation Example 5 |
| ATBS-Na | | 0.78 | |
| A9530 | 50.00 | 39.14 | |
| 10%LS-Na | 1.00 | | Preparation Example 4 |
| LS-Na | | 0.08 | |
| H2O | | 2.58 | |
| PGM | 66.75 | 57.42 | |
| Total | 127.75 | 100.00 | |

(Preparation of Coating Composition 10)

To 10.0 g of the polymerizable composition 4, 0.12 g of Darocur 1173 (BASF) as a UV polymerization initiator was added, and then the mixture was blended to prepare a coating composition 10 having a solid content of 40 wt%.

The coating, nanoimprinting, and UV radiation to a substrate were carried out as in Example 2. Table 11 shows results of the evaluations.

[Table 11]

Table 11

| | Example 7 | Example 8 | Example 9 |
|---|---|---|---|
| Hydrophilic monomer | AS-Na | SPA-K | ATBS-Na |

(continued)

| | Example 7 | Example 8 | Example 9 |
|---|---|---|---|
| Appearance | Colorless and transparent | Colorless and transparent | Colorless and transparent |
| Water contact angle [°] | 3.3 | 40.3 | 8.4 |
| Reflectance [%] | 1.09 | 1.09 | 1.09 |

[Comparative Example 12]

Except that the nanoimprinting with a nanoimprinting resin mold (FleFimo manufactured by Soken Chemical & Engineering Co., Ltd.) having the structure of depressions and protrusions of less than or equal to the wavelength of visible light was not performed, the preparation of the highly viscous polymerizable liquid and coating composition and the coating and UV radiation to a substrate were carried out as in Example 7 to prepare a monolayer film. Table 12 shows results.

[Comparative Example 13]

Except that the nanoimprinting with a nanoimprinting resin mold (FleFimo manufactured by Soken Chemical & Engineering Co., Ltd.) having the structure of depressions and protrusions of less than or equal to the wavelength of visible light was not performed, the preparation of the highly viscous polymerizable liquid and coating composition and the coating and UV radiation to a substrate were carried out as in Example 8 to prepare a monolayer film. Table 12 shows results.

[Comparative Example 14]

Except that the nanoimprinting with a nanoimprinting resin mold (FleFimo manufactured by Soken Chemical & Engineering Co., Ltd.) having the structure of depressions and protrusions of less than or equal to the wavelength of visible light was not performed, the preparation of the highly viscous polymerizable liquid and coating composition and the coating and UV radiation to a substrate were carried out as in Example 9 to prepare a monolayer film. Table 12 shows results.

[Table 12]

Table 12

| | Comparative Example 12 | Comparative Example 13 | Comparative Example 14 |
|---|---|---|---|
| Hydrophilic monomer | AS-Na | SPA-K | ATBS-Na |
| Appearance | Colorless and transparent | Colorless and transparent | Colorless and transparent |
| Water contact angle [°] | 28 | 37.1 | 33 |
| Reflectance [%] | 7.76 | 7.76 | 7.76 |

[Example 10]

The coating composition 4 was applied to a PMMA plate with a bar coater #30 and then heated at 70°C for 5 minutes. A coating composition 11, which had been prepared without using 3-(N,N-dimethylpalmitylammonio)propanesulfonate in the preparation of the coating composition 2, was applied to a nanoimprinting resin mold with a structure of depressions and protrusions having a pitch of 350 nm and a height of 300 nm (FleFimo manufactured by Soken Chemical & Engineering Co., Ltd.) with a bar coater #4 and then dried at 70°C for 2 minutes. Then, the resin mold having the coating layer of the dried coating composition 11 was placed on the coating layer of the thermally dried coating composition 4 such that the coating layer of the coating composition 4 exactly faced the coating layer of the coating composition 11, and a constant load was subsequently applied thereto to transfer the structure of depressions and protrusions of the resin mold to the coat of the coating composition. This one was left to stand for 15 minutes. Then, this

product was subjected to UV radiation (metal halide lamp for ultraviolet curing, UB012-5BM manufactured by EYE GRAPHICS CO., LTD., UVA intensity of 300 mW/cm$^2$, UVA accumulated dose of 3400 mJ/cm$^2$, measured with UVCURE PLUS II manufactured by Heraeus) to form an antireflective monolayer film of a crosslinked resin having a hydrophilic surface with a thickness of 15 μm on the PMMA plate. Likewise, the coating, the nanoimprinting, and the UV radiation were performed also to the back side of the PMMA plate, thereby forming the antireflective monolayer films of a crosslinked resin having hydrophilic surfaces with a thickness of 15 μm on the both sides of the PMMA plate.

The water contact angle of this monolayer film was 11.2°, and the reflectance thereof was 1.25%.

[Example 11]

The coating composition 4 was applied to a PMMA plate with a bar coater #30 and then heated at 70°C for 5 minutes. Then, the coating composition 4 was subjected to UV radiation (metal halide lamp for ultraviolet curing, UB012-5BM manufactured by EYE GRAPHICS CO., LTD., UVA intensity of 0.5 mW/cm$^2$, UVA accumulated dose of greater than 1 mJ/cm$^2$, measured with UVCURE PLUS II manufactured by Heraeus) to be semi-cured. Then, a nanoimprinting resin mold with a structure of depressions and protrusions having a pitch of 350 nm and a height of 300 nm (FleFimo manufactured by Soken Chemical & Engineering Co., Ltd.) was placed on the coating layer of the semi-cured coating composition 4, and a constant load was subsequently applied thereto to transfer the structure of depressions and protrusions of the resin mold to the coat of the coating composition. This one was left to stand for 15 minutes. Then, this product was subjected to UV radiation (metal halide lamp for ultraviolet curing, UB012-5BM manufactured by EYE GRAPHICS CO., LTD., UVA intensity of 300 mW/cm$^2$, UVA accumulated dose of 3400 mJ/cm$^2$, measured with UVCURE PLUS II manufactured by Heraeus) to form an antireflective monolayer film of a crosslinked resin having a hydrophilic surface with a thickness of 15 μm on the PMMA plate. Likewise, the coating, the nanoimprinting, and the UV radiation were performed also to the back side of the PMMA plate, thereby forming the antireflective monolayer films of a crosslinked resin having hydrophilic surfaces with a thickness of 15 μm on the both sides of the PMMA plate.

The water contact angle of this monolayer film was 29.6°, and the reflectance thereof was 1.25%.

[Example 12]

The coating composition 4 was applied to a PMMA plate with a bar coater #30 and then heated at 70°C for 5 minutes. Then, the coating composition 4 was subjected to UV radiation (metal halide lamp for ultraviolet curing, UB012-5BM manufactured by EYE GRAPHICS CO., LTD., UVA intensity of 0.5 mW/cm$^2$, UVA accumulated dose of greater than 1 mJ/cm$^2$, measured with UVCURE PLUS II manufactured by Heraeus) to be semi-cured. The coating composition 2 was applied to a nanoimprinting resin mold with a structure of depressions and protrusions having a pitch of 350 nm and a height of 300 nm (FleFimo manufactured by Soken Chemical & Engineering Co., Ltd.) with a bar coater #4 and then dried at 70°C for 2 minutes. Then, the resin mold having the coating layer of the dried coating composition 2 was placed on the coating layer of the semi-cured coating composition 4 such that the coating layer of the coating composition 4 exactly faced the coating layer of the coating composition 2, and a constant load was subsequently applied thereto to transfer the structure of depressions and protrusions of the resin mold to the coat of the coating composition. This one was left to stand for 15 minutes. Then, this product was subjected to UV radiation (metal halide lamp for ultraviolet curing, UB012-5BM manufactured by EYE GRAPHICS CO., LTD., UVA intensity of 300 mW/cm$^2$, UVA accumulated dose of 3400 mJ/cm$^2$, measured with UVCURE PLUS II manufactured by Heraeus) to form an antireflective monolayer film of a crosslinked resin having a hydrophilic surface with a thickness of 15 μm on the PMMA plate. Likewise, the coating, the nanoimprinting, and the UV radiation were performed also to the back side of the PMMA plate, thereby forming the antireflective monolayer films of a crosslinked resin having hydrophilic surfaces with a thickness of 15 μm on the both sides of the PMMA plate.

The water contact angle of this monolayer film was 4.8°, and the reflectance thereof was 1.25%.

[Example 13]

The coating composition 4 was applied to a PMMA plate with a bar coater #7 and then heated at 70°C for 5 minutes. Then, the coating composition 4 was subjected to UV radiation (metal halide lamp for ultraviolet curing, UB012-5BM manufactured by EYE GRAPHICS CO., LTD., UVA intensity of 0.5 mW/cm$^2$, UVA accumulated dose of greater than 1 mJ/cm$^2$, measured with UVCURE PLUS II manufactured by Heraeus) to be semi-cured. The coating composition 2 was applied to a nanoimprinting resin mold with a structure of depressions and protrusions having a pitch of 350 nm and a height of 300 nm (FleFimo manufactured by Soken Chemical & Engineering Co., Ltd.) with a bar coater #4 and then dried at 70°C for 2 minutes. Then, the resin mold having the coating layer of the dried coating composition 2 was placed on the coating layer of the semi-cured coating composition 4 such that the coating layer of the coating composition 4 exactly faced the coating layer of the coating composition 2, and a constant load was subsequently applied

thereto to transfer the structure of depressions and protrusions of the resin mold to the coat of the coating composition. This one was left to stand for 15 minutes. Then, this product was subjected to UV radiation (metal halide lamp for ultraviolet curing, UB012-5BM manufactured by EYE GRAPHICS CO., LTD., UVA intensity of 300 mW/cm$^2$, UVA accumulated dose of 3400 mJ/cm$^2$, measured with UVCURE PLUS II manufactured by Heraeus) to form an antireflective monolayer film of a crosslinked resin having a hydrophilic surface with a thickness of 2.7 μm on the PMMA plate. Likewise, the coating, the nanoimprinting, and the UV radiation were performed also to the back side of the PMMA plate, thereby forming the antireflective monolayer films of a crosslinked resin having hydrophilic surfaces with a thickness of 2.7 μm on the both sides of the PMMA plate.

The water contact angle of this monolayer film was 4.4°, and the reflectance thereof was 1.25%.

[Example 14]

The coating composition 4 was applied to a PMMA plate with a bar coater #30 and then heated at 70°C for 5 minutes. A nanoimprinting resin mold having a structure of depressions and protrusions was prepared; in the mold, the protrusions were arranged in a lattice pattern at intervals of 180 nm and had a height of 200 nm, and the proportion of the protrusions to the intervals was 0.33. The coating composition 2 was applied to this mold with a bar coater #4 and then dried at 70°C for 2 minutes. Then, the resin mold having the coating layer of the dried coating composition 2 was placed on the coating layer of the thermally dried coating composition 4 such that the coating layer of the coating composition 4 exactly faced the coating layer of the coating composition 2, and a constant load was subsequently applied thereto to transfer the structure of depressions and protrusions of the resin mold to the coat of the coating composition. This one was left to stand for 15 minutes. Then, UV was radiated from both of the resin mold side and the opposite side (metal halide lamp for ultraviolet curing, UB012-5BM manufactured by EYE GRAPHICS CO., LTD., UVA intensity of 300 mW/cm$^2$, UVA accumulated dose of 3400 mJ/cm$^2$, measured with UVCURE PLUS II manufactured by Heraeus) to form a monolayer film of a crosslinked resin having a hydrophilic surface with a thickness of 15 μm on the PMMA plate. This monolayer film had a surface structure that was able to serve as a polarizer. Table 13 shows results of the evaluations. Fig. 4 is a surface view of the monolayer film.

[Table 13]

Table 13

| | Example 14 |
|---|---|
| Hydrophilic monomer | SPA-K |
| Appearance | Colorless and transparent |
| Water contact angle [°] | 14.8 |
| Resistance to breath fogging | A |

Industrial Applicability

A cured product having a surface enriched with hydrophilic groups can be produced from the compositions used in the present invention through a simpler process; in addition, the hydrophilic antireflection film of the present invention and the stack thereof eliminate a problem in which remaining dirt, such as sebum, is hard to be removed in conventional stacks having a moth-eye structure and thus have high antifouling properties. Furthermore, they have sufficient smoothness even though their surfaces are hydrophilic; hence, a hydrophilic antireflection film having an excellent durability and a stack thereof can be produced.

Accordingly, such a cured product, for example a monolayer film, can be used as an antireflective material, an antifogging material, and an antifouling material and useful in a variety of applications.

Reference Signs List

10: SUBSTRATE
20: COATING LAYER

30: CUTTING DIRECTION
40: SURFACE OF COATING LAYER
50: INNER PORTION OF COATING LAYER

## Claims

1. A monolayer film having a surface structure with a plurality of protrusions and depressions, wherein
the distance between the peaks of adjoining protrusions among the plurality of protrusions is in the range of 1 nm to 800 nm;
the monolayer film is formed of a crosslinked resin produced from a polymerizable composition (A) that contains a compound (I) having at least one hydrophilic group selected from an anionic hydrophilic group and a cationic hydrophilic group and at least one functional group with a polymerizable carbon-carbon double bond and a compound (II) having at least two functional groups with a polymerizable carbon-carbon double bond (where the compound (II) optionally has a hydroxyl group but has neither of anionic hydrophilic groups and cationic hydrophilic groups); and
a gradient of the concentration of hydrophilic groups (Sa1/Da1) in the monolayer film is not less than 1.1 wherein Sa1 is the concentration of at least one type of hydrophilic groups selected from anionic hydrophilic groups and cationic hydrophilic groups at the top layer, and Da1 is the depth concentration of the hydrophilic groups at 1/2 of the thickness of the monolayer film.

2. A monolayer film having a surface structure with a plurality of protrusions and depressions, wherein
the distance between the peaks of adjoining protrusions among the plurality of protrusions is in the range of 1 nm to 800 nm;
the monolayer film is formed of a crosslinked resin produced from a polymerizable composition (B) that contains a compound (I') having at least one functional group with a polymerizable carbon-carbon double bond and at least one hydrophilic group selected from an anionic hydrophilic group, a cationic hydrophilic group, and a hydroxyl group (where in the case where the hydrophilic group has a hydroxyl group,
the number of the functional groups with a polymerizable carbon-carbon double bond is one), a compound (II) having at least two functional groups with a polymerizable carbon-carbon double bond (where the compound (II) optionally has a hydroxyl group but has neither of anionic hydrophilic groups and cationic hydrophilic groups), and
a surfactant (III) having a hydrophobic moiety including an organic residue and a hydrophilic moiety at least having an anionic hydrophilic group, a cationic hydrophilic group, or two or more hydroxyl groups (where the surfactant (III) is free from a polymerizable carbon-carbon double bond); and
a gradient of the concentration of hydrophilic groups (Sa2/Da2) in the monolayer film is not less than 1.1 wherein (Sa2) is the concentration of at least one type of hydrophilic groups selected from anionic hydrophilic groups, cationic hydrophilic groups, and a hydroxyl group at the top layer, and (Da2) is the depth concentration of the hydrophilic groups at 1/2 of the thickness of the monolayer film.

3. The monolayer film according to Claim 1 or 2, wherein in formation of the depressions and the protrusions on a surface of a non-cured film formed of the polymerizable composition (A) or (B), the surface of the film is treated with the composition (I') according to Claim 2 or a compound (IV) having at least one hydrophilic group selected from an anionic hydrophilic group and a cationic hydrophilic group and at least one group selected from an amino group, a mercapto group, and a hydroxyl group.

4. The monolayer film according to any one of Claims 1 to 3, wherein the distance between the peaks of adjoining protrusions among the plurality of protrusions is in the range of 100 nm to 600 nm.

5. The monolayer film according to any one of Claims 1 to 4, wherein assuming that the distance between the peak of an arbitrarily selected one of the protrusions and the peak of the protrusion that is nearest to the selected one is $P_n$, that the average of $P_n$ (in the monolayer film) is $P_{ave}$,
that a coordinate axis in the height direction of the depressions and protrusions is an h axis, that the height of the lowest point of the depressions is h = 0, that the height of the peak of the arbitrarily selected protrusion is h = $H_n$, and that the average of $H_n$ is $H_{ave}$,
$H_{ave}/P_{ave}$ is in the range of 0.1 to 5.0.

6. The monolayer film according to any one of Claims 1 to 5, wherein the protrusions have a drill-like shape.

7. The monolayer film according to any one of Claims 1 to 6, wherein assuming that a coordinate axis in the height

direction of the depressions and protrusions is an h axis, that the plane vertical to the h axis is an xy plane, that the height of the lowest point of the depressions is h' = 0, and that the height of the highest peak of the protrusions is h' = H, the peaks of all of the protrusions are in substantially one-point contact with the xy plane at a height of h = H, and the bottoms of all of the depressions are in substantially one-point contact with the xy plane at a height of h = 0.

**8.** The monolayer film according to any one of Claims 1 to 7, wherein the protrusions have a step-like side surface.

**9.** The monolayer film according to any one of Claims 1 to 8, wherein assuming that the distance between the peak of arbitrarily selected one of the protrusions and the peak of the protrusion that is nearest to the selected one is $P_n$ and that the average of $P_n$ (in the monolayer film) is $P_{ave}$,
the bottoms of three to six depressions exist within the distance $P_{ave}$ from the peak of the arbitrarily selected protrusion.

**10.** The monolayer film according to any one of Claims 1 to 9, wherein assuming that a coordinate axis in the height direction of the depressions and protrusions is an h axis, that the plane vertical to the h axis is an xy plane, that the height of the lowest point of the depressions is h = 0, and that the height of the highest peak of the protrusions is h = H, the protrusions have a circular cross section on the xy plane at any point of the height that is greater than 0 but less than H.

**11.** The monolayer film according to any one of Claims 1 to 3, wherein the protrusions are arrange in a lattice pattern, the intervals between the depressions and between the protrusions are not more than 200 nm, the proportion of the protrusions to the intervals is from 0.25 to 0.76, and H ranging from 0.05 to 0.5 μm is given on the basis of the following assumption: a coordinate axis in the height direction of the depressions and protrusions is an h axis, the plane vertical to the h axis is an xy plane, the height of the low point of the depressions is h = 0, and the height of the protrusions is h = H.

**12.** A method for producing the monolayer film according to Claim 1, the method comprising the steps of:

forming a coating film of the polymerizable composition (A) according to Claim 1;
removing a solvent from the coating film;
bringing a shaping die with a pattern corresponding to the depressions and the protrusions into close contact with a surface of the coating film to transfer the structure of depressions and protrusions to the surface of the coating film;
curing the coating film having the depressions and the protrusions; and
releasing the shaping die from the cured film.

**13.** A method for producing the monolayer film according to Claim 2, the method comprising the steps of:

forming a coating film of the polymerizable composition (B) according to Claim 2;
bringing a shaping die with a pattern corresponding to the depressions and the protrusions into close contact with a surface of the coating film to transfer the structure of depressions and protrusions to the surface of the coating film;
curing the coating film having the depressions and the protrusions; and
releasing the shaping die from the cured film.

**14.** The method according to Claim 12 or 13, wherein the transfer of the structure of depressions and protrusions to a surface of the coating film involves use of a shaping die of which the compound (I') according to Claim 2 or the compound (IV) having at least one hydrophilic group selected from an anionic hydrophilic group and a cationic hydrophilic group and at least one group selected from an amino group, a mercapto group, and a hydroxyl group has been applied to the surface having a pattern corresponding to the depressions and the protrusions.

**15.** The method according to any one of Claims 12 to 14, wherein the monolayer film is formed on a substrate.

**16.** An antireflection film comprising the monolayer film according to any one of Claims 1 to 10.

**17.** A polarizer comprising the monolayer film according to Claim 11, wherein the polarizer includes a metal film laminated on the protrusions or in the depressions of the monolayer film.

**18.** A transparent material comprising at least one selected from the monolayer film according to any one of Claims 1

to 11, the antireflection film according to Claim 16, and the polarizer according to Claim 17.

**19.** An optical article comprising at least one selected from the monolayer film according to any one of Claims 1 to 11, the antireflection film according to Claim 16, and the polarizer according to Claim 17.

**20.** A display device comprising the transparent material according to Claim 18.

**21.** A stack comprising the monolayer film according to any one of Claims 1 to 11, 16, and 17 and a substrate.

FIG. 1

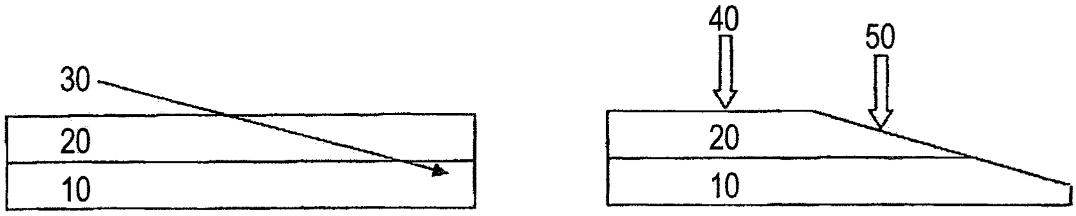


FIG. 2

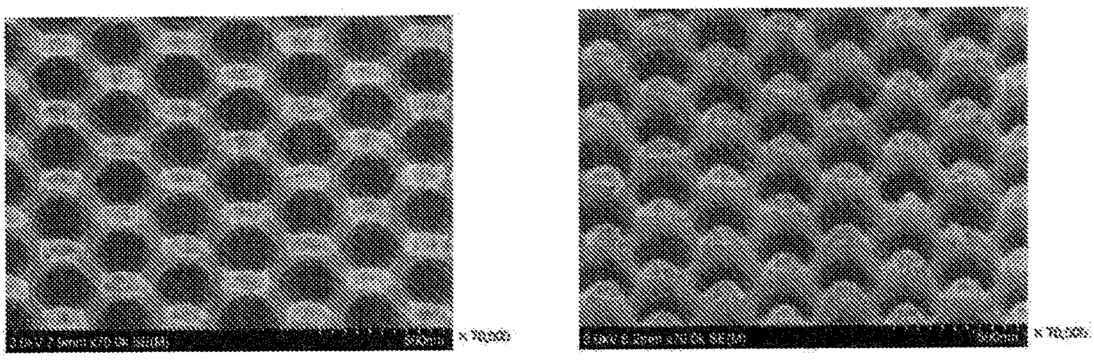

A
INCLINATION 0°

A
INCLINATION 30°

FIG. 3

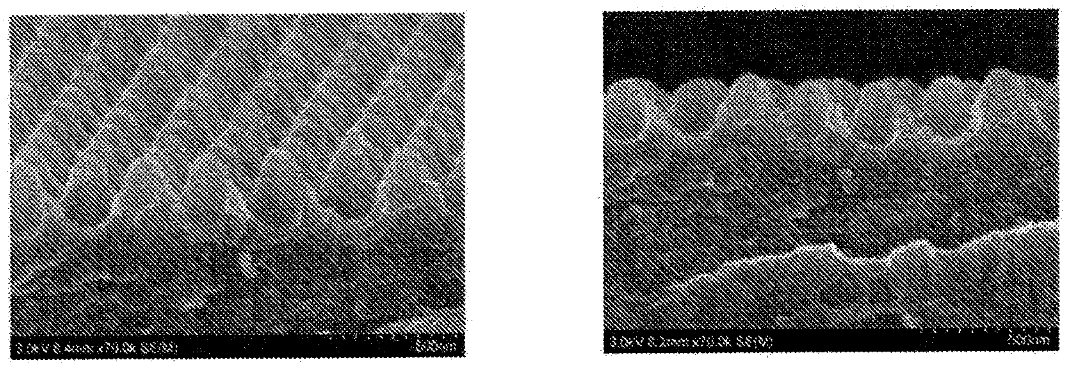

FIG. 4

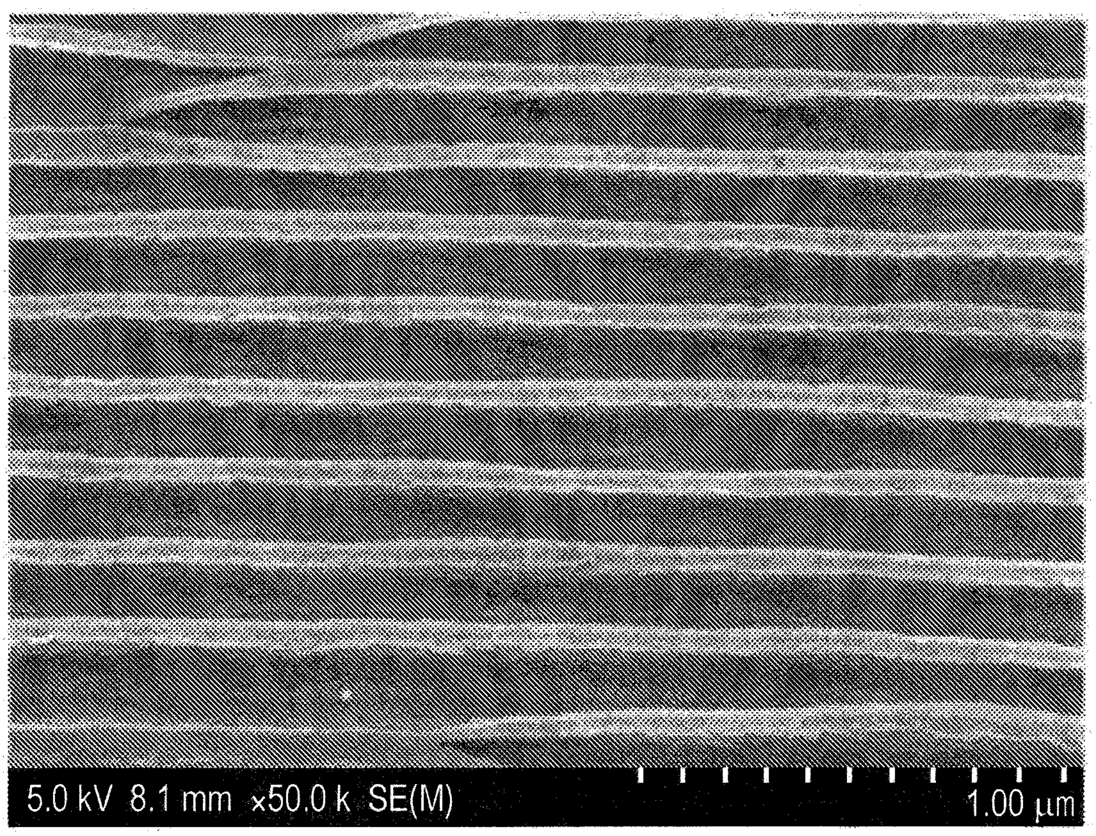

## INTERNATIONAL SEARCH REPORT

International application No.
PCT/JP2016/057121

A. CLASSIFICATION OF SUBJECT MATTER
*G02B1/118*(2015.01)i, *B32B3/30*(2006.01)i, *C08J5/18*(2006.01)i, *G02B1/18*(2015.01)i, *G02B5/30*(2006.01)i

According to International Patent Classification (IPC) or to both national classification and IPC

B. FIELDS SEARCHED

Minimum documentation searched (classification system followed by classification symbols)
G02B1/118, B32B3/30, C08J5/18, G02B1/18, G02B5/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2007/064003 A1 (Mitsui Chemicals, Inc.), 07 June 2007 (07.06.2007), claims; paragraphs [0003], [0054], [0178] & JP 5638184 B & US 2009/0191373 A1 claims; paragraphs [0003], [0070], [0163] & EP 1955782 A1 & CN 101309760 A & KR 10-2008-0075540 A & TW 00I330588 B | 1-21 |
| Y | JP 2014-71326 A (Dainippon Printing Co., Ltd.), 21 April 2014 (21.04.2014), claims; paragraphs [0030] to [0032], [0036], [0037], [0050], [0051]; fig. 1 to 5 (Family: none) | 1-21 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 June 2016 (03.06.16) | 14 June 2016 (14.06.16) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No. PCT/JP2016/057121

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-107392 A (Toppan Printing Co., Ltd.), 08 May 2008 (08.05.2008), claims (Family: none) | 17 |
| A | WO 2012/091129 A1 (Mitsubishi Rayon Co., Ltd.), 05 July 2012 (05.07.2012), entire text; all drawings & JP 5156146 B & JP 2013-50704 A & US 2013/0277881 A1 & EP 2644646 A1 & CN 103237837 A & KR 10-2013-0080057 A & TW 201233529 A | 1-21 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001098007 A
- JP 2011229734 A
- WO 2007064003 A
- JP 2001517319 W
- JP 2004205990 A
- JP 2004287238 A
- JP 2001272505 A
- JP 2002286906 A
- JP 2011028229 A
- WO 2012133946 A
- JP 2009217278 A
- WO 2012014829 A
- WO 2013187311 A
- JP 2005070456 A
- JP 2008107392 A
- JP 2014139664 A


### Non-patent literature cited in the description


- TREND. TOAGOSEI CO., LTD, February 1999, 39-44
- *Koubunshi (Polymers),* vol. 44 (5), 307
- *Mirai Zairyou (Future materials),* vol. 2 (1), 36-41
- **BERNHARD, C.G.** *Endeavour,* 1967, vol. 26, 79
- **P.B. CLAPHAM ; M.C. HUTLEY.** *Nature,* 1973, vol. 244, 281-282